(19) Europäisches Patentamt
European Patent Office
Office européen des brevets

(11) **EP 4 388 867 A1**

(12) **EUROPEAN PATENT APPLICATION**

(43) Date of publication:
26.06.2024 Bulletin 2024/26

(21) Application number: 22386097.4

(22) Date of filing: 19.12.2022

(51) International Patent Classification (IPC):
*A01G 17/00* (2006.01)     *A01G 22/00* (2018.01)

(52) Cooperative Patent Classification (CPC):
A01G 17/005; A01G 22/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ekaterra Research and Development
UK Limited**
**London EC4Y 0DY (GB)**

(72) Inventors:
• **Burgess, Paul**
**Cranfield, Bedfordshire MK43 0AL (GB)**
• **Giannitsopoulos, Michail**
**Cranfield, Bedfordshire MK43 0AL (GB)**

• **Holden, Ann**
**Cranfield, Bedfordshire MK43 0AL (GB)**
• **Sakrabani, Ruben**
**Cranfield, Bedfordshire MK43 0AL (GB)**
• **Corstanje, Ron**
**Cranfield, Bedfordshire MK43 0AL (GB)**
• **Waine, Toby**
**Cranfield, Bedfordshire MK43 0AL (GB)**
• **De Silva, Jacquie**
**Monmouth, NP25 3SD (GB)**
• **Redfern, Sally**
**Sharnbrook, Bedfordshire MK44 1JE (GB)**

(74) Representative: **Mewburn Ellis LLP
Aurora Building
Counterslip
Bristol BS1 6BX (GB)**

(54) **SYSTEM AND METHOD FOR MANAGING TEA HARVESTING**

(57)    A computer-implemented system for managing tea harvesting, comprising: a data store, the data store containing data defining of one or more growing regions of a tea plantation; a growth and yield prediction module which is configured, for each of the growing regions of the tea plantation defined in the data store, to model a plurality of tea plants within the respective growing region, and thereby predicting: a growth of each tea plant within the respective growing region over a period of time and so a yield of each growing region of the tea plantation when harvested; wherein the growth and yield prediction module is further configured to predict a recommended time for harvest to provide a desired quality of tea and desired yield of tea; and a user interface module, configured to provide, to a user, the predicted yield of each growing region of the tea plantation when harvested.

Fig 1

EP 4 388 867 A1

**Description**

**FIELD OF INVENTION**

The invention is in the technical field of cultivating and harvesting tea plants.

**BACKGROUND**

Tea is a drink made from the leaves of the plant *Camellia sinensis,* an evergreen tree. In tea cultivation, new leaves from fresh shoots are preferred as the tenderness of the leaves increases the quality of the resulting tea. Tea plants are generally pruned to a short height to facilitate harvesting and to give access to this new growth at the top of the plant. As such, tea plants are harvested continuously throughout the year if the seasons permit. Tea plants are harvested either through manual plucking of new leaves, harvesting using shears, or through machine harvesting using a cutting machine that removes the top layer of the shrub, including the new growth.

To support this continuous harvesting, most tea cultivation is concentrated in certain geographic regions and the land available for this is somewhat limited. Secure, resilient and sustainable tea production relies upon coherent and informed management of the fundamental basis of such production including clonal selection, soil, nutrients, water, energy, labour, processing and efficient and connected logistics across the supply chain.

The Cranfield University Potential Productivity Analyser for Tea (CUPPA-Tea) allows the modelling of tea yield on the basis of characterising the growth of populations of shoots. CUPPA-Tea is a process-based crop model for tea production (specifically for *Camellia sinensis L.).*

The model operates on a daily time-step and includes routines describing shoot growth and development, dry matter production and partitioning, and the crop water balance.

It is generally desirous, in the context of the relatively limited land available for the cultivation of tea, to maximise the yield therefrom.

**SUMMARY OF THE INVENTION**

Accordingly, in a first aspect, embodiments of the invention provide a computer-implemented system for managing tea harvesting, the system comprising:

a) a data store, the data store containing data defining one or more growing regions of a tea plantation;

b) a growth and yield prediction module which is configured, for each of the growing regions of the tea plantation defined in the data store, to model a plurality of tea plants within the respective growing region, and thereby predicting: a growth of each tea plant within the respective growing region over a period of time and so a yield of each growing region of the tea plantation when harvested;

c) wherein the growth and yield prediction module is further configured to predict a recommended time for harvest to provide a desired quality of tea and desired yield of tea; and

d) a user interface module, configured to provide, to a user, the predicted yield of each growing region of the tea plantation when harvested.

Advantageously, the system can predict for example growth, yield, quality, and/or ideal harvest time of the tea, thereby allowing the user to make predictions as to the parameters of upcoming tea harvests and/or to choose a time for harvesting the tea to optimise these parameters as desired.

The user interface module may display geographic data of the respective growing region, for example as a map. Displaying geographic data about the respective growing region facilitates the recognition of a given region and allows the user to make selections and derive inferences based on that data. A map view, for example an overhead top-down view of the region and associated geographic data, may be a suitable way of displaying this.

The data may define a tea plantation comprising a plurality of growing regions, and the user interface module may be configured to allow a user to select a growing region from the plurality of growing regions, resulting in the system displaying predictions made for the growing region selected.

A growing region can comprise or consist of a field of growing tea plants.

The growth and yield prediction module may be further configured to predict, for each tea plant within a respective growing region, a recommended harvest interval, a shoot count, and a table height. The recommended harvest interval can correspond to a time between harvests that will maximise the yield of the growing region. By table height, it may be meant a distance from the ground to the height of the pluckable shoots.

Advantageously, this may permit the more accurate prediction of tea harvest parameters and the optimisation of harvest time.

The growth and yield prediction module may predict a first plucking event, a second plucking event, and a third plucking event; wherein if the third plucking event and the second plucking event occur within a first time period, and the third plucking event and the first plucking event occur within a second time period, wherein the second time period is longer than the first time period, then the second plucking event and third plucking event are considered to be part of the same plucking event. The terminology 'considered to be part of the same plucking event', may mean that the properties of the second and third plucking events are combined into a single plucking event. Advantageously, this modification to the growth and yield prediction module improves the accuracy of harvests with respect to conditions in the actual plantation.

The growth and yield prediction unit may predict a quality index for the harvested tea plants. Advantageously, this index may facilitate the analysis of the quality of a harvest such as the comparison of the quality of a harvest at one point in time compared to at a different point in time, or in response to variation in a variable such as the amount of rainfall.

The quality index may be calculated as a proportion of the shoots in a preferred state for harvesting with respect to the total number of shoots.

The growth and yield prediction module may predict a number of harvested shoots based on the number of shoots which have more leaves than a predetermined threshold, and/or the height of each shoot.

Preferably, tea shoots are harvested when they comprise a desired number of leaves. Preferably 0, 1, 2, 3, 4, 5, or more tea leaves. Preferably, tea shoots are harvested when are they at, above, or below a certain length. Preferably 0 cm, 1 cm, 2 cm, 3 cm, 4 cm, 5 cm, 6 cm, 7 cm, 8 cm, 9 cm, or 10 cm.

Advantageously the quality index or the harvest predictions reflect the proportion of shoots in the preferred state containing the desired number of leaves, allowing the user to make more accurate predictions as to the expected quality of the tea.

The growth and yield prediction module may predict a leaf appearance rate or a phyllochron time. Advantageously, this prediction allows the module to more accurately predict the growth, yield, and/or quality of the shoots to be harvested.

The growth and yield prediction module may be configured to incorporate the effects of harvest method on the growth of the tea plants. Preferably the harvest method is mechanical harvesting, shear harvesting, or hand plucking. Advantageously, the module may more accurately predict the growth, yield, and quality of the harvested tea by taking the harvest type into account, as the type of harvesting affects these parameters.

The system may comprise a data input module configured to receive data related to the respective growing region, and wherein the data input module provides data to the growth and prediction module.

The data input module may comprise an environmental data module configured to receive environmental data for the respective growing region. This permits the model to take into account additional factors such as rainfall, temperature, or sunlight levels which can be used to model the growth of the shoots in the growth and prediction module. Advantageously, the prediction module may predict the growth of the shoots more accurately as the environment and these measurable parameters affect the growth of the tea.

The environmental data may comprise observed weather data or forecasted weather data. Advantageously, forecasted weather data can be used to improve the prediction of the effect that the weather, such as increased or reduced rainfall, can have on tea growth. Advantageously, observed weather data can be used to more accurately initialise the model to reflect the conditions of the tea more accurately. It may be used to improve the accuracy of predictions by replacing forecasted weather data with observed weather data, as the weather occurs.

The observed or forecasted weather data may comprise one or more of rainfall data, temperature data, solar radiation data, wind data, water evaporation data, or mean vapour pressure data. The environmental data may be recorded by an automatic recording station. The automatic recording station may be an automatic weather station. An automatic recording station reduces the labour required in providing the environmental data to the model.

The data input module may comprise a remote sensing data module configured to receive remote sensing data comprising one or more observations of the respective growing region. Using remote sensing data permits the system to reflect the ground truth of the plantation that the model simulates more accurately.

The remote sensing module may detect a harvest state for the respective growing region. This permits the model to be accurately updated as to whether a given part of the plantation has been harvested or not.

The remote sensing module may detect a first region of the respective growing region as harvested and detects a second region of the respective growing region as being unharvested. By unharvested, it may be meant that the region has not been harvested within a given time frame. That is, whilst the first region has been harvested the second region has not (at this time) been harvested. This allows the growth and prediction unit to model which shoots in a given field in the plantation have been harvested and which have not.

The remote sensing module may detect a type of harvesting used in the respective growing region. This allows the growth and prediction unit to model whether a plurality of shoots was harvested by hand plucking or manual harvesting, or some other technique. In hand plucking, individuals selectively remove shoots ready for harvest in a manual process. In machine harvesting, a machine removes the top layer of the tea plants in a non-selective process. Depending on the harvesting technique, the quality and yield of the harvested tea can be affected.

The remote sensing module may detect a level of growth of the tea plants in the respective growing region. This allows the growth and prediction unit to model the level of growth of the shoots in a given growing region more accurately. The growth level of the simulated shoots can be updated to reflect the ground truth.

The remote sensing module may receive data originating from orbital satellites. The data from orbital satellites may be synthetic aperture radar (SAR) data, visual light data, or multispectral imaging data.

The synthetic aperture radar data may comprise X-band or L-band SAR data. The synthetic aperture radar data may comprise one or more of HH-polarised backscatter coefficient values, VH-polarised backscatter coefficient values, HV-polarised backscatter coefficient values, or W-polarised backscatter coefficient values. These backscatter types refer to either co-polarised backscatter or cross-polarised coefficient in the vertical or horizontal direction (with respect to the ground).

The multispectral imaging data may comprise Normalised Difference Vegetation index (NDVI) data.

The growth and yield prediction module may predict the effects of pruning on the growth and the yield of the tea plants. This allows the growth and prediction unit to take into account pruning so that the predicted growth and yield more closely reflects the actual growth and yield.

The growth and yield prediction module may be configured to model each tea plant as having at least one shoot, and wherein the growth and yield prediction module models the effects of pruning by one or more of the following steps:

a. modelling a length for the shoot, and reducing the length of the shoot,
b. modelling a development stage of the shoot, and setting the developmental stage to an earlier stage, and/or
c. modelling a base height between the bottom of the shoot and the soil surface, and reducing the base height of the shoot.

These modifications to the parameters of the shoots by the growth and prediction unit more accurately reflect the effects of pruning on the growth and yield of the tea plants.

In a second aspect, embodiments of the invention provide a computer-implemented method for managing tea harvesting, comprising steps of: obtaining, from a data store, data defining one or more growing regions of a tea plantation;

modelling, by a growth and yield prediction module and for each of the growing regions of the tea plantation defined in the data store, a plurality of tea plants within the respective growing region, and thereby predicting: a growth of each tea plant within the respective growing region over a period of time and so a yield of each growing region of the tea plantation when harvested; and

providing to a user, via a user interface module, the predicted yield of each growing region of the tea plantation when harvested.

The computer-implemented method of the second aspect may include any one, or any combination insofar as they are compatible, of the optional features as set out with reference to the first aspect.

In a third aspect, embodiments of the invention provide a computer-implemented method for predicting the growth of a plurality of tea plants within a tea plantation, the method comprising:

retrieving initial condition data, indicative of an initial nitrogen stock in the tea plantation comprising nitrogen held as tea plant tissue, soil inorganic nitrogen, and soil organic nitrogen;

predicting a nitrogen deficiency level, indicative of the level to which lack of nitrogen availability limits the growth of the tea plants; and

predicting the growth of the tea plants, utilising the initial condition data and the nitrogen deficiency level.

Advantageously, the method predicts the effects of nitrogen deficiency on the growth of the tea plants. Lack of nitrogen is one of the main effects limiting growth and yield in tea plants. By determining when the plants are limited by lack of nitrogen, the model can more accurately predict the growth and yield of the tea plants. It allows fertiliser to be applied to improve soil nitrogen at optimal times and in optimal amounts to maximise yield while controlling costs and minimising harm to the environment.

The method may further comprise one or more of:

a. retrieving nitrogen addition data, indicative of an amount of nitrogen added to the soil of the tea plantation;

b. predicting nitrogen conversion parameters which describe the conversion of nitrogen in the soil between different chemical forms due to one or more of mineralisation, nitrification, or denitrification;

c. predicting plant nitrogen loss, indicative of nitrogen lost by the tea plants due to one or more of harvesting of the tea plants, pruning of the tea plants, exudates, or abscission; or

d. predicting soil nitrogen loss, indicative of loss of nitrogen due to one or more of denitrification, ammonia volatilisation, or leaching.

Advantageously, the nitrogen addition data can adjust the model to reflect the addition of fertiliser or other nitrogen sources so that the model better reflects the amount of nitrogen in the soil and how this affects the level of nitrogen available to the tea plants. This allows the growth of the tea plants to be predicted more accurately.

Advantageously, predicting nitrogen conversion parameters allows the model to reflect how nitrogen is chemically converted from one form to another and how this affects the level of nitrogen available to the tea plants. This allows the growth of the tea plants to be predicted more accurately.

Advantageously, predicting soil nitrogen loss allows the model to reflect how nitrogen is lost from the soil due to various biological or chemical processes, and how this affects the level of nitrogen available to the tea plants. This allows the growth of the tea plants to be predicted more accurately.

The initial nitrogen stock may be initialised with a specified level of soil inorganic nitrogen at a series of soil depths. Advantageously, this allows the model to better reflect what levels of nitrogen are available to different plants. This allows the growth of the tea plants to be predicted more accurately.

The nitrogen addition data may comprise:

a. an amount of new carbon per soil layer,

b. a proportion of carbon in new organic matter, and

c. an amount of new organic nitrogen added to the soil per soil layer.

Advantageously, having more detailed information about the nitrogen sources being described like this in the nitrogen addition allows the model to better reflect how those nitrogen sources change the nitrogen available to the tea plants. This allows the growth of the tea plants to be predicted more accurately.

The method may further comprise calculating a carbon to nitrogen ratio using the initial nitrogen stock and the nitrogen addition data. Advantageously, this allows the model to more accurately model to what extent the plants can uptake the new nitrogen source.

Predicting the growth of the tea plants may further comprise calculating using one or more of: a potential growth rate of the tea plants, a temperature, or a soil water level.

Advantageously, calculating a level of growth of the tea plants were they unconstrained by environmental limitations (i.e. a potential growth rate) allows one to then calculate how those constraints affect this potential growth. Temperature and water availability can limit the growth of the tea plants. Advantageously, considering these parameters allows the growth of the tea plants to be predicted more accurately.

The method may further comprise predicting the potential growth rate of the tea plants, wherein the potential growth rate is calculated using one or more of: amount of solar radiation, radiation use efficiency, light extinction coefficient, or leaf area index. Plants use their leaves to absorb sunlight for photosynthesis and thereby produce material for growth.

Advantageously, by using solar energy parameters and the size of the leaves, the model can predict a potential growth rate for the plants. Considering these parameters allows the growth of the tea plants to be predicted more accurately.

Predicting the nitrogen deficiency level may comprise calculating one or more of: critical nitrogen level for the canopy, proportion of nitrogen in the canopy, or minimum nitrogen content level of the canopy.

Advantageously, by considering the level of nitrogen in the canopy of tea plants, or at what level the nitrogen starts to become limiting on growth (the critical nitrogen level), the nitrogen deficiency level can be predicted. Considering these parameters allows the growth of the tea plants to be predicted more accurately.

Predicting the nitrogen deficiency level may comprise predicting nitrogen demand for each tea plant, wherein predicting nitrogen demand comprises one or more of the following:

a. predicting canopy homeostatic nitrogen demand of the tea plants, comprising calculating using one or more of: canopy mass, the critical nitrogen level, and the proportion of nitrogen in the canopy of the tea plants;

b. predicting root homeostatic nitrogen demand of the tea plants, comprising calculating using one or more of root mass, the critical nitrogen level, or the proportion of nitrogen in the roots of the tea plants;

c. predicting canopy growth nitrogen demand of the tea plants, comprising calculating using canopy potential growth rate and/or the critical nitrogen level of the canopy; or

d. predicting root growth nitrogen demand of the tea plants, comprising calculating using root potential growth rate and/or the critical nitrogen level of the roots.

Advantageously, by considering how different tissues are in need of nitrogen, the model can predict the growth of the tea plants more accurately.

Predicting the growth of the tea plants may comprise predicting the growth of a plurality of leaves for each tea plant. Tea plants for harvesting grow shoots with multiple leaves which are harvested at a preferred stage. Advantageously, predicting the growth state of a plurality of leaves permit the model to more accurately predict when the tea plants are in an optimal state for harvesting as well as predict the growth of the tea plants more accurately.

The nitrogen conversion parameters may comprise a parameter to represent nitrogen mineralisation, wherein the method comprises calculating a nitrogen mineralisation parameter using one or more of: the amount of new organic nitrogen, the fraction of organic matter pools, the total organic matter, a temperature factor, a moisture factor, a carbon:nitrogen ratio factor, decay rates constants, the concentration of ammonium, the concentration of nitrate, or the amount of new humus nitrogen.

The nitrogen conversion parameters may comprise a parameter to represent nitrification, wherein the method comprises calculating a nitrification parameter using one or more of: substrate ammonium levels, oxygen levels, soil pH, a temperature factor, or a soil water factor.

The nitrogen conversion parameters may comprise a parameter to represent denitrification, wherein the method comprises calculating a denitrification parameter using one or more of: the ammonium concentration, the pH, the temperature, soil water content, or the amount of ammonium above the minimum value.

Advantageously, calculating a parameter for nitrogen mineralisation, nitrification, or denitrification allows the model to more accurately predict how nitrogen changes between chemical forms in the soil and predict how much nitrogen is available.

Predicting nitrogen loss may comprise predicting nitrogen volatilisation, wherein predicting nitrogen volatilisation comprises calculating using one or more of: the ammonia concentration in soil water, the wind speed, soil temperature, or the soil depth.

Advantageously, predicting nitrogen volatilisation allows the model to more accurately predict how nitrogen is lost from the soil. This allows the model to predict the growth of the tea plants more accurately or to predict when nitrogen will be lost from the soil more quickly or slowly, so that the application of nitrogen fertiliser can be optimised to prevent unnecessary or excessive use of fertiliser.

In a fourth aspect, embodiments of the invention provide a computer program configured to execute the method according to the third aspect.

In a fifth aspect, embodiments of the invention provide a storage medium containing instruction to execute the method according to the third aspect on a computer processor.

## SUMMARY OF THE FIGURES

Fig 1 shows a diagram representing the flow of information in an embodiment according to the first aspect of the invention

Fig 2 shows a flowchart representing the flow of information in the growth and yield prediction module.

Fig 3 shows a screenshot of a user interface provided by the user interface module.

Fig 4 shows a map showing the calculated mean altitude of each field in the Kapgwen and Chemosit estates in Kenya.

Fig 5 shows a map showing the calculated mean altitude of each field in the Kapkorech estate in Kenya.

Fig 6 shows weather data for Kapkorech Research Stations for 2011 to 2013.

Fig 7 shows weather data for Chemosit station for 2011 to 2013.

Fig 8 shows a graph of the cumulative growth from the twelve CUPPA-Tea model runs testing soil sensitivity.

Fig 9 shows a graph of the modelled harvested yield for the twelve test soils.

Fig 10 shows a graph of runs from the CUPPA-Tea with varying shoot numbers and harvest intervals compared with recorded yield.

Fig 11 shows a graph of recorded monthly yields (kg MT ha-1) on selected fields in Kapkorech tea estate.

Fig 12 shows a graph of recorded and modelled monthly yields from Field 9 in Kapkorech tea estate.

Fig 13 shows a graph of recorded and modelled monthly harvested yield for Field 28 on the Kapgwen tea estate.

Fig 14 shows a graph of modelled yield per harvest, recorded monthly yield and soil water deficit for Field 28 on the Kapgwen estate

Fig 15 shows a graph of mean monthly yield of green leaf tea from Kapkorech estate and the total monthly rainfall from January 2014 to September 2016.

Fig 16 shows a graph of the relationship between altitude, annual green leaf yield, and harvesting method for 2014 and 2015.

Fig 17 shows a graph of predicted yield using the "1997", "2004", "Recomp Pascal" and "C#" versions of the model for fully-irrigated tea using default input file for Ngwazi, Tanzania, with 14 day harvest interval (April 1989 to July 1990). The difference in the calculated soil water deficit in the "1997" and the "C#" version is also shown.

Fig 18 shows a graph of a comparison of predicted weekly yields using the "C#" and "2004" versions of the CUPPA-Tea model for predicted yield for Ngwazi, Tanzania using original input file.

Fig 19 shows a graph of yield for Ngwazi, Tanzania for specified harvest dates, irrigated using actual irrigation schedule.

Fig 20 shows a graph of actual weekly yield from unirrigated Clone 6/8, and the predicted yields from the 1997 and the C# models for Ngwazi, Tanzania for specified harvest dates. The soil water deficit is also shown.

Fig 21 shows a graph comparing water stress factor between new and original version of the Cuppa tea model

Fig 22 shows a screenshot of the output from Water Model showing impact of 6 mm of rain on Water Stress Factor

Fig 23 shows a graph of actual yields reported for hand-plucked tea in Field 5 at Kapkorech, Kenya.

Fig 24 shows a graph of actual yields reported for mechanical harvested tea in Field 37 at Kapkorech, Kenya.

Fig 25 shows a graph of dry matter constant (the conversion of Greenleaf to made tea yields) for Kapkorech Estate from March 2014 to September 2016.

Fig 26 shows a graph of grouped yield of made tea (expressed per week) for hand plucked tea from Field 5.

Fig 27 shows a graph of grouped yield of made tea (expressed per week) for mechanically harvested tea from Field 37.

Fig 28 shows a graph of Predicted and Actual weekly yield for hand plucked field 5

Fig 29 shows a graph comparing predicted yield for field 37 using different step heights, with a table height of 75cm

Fig 30 shows a graph comparing predicted yield for field 5 (hand plucked) with different plucking regimes

Fig 31 shows a graph comparing predicted yield for field 5 (hand plucked) versus different shoot numbers

Fig 32 shows a graph of the effect of soil type on the predicted weekly yields of hand-harvested tea in Field 5

## Fig 33

## Fig 34

Fig 35

Fig 36

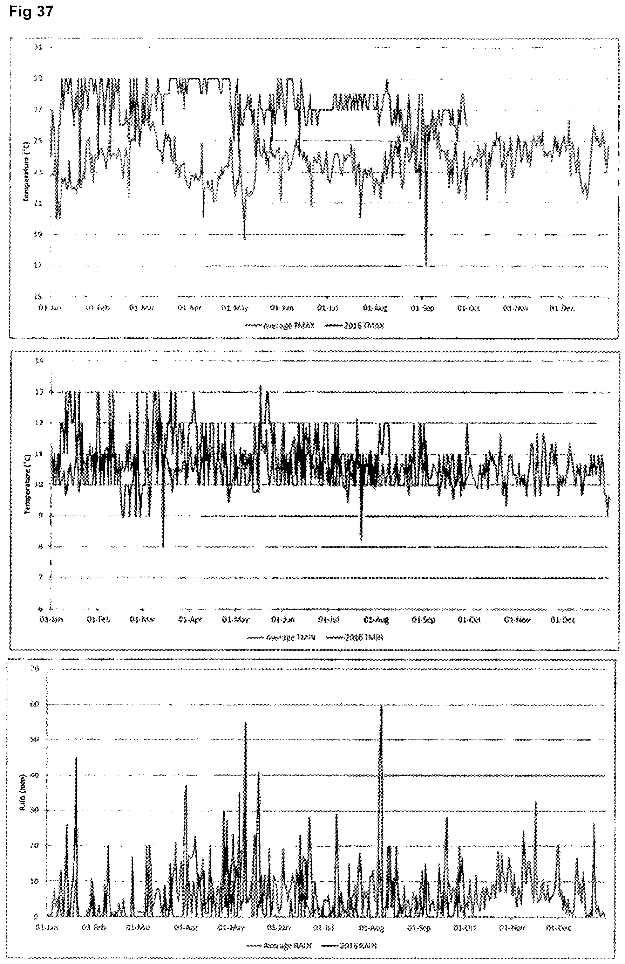

Fig 37 shows a series of graphs showing a comparison of average minimum temperature, maximum temperature and rain 2013 to 2015 with 2016 values.

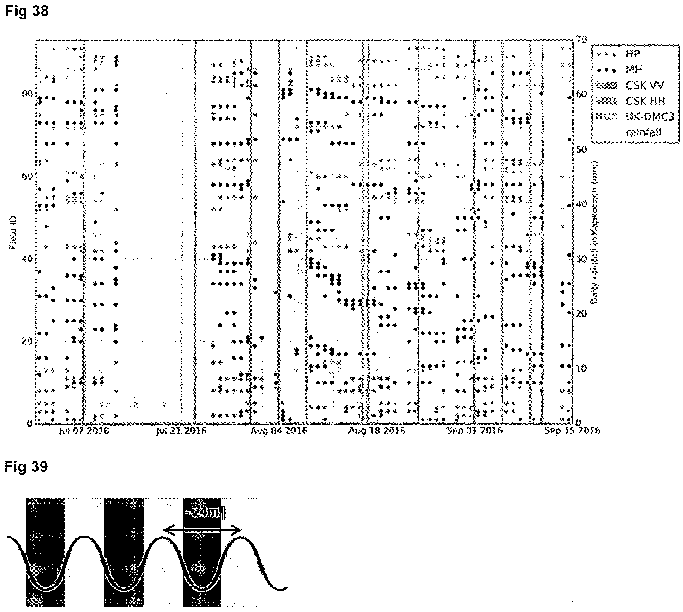

Fig 38 shows a timeline of the experiment reporting the different satellite images (CosmoSkymed (CSK) W and HH polarisations, UK-DMC3), rainfall measurements, and harvest dates (dots) from monthly harvest reports with hand pluck (HP) in grey and mechanical harvest (MH) in black.

Fig 39 shows a representation of how the rows from machine harvest can be detected from their characteristic sinusoidal signature with spatial period of ~24m

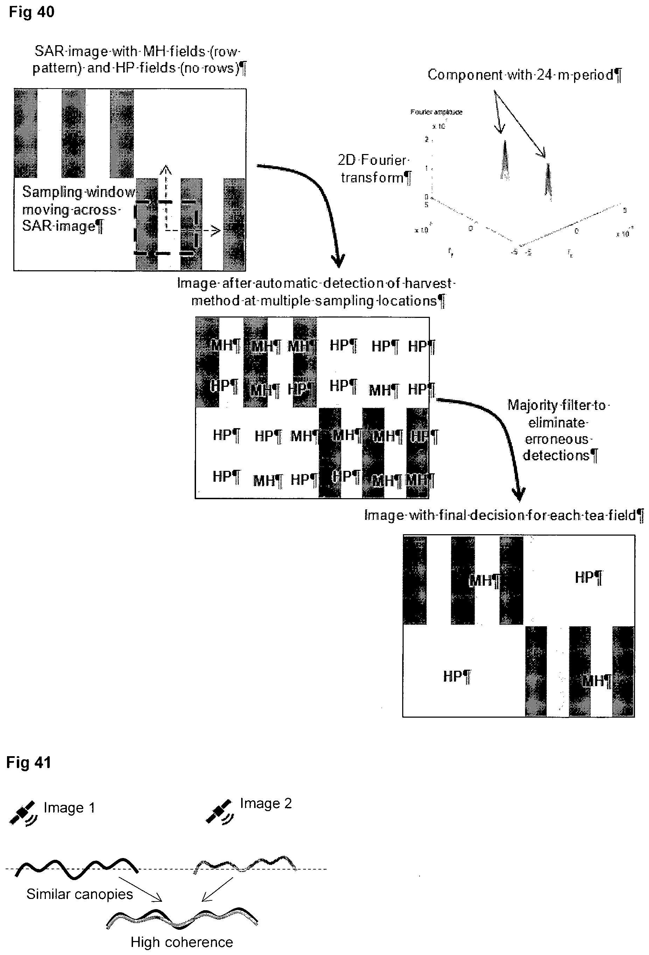

Fig 40 shows a representation of how automatic detection of harvest method using the SAR images can be achieved.

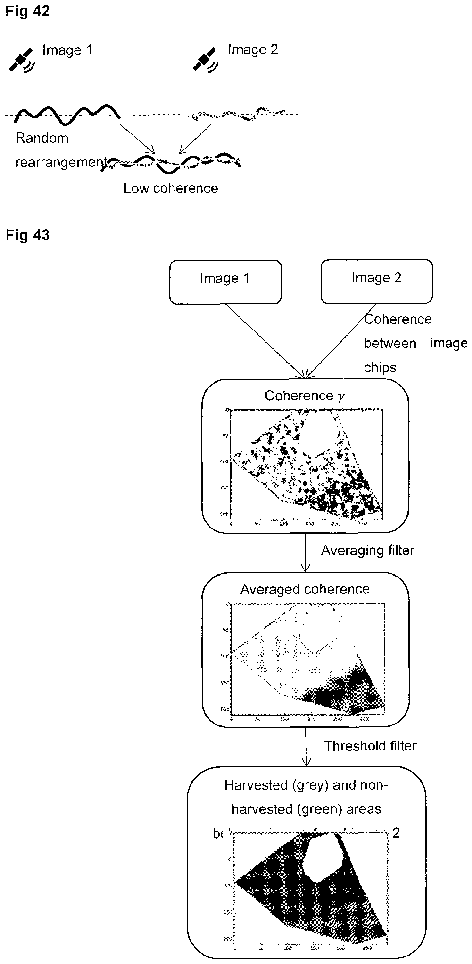

Fig 41 and Fig 42 each show a representation of examples of scenario where the imaged scene remains coherent (Fig 41) and where the imaged scene looses coherence (Fig 42). In the high coherence scenario, the surface canopy has slightly changed but remains correlated between image 1 and image 2. In the low coherence scenario, the canopy has been randomly rearranged, which is what happens when harvesting.

Fig 43 shows a flowchart of the processing steps to detect harvested areas between 2 SAR images using the loss of coherence. Example with field 84 between the 15th and the 22nd August.

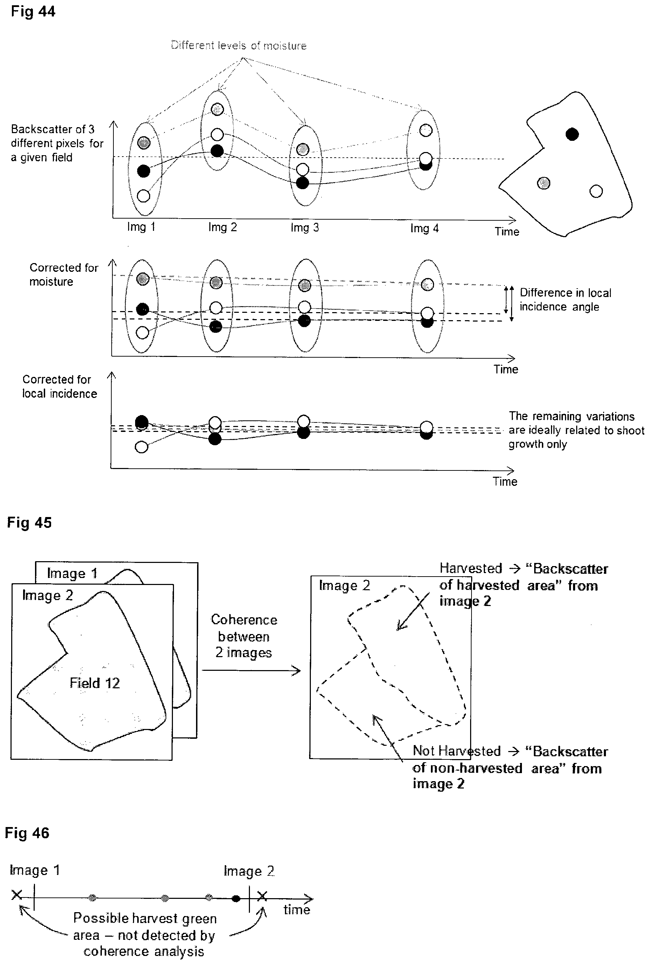

Fig 44 shows a series of normalisation steps to correct the backscatter coefficient for variations in moisture and local incidence angle.

Fig 45, Fig 46, and Fig 47 show an approach implemented to compare the backscatter coefficient of a non-harvested area with that of a harvested area.

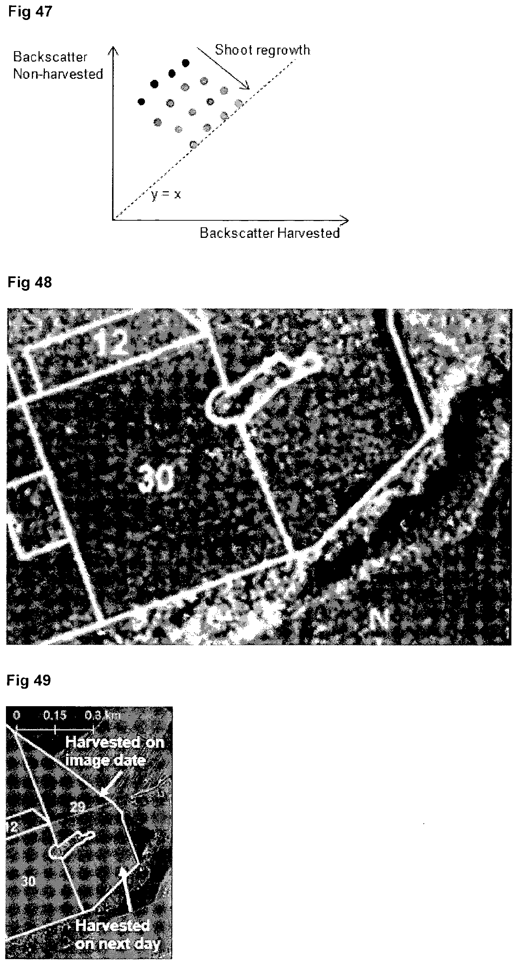

Fig 48 shows a SAR image (23rd August) showing row pattern after machine harvest.

Fig 49 shows a pan-sharpened multispectral image (16th August) showing a visible row pattern after machine harvest. Field 29 shows that the pattern is only visible after harvest happens, and suggests that the pattern is fading with shoot growth.

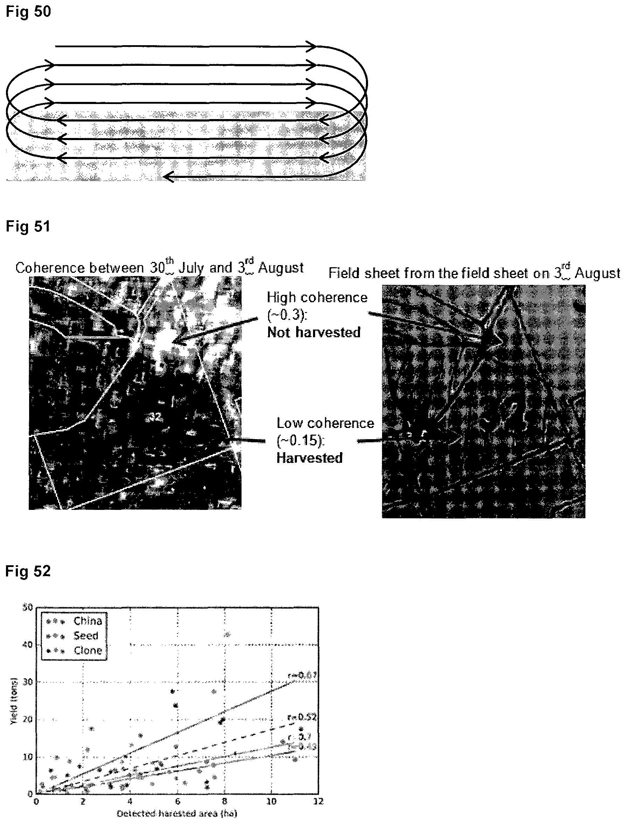

Fig 50 shows a schematic showing how machine harvest with a width of 1.5 m can result in bands of larger width.

Fig 51 shows a comparison between loss of coherence and harvested area from a field sheet.

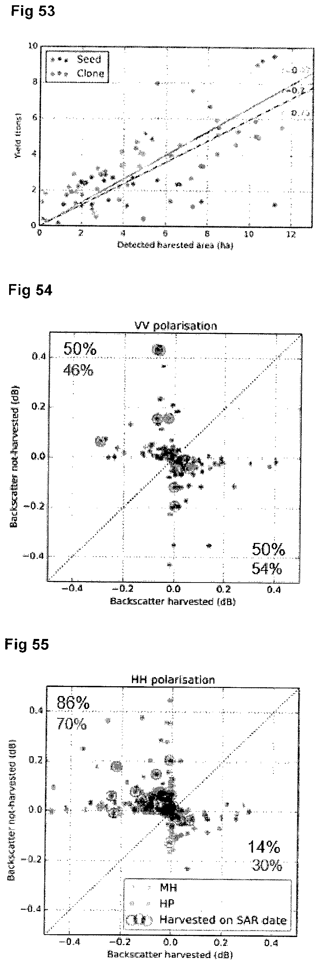

Fig 52 and Fig 53 show the correlation between the detected harvested area between 2 SAR images using the coherence, and the yield for the corresponding periods from the harvest report. Fig 52 is for mechanical harvest, Fig 53 is for hand pluck. Green, orange, and blue are data for China tea, Seed tea, and Clone tea respectively. The dashed black line is an overall linear regression using all the tea varieties together.

Fig 54 and Fig 55 show a comparison between backscatter of non-harvested area (y-axis) with backscatter of harvested area (x-axis) for each hand-pluck field (blue dots) and each machine-harvested field (red dots), for the W-polarised images (Fig 54) and for the HH-polarised images (Fig 55). The grey dots highlight the fields which have been harvested on the days of the SAR images. These grey dots are expected to show the largest difference between harvested and non-harvested backscatter. For the W-polarisation, the grey dots are evenly spread on either side of the y=x diagonal (50% - 50%), and the partition is 46% - 54% when considering all the dots (red and blue). For the HH-polarisation, 86% of the grey dots have a backscatter of harvested area smaller than that of the non-harvested area, and the partition is 70% - 30% when considering all the dots.

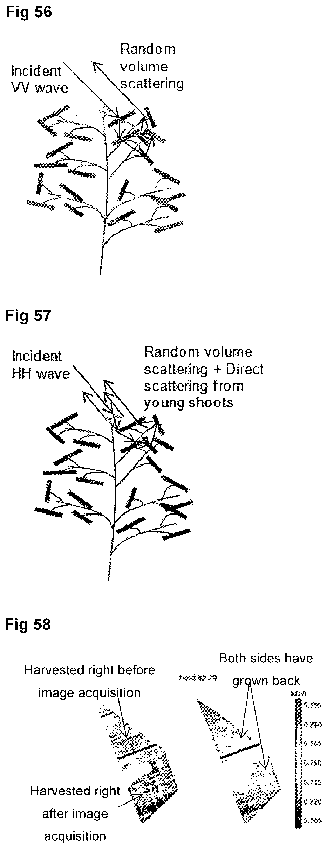

Fig 56 shows that using W-polarisation, the horizontal leaves from new shoots are transparent, and the wave only interacts with the randomly oriented leaves of the older canopy.

Fig 57 shows that using HH-polarisation, the measured backscatter is a combination of direct scattering from the new shoots and random scattering from the canopy, hence the increase in HH backscatter when young shoot are developing/developed.

Fig 58, Fig 59, Fig 60, and Fig 61 show the variations in NDVI between the first (16 Aug) and the second (10 Sep) UK-DMC3 images for fields 29, 30, 32, and 33 respectively.

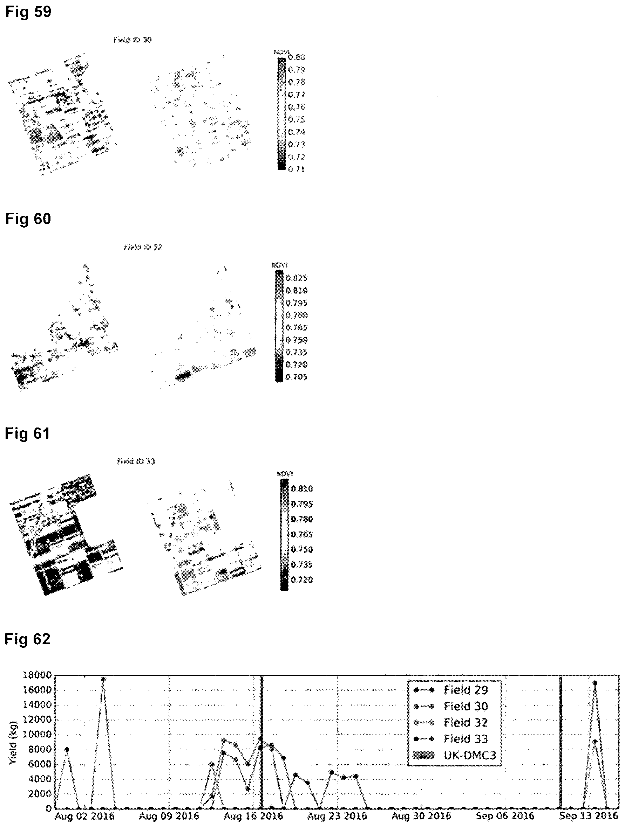

Fig 62 shows data from the harvest report for the four fields and the time of the two UK-DMC3 images.

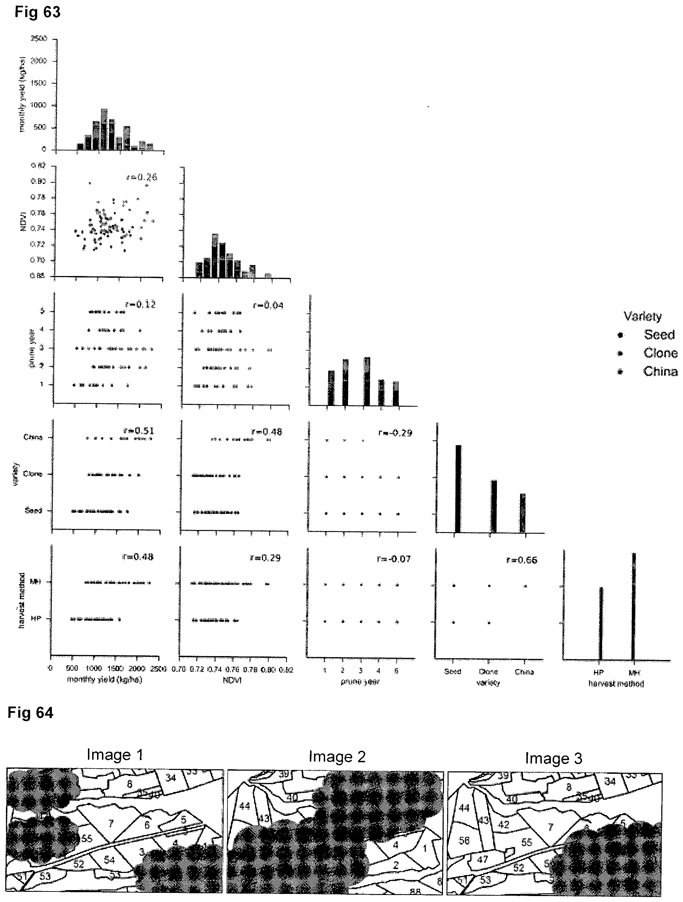

Fig 63 shows a pairwise scatter plot between (1) the average monthly yield from Jan to Sep 2016 (harvest report), (2) the mean NDVI per field on 16th Aug 2016 image, (3) the prune year, (4) the tea variety, and (5) the harvest method (MH=Machine harvest, HP=Hand pluck)

Fig 64 shows a series of images, all cloudy, but alternatively revealing different fields.

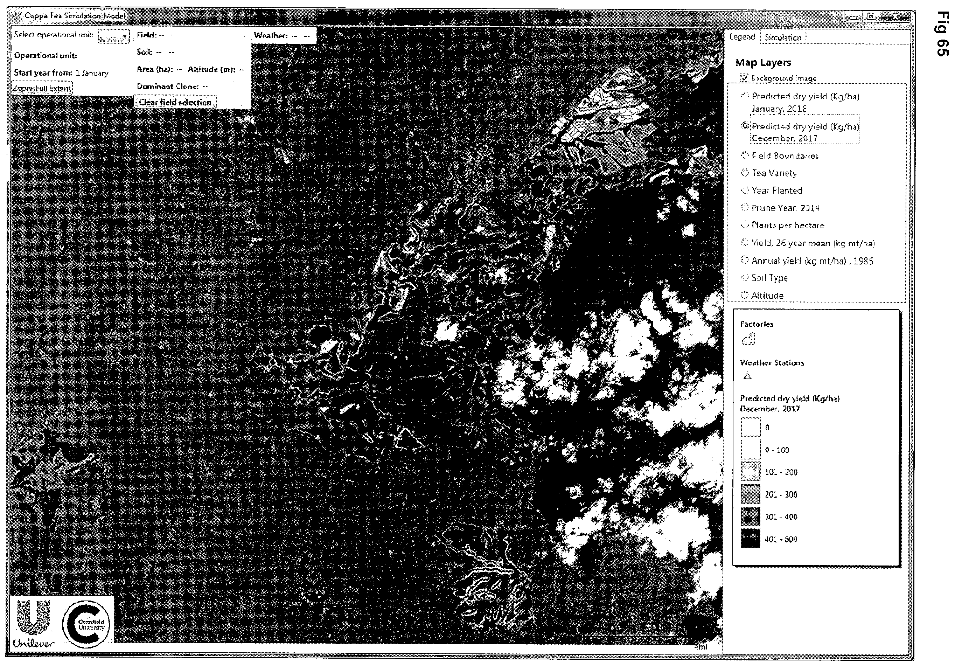

Fig 65 shows a screenshot of the Cuppa tea Tool showing monthly predictions from CuppaTea model (background imagery DigitalGlobe, 23rd Jan 2015).

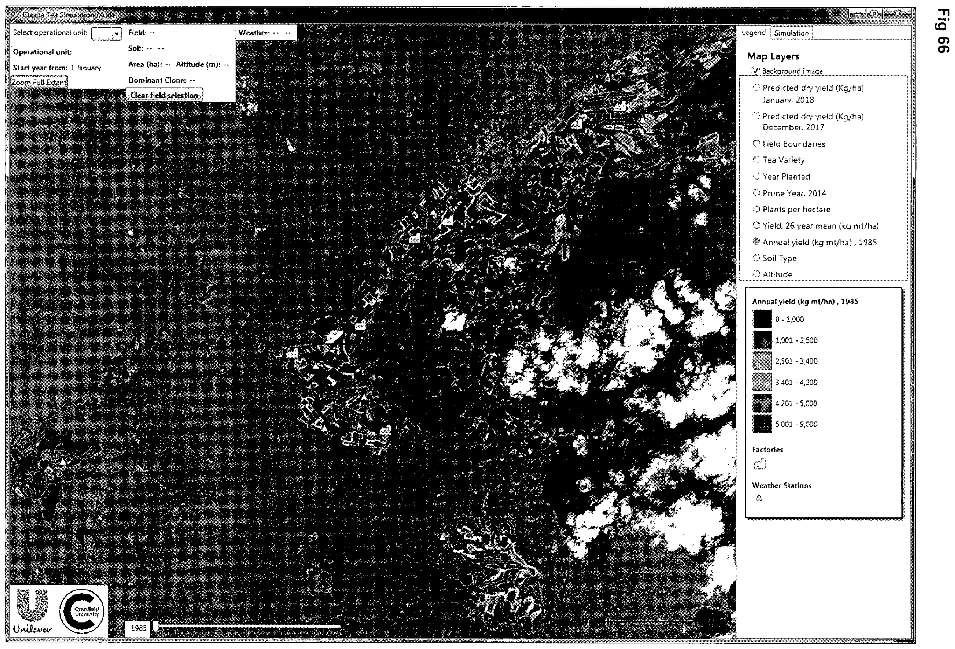

Fig 66 shows a screenshot of the Cuppa Tea Tool showing Annual yield in kg mt/ha. A slider bar on the bottom left allows selection of the year (background imagery DigitalGlobe, 23rd Jan 2015).

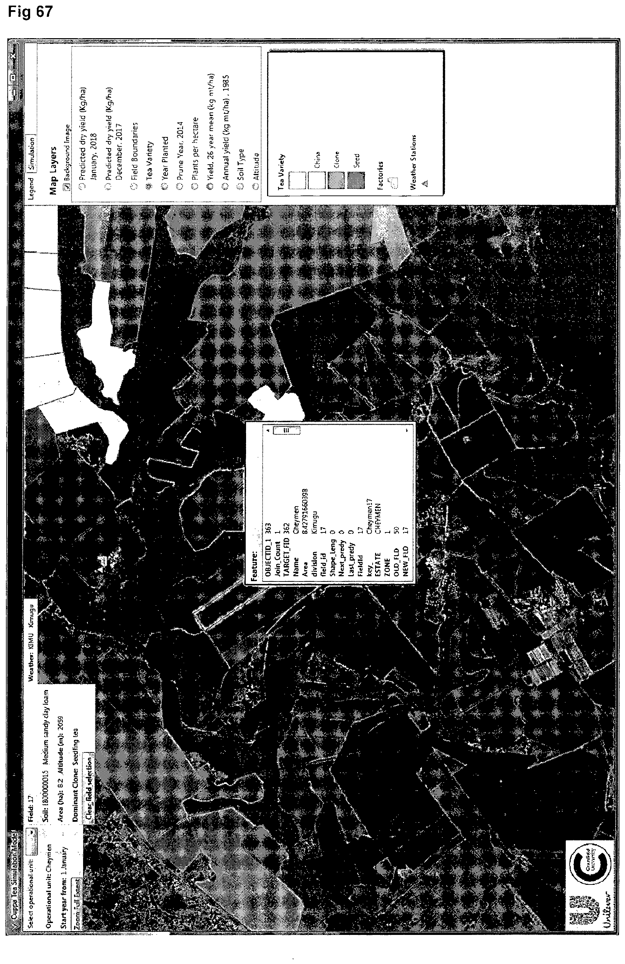

Fig 67 shows a screenshot of the Cuppa Tea tool showing data at field level (background imagery DigitalGlobe, 23rd Jan 2015).

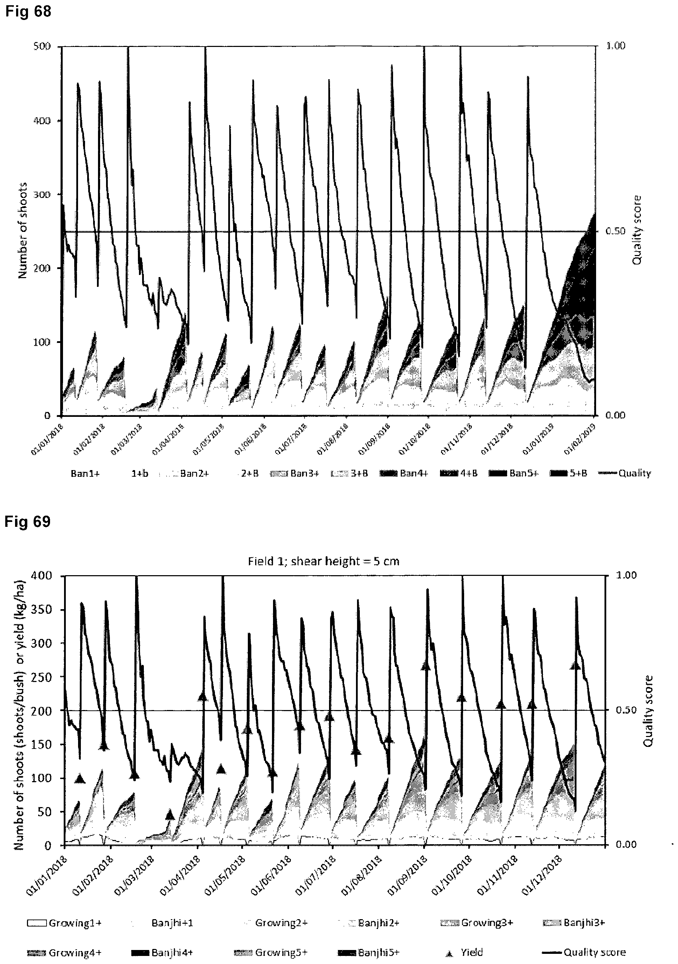

Fig 68 shows a graph showing the development of shoots types, and the quality index for Field 1 in Kericho from 1 January to 31 December 2018 assuming the hand-harvesting routine using CUPPA-Cloud.

Fig 69 shows a graph showing the calculated number of shoots for Field 1 from 1 January to 31 December 2018 assuming a default minimum harvested shoot length of 5 cm. The majority of harvestable shoots are 2+ and 3+ leaves, and the quality score of the harvested leaf is similar to the harvestable leaf.

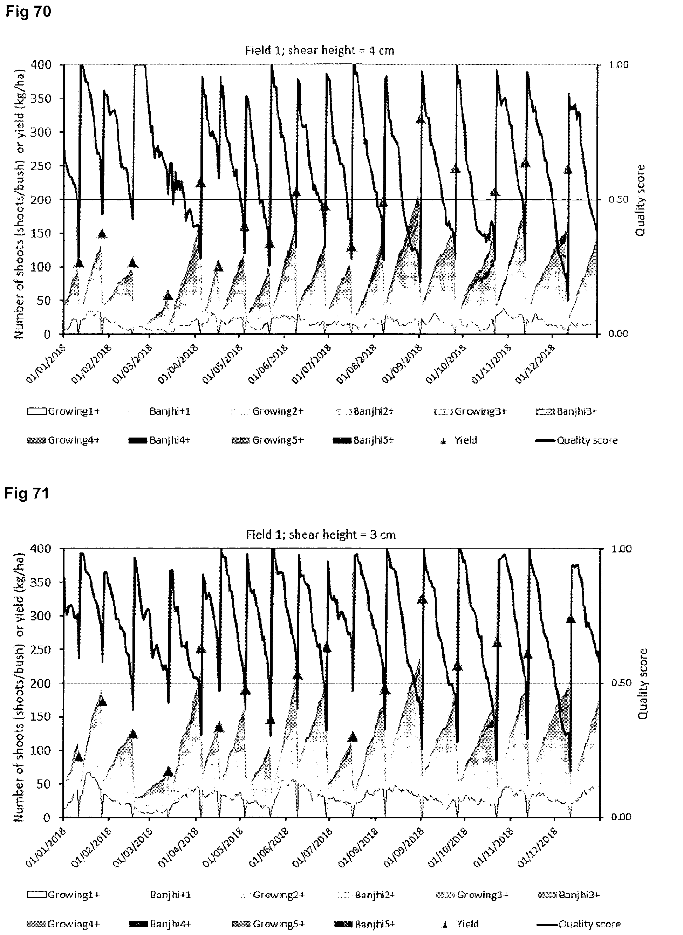

Fig 70 shows a graph that shows that assuming a minimum harvested shoot length of 4 cm (relative to 5 cm) increases the number of small shoots; the number of some larger shoots decreases. The quality and the yield increases.

Fig 71 shows a graph that shows that assuming a minimum harvested shoot length of 3 cm (relative to 4 cm) increases the number of small shoots and hence the quality increases. The yield also increases.

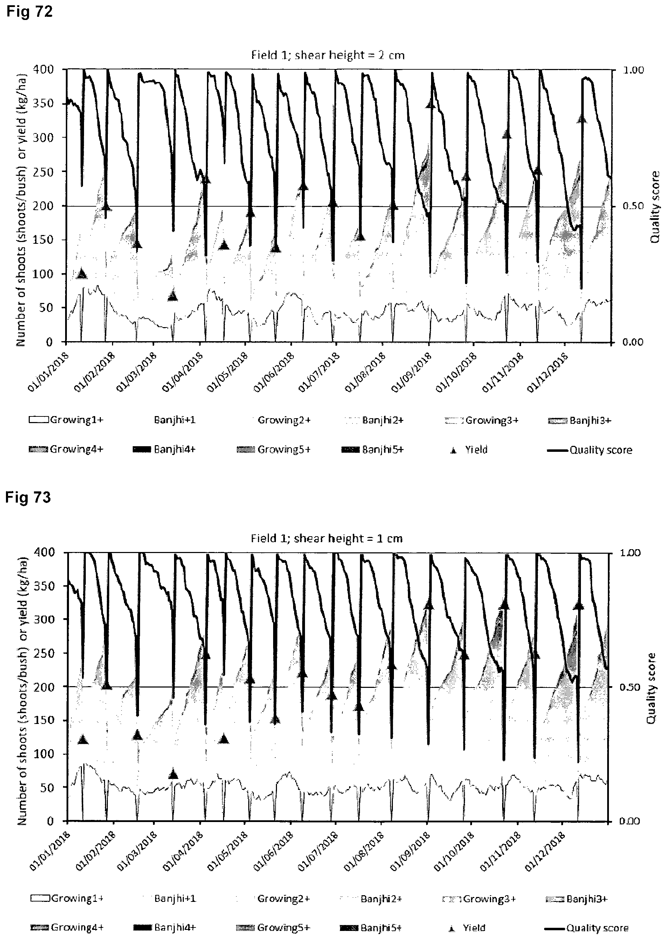

Fig 72 shows a graph that shows that assuming a minimum harvested shoot length of 2 cm (relative to 3 cm) increases the number of 1+shoots and reduces the number of 3+shoots. The quality score increases. The effect on yield is variable.

Fig 73 shows a graph that shows that assuming a minimum harvested shoot length of 1 cm (relative to 2 cm) makes little difference in the number of 2+ shoots. However it marginally increases the number of growing1+ and banjhi1+ shoots.

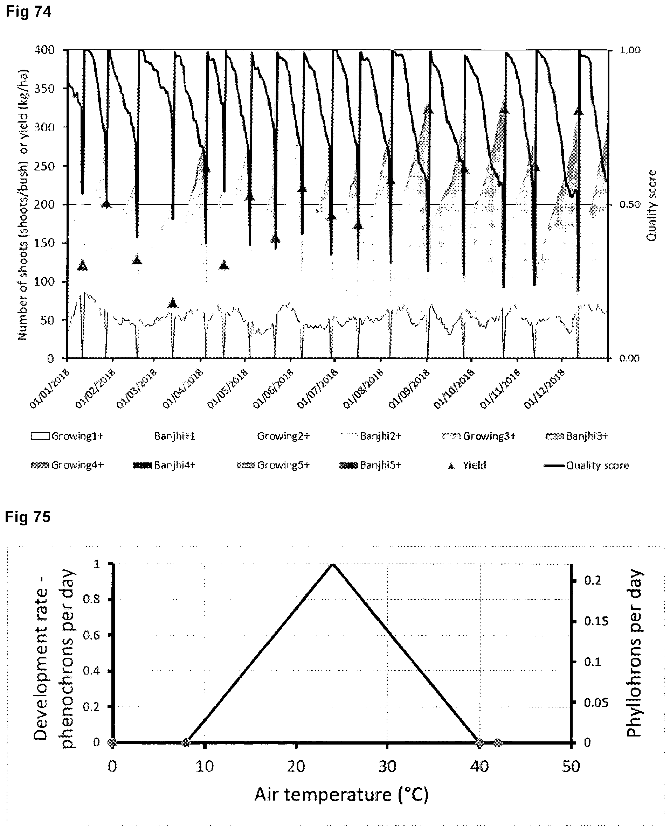

Fig 74 shows a graph showing the calculated number of shoots (1+bud and greater) for field 1 from 1 January to 31 December 2018 with a minimum harvested shoot length of 0 cm. The quality score expressed as (1banj + 1grow + 2grow)/(1 to 5 banj + 1 to 5 grow) declines to about 50 at the time of harvest. However the yield is only taken from shoots with 2 and 3 and a bud, so that actual harvest quality is substantially lower.

Fig 75 shows a graph showing the assumed effect of air temperature on the development rate in terms of phenochrons and phyllochrons per day in CUPPA-Tea.

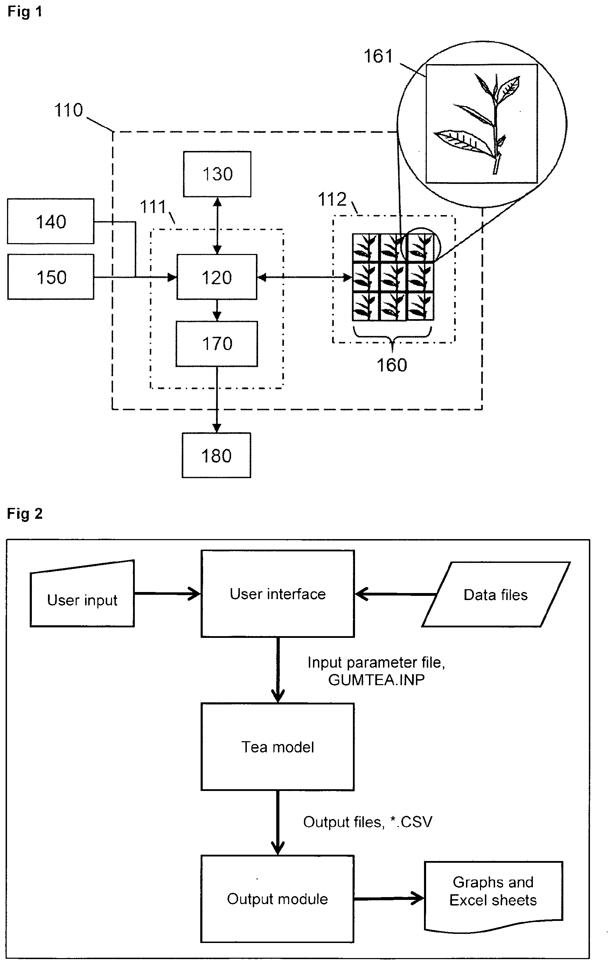

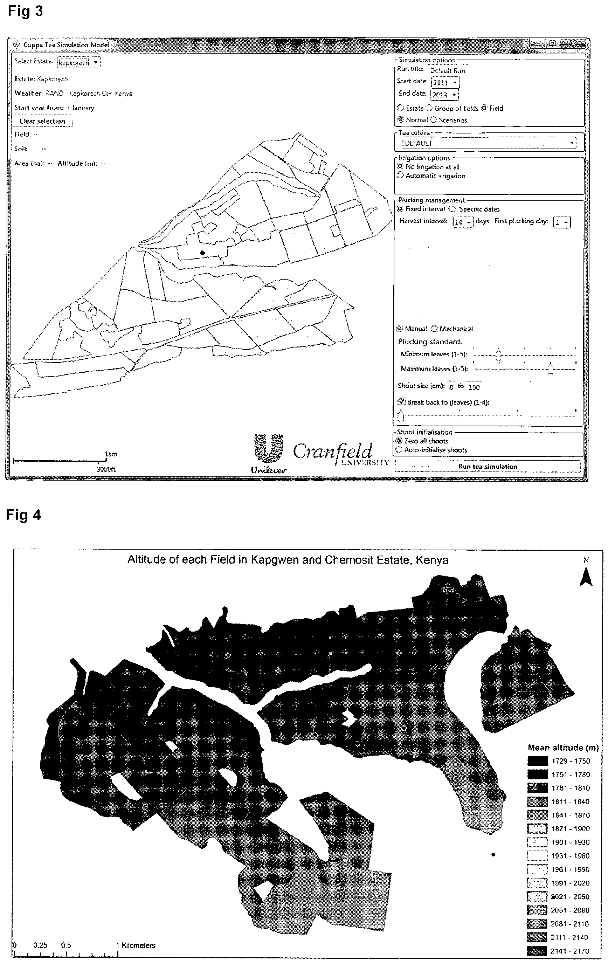

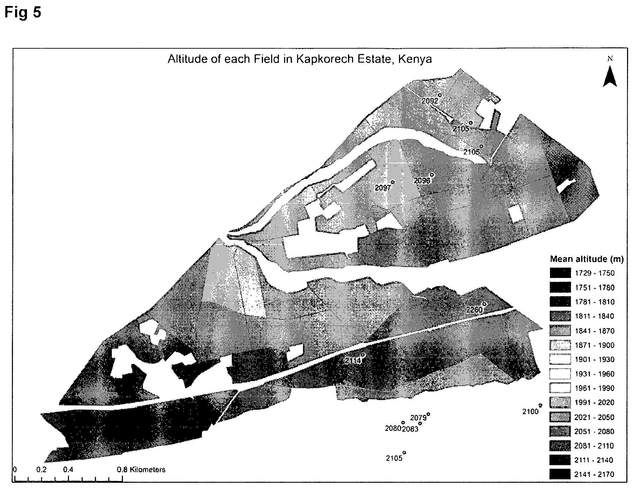

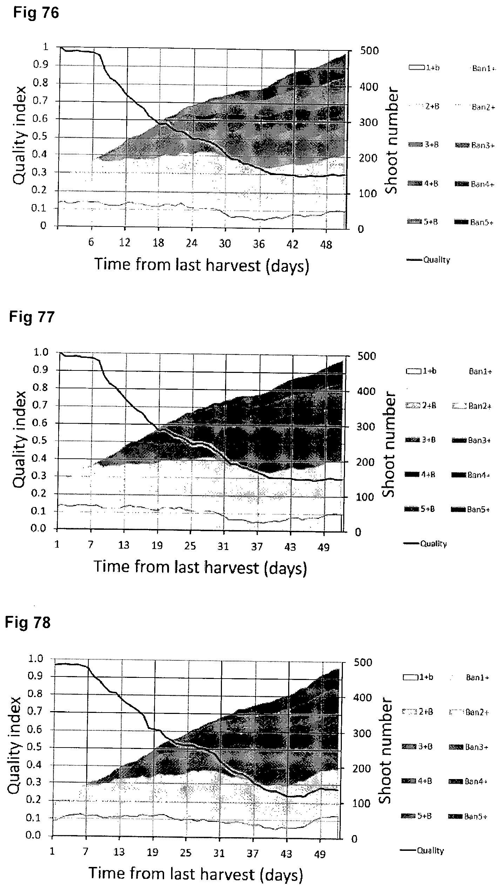

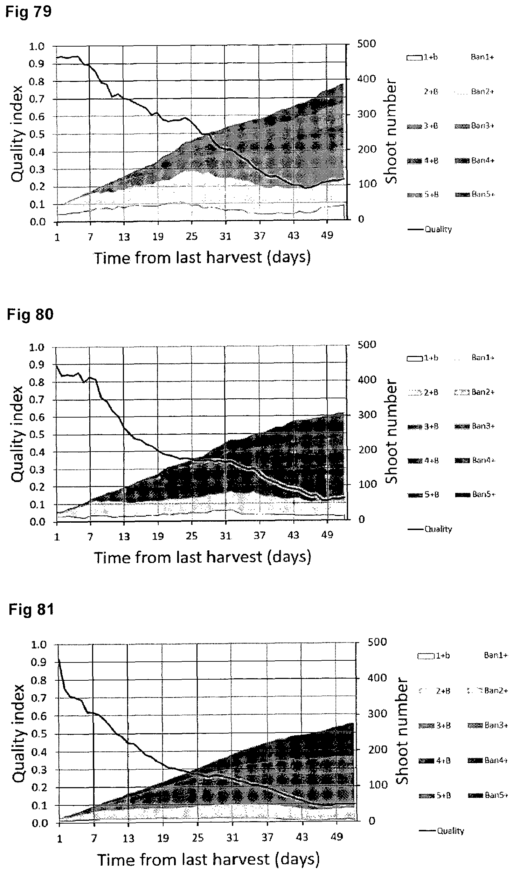

Fig 76, Fig 77, Fig 78 Fig 79, Fig 80, and Fig 81 each show a graph showing the effects of days after harvest (on 11 December 2018) on the predicted quality index and the shoot number in Field 1 after harvest assuming a minimum shoot length of 0cm in Fig 76, 1cm in Fig 77, 2cm in Fig 78, 3cm in Fig 79, 4cm in Fig 80, and 5cm in Fig 81.

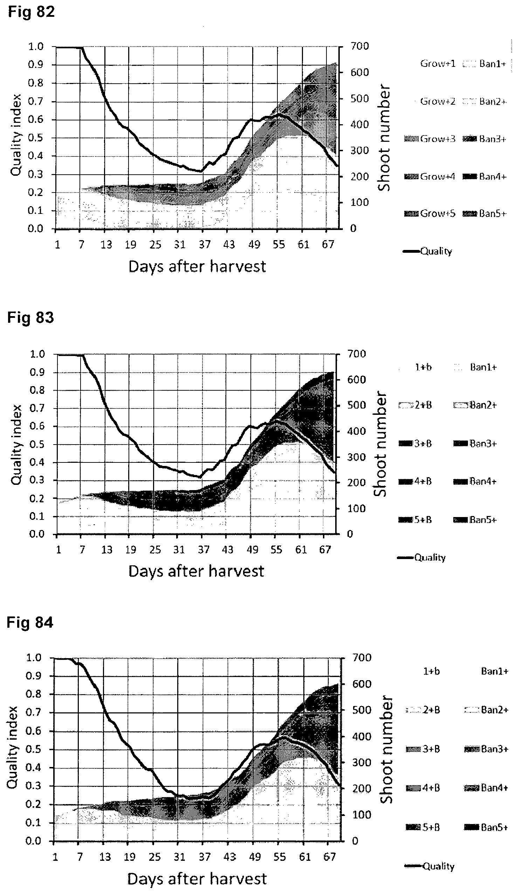

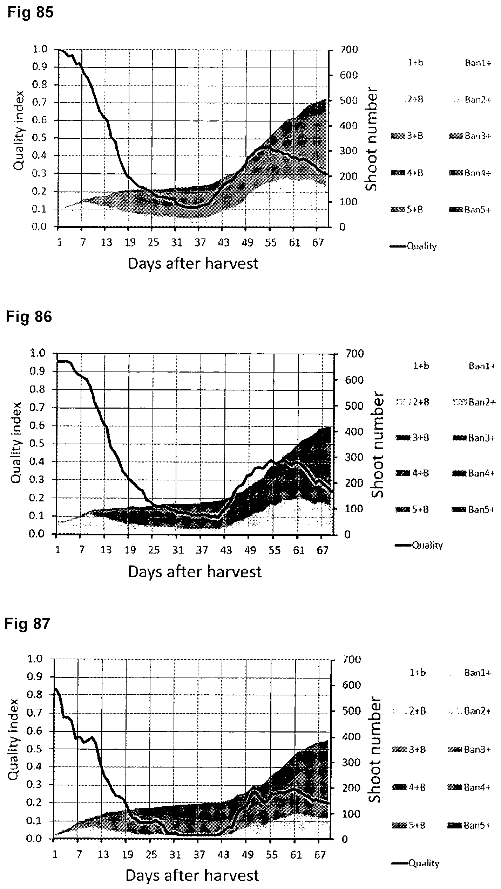

Fig 82, Fig 83, Fig 84, Fig 85, Fig 86, and Fig 87 each show a graph showing the effects of days after harvest (on 24 November 2018) on the predicted quality index and the shoot number in Field 14 after harvest assuming a minimum shoot length of 0cm in Fig 82, 1cm in Fig 83, 2cm in Fig 84, 3cm in Fig 85, 4cm in Fig 86, and 5cm in Fig 87.

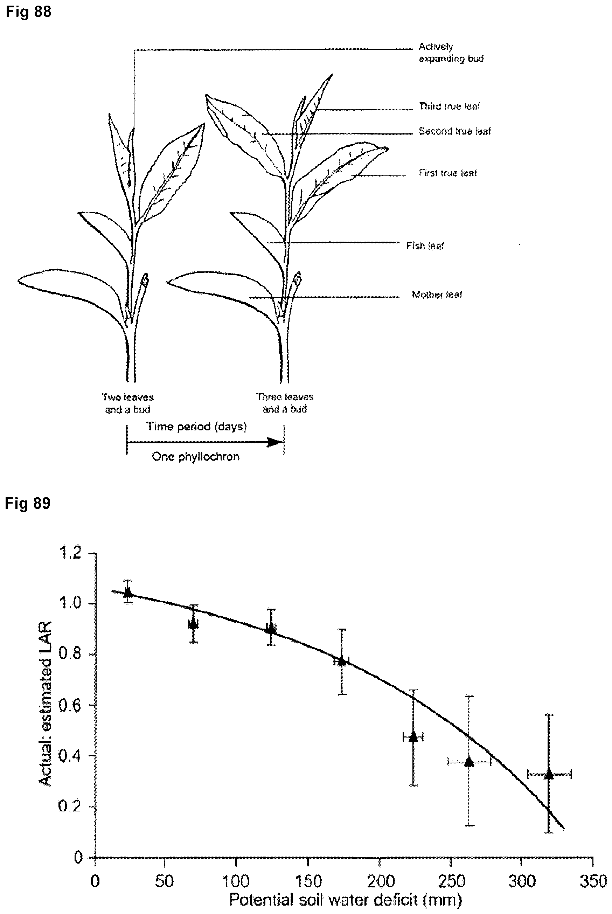

Fig 88 shows a schematic diagram showing one phyllochron (from (Burgess & Carr, 1998)).

Fig 89 shows a graph showing the effect of the potential soil water deficit (SWD), at the start of the period, on the ratio of actual to estimated leaf appearance rate (f) for three- to four-year-old tea plants (from (Burgess & Carr, 1998)).

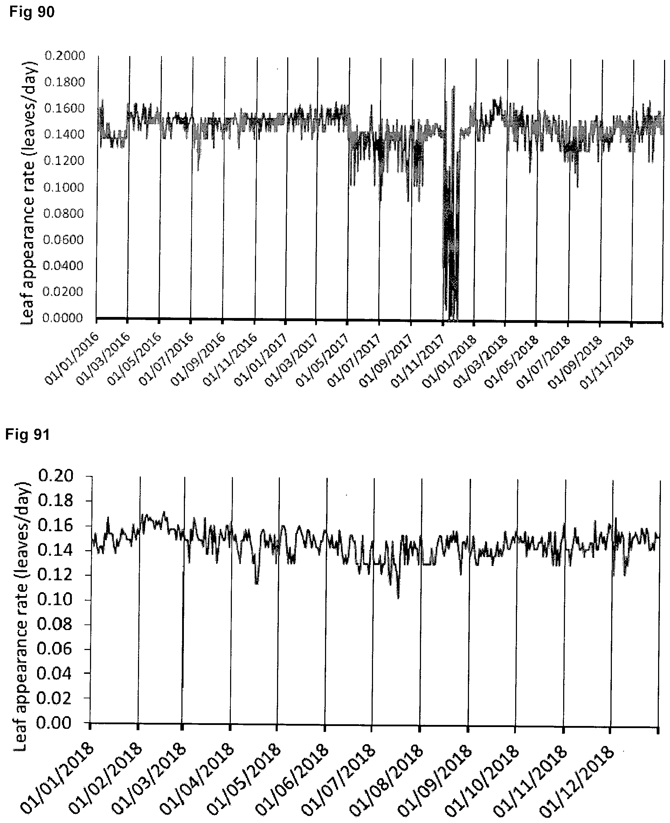

Fig 90 shows a graph showing the predicted leaf appearance rate at Kericho based on air temperature measurements from 1 January 2016 to 31 December 2018.

Fig 91 shows a graph showing the predicted leaf appearance rate at Kericho based on air temperature measurements from 1 January to 31 December 2018. The mean temperature was 17.95 C.

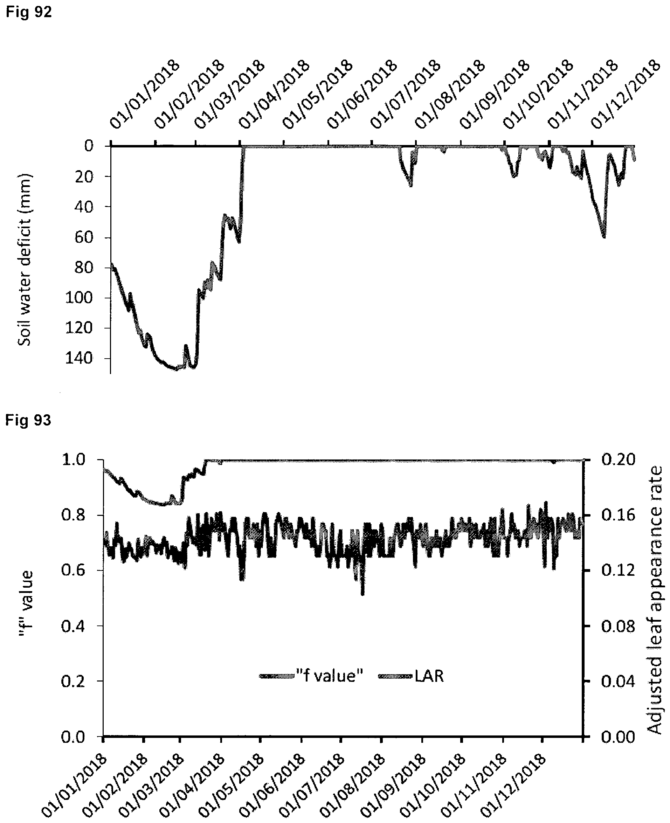

Fig 92 shows a graph showing the calculated soil water deficit from CUPPA-Tea from 1 January to 31 December 2018 showing drought stress at the beginning of the year.

Fig 93 shows a graph showing the calculated adjusted leaf appearance rate in CUPPA-Tea from 1 January to 31 December 2018 showing drought stress at the beginning of the year.

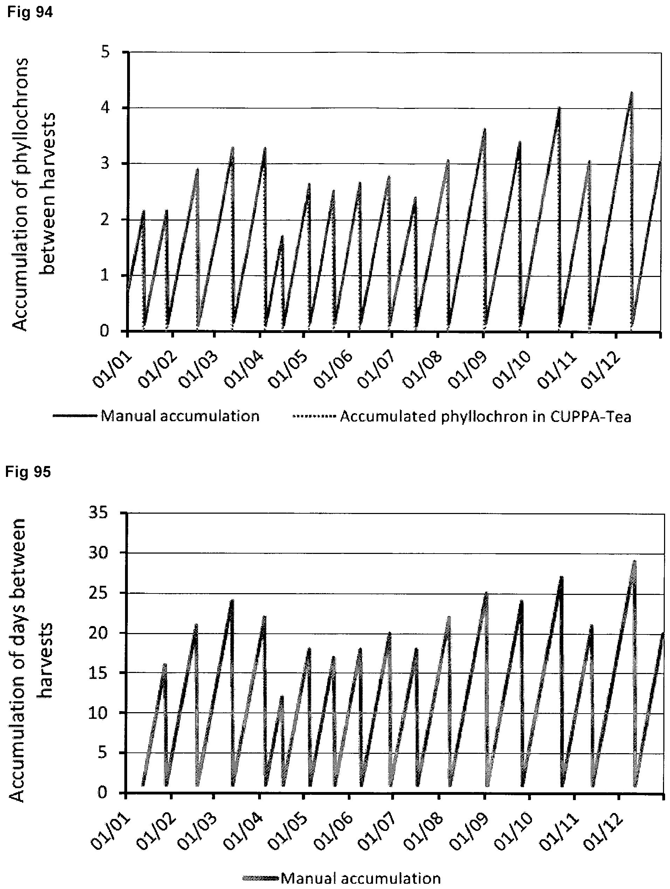

Fig 94 shows a graph showing the accumulation of phyllochrons (as calculated manually) and as calculated using CUPPA-Tea for Field 1 in 2018.

Fig 95 shows a graph showing the accumulation of days between harvest as reported for Field 1 in 2018.

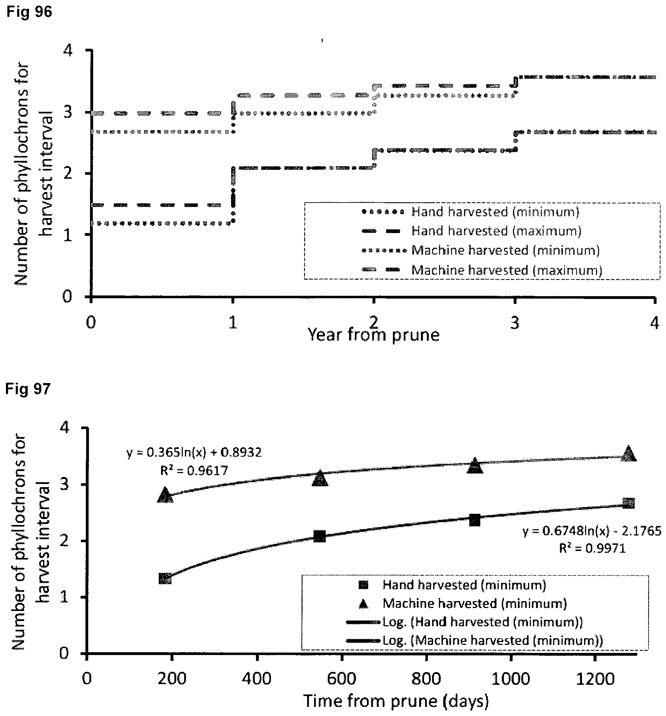

Fig 96 shows a graph showing the increase in the phyllochron ratio can be indicated as step changes according to the year of prune.

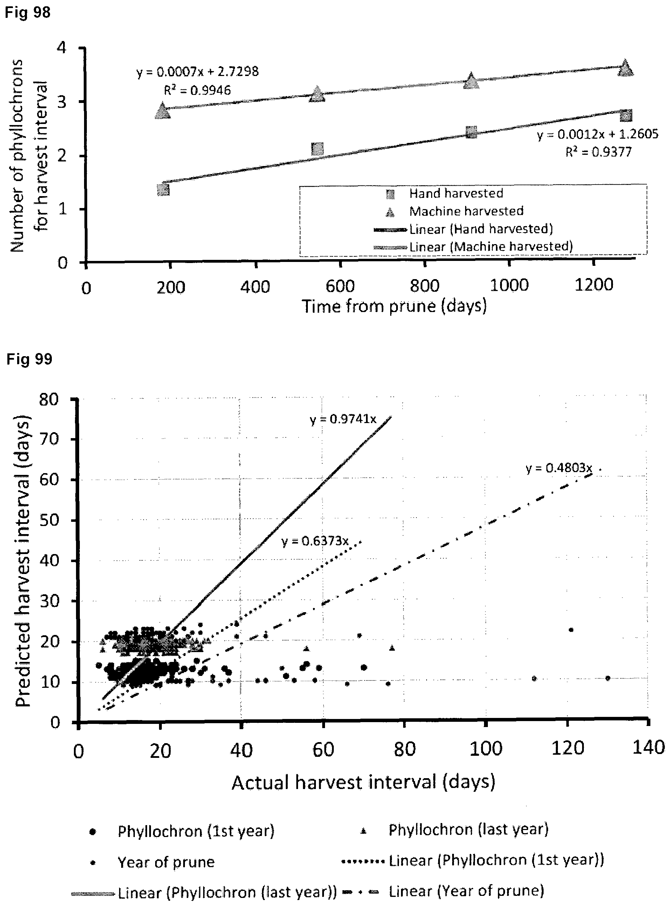

Fig 97 and Fig 98 each show a graph showing that the phyllochron multiple can be expressed as a logarithmic or linear relationship respectively.

Fig 99 shows a graph showing the initial relationship between actual and predicted phyllochrons-based harvest interval for hand harvested leaf according to year of prune based on report harvest method in the first report.

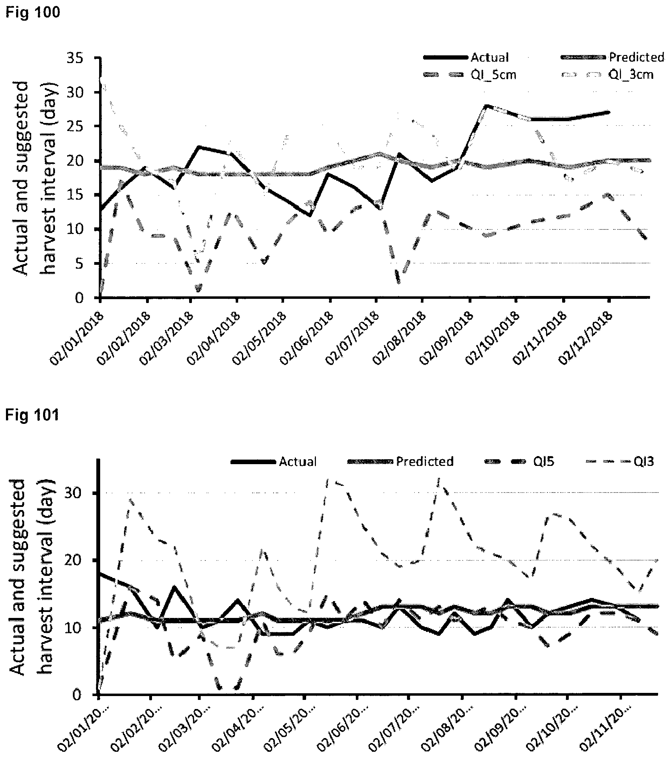

Fig 100 shows a graph showing the actual and predicted harvest interval hand-harvested Field 35 (pruned April 2019).

Fig 101 shows a graph showing the actual and predicted harvest interval (based on phyllochrons) for hand-harvested in Field 24 (pruned August 2017). Note maximum value of QI_3cm is constrained to 32 days.

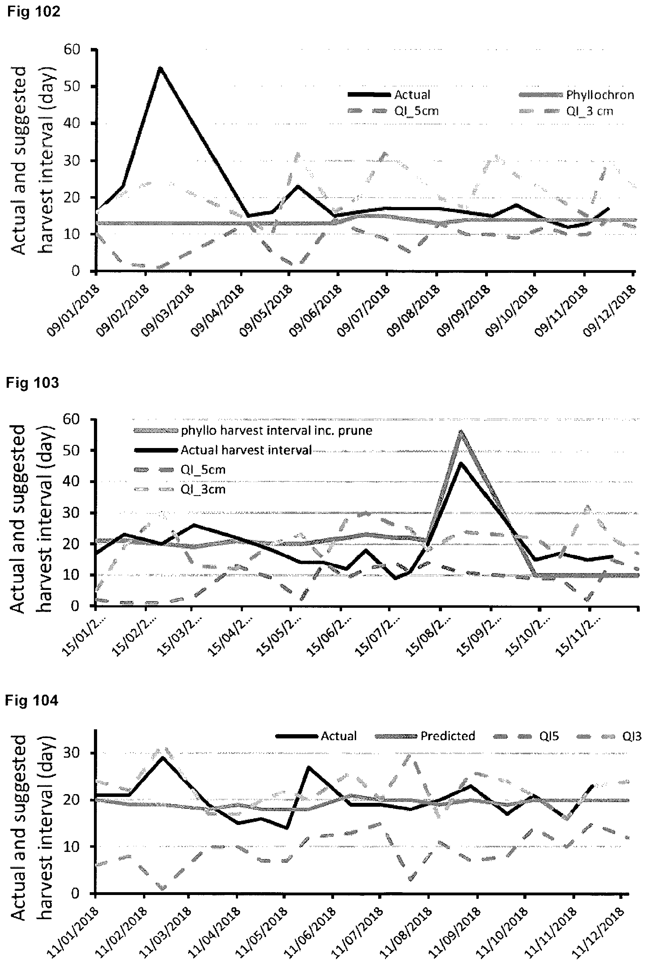

Fig 102 shows a graph showing the actual and predicted harvest interval (based on phyllochrons) for hand-harvested Field 12 (pruned February 2017). Note that the QI_3cm value is fixed so that it has a maximum value of 32 days.

Fig 103 shows a graph showing the actual and predicted harvest interval (based on phyllochrons) for hand-harvested Field 19A (pruned 15 August 2018).

Fig 104 shows a graph showing the actual and predicted harvest interval (based on phyllochrons) for shear-harvest Field 48A (pruned March 2019).

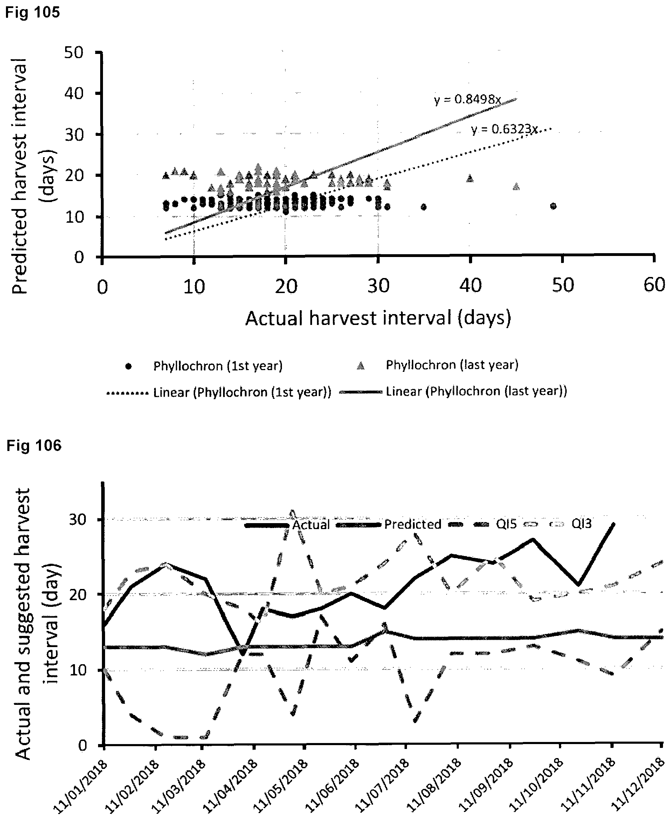

Fig 105 shows a graph showing the relationship between phyllochrons-predicted interval and actual harvested interval with shear harvest leaf. Originally we were identifying that the predicted interval for the first year prune seems about 27% too low, but it now seems more likely that the incorrect harvest method was assumed.

Fig 106 shows a graph showing the actual and predicted harvest interval (based on phyllochrons) for Field 1 assuming it was shear-harvested. However it is possible that the field was machine harvested in 2018.

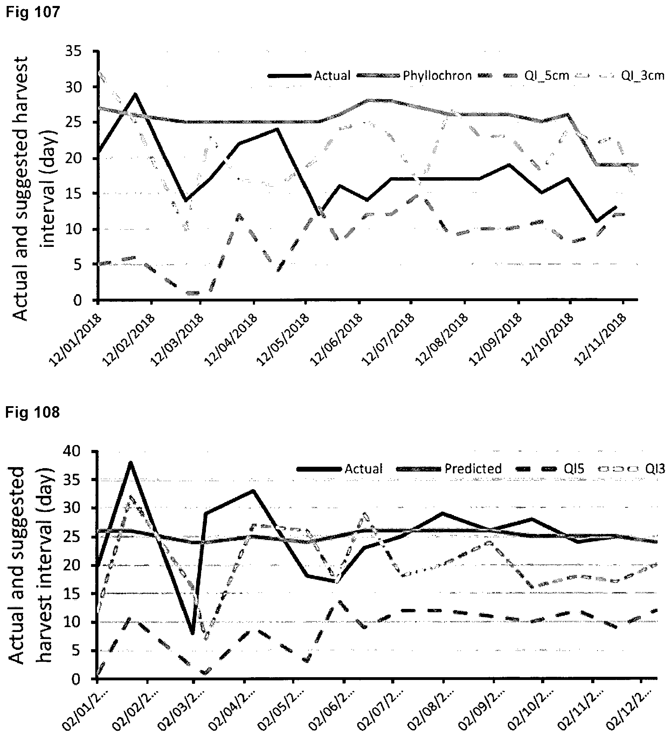

Fig 107 shows a graph showing the actual and predicted harvest interval (based on phyllochrons) for Field 13 assuming that it was mechanically-harvested; however it was possibly hand-harvested and the incorrect multiplier was used.

Fig 108 shows a graph showing the actual and predicted harvest interval (based on phyllochrons) for mechanically-harvested Field 52, before pruning in June 2019.

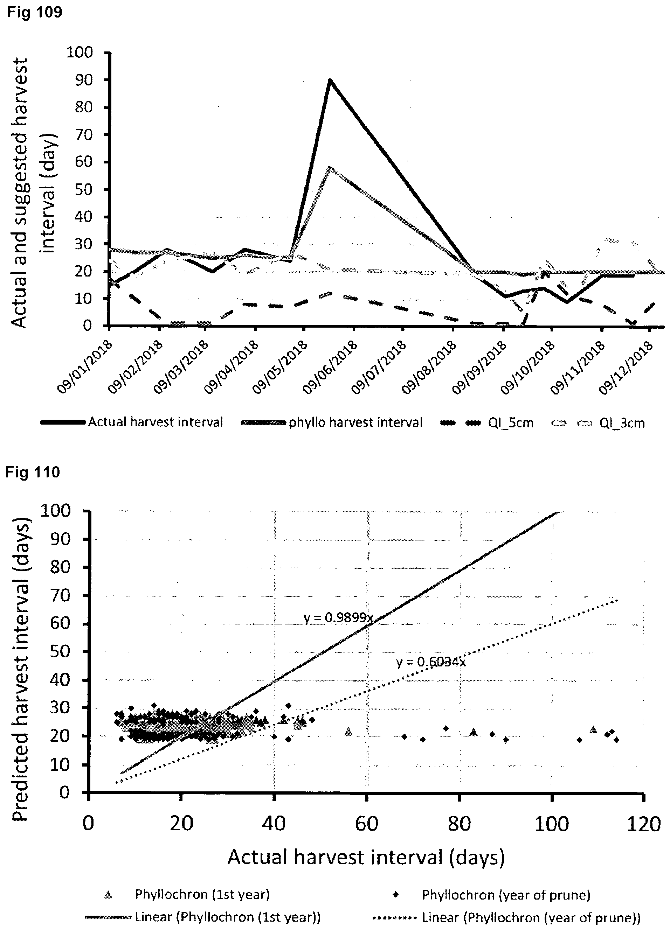

Fig 109 shows a graph showing the actual and predicted harvest interval (based on phyllochrons) for mechanically-harvested Field 62, in the year of prune.

Fig 110 shows a graph showing the relationship between actual and phyllochron-predicted harvest interval for mechanically harvested for unpruned and pruned tea (before prune correction).

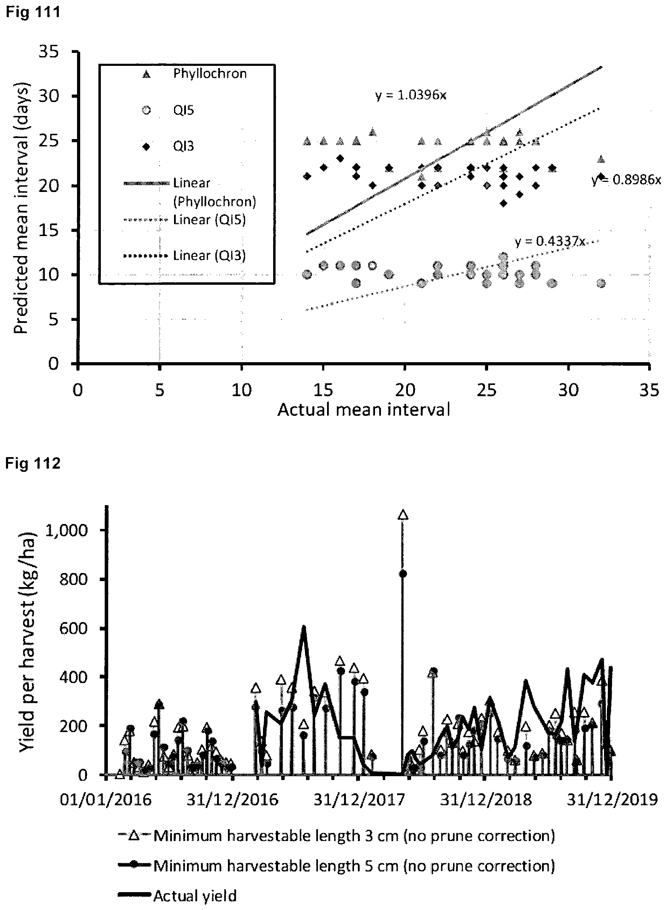

Fig 111 shows a graph showing the relationship between mean predicted harvest interval using phyllochrons and QI at 3 cm with the actual mean interval for mechanically harvested tea (before prune correction).

Fig 112 shows a graph of the effect of changing the "minimum harvestable shoot height" or "step height" from 5 cm to 3 cm for Field 5, was generally to increase yields.

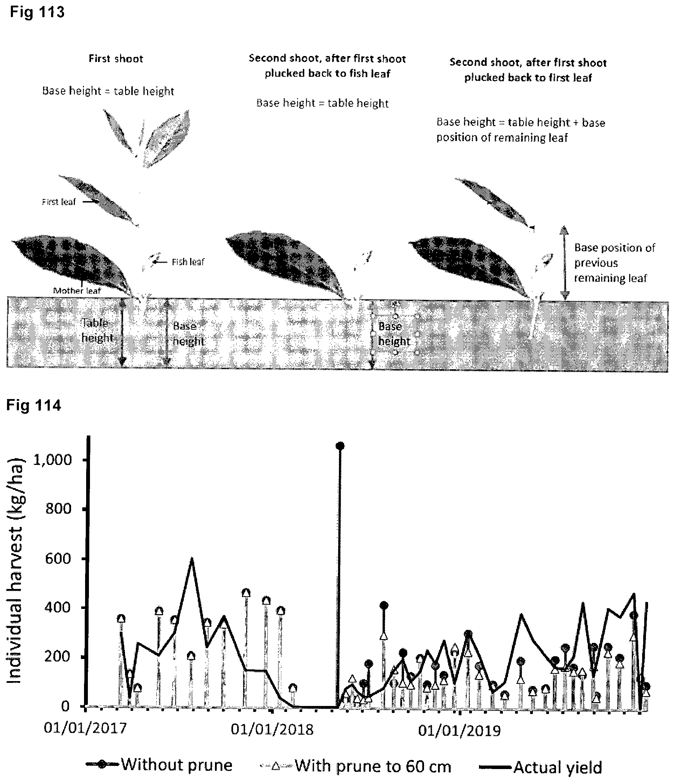

Fig 113 shows a schematic diagram of the meaning of "base height", and how it can increase with time.

Fig 114 shows a graph of the effect of including a new base height from prune in Field 5. This correction corrects the high yields and synchronisation of growth immediately after prune (assuming a constant 650 shoots/m$^2$)

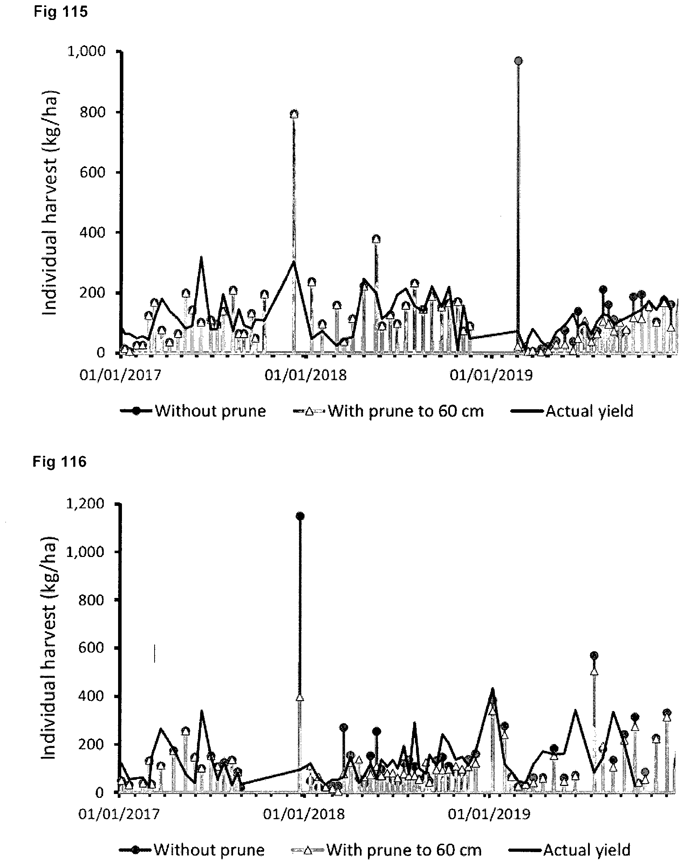

Fig 115 shows a graph of the effect of including a new base height from prune for Field 13 corrects the high yield on 22 February 2019 after pruning in November 2018 (assuming a constant 650 shoots/m$^2$)

Fig 116 shows a graph of the effect of including a new base height from prune for Field 25 reduces the high yield immediately after prune on 23 December 2017 (assuming a constant 650 shoots/m$^2$)

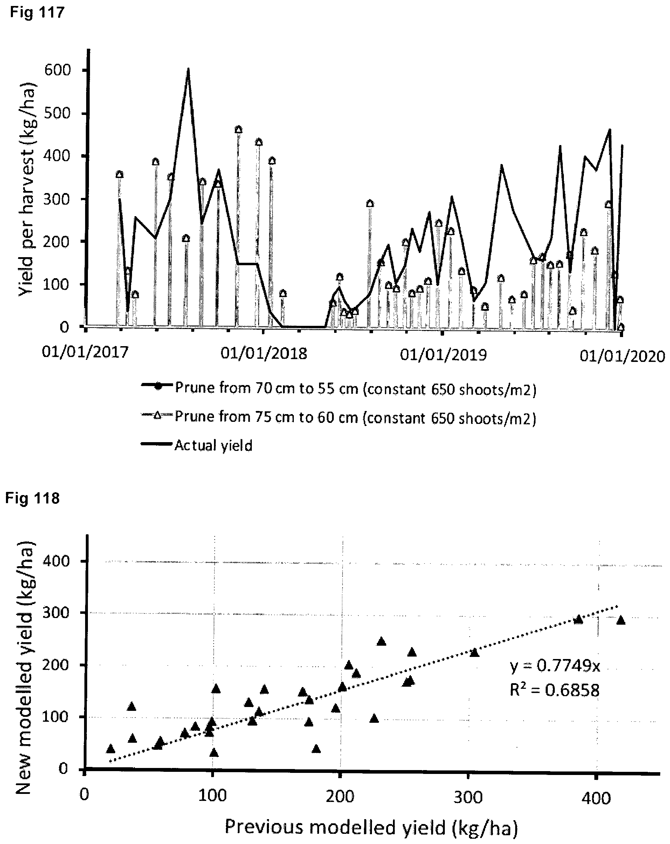

Fig 117 shows a graph of the yields assuming a table height of 75 cm declining to 60 cm are the same as assuming a table height of 70 cm declining to 55 cm

Fig 118 shows a graph of the updated yields following the creation of a new base height.

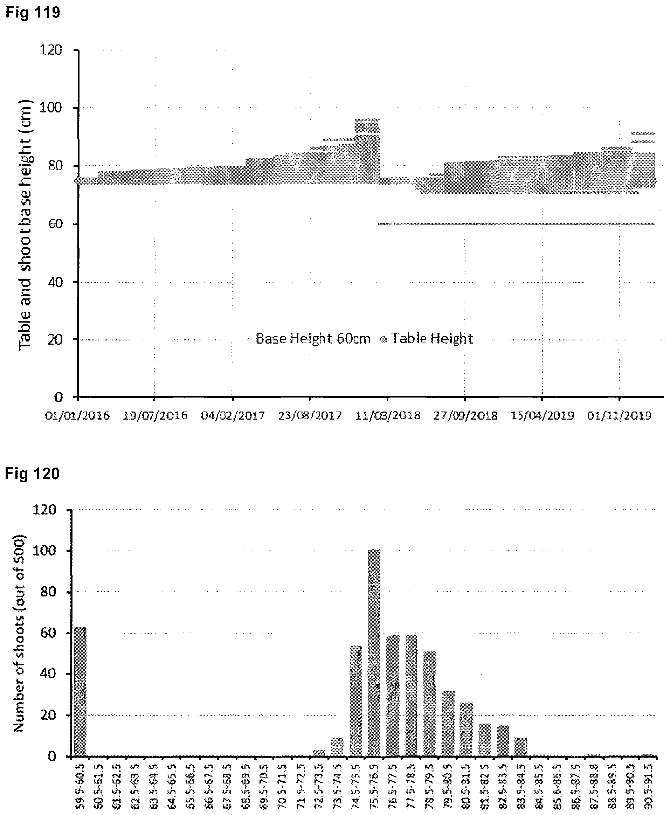

Fig 119 shows a graph of the table and shoot heights over time.

Fig 120 shows a graph of the base heights in Field 5 at the end of 2019.

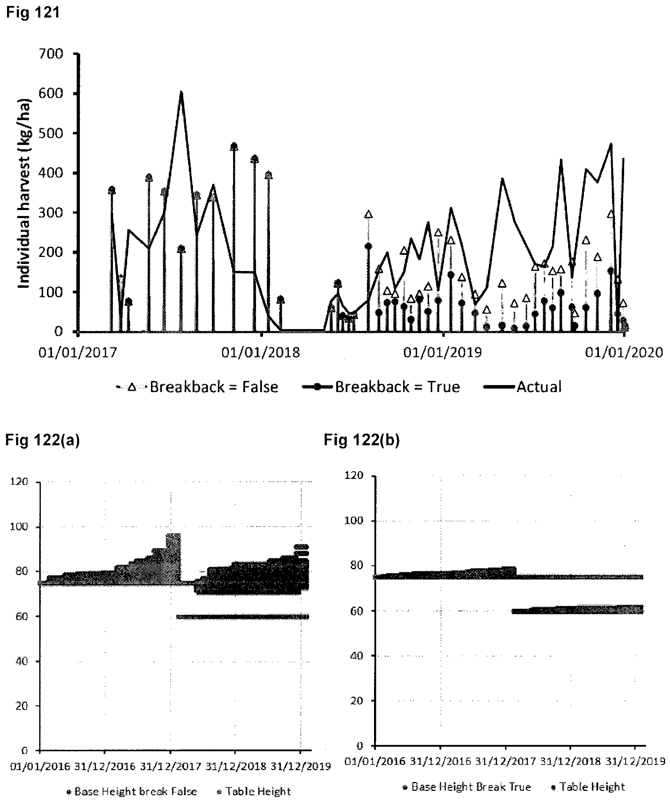

Fig 121 shows a graph of the effect of enabling "break-back" on yields in Field 5.

Fig 122(a) and Fig 122(b) each show a graph showing the effect of no "break-back" (a) and "break-back" being enabled on the base height of the shoots after pruning.

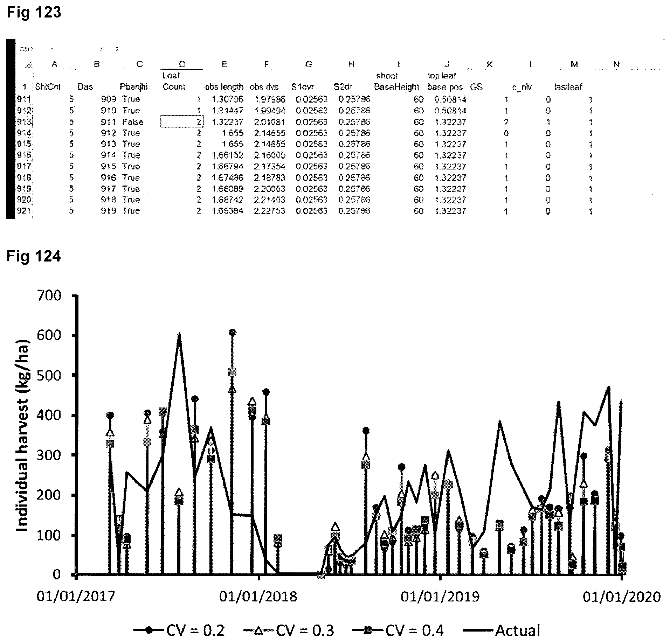

Fig 123 shows a screenshot of an Excel table of growth stage of shoots in Field 5.

Fig 124 shows a graph of the effect of the co-efficient of variation of shoot extension and development on the predicted yields (Field 5; 3 cm minimum harvestable shoot length; 75 cm to 60 cm prune).

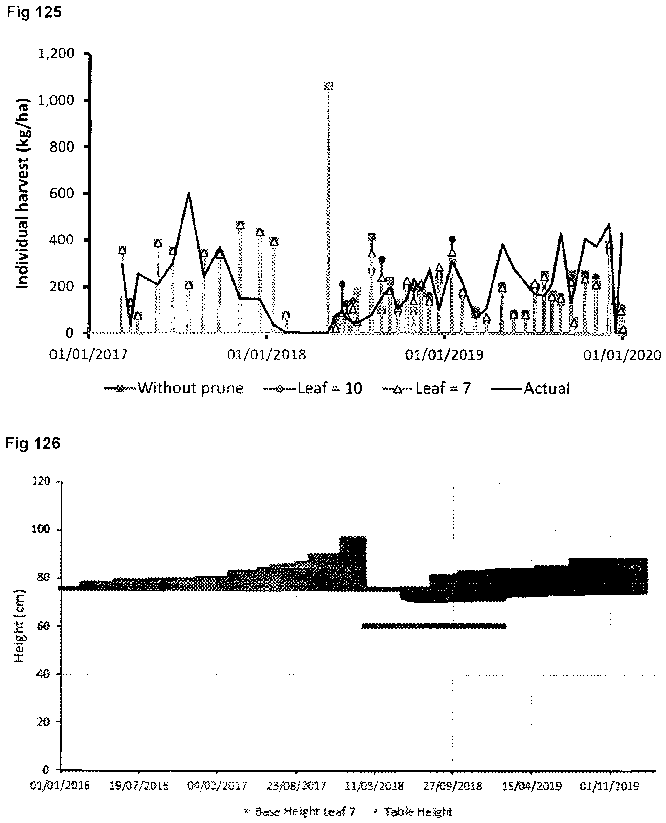

Fig 125 shows a graph of the effect of setting the last leaf to 7 if the base height is less than the table height in Field 5.

Fig 126 shows a graph showing how the updated algorithm for when base height < table height showed that all shoots moved up to the table height within about nine months.

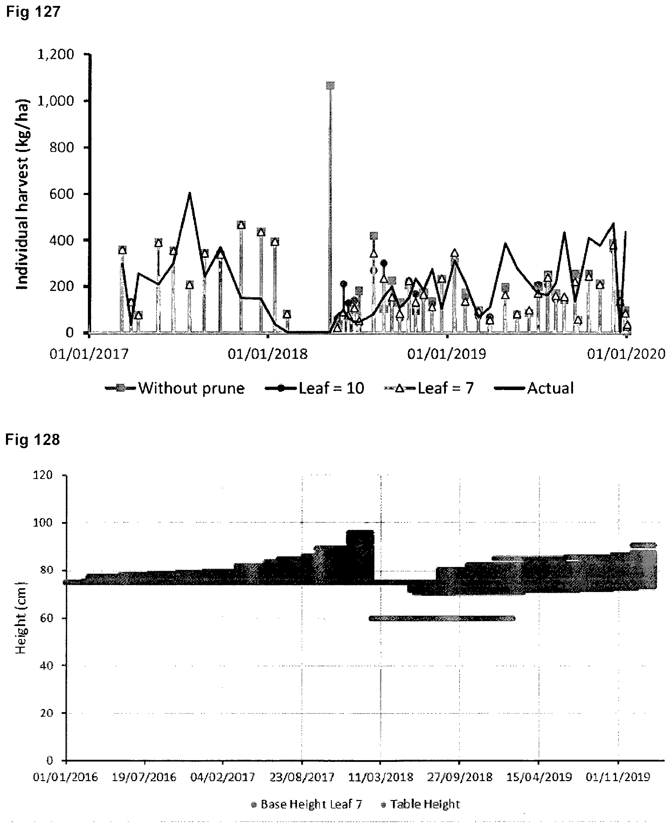

Fig 127 shows a graph of the effect of setting the last leaf to 7 or 10 in Field 5 for the prune event only.

Fig 128 shows a graph showing how the updated algorithm for just the pruning event meant that all shoots moved up to the table height within about nine months. For setting lastleaf = 7, all shoots moved from base height of 60 cm within 12 months of prune. For setting lastleaf = 10, all shoots moved from base height of 60 cm within 10 months of prune

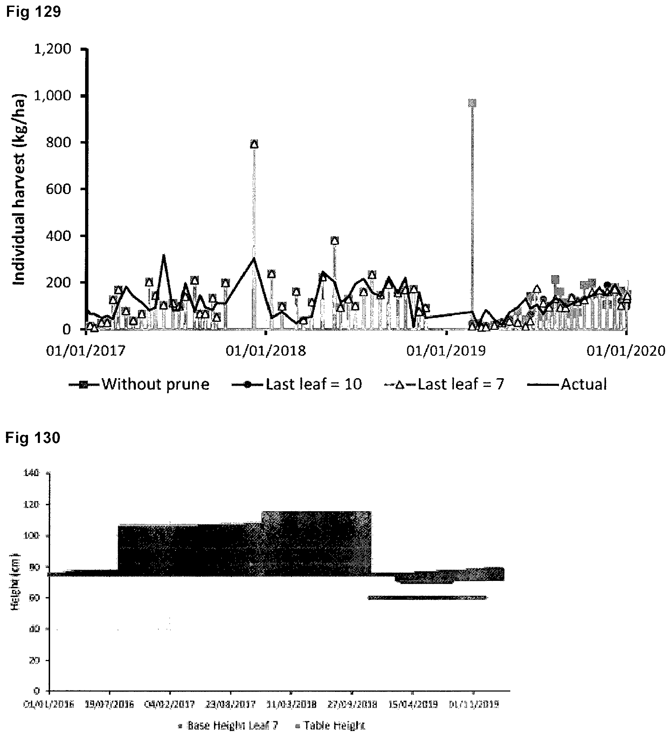

Fig 129 shows a graph showing the effect of setting the last leaf to 7 if the base height is less than the table height for Field 13.

Fig 130 shows a graph showing the effect of setting the last leaf to 7 at pruning, on the assumed base height for Field 13.

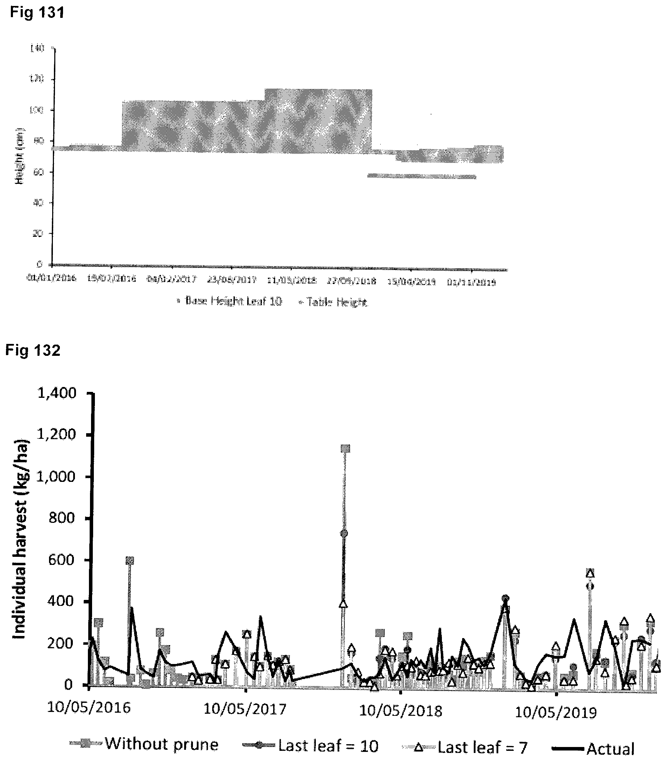

Fig 131 shows a graph showing the effect of setting the last leaf to 10 at pruning, on the assumed base height for Field 13.

Fig 132 shows a graph showing the effect of setting the last leaf to 7 or 10 at pruning for Field 25.

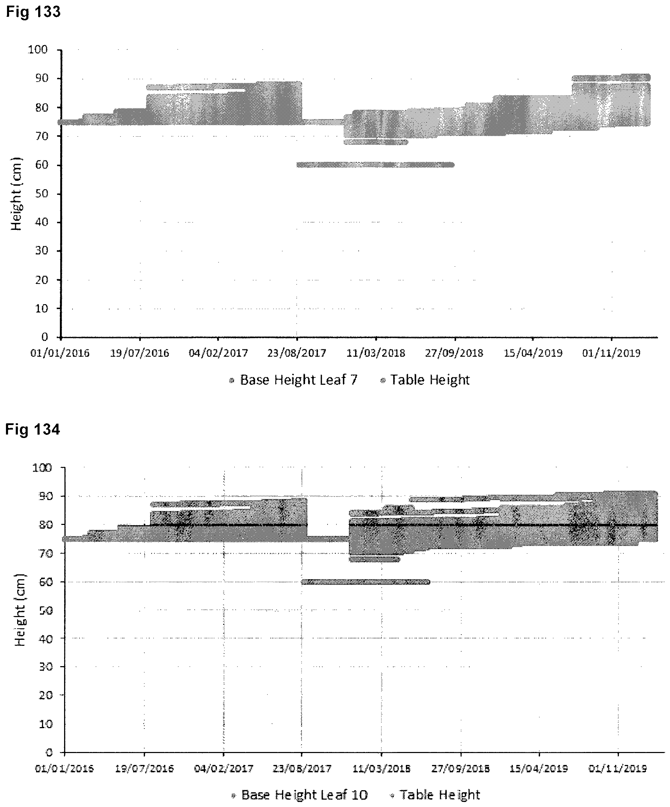

Fig 133 shows a graph showing the effect of setting the last leaf to 7 at pruning, on the assumed base height for Field 25.

Fig 134 shows a graph showing the effect of setting the last leaf to 10 at pruning, on the assumed base height for Field 25.

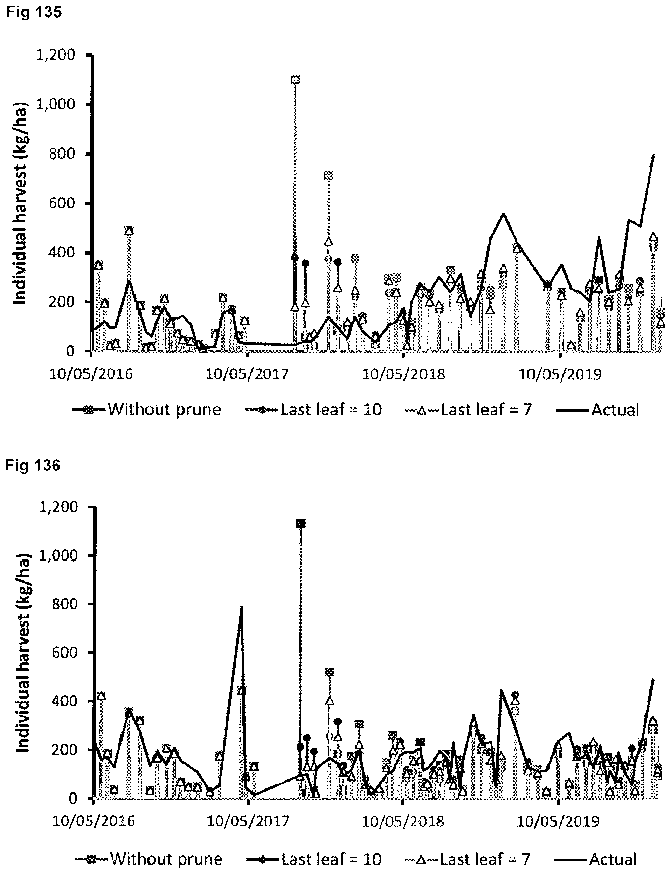

Fig 135 shows a graph of the effect of setting the last leaf to 7 or 10 at pruning for Field 8.

Fig 136 shows a graph of the effect of setting the last leaf to 7 or 10 at pruning for Field 29.

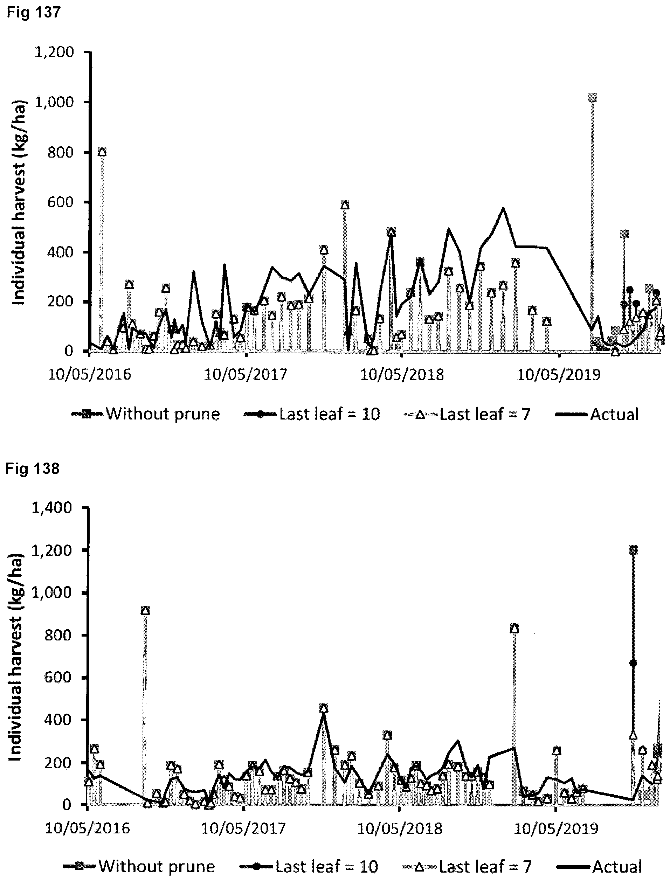

Fig 137 shows a graph of the effect of setting the last leaf to 7 or 10 at pruning for Field 55.

Fig 138 shows a graph of the effect of setting the last leaf to 7 or 10 at pruning for Field 58.

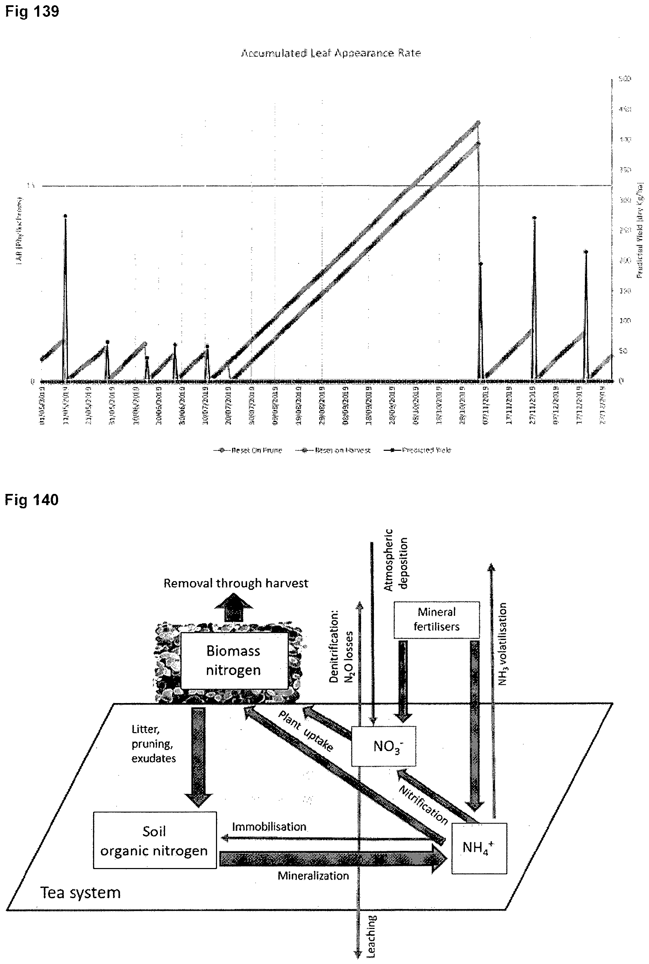

Fig 139 shows a graph showing accumulated leaf appearance rate over time for field 58 before and after reset on prune was applied.

Fig 140 shows a flowchart showing the main stocks and flows of nitrogen between the soil and the tea crop.

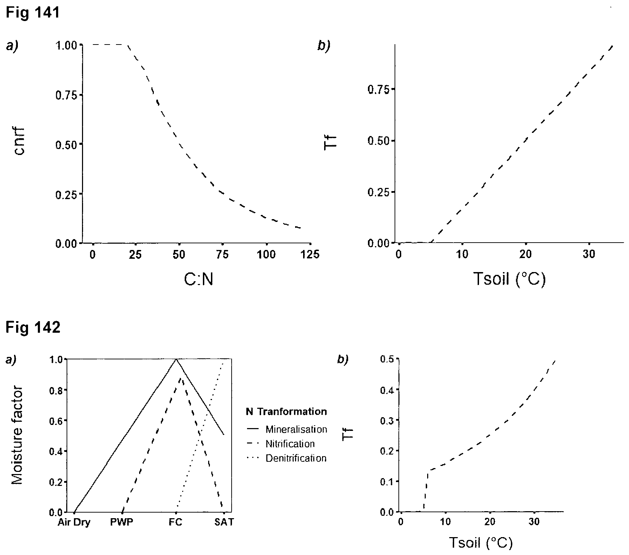

Fig 141 shows two graphs showing the response of a) the C:N ratio factor (cnrf) to the soil C:N ratio, and b) the soil temperature factor (Tf) to soil temperature ($T_{soil}$) assumed in the CUPPA-Tea mineralization routine.

Fig 142 shows two graphs showing a) Soil water indices used in CUPPA-Tea to modify soil N transformation rates (PWP: Permanent wilting point, FC: Field capacity, SAT: Saturation moisture content, (adapted from (Godwin & Jones, 1991)) and b) soil temperature factor response used in CUPPA-Tea denitrification routine.

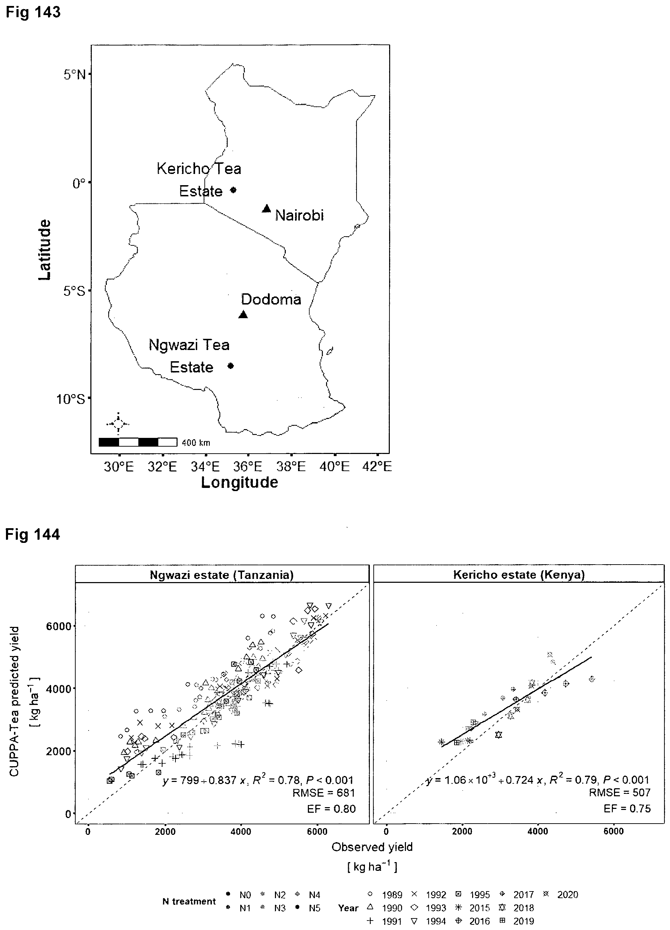

Fig 143 shows a map showing tea yield data for calibration were derived from Tanzania (Ngwazi Tea Estate) and validation data from Kenya (Kericho Tea Estate).

Fig 144 shows two graphs showing linear regression analysis of the predicted yields using the CUPPA-Tea model with observed yields from Tanzania (Ngwazi; 1989-1995) and Kenya (Kericho; 2015-2020) experiments (Dashed line: 1:1; RMSE: root mean square error; EF: Modelling efficiency; shapes indicate year and colors N treatment).

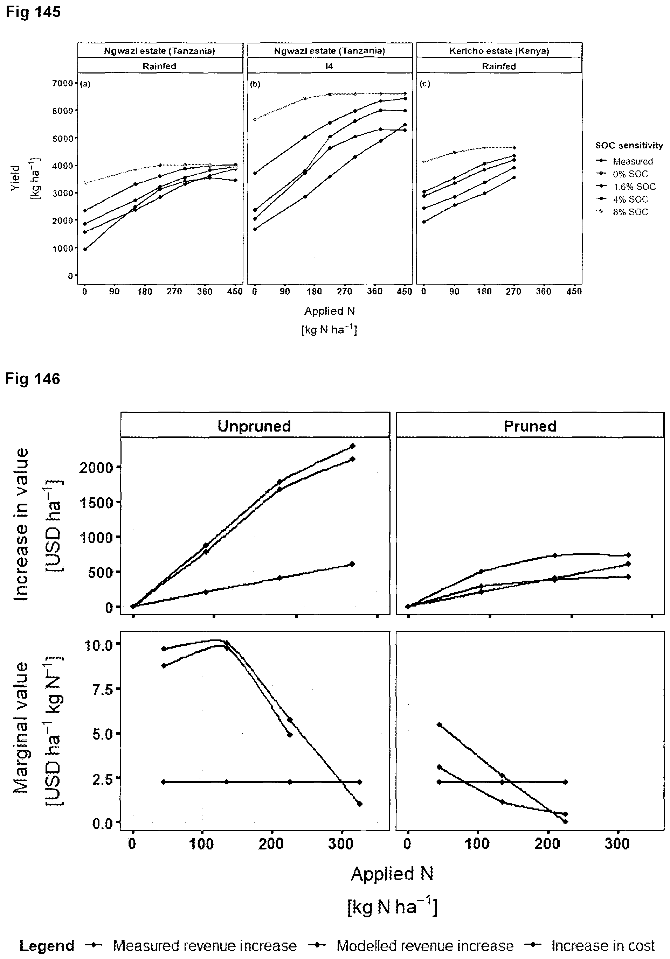

Fig 145 shows three graphs showing predicted effect of soil organic carbon (SOC) content (0, 1.6, 4 and 8%) on the tea yield response to nitrogen application in unpruned years (mean yields of unpruned years) for a) rainfed tea and b) fully irrigated tea in Tanzania, and c) rainfed tea in Kenya. Default SOC values for Ngwazi and Kericho were 1.6% and 4% respectively.

Fig 146 shows four graphs showing predicted revenue and costs of applying different levels of nitrogen fertilizer in Kericho, based on measured and modelled yields in unpruned and pruned tea in Kenya (assumed 108 KSh = 1 USD) assuming a soil organic carbon (SOC) content of 4%.

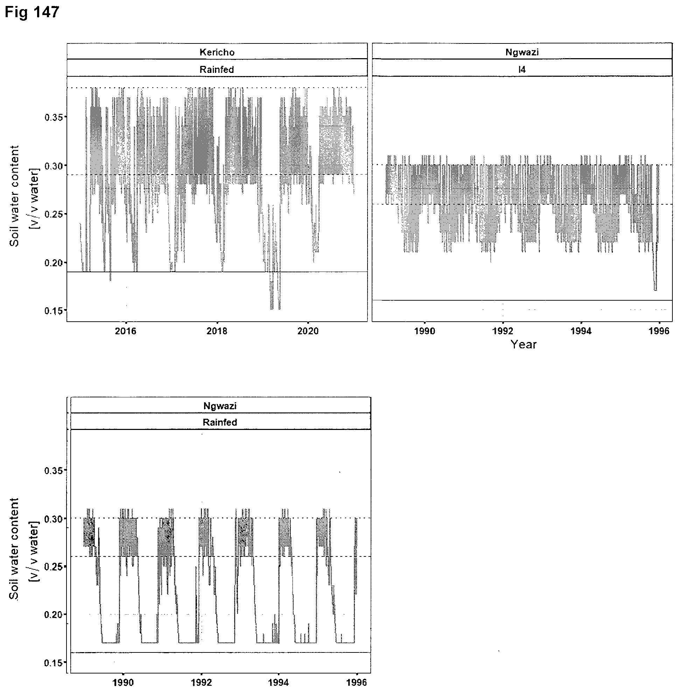

Fig 147 shows three graphs showing daily simulated soil water content at Kericho (under rainfed conditions at the top 15 cm) and at Ngwazi (under rainfed and I4 treatment at the top 25 cm). Solid line shows the permanent wilting point, dashed line the field capacity and dotted line is the saturated water content.

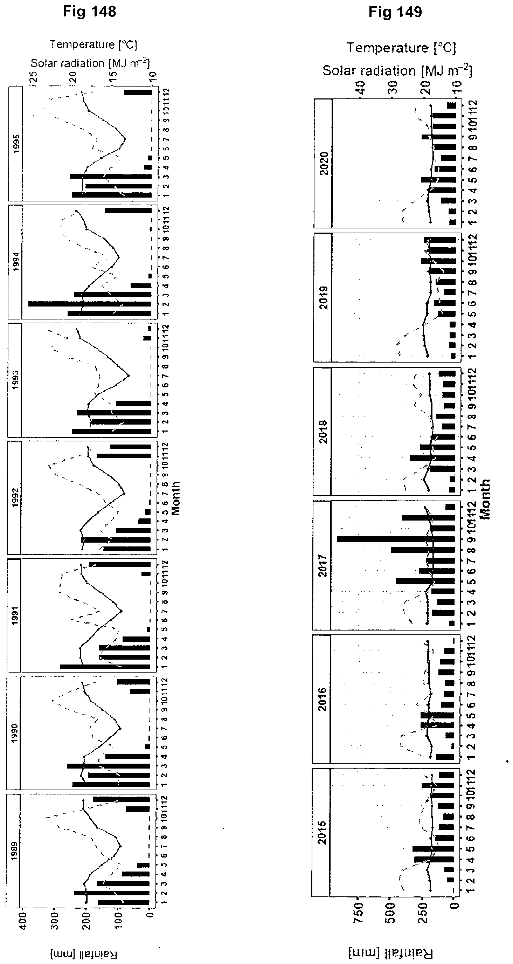

Fig 148 shows a series of graphs showing monthly rainfall (blue bars), mean temperature (red line) and mean solar radiation (orange dashed line) at Ngwazi tea estate (Tanzania).

Fig 149 shows a series of graphs showing monthly rainfall (blue bars), mean temperature (red line) and mean solar radiation (orange dashed line) at Kericho tea estate (Kenya).

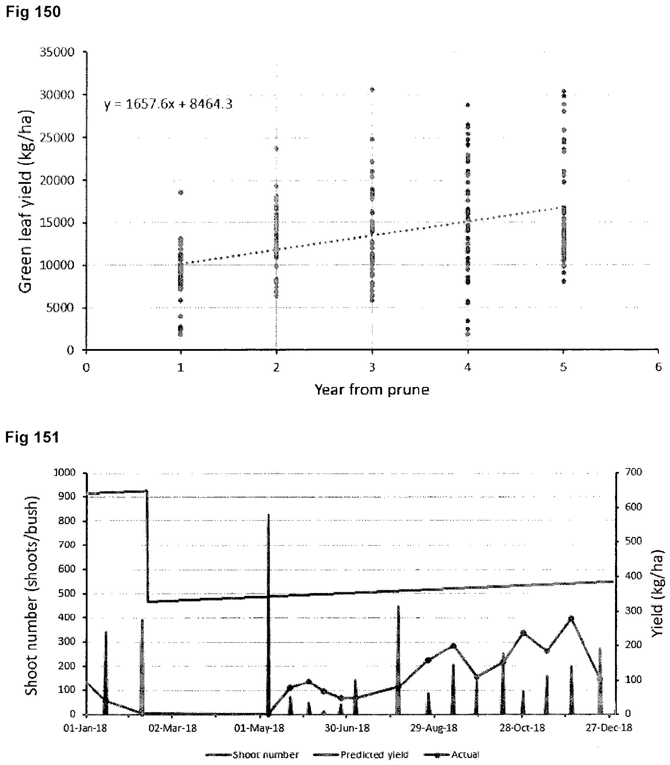

Fig 150 shows a graph showing the relationship between green leaf yield and time from prune.

Fig 151 shows a graph showing the effect of adjusting shoot number multiplier based on prune age (reset to 467, to achieve 650 at 730 days). Prune occurred on 15 February 2018. This procedure results in an erroneous large yield the first harvest after prune.

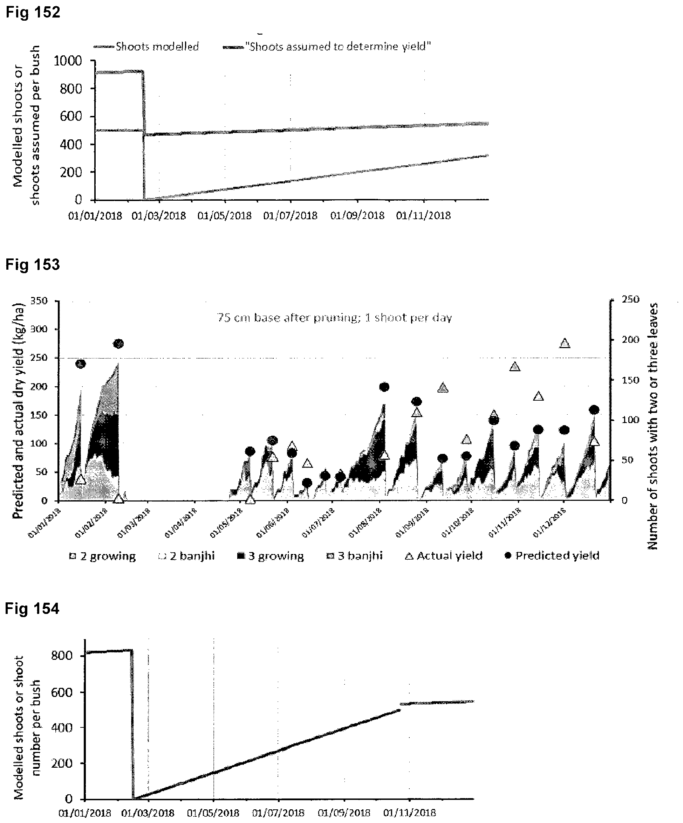

Fig 152 shows a graph showing the number of modelled shoots increases one per day from zero at pruning, but the output was multiplied by the predicted shoot number.

Fig 153 shows a graph showing the response of predicted and actual yield and predicted harvestable shoot numbers to pruning on 15 February assuming that base height remains at 75 cm and modelled shoots increases by one per day.

Fig 154 shows a graph showing the number of modelled shoots increases two per day from zero at pruning.

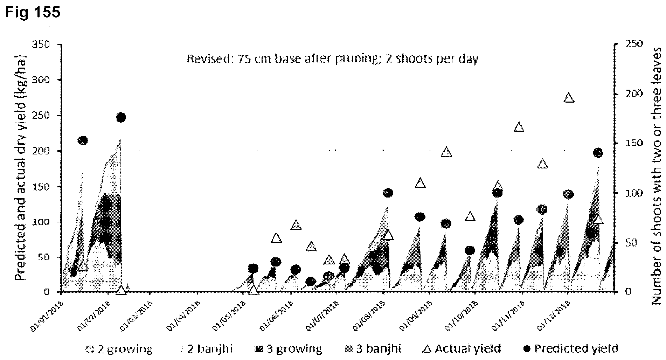

Fig 155 shows a graph showing the response of predicted and actual yield and predicted harvestable shoot numbers to pruning on 15 February (four years after last prune) assuming that base height remains at 75 cm and modelled shoots increases by two per day.

## DETAILED DESCRIPTION OF THE INVENTION

Aspects and embodiments of the present invention will now be discussed with reference to the accompanying figures. Further aspects and embodiments will be apparent to those skilled in the art.

Fig 1 is a diagram showing the flow of information through a tea-harvesting management system 110. Data on the tea plantation is delivered to the model 120 from a combination of a data store 130, user input 140, and sensor data 150. The model 120 runs on a processor 111, and establishes simulated shoots 160 in memory 112 with parameters based on integration of the information from the data store 130, from the user input 140, and from the sensor data 150.

The model 120 runs an iteration, updating the parameters of the simulated shoots 160. With each iteration, the model produces output data based on the parameters of the simulated shoots and collective information thereon. This output data is transmitted to the output module 170, which processes the output data and prepares it for display to the user. This information is conveyed to the user in the form of graphs, charts, and tables on a display 180 or in printed form (not shown).

## Definitions

As used herein, "tea" may refer to harvested material from the plant *Camellia sinensis* suitable for making the beverage of the same name. *Camellia sinensia* may also be referred to as "tea plants".

As used herein, "plantation" may refer to a plurality of plants under cultivation.

As used herein, "geographic data" may refer to data and information having an implicit or explicit association with location relative to Earth (a geographic location or geographic position). It also may be referred to as "geospatial data", "georeferenced data", "geodata", or "geoinformation".

As used herein, "yield" may refer to the amount (usually weight) of tea harvested per area of land.

As used herein, "growing region" may refer to a geographically defined area in which a plant is grown, such as a field, greenhouse, or growing facility.

As used herein, "plucking event" may refer to harvesting of the tea plants, in particular when a given tea plant is harvested.

As used herein, "environmental data" may refer to data and information relating to the weather and other ambient conditions which may affect the growth, yield, quality, or condition of the tea or tea plants.

As used herein, "remote sensing" may refer to the acquisition of information about an object or phenomenon without making physical contact with the object. In particular, it can include the use of satellite or aircraft-based sensor technologies to detect the status of growing regions and changes thereto. It may include active remote sensing, such as radar technologies, and passive remote sensing, such as photographic sensors which detect reflected sunlight. Aircraft can include unmanned aerial vehicles or drones.

As used herein, "ground truth data" may contrastingly refer to data or information which has been acquired through direct observation and recording in close proximity to a subject. In particular, it may include the manual recording of data concerning tea plants by a person or persons through visual observation, through the use of manual tools or other short range tools.

As used herein, "nitrogen dynamics" may refer to movement of nitrogen through atmospheric, terrestrial, and marine ecosystems, through various biochemical forms and processes that convert between these.

As used herein, "soil inorganic nitrogen" may refer to nitrogen compounds in soil which are inorganic, i.e. the compounds do not contain carbon. Such forms include nitrate compounds ($NO_3^-$), ammonia ($NH3$) and ammonium compounds ($NH_4^+$).

As used herein, "soil organic nitrogen" may refer to nitrogen compounds in soil which are organic, i.e. the compounds contain carbon. Such forms include fresh organic matter (FOM) such as carbohydrate, cellulose, and lignin. It also includes soil humus (a substance produced from decayed remains of plants and animals).

As used herein, "critical nitrogen level" may refer to the level of nitrogen available below which growth of the tea plants will be reduced.

As used herein, "abscission" may refer to the natural detachment of parts of a plant, typically dead leaves.

As used herein, "banjhi" refers to a state of dormancy in growth experienced by tea shoots.

As used herein, "tipping" refers to the initial few rounds of plucking of the tea plants where the shoots (primaries) grow in a tea bush after pruning or skiffing. The plants are tipped or decapitated at a predetermined height parallel to the ground surface.

As used herein, "estate" or "plantation" may refer to a large farm for growing crops, especially tea.

## CUPPA-Tea model

This section describes the use of a modified version of the CUPPA-Tea model with spatial data. The developed tool (Fig 2) comprises four key components. There include: the CUPPA-Tea model, the user interface, the data files, and the graphing/output module. This section starts with a list of the data files and a description of the user interface. It then describes the data files in turn.

The original executable version 1.0 of the model dated 30th April 1997 was used during development leading to the 2015 version of the tool.

An issue with version 1.0 was its inability to deal with any year post 1999. Hence the tool was modified so that all years in the input, for weather data, and plucking dates, post 1999 had 40 years taken off prior to the model run. The 40 years were then re-added afterwards so that the output is correct.

The user interface is shown in **Fig 3**. For this version, the Kapkorech tea estate in Kenya was taken as an example.

The daily temperature from the weather station was corrected for each field, based on field altitude, with 0.6°C subtracted for every 100 m rise in altitude:

$$\text{Temperature} = \text{Temp} - 0.6 * (\text{Field altitude (m)} - \text{Station altitude (m)}/100)$$

All the output from the model was read in by the tool and converted to CSV format.

So as to run a simulation of the model, the following steps may be followed:

- The User selects an Estate from drop down list
- The weather station and start day of year from Estate are copied to Simulation Run
- Start and end years based on start and end years of weather data for estate's weather station
- Map zooms to Estate
- The User selects Field or Fields via Map
- Default values from Field are copied to Simulation Run
- The User selects Run type: Estate, Selection of Fields or Field.
- For field, the user can select Normal or Scenarios
- The User selects start and end year of simulation, based on weather data available.
- Run Title is defaulted to run type and field selection.
- The User can override Irrigation, Plucking management and Shoot initialisation options, except when scenarios are chosen.
- Scenarios can be selected by the User via a pre-defined tab delimited text file called scenarios.txt
- The User presses button "Run Simulation" to run the model
- Simulation runs - output is saved to a series of csv files in a new folder in the "Output" folder and a new panel is displayed allowing interaction with various graphs.
- The graphs to be displayed will be selected via a pre-defined list in csv format called graphlist.csv.
- The User presses Export to Excel button to export all data and graphs to an Excel spreadsheet.

There are 12 data files with the following names

- **xxxxxx.geodatabase** - Geographic Information System (GIS) outlines of estate and tea fields
- **Field.csv** - data associated with individual fields
- **Estate.csv** - data associated with an estate, such as a weather station
- **Tea.csv** - detailed data associated with genotypes of tea
- **SoilChar.csv** - general soil characteristics
- **SoilProfile.csv** - soil profile characteristics
- **xxxxYYYY.WTH** - weather data associated to station xxxx in year YYYY
- **GumTea.INP** - data passed directly to model from the data sources above along with default model parameters
- **Scenarios.txt** - list of pre-defined scenarios to run
- **Colours.csv** - list of colours to use for scenarios in graphs
- **Graphlist.csv** - list of graphs to display
- **Codelist.csv** - column headings for Excel spreadsheet

Input data is used for i) the GIS layers, ii) the Estate, iii) the Fields, iv) the tea clones, v) the soil, vi) the weather, vi) the initial conditions of the tea, viii) the crop management, ix) the scenarios, and x) a set of three files describing the form of the outputs. These are described in turn.

**GIS layers (xxxxxx.geodatabase)**

The field boundaries were digitised using ArcGIS and satellite imagery embedded within ArcGIS. The estate plans in pdf format were used to help determine individual fields and field numbers.

Three estates were digitised: Kapkorech, Kapgwen and Chemosit for use within the tool, along with other Kenyan tea estates, weather stations and soil sampling points. An ArcGIS map document was then created for each estate so that a runtime package of each tea estate could be created for use within the CUPPA-Tea tool.

**Estate (Estate.csv)**

The data associated with each estate, is:

- Estate name
- Weather station code (xxxx)
- Weather station description
- Start year from (day of year)

The start of year was defaulted to 1st January as all comparison recorded yield data was monthly/annual.
The weather station for Kapkorech was set to Research and Development since there was no one single station with sufficient weather data close to the Kapkorech tea estate. For Kapgwen and Chemosit the weather station was set to Chemosit, since this station had more complete weather data and was close to both estates.

**Field (Field.csv)**

The data associated with each field in each estate are:

- Field id
- Estate name
- Soil identifier
- Soil description (e.g. medium sandy clay, medium sandy clay loam)
- Area (ha)
- Altitude (m)
- Dominant clone (genotype name) (e.g. BB35)
- Irrigated (Yes/no)
- Year of prune (Yes/no)
- Plucking day (day)
- Harvest interval (days)
- Harvest dates (comma separated string)

The altitude was taken from 'Aster V2 DEM', and retrieved from the online Data Pool (NASA LP DAAC, 2015). The mean altitude across each field was taken from the DEM, using ArcGIS statistics and then compared with survey points (**Fig** 4 and **Fig** 5). Most altitudes were close to the survey points except for field 25 in Kapgwen and Field 5 in Kapkorech.
The area in hectares of each field was taken from the digitised field boundaries, but these values are only approximate and dependant on the accuracy of the digitising.
The soil depth was taken from 'Soil property maps of Africa at 250 m' (Hengl, et al., 2015) and gave an average depth of 175 cm across Kapgwen and Kapkorech. Therefore, the soil profile for each field was set to Medium (150 cm).
Soil texture was calculated from the soil sampling point across Kapkorech and Kapgwen estates. The soils were mainly sandy clay loam or sandy clay and these sampling points were used to assign soil texture to the remaining fields.
For three Kapgwen fields, the 2015 harvest dates were used to calculate similar harvest dates in 2011, 2012 and 2013, with the remaining days in October, November, and December set to a regular 28 days interval.
When harvest information is recorded when a field has been harvested, this information can be inputted into the model at this point. Data such as when a field has been harvested, what method was used, the yield, and the prune status of the field can be recorded. This can be recorded through manual means such as a paper form. It can also be recorded through a web form such as a Microsoft PowerApps card interface.
The remaining parameters were defaulted to approximate values. The dominant clone was set to BB35. Irrigation was set to No, as these estates do not use irrigation. The year of prune was not used in this version of the tool.

**Tea (tea.csv)**

The original model defined model parameters for the clone 6/8 (Table 1) but clonal coefficients were calculated to account for other clones on the estate and new clones. The tea cultivars grown in the tea estates include: BB35, MRTM1, 31/8 and seedling. As a first approximation model parameters for BB35 were set to the same as 6/8 but with 20% added to 'development base temperature', 'extension base temperature', 'stage 2 development rate' and 'stage 2 extension rate'. The shoot number was set by comparing model runs to recorded annual yield data.

**Table 1 - Genotype parameters as set in tea.csv**

| Code | Description | Units | 6/8 | BB35 |
|------|-------------|-------|-----|------|
| INGENO | Identifying code of the genotype | - | CU0001 | CU0003 |
| NAME | Name of clone | - | 6/8 | BB35 |
| SHNO | Initial shoot number | Shoots m$^{-2}$ | 1200 | 683 |
| RUE | Efficiency of conversion of light to dry matter | g MJ$^{-1}$ | 0.3 | 0.3 |
| KVAL | Canopy light extinction coefficient | - | 0.7 | 0.7 |
| | DM temperature response | | 0,0,10,0,2 0,1,35,1,4 2,0 | 0,0,10,0, 20,1,35,1 ,42,0 |
| DTBA | Base temperature for shoot development | °C | 8 | 9.6 |
| DTOP | Optimum temperature for shoot development | °C | 24 | 24 |
| DTMX | Maximum temperature for shoot development | °C | 40 | 40 |
| ETBA | Base temperature for shoot extension | | 10 | 12 |
| S1DR | Development rate for quiescent stage of shoot growth | (°Cd)$^{-1}$ | 0.0381 | 0.0381 |
| S2DR | Development rate for expansion stage of shoot growth | (°Cd)$^{-1}$ | 0.212 | 0.2544 |
| S1ER | Extension rate for quiescent stage of shoot growth | mm Eu$^{-1}$ | 0.0129 | 0.0129 |
| S2ER | Extension rate for expansion stage of shoot growth | mm Eu$^{-1}$ | 0.537 | 0.6444 |
| SHCV | Coefficient of variation of shoot growth parameters | - | 0.3 | 0.3 |
| DLCR | Photoperiod below which shoot extension is reduced | h | 12 | 12 |
| DLSE | Sensitivity of shoot extension reduction to photoperiod | h$^{-1}$ | 0.4 | 0.4 |
| SDCR | Saturation deficit above which shoot extension is reduced | kPa | 2.3 | 2.3 |
| SDSE | Sensitivity of shoot extension reduction to saturation deficit | kPa$^{-1}$ | 0.43 | 0.43 |
| DDLC | Rate of change of photoperiod below which the crop is insensitive | h d$^{-1}$ | -0.001 | -0.001 |
| DLUP | Lowest photoperiod at which there is no effect on shoot dormancy | h | 12.15 | 12.15 |
| DLLO | Highest photoperiod at which shoot dormancy in complete | h | 11.25 | 11.25 |
| MNLL | Average number of leaves per shoot before the shoot becomes banjhi | # leaves | 5.3 | 5.3 |
| WTLN | Slope of the relationship between shoot dry weight and leaf number | g leaf$^{-1}$ | 0.055 | 0.055 |
| MXLA | Maximum age of maintenance leaf before it senesces | d | 300 | 300 |
| RDGR | Thermal rate of advance of rooting depth | cm Dd$^{-1}$ | 0.2 | 0.2 |
| SRL | Specific root length | cm g$^{-1}$ | 5000 | 5000 |

**Soil (SoilChar.csv and SoilProfile.csv)**

The five soils described in the original model were: silty clay, silty loam, sandy loam, sand and "Ngwazi Tea Research Unit" (NTRU). These are defined for three depths. Table 2 and Table 3 list the parameters required and which of those are currently used by the model. Table 4, was also provided in the original data, so that parameters for other soil textures could be derived. The sampling points across the tea estates gave two soil textures: sandy clay and sandy clay loam. As a result, new soil descriptions: IB00000014 to IB00000019 were derived using median values for the soil characteristics and weighted average for the soil profile, based on the existing soil parameters and Table 4.

The derived soil data are modelled data and may not necessarily represent the soil in the tea estates, so a best approximation was used.

**Table 2 - General soil characteristics as set in Soilchar.csv. Only the rows in bold were directly used in CUPPA-Tea.**

| Code | Description | Units | Example |
|---|---|---|---|
| **Unique identifier** | | | |
| SLSOURCE | Source | | IBSNAT |
| SLTX | Texture | | SICY, SILO, SALO, SA |
| **SLDP** | **Depth** | **cm** | **Deep silty clay, shallow silty loam,** |
| **SLDESCRIP** | **Description or local classification** | | |
| SITE | Site name | | |
| COUNTRY | Country name | | |
| LAT | Latitude | °N | |
| LONG | Longitude | °E | |
| SCSFAMILY | Family, SCS system | | |
| SCOM | Colour | Munsell hue | |
| **SALB** | **Albedo** | **fraction** | |
| **SLU1** | **Evaporation limit** | **cm** | |
| **SLDR** | **Drainage rate** | **fraction day$^{-1}$** | |
| **SLRO** | **Runoff curve number (Soil Conservation Service)** | | |
| **SLNF** | **Mineralisation factor** | **0-1 scale** | |
| SLPF | Photosynthesis factor | 0-1 scale | |
| SMHB | pH in buffer determination method | | |
| SMPX | Phosphorus, extractable, determination method | | |
| SMKE | Potassium determination method | | |

**Table 3 - Soil profile characteristics as set in SoilProfile.csv. Only the rows in bold were directly used in CUPPA-Tea.**

| Code | Description | Units |
|---|---|---|
| **SLB** | **Depth, base of layer** | **cm** |
| SLMH | Master horizon | - |
| **SLLL** | **Lower limit** | **cm$^3$ cm$^{-3}$** |
| **SDUL** | **Upper limit, drained** | **cm$^3$ cm$^{-3}$** |
| **SSAT** | **Upper limit, saturated** | **cm$^3$ cm$^{-3}$** |
| **SRGF** | **Root growth factor** | **0-1 scale** |
| SSKS | Sat. hydraulic conductivity | cm h$^{-1}$ |
| **SBDM** | **Bulk density, moist** | **g cm$^{-3}$** |
| **SLOC** | **Organic carbon** | **%** |
| SLCL | Clay (<0.002 mm) | % |
| SLSI | Silt (0.05 to 0.002 mm) | % |
| SLCF | Coarse fraction (>2 mm) | % |
| SLNI | Total nitrogen | % |

(continued)

| Code | Description | Units |
|------|-------------|-------|
| **SLHW** | **pH in water** | **-** |
| SLHB | pH in buffer | - |
| SCEC | Cation exchange capacity | cmol kg$^{-1}$ |

**Table 4 - Calculations from Limits algorithms**

| SLTX | SLLL | SDU L | SSA T | SRG F | SSK S | SBD M | SLO C | SLC L | SLSI | SLC F | SLNI |
|------|------|-------|-------|-------|-------|-------|-------|-------|------|-------|------|
| CL | 0.32 | 0.38 | 0.39 | 1 | 1 | 1.3 | 1.5 | 60 | 20 | 0 | 0.15 |
| SICL | 0.28 | 0.38 | 0.39 | 1 | 1 | 1.3 | 1.5 | 50 | 45 | 0 | 0.15 |
| CLLO | 0.21 | 0.33 | 0.38 | 1 | 1 | 1.3 | 1.3 | 35 | 30 | 0 | 0.13 |
| SCLL O | 0.19 | 0.32 | 0.38 | 1 | 1 | 1.3 | 1.3 | 30 | 60 | 0 | 0.13 |
| SACLL | 0.19 | 0.29 | 0.38 | 1 | 1 | 1.3 | 1.3 | 30 | 10 | 0 | 0.13 |
| SI | 0.17 | 0.31 | 0.38 | 1 | 1 | 1.3 | 1.2 | 5 | 85 | 0 | 0.12 |
| LO | 0.15 | 0.27 | 0.38 | 1 | 1 | 1.3 | 1.2 | 20 | 40 | 0 | 0.12 |
| SILO | 0.1 | 0.23 | 0.33 | 1 | 1 | 1.4 | 1.2 | 10 | 60 | 0 | 0.12 |
| SALO | 0.1 | 0.21 | 0.28 | 1 | 1 | 1.5 | 0.7 | 10 | 30 | 0 | 0.07 |
| LOSA | 0.06 | 0.17 | 0.28 | 1 | 1 | 1.5 | 0.5 | 5 | 15 | 0 | 0.05 |
| SA | 0.04 | 0.1 | 0.15 | 1 | 1 | 1.7 | 0.3 | 5 | 5 | 0 | 0.03 |

### Weather (xxxxYYYY.wth)

Table 5 and Table 6 show the data used for each weather station. Consistent daily weather data from one single weather station for any of the three estates was not possible. Therefore, the weather data was taken from a number of sources with the closest to each tea estate being selected where possible. The model uses at least two years of weather data in order to initialise the shoots.

**Table 5 - Weather station details**

| Code | Description | Unit |
|------|-------------|------|
| INSI | Station identifier | |
| LAT | Latitude | decimal °N (- = south) |
| LONG | Longitude | decimal °E (- = west) |
| ELEV | Altitude | m |

**Table 6 - Daily weather data: Only the rows in bold are currently directly used in CUPPA-Tea**

| Code | Description | Unit |
|------|-------------|------|
| DATE | Date | YYDOY |
| SRAD | Daily incident solar radiation | MJ m$^{-2}$ d$^{-1}$ |
| TMAX | Daily maximum temperature | °C |
| TMIN | Daily minimum temperature | °C |
| WIND | Daily wind run | km d$^{-1}$ |
| RAIN | Daily rainfall | mm d$^{-1}$ |
| EVAP | Daily pan evaporation | mm d$^{-1}$ |
| MNVP | Daily mean vapour pressure | kPa |

For all three tea estates the only available solar radiation data were monthly values from the Tea Research Foundation of Kenya. These monthly values were converted to daily values using a 30 day moving average algorithm.

For the Kapkorech estate, the minimum and maximum temperatures were taken from recorded monthly data for 2011 and recorded daily temperature for 2012 and 2013. For the monthly data the 30-day moving average algorithm was used to generate daily values. The daily rainfall data for 2011 to 2013 was taken from the Kapkorech weather station.

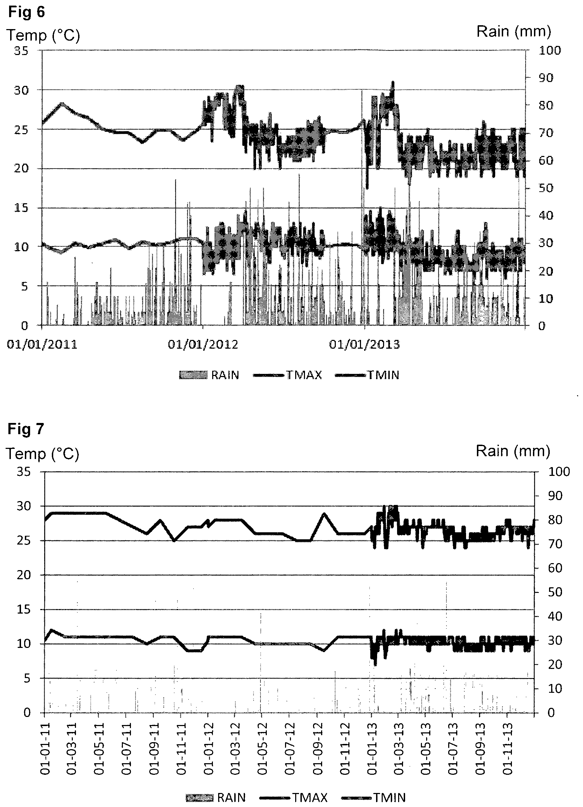

Fig 6 shows the weather data used for the Kapkorech estate.

For the Kapgwen and Chemosit estates, the minimum and maximum temperatures were taken from Kapgwen's monthly data for 2011 and 2012 and Chemosit's daily temperature for 2013. For the monthly data the 30-day moving average algorithm was used to generate daily values. The daily rainfall was taken for the Chemosit station for 2011, 2012 and 2013. **Fig 7** shows the weather data used for the Kapgwen and Chemosit estates.

The altitude of each station is important as is used to determine difference in temperature in the fields. Therefore, the Kapkorech weather data were set as those for the Unilever Research Station (2067 m) for all years and the Chemosit data set was set to the Kapgwen altitude (1902 m) for 2011 and 2012 and the Chemosit altitude (1830 m) for 2013.

**Initial conditions (Gumtea.inp)**

Table 7 shows the data for the initial conditions, which comes from the original model data. These parameter values were not changed, except for Shoot number, which was derived from the genotype, as recited in tea.csv.

**Table 7 - Initial conditions as set in input parameter file**

| Parameter | Description | Units | Current Default Values |
|---|---|---|---|
| LeafWt | Initial dry weight contained in maintenance leaves | g m-2 | 525.4 |
| GreenStemWt | Initial dry weight contained in young stems | g m-2 | 200 |
| StemWoodWt | Initial dry weight contained in woody stems | g m-2 | 2325.4 |
| ReservesWt | Initial dry weight contained in carbohydrate reserves | g m-2 | 0 |
| FineRootWt | Initial dry weight contained in fine roots | g m-2 | 190 |
| ThickRootWt | Initial dry weight contained in thick roots | g m-2 | 1245 |
| RootDepth | Initial root depth | cm | 550 |
| LAI | Initial leaf area index | m2 m-2 | 6.5 |
| ShootNo | Initial shoot number | Shoots m-2 | from tea.csv |
| TableHeight | Initial plucking table height | cm | 80 |

(continued)

| Parameter | Description | Units | Current Default Values |
|---|---|---|---|
| SoilWater | Initial profile soil water contents | (cm depth, v/v water) | 25,0.266,40,0.287,55,0.297,70,0.288,90,0.271,110,0.274,130,0.276... 150,0.286,170,0.291,190,0.308,210 , 0.331,230,0.332,250,0.340,270... 0.347,290,0.331,310,0.338,330,0.321,350,0.318,370,0.314,390,0.312.. 410,0.308,430,0.305,450,0.302,470 ,0.298,490,0.296 |
| RootDensity | Initial root length density in profile | (cm depth, cm cm-3) | 25,3.4073,40,2.8067,55,2.312,70,1.9045,90,1.4706,110,1.1355,130... 0.8768,150,0.6771,170,0.5228,190, 0.4037,210,0.3117,230,0.2407... 250,0.1859,270,0.1435,290,0.1108, 310,0.0856,330,0.0661,350,0.051. .. 370,0.0394,390,0.0304,410,0.0235, 430,0.0181,450,0.014,470,0.0108... 490,0.0084,510,0.0064 |
| TopsNFrac0 | Tops N content | | 0.0325 |
| RootNFrac0 | Root N content | | 0.01 |
| TopsResidue | Tops residue | | 1000 |
| TopsResidueNFrac | Tops residue | | 0.01 |
| RootResidue | Roots residue | | 200 |
| RootResidueNFrac | Roots residue | | 0.01 |
| NH4 | Soil ammonium | | 15,0.6,70,0.6,200,0.6,320,0.6 |
| NO3 | Soil nitrate | | 15,1.5,70,1.5,200,1.5,320,1.5 |

**Crop management**

Table 8 shows the crop management data, which is mainly derived from the user inputs on the user interface or the scenarios text file. Some of these parameters can also be derived from the selected field data (field.csv). Population density and row spacing remained unchanged.

**Table 8 - Crop management parameters taken from user input**

| Parameter | Description | Units | Current Default Values |
|---|---|---|---|
| PopulationDensity | Population density of tea bushes | Bushes m-2 | 0.9259 |
| RowSpacing | Spacing between rows of bushes | m | 1.2 |
| Pluckinterval | Interval between successive pluckings | days | User input |
| PluckUpperLim | Maximum number of leaves on a shoot to be plucked | # leaves | User input |
| PluckLowerLim | Minimum number of leaves on a shoot to be plucked | | User input |
| ShearHeight | Height of harvesting above table for mechanical harvesting | cm | User input |
| BreakBack | Break back remaining stub of a plucked shoot (Y/N) | | User input |
| PluckToLeaf | Pluck down to specified leaf number on a shoot | | User input |
| MinPluckLength | Minimum size allowed of a plucked shoot | cm | User input - default = 0 |
| MaxPluckLength | Maximum size allowed of a plucked shoot | cm | User input - default = 100 |
| Irrigations | Dates and amounts applied at which the model will carry out irrigations | (date,mm) | User input |

(continued)

| Parameter | Description | Units | Current Default Values |
|---|---|---|---|
| Pluckings | Dates at which the model will carry out pluckings | date | User input |
| IrrigationThreshold | Soil water deficit at which automatic irrigation occurs | mm | User input - default = 50 |

**Scenarios (Scenarios.txt)**

The scenario text file is a tab delimited file containing the following data:

•    Genotype name, e.g. BB35

•    Title, to be used on graphs

•    Irrigation, 0 for None or 2 for automatic irrigation

•    Irrigation threshold (mm) if Irrigation = 2

•    Harvest interval (days)

•    Manual, TRUE for manual plucking or FALSE for Mechanical plucking

•    Pluck Min Leaves, 1 to 5

•    Pluck Max Leaves, 1 to 5

•    Shear height (mm)

•    Break back, TRUE or FALSE

•    Break leaves, If Break = TRUE, 1 to 4

•    Minimum shoot size (cm)

•    Maximum shoot size (cm)

•    Shoot initial, 0 for Zero all shoots or 1 for auto-initialise

•    Harvest dates, list of dates in dd/mm/yyyy or yyyy/mm/dd format

•    Harvest mode - 0 for regular or 1 for selected dates

**Tool set-up data**

Three additional csv files contain details required by the tool on how to configure and adapt the output of the tool. These files (Table 9 and Table 10) are:

•    Colours.csv - List of colours to use for scenarios in graphs

•    Graphlist.csv - List of graphs to display

•    Codelist.csv - Column headings for the Excel spreadsheet

**Table 9 - Graphlist.csv - List of graphs to display after model run**

| Graph | Column | SheetName | Title | Y-axis Title | Max Value |
|---|---|---|---|---|---|
| GROWTH | CHWAD | CumYld | Cumulative yield | Cumulative tea yield (kg ha$^{-1}$) | 0 |
| GROWTH | HQU2 | AcceptGrowth | Proportion of 'acceptable' shoots | % acceptable shoots | 100 |
| GROWTH | SPKG | ShootsKg | Shoots per kilogram | Shoots per kg | 0 |
| GROWTH | NHSH | HarvestShoots | Harvested Shoot Numbers | Harvested Shoots (# m$^{-2}$) | 0 |
| GROWTH | HWAD | HarvestYield | Harvested Yield | Yield (kg ha$^{-1}$) | 0 |
| GROWTH | NBSH | BanjhiShoots | Numbers of banjhi Shoots | # banjhi shoots | 0 |
| WATER | SWDF | WaterDef | Soil water deficit | Soil water deficit (mm) | 0 |
| WATER | DRCG | Drainage | Drainage | Drainage (mm) | 0 |
| WATER | ROCG | Runoff | Runoff | Runoff (mm) | 0 |
| WATER | EPAD | CropTrans | Crop transpiration | Transpiration | 0 |
| WATER | ESDD | SoilEvap | Soil evaporation | Soil evaporation | 0 |
| WATER | EOAD | PotentET | Pot. evapotranspiration | Potential ET (mm) | 0 |
| WATER | IRCD | Irrig | Irrigation | Irrigation (mm) | 0 |
| WATER | PRCD | Rain | Rainfall | Rainfall (mm) | 0 |
| WATER | SRAD | SolarRad | Daily solar radiation | Solar radiation (MJ m$^{-2}$ d$^{-1}$) | 0 |
| WATER | TAVD | MeanTemp | Mean temperature | Mean temp (°C) | 0 |

**Table 10 - Codelist.csv - column headings**

| RUN | Run number |
|---|---|
| EXPCODE | Experiment code |
| TRNO | Treatment number |
| INGENO | Genotype code ID |
| SDATE | Starting date of simulation |
| CWAM | Canopy weight at end of simulation (kg DM ha$^{-1}$) |
| HWAM | Cumulative harvested yield at end of simulation (m$^{-2}$) |
| YLD | Annual yield (kg DM ha$^{-1}$) |
| TMP | Annual irrigation amount (mm) |
| DATE | Date of output |
| CDAY | Days after start of simulation (days) |
| NTSH | Total number of shoots (m$^{-2}$) |
| NBSH | Number of banjhi shoots (m$^{-2}$) |
| NRSH | Number of resting shoots (m$^{-2}$) |
| NDSH | Number of dormant shoots (banjhi+resting) (m$^{-2}$) |
| NHSH | Number of harvested shoots (m$^{-2}$) |
| NHBA | Number of harvested banjhi shoots (m$^{-2}$) |
| SHB% | Proportion of harvested shoots which are banjhi (%) |
| HWAD | Harvested yield (kg MT ha$^{-1}$) |

(continued)

| RUN | Run number |
|---|---|
| CHWAD | Cumulative harvested yield since start ($m^{-2}$) |
| SPKG | Number of harvested shoots per kilogram fresh wt. ($kg^{-1}$) |
| HQU2 | Proportion of acceptable shoots (%) |
| CGRD | Crop growth rate (kg DM $ha^{-1}$ $d^{-1}$) |
| SHGRD | Shoot growth rate (kg DM $ha^{-1}$ $d^{-1}$) |
| LAID | Leaf area index ($m^2$ $m^{-2}$) |
| CWAD | Canopy weight (kg DM $ha^{-1}$) |
| LWAD | Leaf weight (kg DM $ha^{-1}$) |
| GSWAD | Green stem weight (kg DM $ha^{-1}$) |
| SWWAD | Stem-wood weight (kg DM $ha^{-1}$) |
| TRWAD | Thick root weight (kg DM $ha^{-1}$) |
| FRWAD | Fine root weight (kg DM $ha^{-1}$) |
| REWAD | Weight of dry matter in stem and root reserves (kg DM $ha^{-1}$) |
| RTGR | Root growth rate (kg DM $ha^{-1}$ $d^{-1}$) |
| TABH | Table height (cm) |
| LDAD | Dead leaf weight (kg DM $ha^{-1}$) |
| TWIG | Weight of twigs in litter (kg DM $ha^{-1}$) |
| DRWT | Dead root weight (kg DM $ha^{-1}$) |
| TRLD | Total root length density (cm $cm^{-3}$) |
| ASSF | Assimilate stress factor |
| RESGR | Rate of change of reserves weight (kg DM $ha^{-1}$ $d^{-1}$) |
| SRAD | Daily solar radiation (MJ $m^{-2}$ $d^{-1}$) |
| TAVD | Daily mean temperature (°C) |
| SDMX | Daily maximum saturation deficit (kPa) |
| PRCD | Daily rainfall (mm) |
| IRCD | Daily amount of irrigation (if any) (mm) |
| EOAD | Daily potential evapotranspiration (mm) |
| ETAD | Daily potential transpiration (adjusted for LAI) (mm) |
| ESDD | Soil evaporation (mm) |
| EPAD | Daily transpiration (mm) |
| ROCG | Cumulative runoff (mm) |
| DRCG | Cumulative drainage (mm) |
| SWDF | Soil water deficit (mm) |
| TRLD | Total root length density (km $m^{-2}$) |
| RDEP | Maximum root depth (cm) |
| WSF | Water stress factor |

(continued)

| RUN | Run number |
|---|---|
| SDFAC | Saturation deficit multiplier |
| CSWD | Cumulative soil water deficit |

**Output data**

This section describes the output data. The tool creates a number of output files, which are then used to create a series of graphs:

- a single Summary file listing all the model runs
- an overview file for each model run listing model run parameters, harvesting details and irrigation details
- a growth file for each model run listing data relating to crop growth and yield
- a water file for each model run relating to the soil water balance and crop water uptake and use

Summary

The Summary File (Table 11) describes outputs such as the annual yield.

**Table 11 - Output from Summary file**

| Code | Description | Units |
|---|---|---|
| RUN | Run number | - |
| EXPCODE | Experiment code | - |
| TRNO | Treatment number | - |
| INGENO | Genotype code ID | - |
| SDATE | Starting date of simulation | YYDDD format |
| CWAM | Canopy weight at end of simulation | kg DM ha$^{-1}$ |
| HWAM | Cumulative harvested yield at end of simulation | m$^{-2}$ |
| YLD1 | Annual yield for year 1 | kg DM ha$^{-1}$ |
| YLD2 | Annual yield for year 2 | kg DM ha$^{-1}$ |
| TMP1 | Annual irrigation amount for year 1 | mm |
| TMP2 | Annual irrigation amount for year 2 | mm |

Overview

The Overview output files describe the key features of the run (Table 12), the harvest (Table 13), the irrigation (Table 14), the water (Table 15), and the tea growth (Table 16)/

**Table 12 - Example of Run Details from Overview output**

| RUN 1 | HI 21 |
|---|---|
| MODEL | GUMTEA |
| INPUT FILE | GUMTEA.INP |
| MANAGEMENT | Treatment 1 @ |
| CROP | TE var. BB35 (CU0003 @ TEA.CUL) |
| SOIL | Medium sandy clay loam (IB00000015 @ SOIL.SOL) |
| WEATHER | Chemosit, Kenya (Temp @ DATA\Temp71.WTH) |
| TFILE | |
| AFILE | |
| IRRIGATION | Never irrigated, rainfed |
| FERTILISER | Nitrogen dynamics routines not used |
| SWITCHES | |

**Table 13 - Harvest details from Overview output**

| Code | Description | Unit |
|---|---|---|
| DATE | Date | YYDOY |
| DAS | | |
| STAGE | | |
| HWAD | Harvested yield | Kg MT ha-1 |
| BAN | | |
| 1+B | | |
| 2+B | | |
| 3+B | | |
| 4+B | | |
| 5+B | | |
| TOTAL | | |

**Table 14 - Irrigation details from Overview output**

| Code |
|---|
| DATE |
| DAS |
| AMOUNT (mm) |

**Table 15 - Output from Water parameters**

| Code | Description | Units |
|---|---|---|
| DATE | Date of output | YYDDD format |
| CDAY | Days after start of simulation | days |
| SRAD | Daily solar radiation | MJ m$^{-2}$ d$^{-1}$ |
| TAVD | Daily mean temperature | °C |
| SDMX | Daily maximum saturation deficit | kPa |
| PRCD | Daily rainfall | mm |
| IRCD | Daily amount of irrigation (if any) | mm |
| EOAD | Daily potential evapotranspiration | mm |
| ETAD | Daily potential transpiration (adjusted for LAI) | mm |
| ESDD | Soil evaporation | mm |
| EPAD | Daily transpiration | mm |
| ROCG | Cumulative runoff | mm |
| DRCG | Cumulative drainage | mm |
| SWDF | Soil water deficit | mm |
| TRLD | Total root length density | km m$^{-2}$ |
| RDEP | Maximum root depth | cm |
| WSF | Water stress factor | - |
| SDFAC | Saturation deficit multiplier | - |
| CSWD | Cumulative soil water deficit | - |

**Table 16 - Output from Growth parameters**

| Code | Description | Units |
|---|---|---|
| DATE | Date of output | YYDDD format |
| CDAY | Days after start of simulation | days |

(continued)

| Code | Description | Units |
|------|-------------|-------|
| NTSH | Total number of shoots | $m^{-2}$ |
| NBSH | Number of banjhi shoots | $m^{-2}$ |
| NRSH | Number of resting shoots | $m^{-2}$ |
| NDSH | Number of dormant shoots (banjhi+resting) | $m^{-2}$ |
| NHSH | Number of harvested shoots | $m^{-2}$ |
| NHBA | Number of harvested banjhi shoots | $m^{-2}$ |
| SHB% | Proportion of harvested banjhi shoots | % |
| HWAD | Harvested yield | kg MT $ha^{-1}$ |
| CHWAD | Cumulative harvested yield since start | $m^{-2}$ |
| SPKG | number of harvested shoots per kilogram fresh wt | $kg^{-1}$ |
| HQU2 | | |
| CGRD | Crop growth rate | kg DM $ha^{-1}$ $d^{-1}$ |
| SHGRD | Shoot growth rate | kg DM $ha^{-1}$ $d^{-1}$ |
| LAID | Leaf area index | $m^2$ $m^{-2}$ |
| CWAD | Canopy weight | kg DM $ha^{-1}$ |
| LWAD | Leaf weight | kg DM $ha^{-1}$ |
| GSWAD | Green stem weight | kg DM $ha^{-1}$ |
| SWWAD | Stem-wood weight | kg DM $ha^{-1}$ |
| TRWAD | Thick root weight | kg DM $ha^{-1}$ |
| FRWAD | Fine root weight | kg DM $ha^{-1}$ |
| REWAD | Weight of dry matter in stem and root reserves | kg DM $ha^{-1}$ |
| RTGR | Root growth rate | kg DM $ha^{-1}$ $d^{-1}$ |
| TABH | Table height | cm |
| LDAD | Dead leaf weight | kg DM $ha^{-1}$ |
| TWIG | Weight of twigs in litter | kg DM $ha^{-1}$ |
| DRWT | Dead root weight | kg DM $ha^{-1}$ |
| TRLD | Total root length density | cm $cm^{-3}$ |
| ASSF | Assimilate stress factor | - |
| RESGR | Rate of change of reserves weight | kg DM $ha^{-1}$ $d^{-1}$ |

**Soil sensitivity analysis**

To test the sensitivity of the model to the soil profile parameters, the first soil defined in the original model, with a texture of silty clay, was copied to new soils ids - IB00000014 to IB00000022. Table 17 shows the general soil characteristics used for all the test soils. These soils were then amended to test 3 of the soil parameters - Root growth, Bulk density and Organic carbon. Table 18 shows the amended soil profile properties for the test soils. In addition, 3 different depths for silty clay were tested.

**Table 17 - Soil characteristics parameters for the nine new test soil profiles**

| | |
|---|---|
| **SoilID** | IB00000014 |
| **Source** | IBSNAT |
| **Texture** | SICY |
| **Depth** | 210 |
| **Desc** | Deep silty clay, root 0 |
| **Site Name** | Generic |
| **Country** | Generic |
| **Lat** | -99 |
| **Long** | -99 |

(continued)

| SCS FAMILY | Generic |
|---|---|
| Colour | -99 |
| Albedo | 0.11 |
| Evap limit (cm) | 6 |
| Drainage rate | 0.3 |
| Runoff | 85 |
| Mineralisation | 1 |
| Photosynthesis | 1 |
| pH in buffer method | IB001 |
| Phosphorus method | IB001 |
| Potassium method | IB001 |

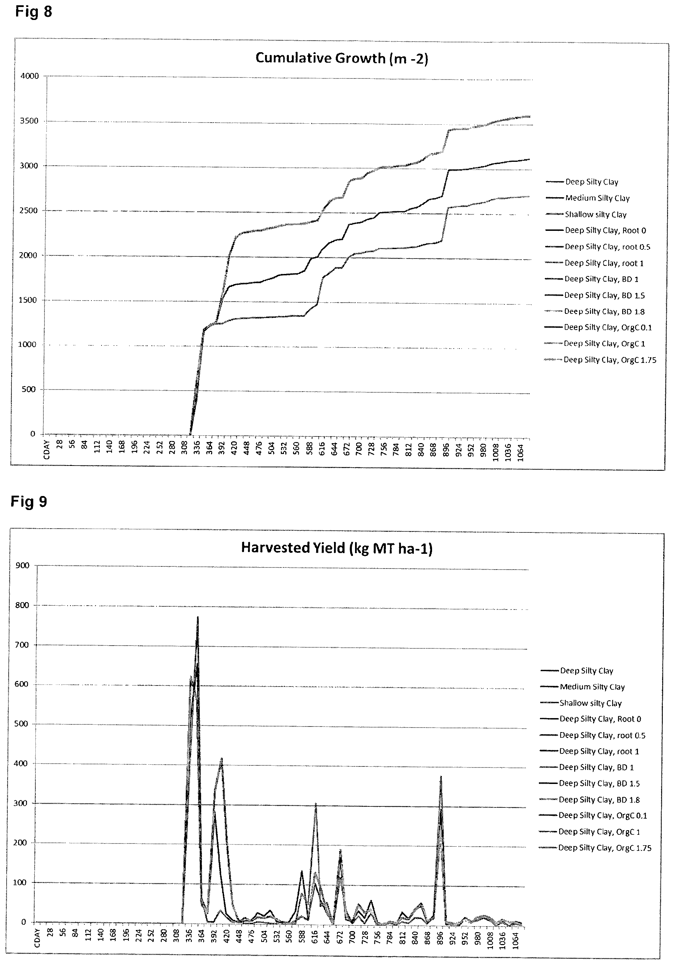

The CUPPA-Tea model was then run for each of the twelve soils on a single field in the Kapkorech tea estate and the cumulative growth and harvested yield plotted **(Fig 8).** The parameters for root growth, bulk density and organic carbon appear to have no effect on the results. The key parameter that affects the output is soil depth, with deep soils showing greater cumulative growth than shallow soils. Fig 9 shows the modelled harvested yield for the twelve test soils.

**Table 18. Soil profile parameters used in the soil sensitivity analysis**

| Soil identifier | Depth | Root growth factor (0-1) | Bulk density (g cm$^{-3}$) | Organic carbon (%) |
|---|---|---|---|---|
| IB00000001 | Depth 210 | 1 to 0.033 | 1.3 to 1.4 | 1.75 to 0.01 |
| IB00000002 | Depth 150 | 1 to 0.111 | 1.35 to 1.38 | 1.74 to 0.29 |
| IB00000003 | Depth 60 | 1 to 0.607 | 1.35 to 1.36 | 1.74 to 1.45 |
| IB00000014 | Depth 210 | 0 | 1.3 to 1.4 | 1.75 to 0.01 |
| IB00000015 | Depth 210 | 0.5 | 1.3 to 1.4 | 1.75 to 0.01 |
| IB00000016 | Depth 210 | 1 | 1.3 to 1.4 | 1.75 to 0.01 |
| IB00000017 | Depth 210 | 1 to 0.033 | 1 | 1.75 to 0.01 |
| IB00000018 | Depth 210 | 1 to 0.033 | 1.5 | 1.75 to 0.01 |
| IB00000019 | Depth 210 | 1 to 0.033 | 1.8 | 1.75 to 0.01 |
| IB00000020 | Depth 210 | 1 to 0.033 | 1.3 to 1.4 | 0.1 |
| IB00000021 | Depth 210 | 1 to 0.033 | 1.3 to 1.4 | 1 |
| IB00000022 | Depth 210 | 1 to 0.033 | 1.3 to 1.4 | 1.75 |

**Sensitivity to tea shoot population density**

in order to determine the most appropriate number of shoots for the tea cultivar being grown on the tea estates, a number of test runs were performed on a single field in the Kapkorech tea estate. The modelled annual yields for Field 9 were then compared with the recorded annual yield for the same field. The BB35 cultivar, the values for which was copied from the default and adjusted by 20%. The shoot number was reduced from 1200 to 750 m$^{-2}$ and together with a harvest interval of 21 days predicted annual yields similar to the recorded values (Table 19).

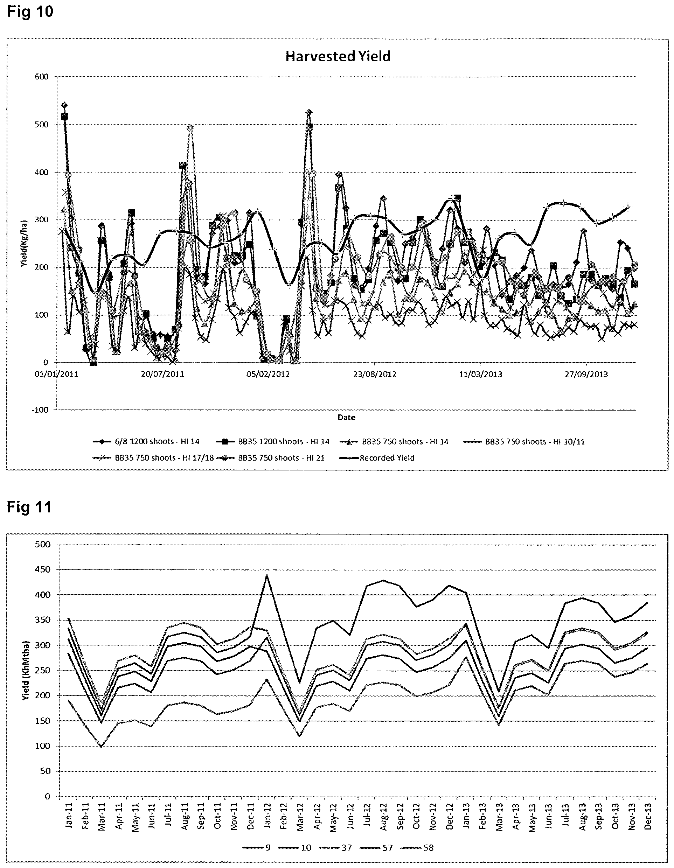

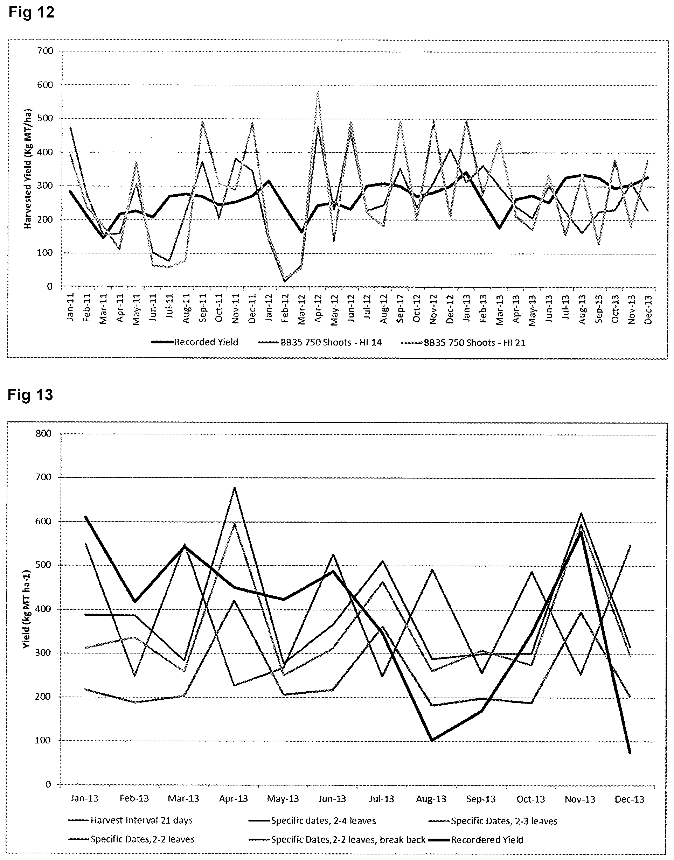

**Fig 10** shows runs from the CUPPA Tea with varying shoot numbers and harvest intervals compared with recorded yield. **Fig 11** shows recorded monthly yields (kg MT ha-1) on selected fields in the Kapkorech tea estate, **Fig 12** compares the modelled yield per harvest with the recorded yield per month. Since there could potentially be more than one harvest per month, there will be differences in amount.

**Table 19 - Selected scenarios to determine the sensitivity of changing the Shoot number and the Harvest interval**

| Shoot number (m$^{-2}$) | Harvest interval | Cultivar | 2011 | 2012 | 2013 |
|---|---|---|---|---|---|
| **Actual** | **Seedling** | | **2866** | **3201** | **3472** |
| 1200 | 14 | 6/8 | 5106 | 5195 | 5341 |
| 1200 | 14 | BB35 | 4854 | 4950 | 4885 |
| 750 | 14 | BB35 | 3071 | 3170 | 3098 |

(continued)

| Shoot number (m$^{-2}$) | Harvest interval | Cultivar | 2011 | 2012 | 2013 |
|---|---|---|---|---|---|
| **Actual** | **Seedling** | | **2866** | **3201** | **3472** |
| 750 | 10/11 | BB35 | 3020 | 3057 | 2958 |
| 750 | 17/18 | BB35 | 3079 | 3277 | 3157 |
| 750 | 21 | BB35 | 3070 | 3247 | 3484 |

**Modelled and recorded monthly yields at Kapkorech**

**Fig 11** shows the recorded monthly yields for selected fields on the Kapkorech tea estate between Jan 2011 and December 2013. The field data follows a consistent seasonal pattern as it seems that the annual yield per field has been distributed amongst the 12 months by using a proportional yield factor for each month (Table 20). This distribution seems to be assumed for each year and each field regardless of pruning. Hence the outputs of CUPPA-Tea **(Fig 12)** show substantially more variation that the field data.

**Table 20 - The assumed proportion (%) of the annual yield obtained in each month at Kapkorech**

| Jan | Feb | Mar | Apr | May | Jun | Jul | Aug | Sep | Oct | Nov | Dec | MT/ha |
|---|---|---|---|---|---|---|---|---|---|---|---|---|
| 10 | 7 | 5 | 8 | 8 | 7 | 9 | 10 | 9 | 8 | 9 | 9 | 100 |

**Modelled and recorded yield at Kapgwen**

Harvest dates for 2015 were recorded for some fields on the Kapgwen tea estate. Field 28 was selected as this was recorded as growing the BB35 cultivar. The dates given for field 28 were: 24,23,25,24,24,25,23,24,19,23,26,24
These dates were used to create the same specific dates for 2011, 2012 and 2013, and then the model was run over a number of scenarios. **Fig 13** shows the modelled monthly harvested yield for the different scenarios against the recorded yield for 2013. It is unlikely that the same harvesting dates were used in 2013 as in 2015, and so some variation was expected.
The decline in the field measured yield in August 2013 is interesting in that it does not seem to be caused by a temperature or drought effect. Possible reasons for the yield decline could be i) hail damage or ii) some pruning operation on part of the field.

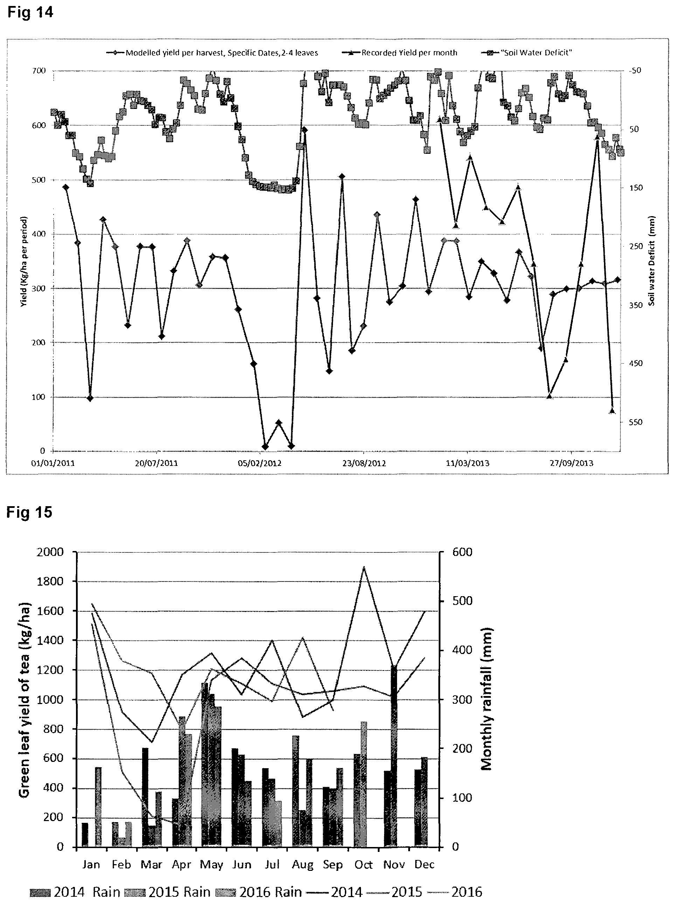

In **Fig 14** the modelled output for Field 28 in 2013 is presented alongside the field-recorded yields (in green) and the calculated soil water deficit. The modelled yields (in red) behave similar to what would be expected. In an environment such as Kericho, where the temperature is relatively consistent, the yield is primarily a function of the changes in the soil water deficit. Note that the yield per month and yield per harvest are not the same as there could be more than one harvest in a month.
The modified model is provided within new user interface, and is also able to handle spatial data.

Need for individual harvest data

The initial results suggested that the CUPPA-Tea model can predict reasonable seasonal variations in the individual harvests of clonal tea in Kenya. Integration of the model with the use of remote sensing to support yield prediction was achieved. The scope of using remote sensing to help support the prediction of tea yields is discussed below.

**Analysis of models**

**Analysis of Kapkorech harvest data**

Field-level data for the Kapkorech Estate in Kenya was analysed. Field data were provided for the period from January 2014 to September 2016.
During this period, the monthly rainfall varied from a minimum of 1 mm in January 2015 to a maximum of 370 mm in November 2016. Between January and March, the rainfall in 2014 was 303 mm, in 2015 it was only 67 mm, and in 2016 it was 327 mm (Fig 15). Hence whilst the air temperatures in Kenya may be relatively stable, there can be substantial year to year variation in rainfall.
The total fresh weight tea yield for 2015 (11,390 kg/ha) was only 77% of that for 2014 (14,700 kg/ha). The primary reason for the low yield in 2015 was the low yields in February, March, and April 2015, which were associated with the low rainfall levels mentioned above. For example the greenleaf harvested between February and April 2015 was only 870 kg/ha compared to 2790 kg/ha between February and April 2014 and 3240 kg/ha between February and April 2016. It is apparent from **Fig 15** that although there was significant rainfall in April 2015, yields did not recover until May 2015. Hence, there is a delay between the onset of rains and a new cohort of shoots reaching harvestable size.

Between May and September, the mean monthly yield of fresh tea in each of the three years was relatively stable, with monthly green leaf totals between 926 and 1417 kg/ha. There was a large spike in tea production in October 2014, which may suggest that something synchronised tea growth in the preceding months.

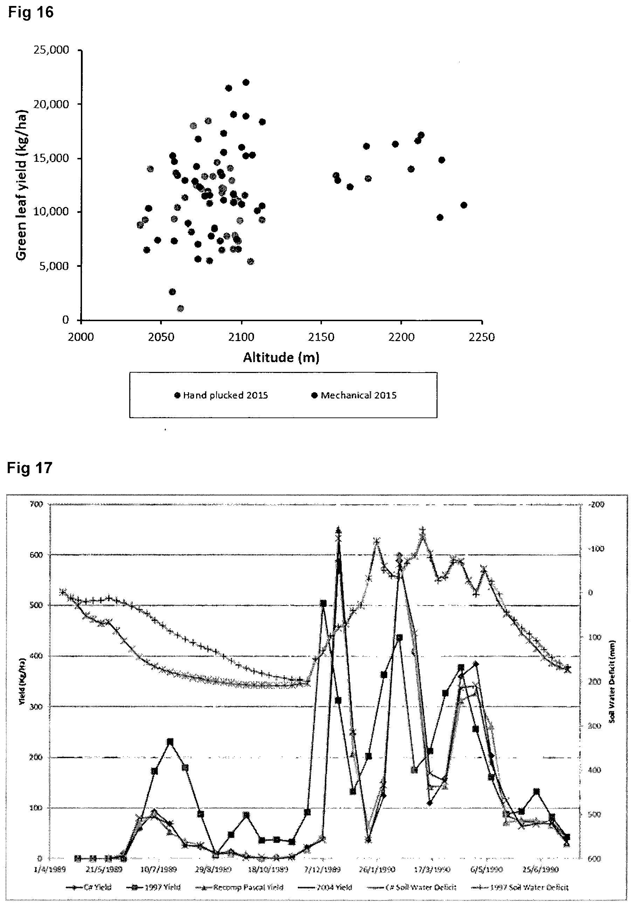

An analysis of the relationship between green leaf yield, temperature, and harvesting method **(Fig 16)** highlights that all of the tea above an altitude of 2150 m is mechanically harvested. Below 2150 m, about half of the tea is mechanically-harvested and half is hand-harvested. In 2015, the mean yield from the mechanically harvested fields (13,240 kg/ha) was about 29% greater than that (10,270 kg/ha) hand harvested fields.

Previous research has suggested that tea yields decline with increased altitude because of the lower temperatures and lower shoot growth rates (Carr & Stephens, 1992). This effect is not immediately apparent from this initial analysis of the data.

**Further development of CuppaTea model**

Validation of new version of model

As discussed above, the CUPPA-Tea model dating from 1997, was modified to provide a new user-friendly front end and was also adapted to incorporate geographical data. Below, a further modified version of CUPPA-Tea model is discussed, dating from 2004, which also had a source code written in the Pascal programming language. In order to allow the development of the model in further phases within a common modern programming environment, the source code was also converted to C#.

Hence there were four versions of the model which were compared:

1. Original version dated 1997 (1997)
2. Version sent with source code dated 2004 (2004)
3. Version as a result of re-compiling the source code in Pascal compiler (Recomp Pascal)
4. Re-coded model in C# based on the source code (C#)

This new C# version of the model was validated:

1. Against the 2004 executable and recompiled pascal code to ensure the conversion to C# had not introduced any errors
2. Against the original 1997 version to investigate what changes had been introduced to the model between 1997 and 2004.

*Comparison of the C# and 2004 model outputs*

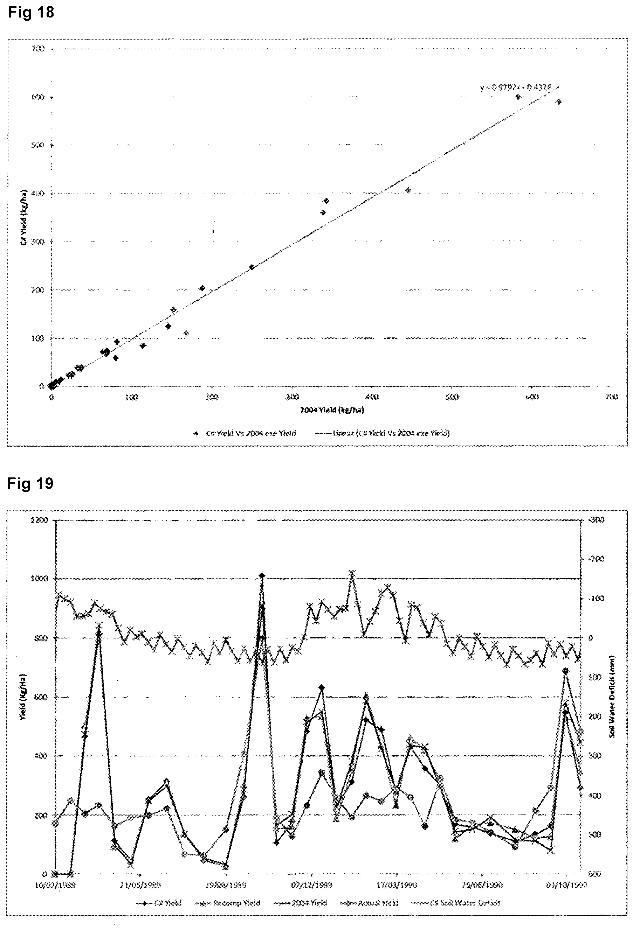

The different versions of the model were compared using the original data from the Ngwazi Tea Research Unit in Mufindi, Tanzania. The parameter options were set to a regular 14 day harvest interval between 13 April 1989 and 19 July 1990 with no irrigation. The results **(Fig 17)** showed a good agreement between the 2004 version of the model and the new C# version. In fact, the correlation between these two versions is strong **(Fig 18).**

By contrast the results from the 1997 version is different from the 2004 and the C# version **(Fig 18)**. The 1997 version shows an earlier yield peak in December 1989 after the cessation of drought stress, compared to the later 2004 version. This is partly a result of the 1997 version of the model calculated the soil water deficit in a different way from subsequent versions **(Fig 17)**. The new model also restricts the number of leaves that can be unfurled in the extension stage. If the leaf count reaches the 'last leaf' parameter for the individual shoot, the new model resets the growth stage to 0, and so preventing new leaves emerging

The differences in output between the C# version and the 2004 Pascal version, highlighted in **Fig 17,** were relatively small. Detailed analysis of the output for a specific day (day 114), showed that for 500 shoots, the 2004 model predicted:

- Five more shoots to pluck, due to having five more shoots with more than two leaves
- has fewer shoots with just two leaves
- has fewer shoots with two leaves and growth stage set at 1

One possible reason for the minor differences is that the two models use different methods to calculate random numbers. It is likely therefore that the minor differences found between the C# version of the model and the pascal version is due the random number generation of some of the shoot development parameters.

*Comparison of models for irrigated tea*

The outputs from the 2004 and the C# model were compared the actual yields of fully irrigated clone 6/8 as measured at the Ngwazi Tea Research Unit. In general, the timing of the first yield peak matches that of the actual yield **(Fig 19).** Hence the new version of the model seems to be able to predict the yield distribution of fully-irrigated tea in Tanzania. Since, the original 1997 model did not run correctly with irrigation dates/amounts it was excluded from this analysis.

*Comparison of models for unirrigated tea*

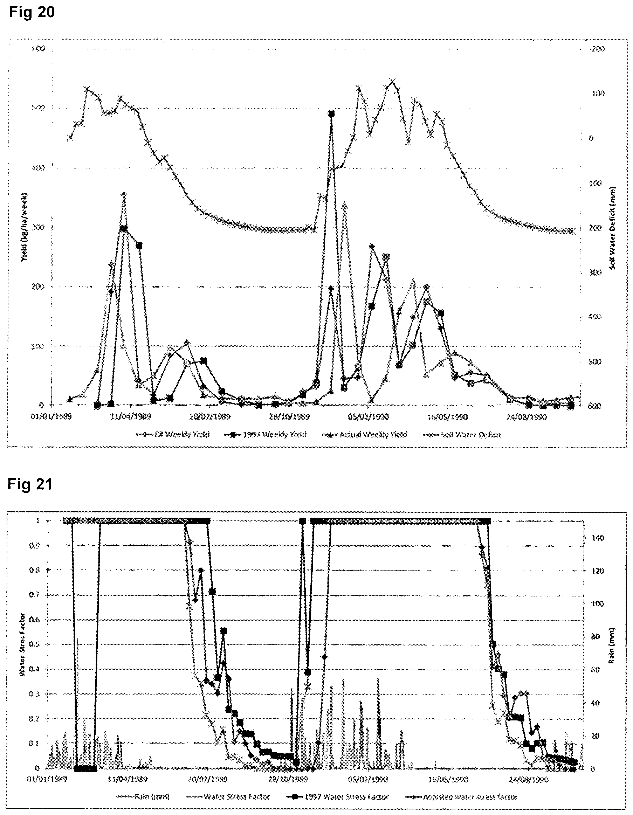

The "1997" and the "C#" model outputs were compared to actual yields from unirrigated tea in Tanzania between 24 January 1989 and 19 October 1990 (Fig 20). In this case, both model versions showed an earlier harvest peak in December 1989 after the removal of drought conditions, than the actual results. The earlier predicted peak with the models then resulted in two more harvest peaks compared to just one in the actual results.
CUPPA-Tea uses a water balance model to calculate a water stress factor. The water stress factor is then used to determine shoot development. Fig 21 presents the seasonal change in the modelled water stress factor for the period from January 1989 to September 1990. Firstly the 1997 version of the model incorrectly shows water stress early in 1989. Then within the main dry season, the water stress factor in the 1997 version shows a slower response to the new version. The new version incorporates a time delay of around 20 days in the response of shoot growth after the arrival of rains. The adjusted water stress builds in this delay factor.

*The role of the water stress factor*

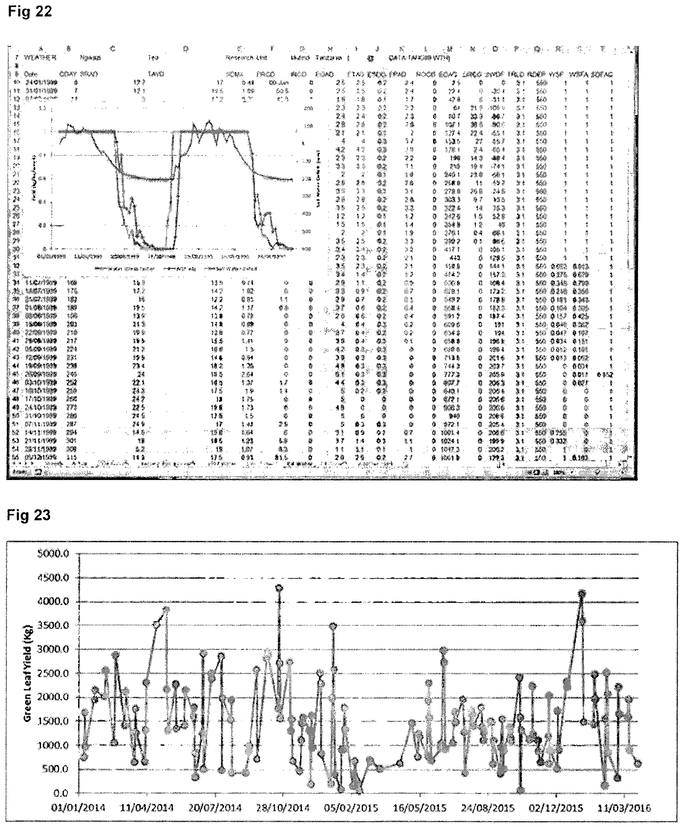

The water stress factor is a key parameter derived from the water balance model within CUPPA-Tea. Although the water stress factor recovers slower than the 1997 version (when rainfall starts to occur again), the recovery of the water stress factor and hence the recovery of shoot growth still seems to be quicker than that shown by actual yield data.
As referenced in Appendix A, in a Tanzanian case study, it was noted that 6 mm of rain on one day with no rain for 11 days before or 5 days after, could increase the water stress factor from 0 to 0.255. Since there was so little rain before or after the water stress factor would be expected to remain at 0. The calculation of the actual water uptake, based on the calculation of the soil water and initial setting of the lower limits, appear to be a key factor resulting in the change in the water stress factor (Fig 22). The water balance model is described in Table 21 below.

## Table 21: Diagram of parameters and routines within the water balance model in Cuppa Tea

| Soil Parameter | Soil Water Deficit | Irrigation | Rain & Snow | Runoff | Soil Water Distribution | Potential Evap | Soil Evap | Potential Transpiration | Actual Water | Water Stress |
|---|---|---|---|---|---|---|---|---|---|---|
| Depth | | | | | | | | | | |
| Albedo | | | | | | X | | | | |
| Evap Limit (cm) | | | | | | | X | | | |
| Drainage Rate | | | | | X | | | | | |
| Runoff | | | | X | | | | | | |
| | | | | | | | | | | |
| Base Depth (cm) | | | | | | | | | | |
| Lower Limit (cm3) | | | | X | | | X | | X | |
| Drained Upper Limit (cm3) | X | | | X | X | | X | | | |
| Saturated Upper Limit (cm3) | | | | X | X | | | | | |
| Root Growth Factor (0-1) | | | | | | | | | | |
| | | | | | | | | | | |
| Soil Water | X | | | X | X | | X | | X | |
| Root Density | | | | | | | | | X | |
| | | | | | | | | | | |
| Soil Water Deficit | ▨ | X | | | | | | | | |
| Irrigation | | ▨ | | X | X | | | | | |
| Rain & Snow | | | ▨ | | | | | | | |
| Runoff | | | | ▨ | X | | | | | |
| Soil Water Distribution | | | | | ▨ | | | | | |
| Potential Evap | | | | | | ▨ | | X | | |
| Soil Evap | | | | | | | ▨ | X | | |
| Potential Transpiration | | | | | | | | ▨ | X | X |
| Actual Water Uptake | | | | | | | | | ▨ | X |
| Water Stress Factor | | | | | | | | | | ▨ |

## Comparison of modelled yields with Kenyan yields

Daily harvest data for each field of the Kapkorech Estate from January 2014 to March 2016 were analysed in order to determine the best way to compare with the predicted yield from the model. For this purpose, two fields were selected: Field 5 is an area of seedling tea which is hand plucked and Field 37 comprises an area of clone 35 which is mechanically harvested. The altitude of Field 5 is 2096 m, and that of Field 37 is 2095 m.

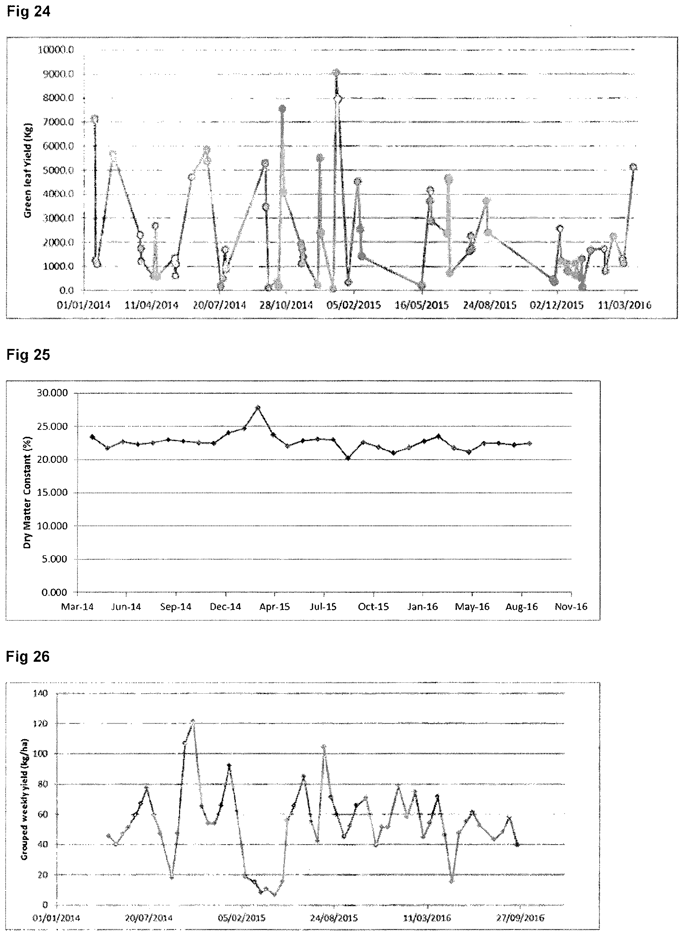

The mean green leaf yields for each harvest from field are shown in Fig 23 and Fig 24. The CUPPA-Tea model assumes an individual bush and single harvest dates at intervals over the specified time period. However, the actual harvest data shows that each field is harvested over several days, making it difficult to determine single harvest dates.

In order to rationalise the harvest dates (which is needed for comparisons with the model), the actual data was processed as follows:

1. the daily actual yield data were grouped to create yield data with a single harvest date for the entire field per harvest event.
2. The green leaf yields were converted to dry leaf yields

Grouping harvesting dates

Initially, the actual yields were grouped where harvests were on consecutive days or a day apart and the harvest date was set to the date where the highest yield occurred. However, the number of harvest dates were still too frequent and hence the yields were regrouped so that harvests occurring within a seven-day period were considered as a single harvest event. The harvest date was set as the mean date.

When the model was run for other fields it was noted that some fields were harvested daily for several weeks at a time and the initial algorithm meant that this resulted in a single very large yield on the mean harvest date. Hence the following new grouping algorithm was developed:

• harvests within 7 days of each other and less than 14 days from the first pluck date were considered part of the same pluck event. The harvest date was set as the mean date.

Convert to dry leaf yield

The CUPPA-Tea model predicts yield in kilogrammes of made tea per hectare, whereas the field data for Kapkorech are green leaf yields. To convert the green leaf yields to dry leaf (or made tea) a dry matter conversion constant was used. This was calculated on a monthly basis as the 'total made tea' divided by the 'factory weight'. The mean monthly value generally varied between 20% and 25% (Fig 25). However in March 2015, which was a particularly dry month, the constant was above this range at 28%. (Stephen & Carr, 1993) noticed a seasonal variation in the dry matter content for the tea bushes in Tanzania, with figures ranging from 18% to 32%.

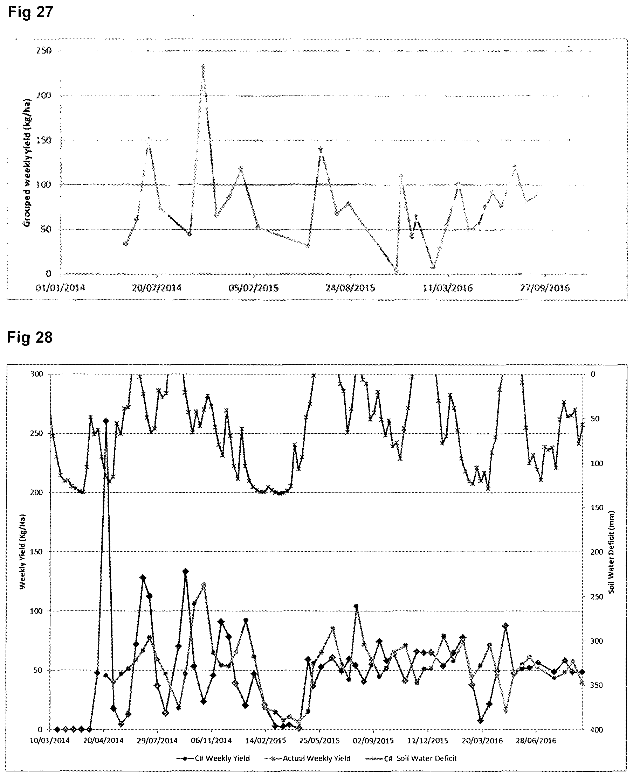

By grouping the harvests and using the dry matter conversion it was possible to derive a yield profile for each field, which could be compared to the output of the CUPPA-Tea model (Fig 26 and Fig 27).

Comparison of modelled and hand-harvested yields

The output of the CUPPA-Tea model for hand-harvested Field 5 shows a reasonable agreement with the actual yield (Fig 28). As reported by Matthews and Stephens (1989) the first few months of output from an uncalibrated model will tend to result in a series of peaks which are an artefact of the development of a new cohort of shoots. The model predicts the low yields that occurred between February and April 2015, which was associated with drought stress. The subsequent yields then follow a relatively regular pattern until January 2016. The model appears to predict a stronger response to drought between February and April 2016 which is not apparent in the actual data for Field 5. The absolute levels of yields seem broadly sound.

Comparison of modelled and mechanical-harvested yields

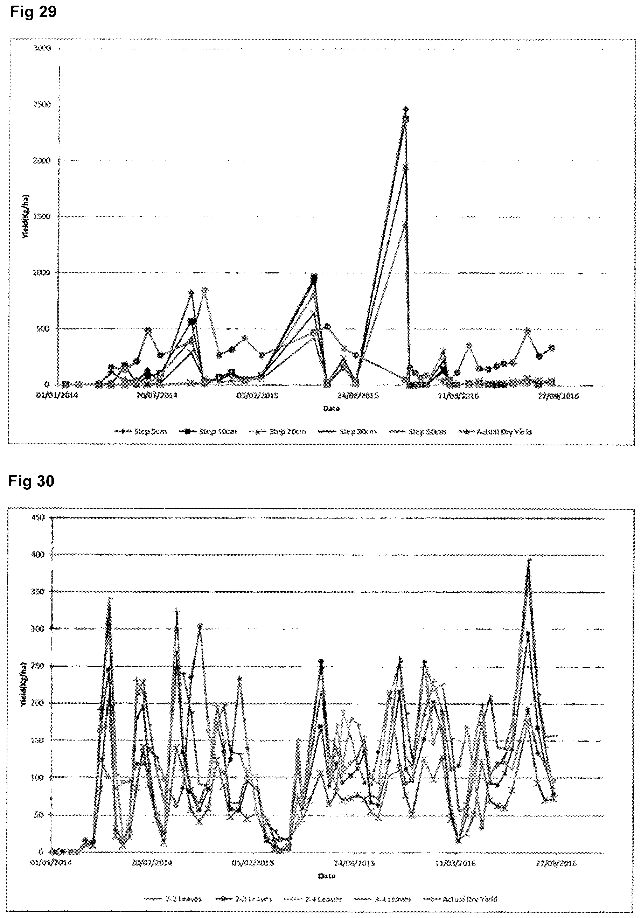

Unlike the harvested tea, the initial parameterisation of the CUPPA-Tea model was unable to model the actual yields from mechanically harvested Field 37 (Fig 29). This occurred despite changing the assume height of the "step" from 5 cm to 50 cm. CUPPA-Tea seems to be predicting significant yields from the mechanically harvested tea when there is a significant harvest interval which allows the shoots (that remain on the bush at the last harvest) to reach a harvestable size.

**Sensitivity analysis of CUPPA-Tea parameters**

A sensitivity analysis was performed on selected parameters in the CUPPA-Tea model. The parameters tested were variation in step height (mechanical harvesting), number of leaves plucked (hand harvesting), shoot number, soil type, and soil depth.

Step height

In mechanical harvesting, changing the step height is one method for controlling the proportion of the shoot removed at each harvest. As demonstrated in Fig 29 choosing a larger step height tends to lead to reduced yields as a greater proportion of the harvestable shoots are left on the bush. Changing the step height does not seem to alter the timing of the modelled peaks and troughs in yield.

Number of leaves on harvested shoots

The ground truth data from the remote sensing survey (shown in Appendix B) showed that the plucking regime for hand plucked fields is variable but tends to be 2 to 3 leaves. Modelling the hand-harvested tea, extending the criteria for acceptable hand-harvested shoots from those having not more than 3 leaves to, for example, not more than 5 leaves tended to accentuate the yield peaks (Fig 30). The yield during the yield troughs remained relatively consistent

Shoot numbers

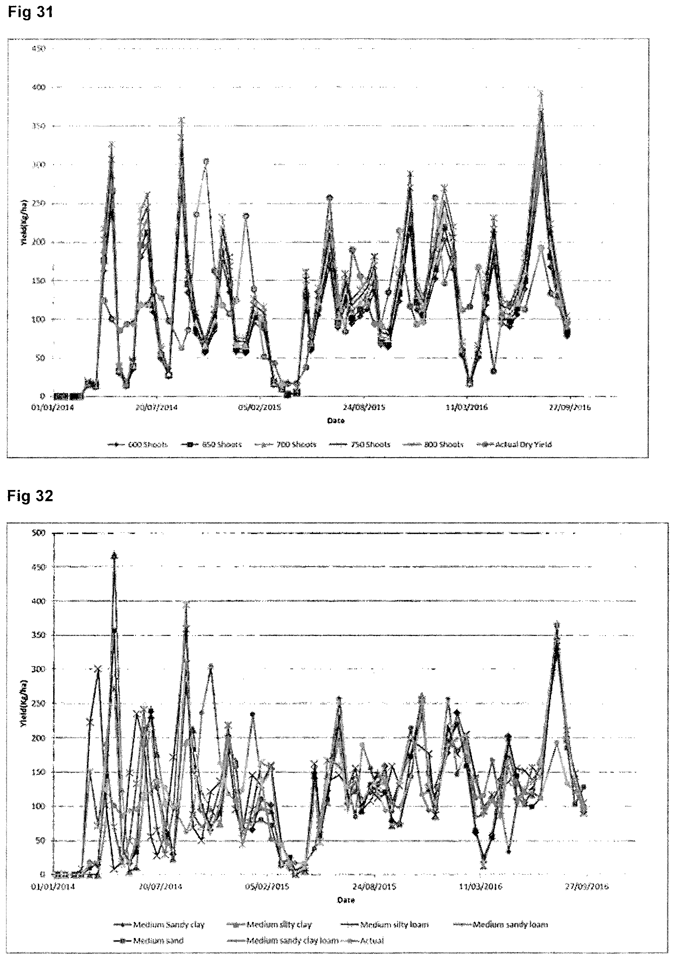

**[0166]** Changing the number of shoots in CUPPA-Tea effectively changes the number of shoots per square metre and hence increasing the shoot number increases the yield without changing the timing of the peaks and troughs **(Fig 31).**

Soil type

Changing the assumed type had a relatively minor effect on the modelled yields (Fig 32). However significant differences did appear during the dry season in February 2016 when the "Medium sand", "Medium sandy clay" and "Medium silty clay" soils resulted in a greater drought stress response than the "Medium sandy clay loam", Medium silty loam" and "Medium sandy loam" soils. It is assumed that this is because the latter soils have a higher available soil water content.

**Investigation into options for integration of weather station and forecast data**

There is a benefit in being able to incorporate current and forecast weather data in the CUPPA-Tea model. The key climate parameters in the CUPPA-Tea model are:

1) Daily solar radiation (MJ/m$^2$)
2) Daily rainfall (mm)
3) Daily minimum temperature (°C)
4) Daily maximum temperature (°C)

In addition the following could be of use locally to tea estate managers:

- Saturation vapour deficit as high values (> 2.3 kPa) can depress yields.
- Hail as, on average across tea growing regions in Kenya, this reduces annual yields by 10% and there can result in no crop for the following 7 weeks.
- Incidence of frost.

The frequency of updating current and forecast data in CUPPA-Tea is dependent on how the model is used. For instance, if the financial year is January to December, then running the model with up to date weather in June would show the effect of the dry months on the annual yield. Alternatively CUPPA-Tea could be updated on an ad-hoc basis by reading in a comma separated file in a specified PC folder in a regular format anticipated by the software.

The accuracy of the weather data into CUPPA-Tea is important. Preferably the data should be fully validated and, where required, corrections made before use. Hence manual intervention in collecting weather parameters can be advantageous in that it allows regular quality control and can help ensure each sensor is working correctly. The problems with manual processing of the data are the time required to record the details, ensuring the data are recorded in a consistent format, and uploading the data to the correct folder with the correct name.

Automatic weather stations

An automatic weather station (AWS) is a collection of sensors plus a data logger to record the information from the sensors. The sensors record raw values that need to be calibrated to allow conversion to a specified weather parameter. Typically then, two sets of values are recorded by the logger: the raw sensor reading and the conversion factor, which can be summarised to an archive. Alternatively, some logging systems use third party software on a PC directly connected to the data logger instead to process the real-time data directly from the sensors and then summarises it, to an archive.

The raw value and weather parameters can be either "pushed" by the logger to a specific place for retrieval or "pulled" by dialling into the AWS. The appropriate approach depends on the type of AWS and logger, and the associated infrastructure around the AWS. For instance, the AWS can be combined with a mobile phone modem and solar panel power supply, to allow communication with the AWS anywhere with mobile phone reception.

One advantage of directly communicating with the data logger is that only the required data at a selected frequency are accessed. Data does not need to be pre-processed by any third party software with possible delays and drawbacks. One possible disadvantage is that whilst the logger is being accessed directly it may not be able to send real time data to any PC based software interface, which is commonly provided with the AWS. Additionally, custom software would need to replicate the functionality of PC software, including maintenance and archiving of data .

The data format will depend on the system, but can be comma separated files (CSV), which are easily readable by scripts. However, there is no set standard for the content and so this will vary between different makes of logger.

There are many different brands of weather station, such as ADCON Telemetry or Davis, or there are bespoke solutions, such as CWi Technical Ltd, which are designed around the project requirements and infrastructure/location of the intended AWS. The cost and type of AWS depends on many factors such as what data are required, the accuracy required, how often it is required and would the AWS need to be re-programmed or interrogated from the UK. CWi Technical Ltd quoted a bespoke system, including comms, solar charging, a good data logger, a couple of single value soil probes, in the region of £4,000. A single value soil probe is around £380 and soil profile probes which give values at four depths would be between £700 and £1,200.

If an automated weather station is implemented then full validation of the data should be investigated. A good starting point for this would be a paper published on the world meteorological organization community pages on quality control procedures for AWS ( (Zahumensky, 2004)). Alternatively, there are many third party software packages available for processing and presenting AWS data, which should incorporate data validation, maintenance of data and archiving

Forecast data

It is useful to provide CUPPA-Tea with predictive weather data from where the current data finishes to the end of the current year to predict potential annual yields. There are many companies advertising forecast data for Kenya. However, the accuracy of such forecasts needs to be questioned.

For instance, Ignitia produces 2-day, monthly, and 6-month forecasts for the Western African region, and have produced a white paper (Vallgren & Petrykowska, 2015) on the underlying background to their weather forecasts. They suggest that 14 days weather forecasts in the tropics are unreliable as daily weather in that region tends to originate from small scales which are difficult to predict. Another issue highlighted is the lack of ground truth data from which most forecasts are based. The forecast model produced by Ignitia is based on localised weather events in West Africa, such as Harmattan trade winds and the tropical easterly jet. These are not relevant for Kenya..

Servir Global is a joint initiative of NASA and USAID to help developing countries use information provided by satellites. They highlight the inaccuracy of the Kenyan Meteorological department forecasts primarily due to lack of ground truth data, whilst promoting the use of NASA data to improve the forecasts.

An alternative to purchasing forecast data would be to use weather data from existing weather stations averaged over the last 5 years.

Fig 37 shows the average maximum and minimum temperatures and rainfall from 2011 to 2015 and then compared to the current 2016 data. The average temperatures show a reasonable approximation, but the average rainfall fails to pick up extreme/unusual rainfall events.

## Remote Sensing

### Using remote sensing to support tea yield predictions

This section evaluates the use of remote sensing (RS) to support yield prediction of tea plantations by the CUPPA-Tea model. The focus is on two tea estates located in Kenya - the Kapgwen Estate and the Kapkorech Estate.

Because the estates in Kenya are near the equator, there is minimal seasonal variation in temperature and day length. Hence tea can be harvested throughout the year.

Previous studies

Previous studies have considered the use of remote sensing to monitor tea plantations in India and Sri Lanka. Tea is harvested throughout the year in Sri Lanka and South India, while the harvesting season in North India only lasts from late March to early November.

(Rajapakse, et al., 2010) describes the spectral reflectance of a tea canopy in Sri Lanka using in-field measurements with a spectrophotometer. They report that the reflectance peak, at a near infra-red wavelength (NIR) (800 nm), increases with the time since last pruning. They also report that that the spectral reflectance decreases in the red band (500-600 nm) with the time since last leaf pruning. They also derived empirical relationships between the Normalized Difference Vegetation Index (NDVI) and the leaf area index (LAI).

(Dutta, 2011) in North-East India used MODIS images to delineate waterlogged tea areas, and established empirical relationships between MODIS NDVI and the leaf area index of tea plantations. The relationship between NDVI and leaf area index was analysed over a year. Dutta concluded that NDVI measurements alone could not explain seasonal variations in tea yields.

(Banerjee, 2012), also in North-East India, evaluated the use of L-band Synthetic Aperture Radar (SAR) to estimate tea bush biomass. He used a water-cloud model to relate fully polarimetric ALOS PALSAR data to the above-ground biomass. The measured Root Mean Square Error between estimated biomass and the available ground measurements was about 60 kg per plot of 25 m$^2$. The author attributed the limited performance of the retrieval to the poor ability of the model to cope with variations in shrub structure.

Remote sensing options

Tea harvests, or young tender shoots, typically occur at intervals of two to four weeks. In order to predict the seasonal distribution of tea yield, the CUPPA-Tea model requires 25 crop parameters (Table 1) and 13 harvest parameters (Table 8). The number of shoots per unit area and the harvest intervals are key determinants of the modelled yield.

The results reported by (Rajapakse, et al., 2010) and (Dutta, 2011) suggest that NDVI measurements do not seem to be sensitive to canopy variations between harvests. The NDVI may only be sensitive to the overall growth of the tea bush and significant changes in the leaf area index. Hence optical-near infra-red remote sensing may only be able to detect annual variations in crop parameters.

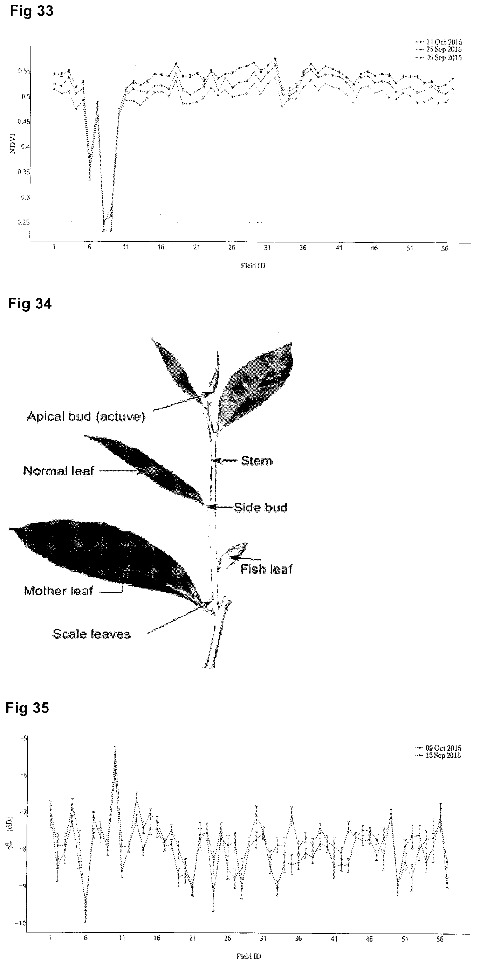

Another limitation of optical-near infra-red remote sensing is that it requires minimal cloud cover. The high frequency of cloud cover above Kenyan tea estates is apparent from inspection of Landsat-8 archive images. The cloud cover above the Kapgwen estate appears to be less than at Kapkorech, and it was possible to derive average NDVI values for each field of the estate for which field boundaries are available (Fig 33Error! Reference source not found.).

The NDVI was computed directly from three digital images. As leaf harvesting occurs on a different day for each field, one would expect the variation in NDVI for the three dates to be different for each field. Instead there is an overall offset between the three NDVI dates. The NDVI on 25 September was less than on 9 September. This could be the result of pruning activity, but it could also be due to differences in solar illumination or/and in the state of the atmosphere. A longer time series of measurements would be needed to confirm the sensitivity of the NDVI to bush growth or variation between harvests. The NDVI could not be computed for the Kapkorech Estate because of cloud cover.

Synthetic Aperture Radar remote sensing (SAR RS) could be a more suitable technique because of its all-weather capability. Radar wavelength is a key parameter in SAR RS - the longer the wavelength, the greater the penetration depth (Ulaby, et al., 1981). For the L-band (i.e. 1 to 2 GHz range), the incident wave can penetrate the canopy and part of the wave even interacts with the soil. This is why (Banerjee, 2012) used L-band images to estimate the above ground biomass of tea.

The L-band may seem the ideal wavelength to capture information about the tea crop as the response signal is a combination of energy scattered by the top of the canopy, the foliage, and the soil surface. However, the different scattering mechanisms and their complex interactions throughout the round trip of the wave also mean that they are difficult to model. The different scattering contributions are difficult to segregate when there is no dominant process. However, L-band measurements may be able to identify changes in bush size because increased volume scattering can produce a stronger depolarization of the incident wave. An increase in depolarization results in an increase in the cross-polarized backscatter coefficient $\sigma_{vh}^0$ (or $\sigma_{hv}^0$) and a decrease in the horizontally and vertically polarized back-scatter coefficients $\sigma_{hh}^0$ and $\sigma_{vv}^0$. This scattering process can be highlighted through various radar vegetation indices (Haldar, et al., 2012). In comparison, the changes in the top of the canopy due to harvesting will hardly affect the L-band measurements. Overall L-band measurements could provide similar information to the NDVI without the necessity of a clear sky.

As tea shrubs have a rather dense canopy, when using the X-band (7-11.2 GHz range), the incident electromagnetic wave is expected to be scattered by the top of the canopy with very little penetration. This potentially makes the interpretation of the SAR measurements easier. Harvested shoots can be 2-8 cm long. Therefore, measurements at X-band with a wavelength of about 3 cm can be expected to be very sensitive to the shoot leaves and may be able to detect when harvesting has occurred.

Combining different radar polarizations at X-band could provide valuable information. A vertically-polarized incident wave interacts preferentially with vertically-oriented scatterers, and a horizontally-polarized wave interacts particularly with horizontally-oriented scatterers. Because the young leaves have a more vertical orientation than mature leaves, an increase in the vertically co-polarized backscatter coefficient $\sigma_{vv}^0$ could be expected between two harvests.

In addition there may be a decrease in the horizontally co-polarized backscatter coefficient $\sigma_{hh}^0$. By contrast the cross-polarized backscatter coefficient is likely to show little variation between harvests because of the high and relatively constant amount of volume scattering both before and after harvests.

The leaf orientation on a tea stem can be seen in Fig 34Error! Reference source not found.. The young leaves on the tea shoot are more vertically-oriented than the mature leaves underneath

The intermediate C-band (4-8 GHz range) measurements may also be able to sense the change in the top of the canopy, but its sensitivity will be less than that of X-band measurements. The main advantage of C-band is the free image access from Sentinel-1 which allows for preliminary tests. Fig 35**Error! Reference source not found.** shows the mean gamma nought ($\gamma_{vv}^0$) for each field of the Kapgwen Estate on 15 September and 9 October 2015, i.e. an interval of 24 days. Gamma nought is plotted instead of Sigma nought because the normalization required to derive Sigma nought is complicated for vegetation (Small, 2011).

Across the 24 days, it is expected that leaf harvesting must have happened over some of the fields, therefore it is not surprising to observe both increases and decreases in $\gamma_{vv}^0$ between the two dates. Because no data on the exact time of harvest is available, it is difficult to conclude whether harvesting produces an increase or a decrease in $\gamma_{vv}^0$. However, the variations in $\gamma_{vv}^0$ are likely to be due to changes in the canopy as opposed to the overall offsets observed with the NDVI values (Fig 33Error! Reference source not found.) certainly due to changes in imaging conditions. Timely ground data should improve the analysis.

In summary, NDVI measurements and L-band measurements could be used to retrieve information about the overall state of the tea bushes. However, an initial analysis suggests that only X-band measurements, which are sensitive to the structure of the top of the canopy, would be able to detect the effects of individual harvests.

Example of measurement campaign

*Number of shoots from L-band SAR*

In order to field test the use of L band remote sensing, ground measurements of the canopy cover and the shoot density would need to be made at the time of the L-band SAR acquisitions. Standard information on weather (rain, temperature) would also be important for interpreting the measurements. Ideally, monthly SAR acquisitions over a year (probably including a pruning event) would improve the chance of capturing changes in bush status.

The L-band radar PALSAR-2 on board ALOS-2 can provide full-polarimetric images (Suzuki, et al., 2009). The 6 m resolution would allow sufficient averaging per field to attenuate the effect of speckle noise and produce accurate radar vegetation indices. The swath of about 50 km is enough to cover the two estates with a single image. To limit variations in the time series of measurements due to difference in imaging geometry (different incidence angles), the images should be acquired from a repeat ground track. The repeat cycle of ALOS-2 is 14 days, so monthly acquisitions are possible.

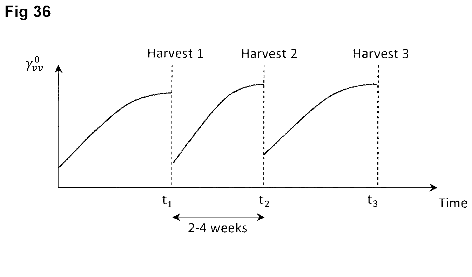

Fig 36**Error! Reference source not found.** shows expected variations in $\gamma^0_{vv}$ at X-band. $\gamma^0_{vv}$ increases with the development of the vertically-oriented shoots.

*Harvesting time from X-band SAR*

To maximize the chance of detecting the effect of leaf harvesting on the X-band measurements, two SAR images should be acquired soon before and after pruning where the difference in $\gamma^0_{vv}$ (or $\gamma^0_{hh}$) is expected to be the greatest (Fig 36**Error! Reference source not found.).** COSMO-SkyMed is a constellation of four satellites carrying an X-band SAR (Caltagirone, 2009). The constellation enables a revisit time of a few hours. For capturing the leaf harvesting, two images separated by 1-2 days would be acceptable. The imaging geometry may not have to be the same as scattering over vegetation is not expected to be very sensitive to the incidence angle. If similar imaging geometry were required, the time gap between the two images would be 5 days which is still acceptable with regard to the harvesting cycle.

As an alternative, to test the harvest detection a first image could be acquired prior to *harvest 1* and a second image could be acquired soon after *harvest* 2 **(Error! Reference source not found.).** In any cases, the radar acquisitions have to be synchronized with the harvest cycle of a maximum number of fields. This should not be an issue as COSMO-SkyMed offers daily imaging opportunity. Because SAR measurements are very sensitive to water, image acquisition should not be done on a day where rainfall is expected as the liquid water carried by the canopy could significantly affect the measurements. To better understand the change in $\gamma^0$ with the shoots development, images would ideally be acquired every two days over a couple of months. Such a time series would allow a full characterization of $\gamma^0$ over time.

In terms of imaging mode, there is a trade-off between polarization, spatial resolution, and coverage. The dual polarization (*vv, hh*) is desirable as the *vv* and *hh* measurements are expected to change in opposite fashion. The *canopy scattering index vv*/ (*vv + hh*) would then highlight the change in the structure of the top of the canopy (Haldar et al., 2012). Dual polarization is available with the stripmap Ping Pong mode at a 15 m resolution with coverage of 30 km. Even though the distance between the two estates is slightly less than 30 km, the SAR image may not be centred so as to cover both estates at the same time. Therefore, individual images may be used to do the analysis on both estates. Other imaging modes over higher resolutions (3 m with 40 km coverage or 1 m with 10 km coverage) but at a single polarization. Higher resolution allows for more averaging per field to attenuate speckle noise, but this may not be critical as the 14 m resolution of Sentinel-1 was enough for accurate estimation of $\gamma^0_{vv}$ (Fig **36Error! Reference source not found.**). The 1 m resolution of the Spotlight mode may not even be enough to detect in-field heterogeneities as these may be covered by speckle noise. In summary, the stripmap Ping Pong mode with dual polarization (*vv, hh*) seems the most suitable imaging mode.

Finally, ground data should include for each field the exact date of harvest, the density of harvested shoots, and pictures of the canopy before and after harvest. Additional information on the canopy size and height would also be useful to understand any inter-field variability in the SAR measurements.

Synthetic Aperture Radar (SAR) remote sensing seems to be the most suitable method to support tea yield prediction in Kenya, as opposed to optical/near infra-red (NIR) remote sensing.

- SAR can image through clouds unlike optical/NIR radiometers.
- L-band SAR could provide information comparable to the NDVI regarding the overall growth of tea bushes.
- The L-band images could be provided by ALOS-, with one image per month over a year, and all images acquired from the same repeat ground track.
- X-band SAR seems the most suitable option to detect changes in the structure of the top of the canopy due to leaf harvesting. Such measurements could be used to detect the time at which harvest has occurred for each field.
- The X-band images could be provided by the COSMO-SkyMed constellation. Dual-polarized images acquired before and after a few harvests, or a time series of images every two days would demonstrate the capability of X-band to detect harvest.
- All the SAR images (L-band or X-band) should not be acquired on a day where rain is expected to prevent liquid water trapped in the canopy from affecting the measurements.
- Ground data should include for each field the exact date of harvest, the number of harvested shoots, pictures of the canopy before and after harvest, information on bush size (height, width), and standard weather information (temperature, rainfall).

**Remote Sensing of Tea**

Herein, there is discussed the results of an experiment in assessing the capability of satellite remote sensing to provide information on tea plantations. The overarching goal is to use remote sensing to improve yield estimates and the management of the estate based on reliable, timely, and spatially distributed information.

Previous research on satellite remote sensing of tea is mainly limited to classification of land covers to detect the tea areas. Here, the aim is to explore links between remote sensing measurements and biophysical parameters of the tea plants. As discussed herein, remote sensing is capable of monitoring shoot growth, and could be used to,

- study the response of tea growth to changes in climatic conditions,
- detect areas where tea may be affected by diseases or damaged by hail,
- estimate the optimal time of harvest and allocate the right number of pluckers at the right location,
- estimate the yield from the stage at which a field is harvested,
- forecast future yield from the current plant state and growth rate, and additional weather data.

The last point can be implemented by combining remote sensing measurements and the CuppaTea model. Satellite remote sensing is not always able to provide absolute measurements of biophysical parameters, but it can provide indices which reflect the state of the plant. Such indices could be used to modulate the output of models such as CuppaTea.

Two types of remote sensing data are tested, (i) multispectral data from UK-DMC3 and (ii) X-band SAR data from CosmoSkymed. The capability of multispectral remote sensing to monitor crop stages using the Normalised Difference Vegetation Index (NDVI) has been highlighted in numerous scientific articles (Wiegand, et al., 1991). Here, the hypothesis is that the NDVI may be able to detect small changes in the volume of canopy between harvested and non-harvested plants. In comparison, X-band SAR is expected to capture changes in the structure of the canopy surface, because at this wavelength the measured signal is theoretically sensitive to surface scattering with very little penetration in the canopy.

While monitoring shoot growth is the most valuable remote sensing output, there is also presented herein results on the detection of management practices such as the harvest method (mechanical harvest MH or hand pluck HP) which is highly related to the yield, and the harvested surface area which is also important as fields are often partially harvested on a given day.

Satellite imagery

Table 22 lists all the satellite images (10 SAR images and 2 multispectral images) acquired throughout the experiment. The SAR images were systematically acquired around 18:00 local time (descending path) therefore each image potentially captures the harvest which has happened on the same day. Because UK-DMC-3 is on a different type of orbit, the local time of the multispectral images was around midday, so they may only capture a fraction of the harvest activity which took place on the acquisition day.

**Table 22. List of satellite images (CosmoSkymed CSK and UK-DMC3) acquired during the experiment**

| # | Date -Local time | Satellite | Polarisation |
|---|---|---|---|
| 1 | 06 Jul 2016 - 17:56 | CSK (Sat 1) | VV |
| 2 | 22 Jul 2016 - 17:56 | CSK (Sat 1) | VV |
| 3 | 30 Jul 2016 - 17:55 | CSK (Sat 2) | VV |
| 4 | 03 Aug 2016 - 17:56 | CSK (Sat 4) | VV |
| 5 | 07 Aug 2016 - 17:56 | CSK (Sat 1) | VV |
| 6 | 15 Aug 2016 - 17:56 | CSK (Sat 2) | HH |
| 7 | 16 Aug 2016 - 11:03 | UK-DMC3 (Sat 2) | - |
| 8 | 23 Aug 2016- 17:56 | CSK (Sat 1) | HH |
| 9 | 31 Aug 2016 - 17:56 | CSK (Sat 2) | HH |
| 10 | 04 Sept 2016 - 17:56 | CSK (Sat 4 | HH |
| 11 | 08 Sept 2016 - 17:56 | CSK (Sat 1) | HH |
| 12 | 10 Sept 2016 - 11:16 | UK-DMC3 (Sat 3) | - |
| *SAR images - CosmoSkymed* | | | |

CosmoSkymed is a constellation of 4 identical satellites carrying an X-band SAR (3.1 cm wavelength). The imaging mode selected for the experiment provides images at a single polarisation (W or HH), with a spatial resolution of 2.2 m, and a coverage of about 30x40 km. All images were acquired with identical viewing geometry (57 deg incidence angle). It is desirable to avoid variations in SAR measurements (backscatter coefficient, $\sigma^0$) between images due to different incidence angles.

*Multispectral images - UK-DMC3*

UK-DMC3 is a constellation of 3 identical satellites carrying a multi-spectral radiometer. The images have 4 multispectral bands (Blue, Green, Red, Near-Infrared) with a 3.2 m resolution, and a panchromatic band with a 0.8 m resolution, for a coverage of 10x10 km. Each UK-DMC3 image corresponds to the most cloud-free image available within a one-month observation window. As a constellation, UK-DMC3 could potentially acquire daily images over the area of interest, but in practice, frequent cloud cover strongly limits the opportunities for clear acquisition.

Field survey

To understand and validate the information derived from the satellite images, ground information was collected on the day of each SAR image. Note that no ground information was collected for the UK-DMC3 images as the exact date of acquisition cannot be known in advance (multiple attempts are made to collect a cloud-free image within a one-month observation window).

On the day of each SAR image, an on-sight agronomist, has taken photos of all fields harvested on that day and filled in a field sheet. For each harvested field, 6 photos were taken according to Table 23. The field sheet included a map of the tea estate to report (i) the locations where the photos were taken, (ii) which fractions of fields were harvested, (iii) the harvest method and the typical number of harvested leaves, (iv) errors in the field boundaries used for the analysis, and (v) weather observations.

**Table 23. List of photos taken for each harvested field**

| Photo # | Description |
|---|---|
| 1 - North<br>2 - East<br>3 - South<br>4 - West | The first 4 photos are taken in four directions - ideally the four cardinal directions: (1) North, (2) East, (3) South, (4) West. In clockwise order. These provide a clear view of the crops, and confirm the location of the photographer. |

(continued)

| Photo # | Description |
|---------|-------------|
| 5 - Overview | The 5th photo shows an overall view of the field being harvested. It also shows the fraction of the field being harvested and the harvested method. |
| 6 - Close up | The 6th photo shows a close up view of the tea canopy. This detail photo informs on the structure of the tea canopy. |

Ancillary data

Other notable data included monthly harvest reports (daily amount of harvested leaves for every field, harvest method), weather data from automatic weather stations (rainfall).

Fig 38 shows a timeline with the most relevant data. The period of no harvest between the 12th and the 24th July corresponds to a strike from the pluckers. One SAR acquisition was deliberately postponed during the strike to limit the number of images in this period of no activity. This explains the relatively coarse temporal sampling at the beginning of the experiment. Overall SAR images were acquired every 4-8 days.

Pre-processing of satellite images

**CosmoSkymed images:** For better control of image processing, the CSK images were obtained in raw format (Single Look Complex - SLC), thus the images needed to be (i) calibrated (conversion from Digital Number to backscatter coefficient $\sigma^0$), (ii) co-registered (realign all images on a common grid), and (iii) terrain corrected and ground projected (correction for geometric artefacts due to topography). These steps were done with the Sentinel Application Platform (SNAP v4.0), a free software capable of processing a wide range of satellite imagery.

**UK-DMC3 images:** The UK-DMC3 images were already orthorectified. The only pre-processing steps consisted in converting the images from Digital Number to reflectance p and then computing the NDVI (NDVI = $(\rho_{NIR} - \rho_{Red})/(\rho_{NIR} + \rho_{Red})$). The rest of the image processing and analysis was done with the programming language *Python.*

Detection of harvest method

On the satellite images, machine harvesting can be identified from the row pattern left by the machine dragged on the tea canopy. The approach implemented for automatic detection of the harvest method with the SAR images is described below. For the multispectral images, the harvest method was only visually identified, but a similar approach could be implemented for automatic detection.

Fig 40 summarises the main steps of the automatic detection for the SAR images. The approach consists in detecting the rows from machine harvest as a sinusoidal pattern with a spatial period of about 24 m (Fig 39). The detection was done in the frequency domain by taking the 2D Fourier transform of a small image chip (101×101 pixels) moving across the SAR image. After the Fourier transform, the sinusoidal component appeared as a peak at the spatial frequency equivalent to a 24 m period. The moving image chip sampled a given field multiple times, and the detection algorithm may return contradictory outputs when the row pattern is not clear. That is why the final decision on whether or not a field is machine harvested is obtained by applying a majority filter to each field. This filter simply returns the most frequent output of the automatic detection.

Detection of harvested area from SAR coherence

The harvested area between 2 SAR image dates can be detected from the interferometric coherence y. The coherence is the amplitude of the complex correlation coefficient between 2 image chips (9x9 pixels) from 2 SAR images acquired with the same viewing geometry (Preiss & Stacy, 2006).

The coherence is a dimensionless quantity between 0 and 1 which quantifies the amount of random rearrangement of scatterers between the 2 image chips (**Fig 41** and **Fig 42).** The coherence tends to decrease with time because of temporal decorrelation. Overall, with a period of a few days between the two images, bare soils and urban areas are characterised by high coherence values (0.7 - 0.8), while vegetated areas have low coherence values (0.15 - 0.3) because vegetation is perturbed by wind.

It is nonetheless possible to differentiate a non-harvested tea area with coherence close to 0.3, from a harvested tea area with coherence close to 0.15. By walking across the tea fields, the pluckers disturb the canopy surface more than do natural perturbations (e.g. wind). Eventually, for each tea field, the detection of harvested area is based on an averaging filter (to remove noisy variation in coherence) followed by a simple threshold filter to decide whether or not a given pixel has been harvested (Fig 43). The threshold value is 0.24, it was adjusted manually until the output of the detection matched the harvested area reported on the field sheets. A pixel with coherence below 0.24 is detected as harvested.

Normalisation of SAR measurements

Following the detection of harvested and non-harvested areas using the coherence, the backscatter coefficient $\sigma^0$ of the harvested area can be compared to that of the non-harvested area to assess the sensitivity of SAR to the state of the canopy surface. To make sure that the observed variations are solely related to the harvest status, $\sigma^0$ should first be normalised against variations in local incidence angle and moisture content which are two parameters affecting the SAR measurements.

The normalisation approach makes use of the spatial and temporal characteristics of the local incidence angle and moisture **(Fig 44)**. First, moisture can reasonably be assumed homogenous over a given field, so that it only changes over time, from one image to another. Therefore, for each image, normalisation against moisture is done by dividing the $\sigma^0$ value of each pixel by the mean value of $\sigma^0$ across the whole field. Second, the local incidence angle at a given pixel is the same for all images because they are all acquired with the same viewing geometry. Therefore, for each pixel, normalisation against local incidence angle can be done by dividing the pixel value (already normalised for moisture) by the mean value of this pixel across the time series of images. For simplicity, the final normalised quantity will be referred to as *backscatter coefficient.*

After normalisation, the backscatter coefficient of the non-harvested area is plotted against that of the harvested area **(Fig 45)**. The harvested area is obtained from the coherence analysis of the pairs of SAR images. Our hypothesis is that the backscatter value of the harvested area must be lower than that of the non-harvested area. This difference should be the greatest when harvest happened right before the second image of the image pair used to compute the coherence, as new shoots will not have had time to grow.

That is why, when harvest occurs soon after the date of the first image (green dot) **(Fig 46),** new shoots may have enough time to grow until the second image date where the backscatter is measured, so the backscatter difference between harvested and non-harvested should be small (green dots on the y=x diagonal) **(Fig 47)**. In comparison when harvest occurs right before the second image date, the backscatter difference between harvested and non-harvested should the greatest (black dots far away from the y=x diagonal) **(Fig 47).**

Detection of harvest method

The pattern left by machine harvest is relatively clear on both the SAR **(Fig 48)** and the multispectral **(Fig 49)** images. When harvesting, the machine is dragged on the canopy surface, combing the leaves in a predominant direction. Adjacent bands result from the machine combing the canopy in opposite directions. The image - whether it is the ground photo, the multispectral image, or the SAR image - captures reflected electromagnetic radiation and this reflection depends on the overall orientation of the leaves. The width of the harvesting machine is about 1.5 m, while the width of a band on the satellite imagery is about 12 m. This suggests that one band corresponds to 8 adjacent paths of the machine in the same direction. In practice, the machine is probably operated as shown on Fig 50. Over time and with shoot regrowth, the combing effect fades and the row pattern becomes less visible on the satellite images **(Fig 49).**

The automatic detection of the rows was tested on the first 5 SAR images. The accuracy assessment (Table 24) shows that 67% and 58% of respectively the machine-harvested fields and the hand-plucked fields were correctly detected. As the row pattern fades with shoot growth, better detection could be obtained by including more images. Nonetheless, visual inspection of all the SAR images suggests that some MH fields never exhibit row patterns, even when harvest occurs on the day of the SAR acquisition. The bidirectional effects of scattering/reflection can be complex, and these hidden rows could potentially become visible if the image were acquired with a different viewing geometry. The effect of the rows could also be masked by other parameters varying across the field, like the local incidence angle if the field is over a very hilly terrain.

**Table 24. Accuracy of automatic detection of harvest method with the first 5 CosmoSkymed images**

| | | SAR Detection | | |
|---|---|---|---|---|
| | | MH | HP | Total |
| Field sheet | MH | 32 (67%) | 16 | 48 |
| | HP | 14 | 19 (58%) | 33 |

The data used as ground truth may also be inaccurate. The harvest method was extracted from the harvest reports for January, February, and March 2016 which have identical harvest methods for each field. These data were updated with the ground survey (field sheet and field photos). However, not all the fields were visited, therefore the harvest method in the ground-truth dataset could be out of date for some fields. Overall, 41 fields out of 91 were surveyed. Among the surveyed fields, 8 fields (20%) had a different harvest method from that of the Jan/Feb/Mar reports. Applying the same proportion to the 50 non-surveyed fields suggests that the harvest method may still be wrong for about 10 fields. This is acceptable for a first accuracy assessment, but the ground truth should be updated before trying to further refine the detection method. The harvest method could also be detected from the multispectral images, as long as a cloud free image is available.

**Detection of harvested area from SAR coherence**

**Fig 51** shows how the loss of coherence for a given field (field 32) can be related to the harvested area using the field sheets. The SAR coherence image (left) shows the level of coherence measured between SAR detections taken on 30th July and 3rd August for Field 32. The darker region represents an area with relatively low coherence (around 0.15) whereas the lighter region represents an area of relatively high coherence (around 0.30). The snapshot of field sheet (right) for field 32 on 3rd August shows a shaded region representing the harvested area, and an unshaded region representing the unharvested area. There is a very high degree of correlation between the areas of high coherence/low coherence and the harvested/unharvested area.

The main advantage of the coherence analysis is that it captures all the harvests which have occurred between 2 dates, as opposed to the analysis of pixel values of a single image which would probably only shows which fields were harvested close to the image date. However, the drawback of the coherence is that anything (wind, rain, animals) which rearranges the canopy surface will lead to a loss of coherence. So there is a chance of false detection, especially when the time separation between the 2 images is long - temporal decorrelation will slowly decrease the coherence over any vegetated areas.

Accuracy assessment

Ideally, the accuracy assessment would compare the detected harvested area with the true harvested area. Unfortunately, the harvest reports only provide the weight of harvested leaves. As an initial assessment, the harvested area was ignored and it was simply verified that when a field is detected as being harvested between 2 dates, the harvest report confirms that harvest did occur. Table 25 shows that at best the detection accuracy reaches 85% (pair #7), in this case the 2 images are separated by only 4 days without any major rainfalls. In comparison, for pair #4 the accuracy is only 27% because heavy rainfall led to coherence loss over the whole estate. Overall, the detection accuracy was found to be relatively dependent on weather conditions.

**Table 25 - Accuracy assessment of the detection of harvested fields using the SAR coherence, against information from the harvest reports.**

| Pair # | 1 | 2 | 3 | 4 | 5 | 6 | 7 | 8 | Total |
|---|---|---|---|---|---|---|---|---|---|
| True positive | 35 | 35 | 15 | 25 | 39 | 46 | 34 | 30 | 259 |
| True negative | 6 | 18 | 23 | 0 | 15 | 22 | 43 | 40 | 167 |
| Total (%) | 45 | 58 | 42 | 27 | 59 | 75 | 85 | 77 | 59 |
| False positive | 50 | 38 | 52 | 66 | 37 | 23 | 14 | 19 | 299 |
| False negative | 0 | 0 | 1 | 0 | 0 | 0 | 0 | 2 | 3 |
| Total (%) | 55 | 42 | 58 | 73 | 41 | 25 | 15 | 23 | 41 |

Yield estimation

In this section, the feasibility of estimating yield from the detection of the harvested area was investigated. The analysis was restricted to pairs 5, 6, 7, and 8, which have the highest detection accuracy. The false positives were also removed (harvest detected, but nothing in the harvest report) as were the false negatives (harvest not detected, while it is in the harvest report). In this way, the analysis focused on the correlation between yield and detected harvested area, ignoring as much as possible errors from the detection of harvested areas. **Fig 52** shows that there was a reasonable correlation between yield and harvested area, and that the relationship is different for machine harvested tea **(Fig 52)** and hand pluck tea **(Fig 53).** As for the tea variety, Seed and Clone have similar yield per harvested surface, while China tea, which is only machine harvested, has higher yield.

Because the data are significantly scattered around the regression lines, the linear models cannot be used to estimate yield over a short period of time (Table 26). However, for the whole period at hand (15 August - 8 September, 24 days), the error on the total yield is only 8% (Table 27). When the yield is estimated over a sufficiently long period, overestimations and underestimations compensate for each other.

The significant yield difference between mechanical harvest and hand pluck underlines the need to accurately know the harvest method of each field. In summary, these results suggest that monthly yield for the whole estate can reasonably be estimated from the estimation of the harvested area.

**Table 26** - **Average error of the linear regressions between yield and harvested area.**

|  | Average yield error of linear regression (tons) | |
| --- | --- | --- |
|  | **MH** | **HP** |
| **China** | 5.7 (49%) | - |
| **Seed** | 2.3 (75%) | 1.2 (54%) |
| **Clone** | 2.7 (87%) | 1.9 (150%) |
| **Overall** | 4.5 (90%) | 1.2 (61%) |

**Table 27 - Error on the estimation of the total yield for the period from the 15th August to the 8th September**

|  | Overall yield error over 24 days (tons) | |
| --- | --- | --- |
|  | **MH** | **HP** |
| **China** | 0.2 (0.1%) | - |
| **Seed** | 0.1 (0.1%) | 17.6 (8%) |
| **Clone** | 32.3 (25%) | 2.7 (14%) |
| **Overall** | 41.6 (8%) | 20.6 (8%) |

**Monitoring shoot growth**

To be able to monitor shoot growth, the sensitivity of remote sensing measurements to the state of the canopy was verified.

**CosmoSkymed images.** In this section, the output of the coherence analysis (harvested and non-harvested areas for each field) was used to compare the backscatter coefficient of the harvested portion of a given field with the backscatter coefficient of the non-harvested portion, according to the approach shown in Fig 45. The image pairs 1 and 4 were excluded from the analysis because of inaccurate coherence analysis.

Fig 54 shows that with the W-polarised images, there are no particular difference between harvested backscatter and non-harvested backscatter. This suggests that W-polarisation is not sensitive to the state of the canopy surface. In comparison, Fig 55 shows that with the HH-polarised images, the backscatter of the harvested area tends to be smaller than that of the non-harvested area, at least for 70% of the points. Note that a perfect partition could not be expected as the analysis is based on the detection of harvested area using the SAR coherence which is prone to false positive.

Nonetheless, even for the few cases where the detected harvested area is accurate (validated against the field sheet, see for example **Fig 55),** the difference in harvested and non-harvested backscatter is less than 0.5 dB, which is of the order of magnitude of the noise level on SAR images. In summary, HH-polarised backscatter is sensitive to the state of the canopy surface, but this sensitivity is too weak for monitoring shoot growth.

The observed difference between HH- and W-polarisations could be explained by considering the orientation of the leaves. At HH-polarisation **(Fig 57),** the wave interacts preferentially with horizontally-oriented leaves/stems, and at W-polarisation (Fig 56), the wave interacts dominantly with vertically-oriented leaves/stems. As the leaves from new shoots unfold in the horizontal plane (to capture more sunlight), only the HH-polarised wave is scattered by the new shoots (increase in backscatter with shoot growth). In comparison, the young shoots are transparent to the W-polarised wave which is randomly scattered in the dense and mature canopy with randomly oriented leaves.

**UK-DMC3 images.** Frequent cloud cover significantly limited the acquisitions of cloud-free images. Nevertheless, the two UK-DMC3 images (16th Aug and 10th Sep) show within-field variations in NDVI which are undeniably related to harvest. The analysis was limited to visual interpretation of a few fields which are cloud-free on the two images available.

Fig 58 to Fig 61 shows the variations in NDVI between the 2 image dates for 4 different fields, along with a timeline with the amount of harvested leaves for these fields (extracted from the harvest report). In the first image of Fig 58, the top half of field 29 is recently harvested and the bottom half will be harvested only over the next 2 days - the NDVI level of the harvested half is clearly lower than that of the non-harvested half. In the second image of Fig 58, both halves have had time to regrow, this leads to a uniformly high NDVI level. The analysis for fields 30 (Fig 59) and 33 (Fig 60) is less obvious, but the NDVI clearly shows that these fields are harvested by patches at different times. Some patches have an increased NDVI between the 2 dates, others have a decreased NDVI. Field 32 (Fig 60) is the only field of the estate which has not been harvested between the two satellite acquisitions (last harvested on 12th Aug). The NDVI increases between the 2 dates, irrespective of its initial level. In summary, shoots harvest and growth are captured by the NDVI through variations between ~0.7 and ~0.8. From these observations, a time series of NDVI images could be used to monitor shoot growth throughout the year.

The range of NDVI values is different for each field. This certainly comes from differences in the overall density of the tea canopy. For example, a recently-pruned tea field is expected to have a canopy less dense (lower overall NDVI) than that of an older tree. For the same reason, differences in NDVI may also be related to the tea variety. **Fig 63** attempts to highlight links between mean-field NDVI and data from the harvest report (yield, prune year, tea variety, and harvest method). For a given tea category (dot colour), the NDVI tends to increase with the prune year. China tea tends to have higher mean NDVI and higher yield than Seed and Clone tea. There is no clear link between mean NDVI and yield. China tea has higher yield than Clone tea which has higher yield than Seed tea - this is related to the harvest method (China tea is all MH, Clone is dominantly MH, Seed is dominantly HP).

## X-band SAR remote sensing

The analysis of the CosmoSkymed images showed that:

1. X-band SAR can detect the harvest method from the row pattern left by mechanical harvest.
2. X-band SAR can provide estimation of the harvested area between two image dates separated by a few days, using the loss of coherence caused by harvesting. A linear model between the detected harvested area and the corresponding yield could provide reliable monthly yield for the whole estate.
3. The HH-polarised backscatter decreases after harvest, while there are no meaningful variations in the W-polarised backscatter. This difference in behaviour between HH and W is thought to be related to the horizontal orientation of the harvested young leaves. However the backscatter sensitivity to harvest is too weak to monitor shoot growth.

## Multispectral remote sensing

Multispectral remote sensing has similar capabilities to SAR, but operationally, it is strongly limited by cloud cover.

1. The harvest method can be detected from the multispectral and the panchromatic bands.
2. The NDVI shows good sensitivity to the state of the canopy and could be used for monitoring shoot growth.
3. The NDVI could also be used to detect the harvested area, at least for areas harvested soon before the image acquisition.

## **Development of GIS data and automatic weather updates**

## **Digital interface (interactive maps) of tea estates**

A digital representation was created for the Kapkorech estate, indicating field boundaries and incorporating existing data on the fields (yields, soils, etc) with the Cuppa Tea model outputs.

## Digitising field boundaries

Field boundaries were digitised using paper maps, a satellite image within ArcGIS and the aerial photograph over Kapkorech. The following tea divisions were digitised:

1. Chebown
2. Chelimo
3. Chemogo
4. Chemosit
5. Cheymen
6. Jamji
7. Kapgwen
8. Kaptien
9. Kerenga
10. Kericho
11. Kimari
12. Kimugu
13. Koiwa
14. Ngoina
15. Sabret
16. Tagabi

Many of these paper maps did not have field identifiers or included old-field identifiers. Therefore, the outlines including Kapkorech previously digitised, were appended and corrected. This process of correction was repeated to refine the field boundaries for new tea fields in each division.

Extending model data to all Kericho tea divisions

A set of GIS models were created in ArcGIS model-builder to combine and append the tea estate data in order to provide a repeatable framework for creating the GIS data required by the Cuppa tea model and tool. The first step was to combine the tea divisions into a single shapefile.

The next step was to incorporate the field data held in an Excel spreadsheet. A key field, to uniquely identify each field within all the tea divisions, was created based on the estate name and field id, and added to the Excel spreadsheet before being exported as a dbf file. The dbf file was then joined to the newly created Kenya tea shapefile to create a shapefile containing all the UTK data at field level. This step will enable the data to be visualised in a GIS tool.

The final step was to create the data required by the Cuppa Tea model. The model data was calculated as follows:

- Weather Station - data from 14 stations was collated. For Cheboswa, Chemogo and Kimoi the temperature data was incomplete and so copied from the next nearest station. Each tea field was assigned a weather station based on the nearest station.
- Altitude - taken from 'Aster V2 DEM', retrieved from the online Data Pool (NASA LP DAAC, 2015). The median altitude across each field was taken from the DEM, using ArcGIS statistics
- Soil - the soil depth was taken from 'Soil property maps of Africa at 250 m' (Hengl, et al., 2015) and gave an average depth of 175 cm across Kapgwen and Kapkorech. Therefore, the soil profile for each field was set to medium (150 cm). The default soil type was also taken from the Soil map of Africa and set to 'Sandy Clay loam'. Data from the previous projects for Kapkorech and soil sample data was used to amend specific fields.
- Harvest Interval - based on the previous projects the harvest interval was set to 17/18
- Hand plucked - due to the uncertainty of the machine harvested algorithms within the cuppa tea model and due to data unavailability all fields were set to be hand-plucked
- Irrigated - all fields were set to be not irrigated based on current knowledge
- Pluck Day - pluck day is used in conjunction with harvest interval to vary the day which harvesting starts as not every field will be harvested on the same day. This has been defaulted to one.
- Tea variety - tea variety was based on the data in the 2014 Excel spreadsheet and set to either Seedling tea, China or 6/8.

**Extending Cuppa Tea Tool to represent field level data on a GIS tool**

The updated CUPPA-Tea tool discussed above, was updated to include a GIS interface allowing integration of data at field level. The data mapped is based on the previous data provided on an Excel spreadsheet and combined with the digitised field boundaries.

The tool uses ArcGIS Runtime in order to display the GIS data. The data to be visualised was loaded as layers in an ArcMap document based on the expanded field boundary shapefile before exporting as a runtime geodatabase for use in the CUPPA-Tea Tool. The following field data can be viewed via the CUPPA-Tea tool:

1. Altitude (m)
2. Soil Type
3. Annual Yield (1985 - 2013) (kg mt/ha)
4. 26 year mean yield (kg mt/ha)
5. Plants per hectare
6. Prune Year as of 2014
7. Year planted
8. Tea Variety
9. Field Boundaries

Since the organisation of the tea divisions was by factory, the location of each factory was added to the map, alongside the location of the weather stations.

Currently this month and next month are viewable alongside the other field data. Fig 65 and Fig 66 show the predicted monthly values and the annual yield. As the loading of the yield values can delay the display of the tool, an image is displayed initially as a splash screen.

The map can be zoomed in and individual fields selected. When a field is selected the main model data is shown at the top of the window and the full field level data displayed via a pop up window, Fig 67.

The simulation tab allows the parameters for the CUPPA-Tea model to be selected/changed and the model to be run.

**Update weather and produce monthly yield forecasts**

In order for the CuppaTea model to make yield predictions more effectively:

- integration of the CuppaTea model with current weather and weather predictions was performed,
- comparisons of monthly forecasts for 2016 was undertaken, and forecasts for 2017 were produced - using summarised weather for 2014-2016 or new forecast weather data

A further tool was developed which

1. downloads weather data from automatic weather stations
2. updates the CUPPA-Tea weather data based on current weather data and downloaded automatic weather data
3. runs the CUPPA-Tea model for all fields and create a monthly yield predictions csv file

Download Automatic Weather Data

A new automatic weather station was set up for testing. The weather station sends automatic weather updates every 5 minutes.

Once created, weather data for the station was obtainable every 15-30 minutes.

A sample python script was created to test the automatic downloading of daily summary data and the solar radiation. This has been converted to c# and included in a new Update Tool. The new Update tool lists all the weather station in a csv file, The last date updated is obtained from last line of the station csv file, named xxxxyyyy.csv, where xxxx is the 4 character station id and yyyy is the year. If the date is before today then the station will be highlighted. On pressing update the tool attempts to download data for each station and appends to the station csv files.

Update Cuppa Tea Weather Data

The CUPPA-Tea model looks for weather files named xxxxyyyy.wth, where xxxx is the 4 character station id and yyyy is the year..

The intention of the tool was to demonstrate these CUPPA-Tea weather files can be updated by either automatic weather station data, downloaded by the tool, or by manually collected data via csv files placed in a specific folder.

When the tool is first started it reads the date on the last line of the csv file for each automatic station. The earliest date across all automatic stations is then used as the date for which weather data will be copied to all CUPPA-Tea weather files, whether manual or otherwise.

For both automatic and manual weather data the data to be copied to the CUPPA-Tea weather files must be in a csv named xxxxyyyy.csv, where xxxx is the 4 character station id and yyyy is the year, mirroring the name of the cuppa weather file. For automatic weather stations these files are created by the tool when the data is downloaded from the web. For manual stations, these files are created as per the following format:

1. Date
2. Solar Radiation (MJ/m2)
3. Maximum Temperature (°C)
4. Minimum Temperature (°C)
5. Rain (mm)

Create monthly predictions

Once the weather data has been updated, the CUPPA-Tea model was run for every field within the Kenya Shapefile, using the model data discussed above within the shapefile for each field.

The weather years for each station were calculated so that a common set of years was used for each field. This means that when a new automatic weather is acquired a set of historic data based on surrounding weather stations should be created to allow the model to run for at least 2 years.

In addition, the following model parameter values were used:

- Plucking = "2-3 leaves"
- Start of year = 1st Jan
- Break Back = true
- Break back leaves = 1;
- Shoot Size = 0 - 100 cm
- Zero all shoots = true

The model initially looks for harvest date information per field in a simple csv file called 'Harvestyyyy.csv', where yyyy is a year. The model will fill in gaps where an entire year of dates is missing but otherwise will assume any gaps are intentional.

Once the model has run, the predicted yield for each field in kg mt/ha is accumulated into monthly values for each year the model was run and saved to a csv file, called 'Yieldyyyy.csv', where yyyy is the year.

**Modifications to Calculation of the Harvest Interval**

**Rationale**

Improving the Decision Support Tool with CUPPA-Tea required understanding why the tool is predicting an unexpectedly high number fields ready for harvest.

Some model runs were produced for Field 1 and 14 from January 2016 to 31 December 2018, and then predicted forward until 1 February 2019 (Fig 68; Table 28).

The default quality index (QI) for the harvested leaf was based on the number of shoots and was defined as

$$QI = (1grow + 1banj + 2grow)/all\ shoots.$$

**Table 28** - **Detail output from the analysis for Plot 1 showing presence of shoots with five leaves immediately after harvest**

| Date | Yield | Banjhi | Ban 1+ | Ban 2+ | Ban 3+ | Ban 4+ | Ban 5+ | 1+ bud | 2+ bud | 3+ bud | 4+ bud | 5+ bud | Total | Quality |
|---|---|---|---|---|---|---|---|---|---|---|---|---|---|---|
| 03/04/2018 | 0 | 44 | 1 | 4 | 9 | 8 | 23 | 12 | 22 | 25 | 20 | 17 | 139 | 0.25 |
| 04/04/2018 | 223 | 46 | 0 | 7 | 39 | 0 | 0 | 0 | 26 | 62 | 0 | 0 | 134 | 0.19 |
| 05/04/2018 | 0 | 2 | 1 | 0 | 0 | 0 | 1 | 12 | 4 | 1 | **1** | 0 | 20 | 0.85 |
| 06/04/2018 | 0 | 3 | 1 | 1 | 0 | 0 | 1 | 12 | 7 | 2 | **1** | 1 | 26 | 0.77 |
| 07/04/2018 | 0 | 4 | 1 | 1 | 1 | 0 | 2 | 12 | 11 | 3 | **1** | 1 | 33 | 0.73 |
| 08/04/2018 | 0 | 6 | 1 | 2 | 1 | 0 | 2 | 12 | 14 | 4 | 2 | 1 | 40 | 0.69 |
| 09/04/2018 | 0 | 7 | 1 | 2 | 1 | 0 | 3 | 12 | 18 | 5 | 3 | 1 | 46 | 0.67 |
| 10/04/2018 | 0 | 10 | 1 | 2 | 2 | 0 | 4 | 12 | 20 | 6 | **4** | 2 | 54 | 0.62 |
| 11/04/2018 | 0 | 11 | 1 | 3 | 2 | 1 | 5 | 12 | 23 | 7 | 5 | 3 | 60 | 0.58 |
| 12/04/2018 | 0 | 13 | 0 | 3 | 3 | 1 | 7 | 12 | 25 | 9 | 5 | 3 | 68 | 0.54 |
| 13/04/2018 | 0 | 15 | 1 | 3 | 3 | 1 | 8 | 11 | 28 | 12 | 6 | 4 | 75 | 0.52 |

EP 4 388 867 A1

**Where are the mature shoots coming from?**

CUPPA-Tea models 500 shoots. We produced the outputs for day 823, 824, 825, and 826. We collated the data for individual shoots for 3 April (day 823) (Table 29), 4 April (day 824) (Table 30) and 5 April (day 825) (Table 31). Harvest took place on 4 April.

**Table 29 - Description of the shoot parameters for the first 8 shoots (out of 500) and shoot 154 for 3rd April 2018 (Day 823), one day before harvest. Shoots in italics will be harvested.**

| ShtCnt | Das | Pbanjhi | Leaf count | Obs length (cm) | Shoot base height (cm) | Previous leaf base position (cm) | Leaf base positions (cm) | Plucked leaf count | Plucked length (cm) | Plucked |
|---|---|---|---|---|---|---|---|---|---|---|
| 1 | 823 | False | 0 | 0.30 | 83.24 | -99 | | 0 | 0 | FALSE |
| 2 | 823 | False | 2 | 4.43 | 84.69 | 3.88 | 0.31;3.88 | 0 | 0 | FALSE |
| 3 | 823 | False | 5 | 4.58 | 81.16 | 3.70 | 0.57;1.24; 2.14;3.00; 3.70 | 0 | 0 | FALSE |
| 4 | 823 | False | 2 | 1.63 | 81.18 | 1.31 | 0.54;1.31 | 0 | 0 | FALSE |
| 5 | 823 | False | 0 | 0.14 | 80.44 | -99 | | 0 | 0 | FALSE |
| 6 | 823 | *False* | 2 | *5.10* | *82.08* | *3.03* | *0.38;3.03* | *1* | *3.72* | *TRUE* |
| 7 | 823 | *True* | 3 | *5.02* | *79.43* | *4.84* | *0.65;2.02; 4.84* | *2* | *3.67* | *TRUE* |
| 8 | 823 | False | 5 | 3.31 | 79.35 | 2.85 | 0.42;1.02; 1.64;2.23; 2.85 | 0 | 0 | FALSE |
| ....... | | | | | | | | | | |
| 154 | 823 | False | 8 | 4.96 | 77.20 | 4.42 | 0.40;1.11; 1.49;2.00; 2.65; 3.33; 3.91;4.42; 4.97 | 0 | 0 | FALSE |

The algorithm for calculating the harvested shoots are:

"If hand plucked: If (leaf count > 0) and (leaf count > pluck to leaf) and (observed length > shear height) and (base height + base position of previous leaf >= table height):

- If 'leaf count' > 0, AND

- If 'leaf count' > 'pluck to leaf' AND

- If 'observed length' > 'shear height' AND

- 'base height' + 'base position of previous leaf' >= 'table height'

Where 'pluck to leaf' = 1, 'shear height' = 5 cm, and 'table height' = 75 cm

On day 823 (Table 29), shoots 6 and 7 are harvestable in terms of the above criteria. However, they are only harvested on the harvest date, which in this case was day 824 (4 April) (Table 30). On day 824, even though shoot 154 has eight leaves (Table 30), it is unharvested because the 'observed length' is less than the 'shear height' of 5 cm. By contrast on day 825 (Table 31), shoot 154 reaches the 'observed length' in excess of 5 cm and it becomes harvestable. However, it will not be harvested until the next harvest date.

**Table 30** - Description of the shoot parameters for the first 8 shoots (out of 500) and shoot 154 for 4th April 2018 (Day 824), a harvest date. The results are for after the implementation of the plucking routine. Shoots 6 and 7 are harvested.

| ShtCnt | Das | Pbanjhi | Leaf Count | Obs length (cm) | Shoot base Height (cm) | Previous leaf base position (cm) | Leaf base position (cm) | Plucked leaf count | Plucked length (cm) | Plucked |
|---|---|---|---|---|---|---|---|---|---|---|
| 1 | 824 | False | 0 | 0.30 | 83.24 | -99 | | 0 | 0 | FALSE |
| 2 | 824 | False | 2 | 4.70 | 84.69 | 3.88 | 0.31;3.88 | 0 | 0 | FALSE |
| 3 | 824 | False | 5 | 4.59 | 81.16 | 3.70 | 0.57; 1.24 2.14; 3.00; 3.70 | 0 | 0 | FALSE |
| 4 | 824 | False | 2 | 1.64 | 81.18 | 1.31 | 0.54; 1.31 | 0 | 0 | FALSE |
| 5 | 824 | False | 0 | 0.15 | 80.44 | -99 | | 0 | 0 | FALSE |
| 6 | 824 | *True* | *0* | *0* | 82.47 | -99 | | 2 | *4.05* | *TRUE* |
| 7 | 824 | *True* | *0* | *0* | 80.07 | -99 | | 2 | *3.68* | *TRUE* |
| 8 | 824 | False | 5 | 3.32 | 79.35 | 2.85 | 0.42; 1.02; 1.64;2.23 2.85 | 0 | 0 | FALSE |
| ... | | | | | | | | | | |
| 154 | 824 | | 9 | 4.97 | 77.21 | 4.97 | 0.40;1.11; 1.49;2.00; 2.65; 3.33; 3.91;4.42; 4.97 | 0 | 0 | FALSE |

**Table 31 - Description of the shoot parameters for the first 8 shoots (out of 500) and shoot 154 for 5th April 2018 (Day 825), on a day after harvest. Shoot 154 become harvestable.**

| ShtCnt | Das | Pbanjhi | Leaf count | Observed length (cm) | Shoot base Height (cm) | Previous leaf base position (cm) | Leaf base position (cm) | Plucked leaf count | Plucked length (cm) | Plucked |
|---|---|---|---|---|---|---|---|---|---|---|
| 1 | 825 | False | 0 | 0.31 | 83.24 | -99 | | 0 | 0 | FALSE |
| 2 | 825 | False | 2 | 4.94 | 84.69 | 3.88 | 0.31;3.88 | 0 | 0 | FALSE |
| 3 | 825 | False | 5 | 4.60 | 81.16 | 3.70 | 0.57;1.24; 2.14;3.01; 3.70 | 0 | 0 | FALSE |
| 4 | 825 | False | 2 | 1.65 | 81.18 | 1.31 | 0.54;1.31 | 0 | 0 | FALSE |
| 5 | 825 | False | 0 | 0.15 | 80.44 | -99 | | 0 | 0 | FALSE |
| 6 | 825 | False | 0 | 0 | 82.46 | -99 | | 0 | 0 | FALSE |
| 7 | 825 | False | 0 | 0 | 80.07 | -99 | | 0 | 0 | FALSE |
| 8 | 825 | False | 5 | 3.33 | 79.35 | 2.85 | 0.42;1.02; 1.64;2.23; 2.85 | 0 | 0 | FALSE |
| .... | | | | | | | | | | |
| *154* | *825* | *True* | *9* | *5.29* | *77.21* | *4.97* | *0.40;1.11; 1.49;2.00; 2.65; 3.33; 3.91 ;4.42; 4.97* | *5* | *2.94* | *TRUE* |

EP 4 388 867 A1

**Effect of minimum harvestable shoot length in CUPPA-Tea**

Introduction

It could not be explained why a "5 cm shoot" with nine unfurled leaves was not marked for harvesting by the model. In the context of hand harvesting, the 'shear length' term is not the shear length, but the **minimum harvestable shoot length.**

Method

The model was re-run for Field 1 and 14 with the following criteria. Field 1 is Clone 225 and is mechanically harvested. The default system is harvesting the shoots assuming a minimum harvestable shoot length (shear height) of 5 cm.

"If hand plucked: If (leaf count > 0) and (leaf count > pluck to leaf) and (observed length > shear height) and (base height + base position of previous leaf >= table height):

- If 'leaf count' > 0, AND

- If 'leaf count' > 'pluck to leaf' AND

- If 'observed length' > 'shear height' AND

- 'base height' + 'base position of previous leaf' >= 'table height'

The model was run with five options:

Where 'pluck to leaf' = 1, 'shear height' **= 5 cm,** and 'table height' = 75 cm
Where 'pluck to leaf' = 1, 'shear height' **= 4 cm,** and 'table height' = 75 cm
Where 'pluck to leaf' = 1, 'shear height' **= 3 cm,** and 'table height' = 75 cm
Where 'pluck to leaf' = 1, 'shear height' **= 2 cm,** and 'table height' = 75 cm
Where 'pluck to leaf' = 1, 'shear height' **= 1 cm,** and 'table height' = 75 cm
Where 'pluck to leaf' = 1, 'shear height' **= 0 cm,** and 'table height' = 75 cm

Results

The outputs of the analysis are shown in Fig 69 to Fig 74.

1) The effect of reducing the "minimum harvested shoot length" (shear height) parameter, is to increase the number of shoots considered harvestable. In particular the number of shoots with one leaf (1 + banjhi bud and 1 + growing bud) increases.

2) Reducing the "minimum harvested shoot length" substantially increases the quality index and the quality metric became more predictable.

3) Note that the quality score of the harvested leaf on the day of harvest is less than that on the day before harvest. This is because shoots with less than two leaves are not harvested within the model.

**Theory of harvest interval**

There are different methods for calculating the appropriate harvest interval for tea.

Determining harvest interval from phyllochrons

(Burgess & Carr, 1998) described the use of the leaf unfurling rate (or phyllochrons) which varies with temperature and the level of drought stress) as a way of determining the harvest interval. If the tea is harvested so that all shoots with two or more leaves are removed leaving only shoots with one unfurled leaf, then waiting for three phyllochrons will mean that all shoots will have less than four leaves:

*Maximum HI to have shoots < 4 leaves = Harvest 1 leaf + 3 Phyllochrons*

The mean air temperature in Kericho is about 18°C. (Burgess & Carr, 1998) indicated that the Leaf Appearance Rate (LAR) of Clone 6/8 was equal to $0.172 - 1.6 *0.817^{Tmean}$. Hence a temperature of 24°C would lead to a phyllochron/day of 0.159, which means a phyllochron takes 6.2 days. A temperature of 18°C would suggest a leaf appearance rate of 7.7 days.

Leaf unfurling rate in CUPPA-Tea

The CUPPA-Tea model also predicts the unfurling rate of leaves. The model assumes that leaf unfurling occurs from the first true leaf; the unfurling of the fish leaf marks the end of the bud stage. The CUPPA-Tea model predicts the leaf unfurling rate as a function of the temperature.
(Matthews & Stephens, 1998) reported a development base temperature for Clone 6/8 of 8°C, and optimum temperature of 24°C, and 40°C as the critical temperature (Fig 75).
(Matthews & Stephens, 1998) explains that a phyllochron is equivalent to 4.52 phenochrons. Hence at a temperature of 24°C, CUPPA-Tea assumes that the shoots can unfurl a leaf every 4.5 days. At a temperature of 18°C, the phyllochrons = 0.221 *18/24 = 0.166, which implies a leaf taking 6 days to unfurl. It is noted that this leaf appearance rate is about 78% of the value reported by (Burgess & Carr, 1998).

Theory of predicting harvest intervals with CUPPA-Tea

If the minimum shoot length is set to 0 cm, the default settings in CUPPA-Tea model assume that all shoots with more than one-unfurled leaf are harvested. Hence the maximum development stage of an individual shoot at harvest is one day before a shoot unfurling its second leaf.
We can use the above information to predict when the harvestable shoots reache a quality index of 0.5. Considering a theoretical example where all the shoots with **one or more unfurled leaves** are harvested on day 0. We then assume that the development status of the shoots is **totally even** and that each shoot advances 0.166 phyllochrons each day. Hence the first shoot (Shoot 1) unfurls its first leaf on day 1, it unfurls its second leaf on day 7, and its third leaf on day 13.
The default quality index (QI) is based on the number of shoots and is defined as:

$$QI = (1grow + 1banj + 2grow)/all\ shoots.$$

If we assume that all shoots with two leaves are growing shoots, then day 13 is the first day when the quality index is less than 1.00.
We can demonstrate that:

If n <= 2LAR, QI = 100%

If n > 2LAR, QI = 2LAR/n

When quality threshold QI = 0.5, 0.5 = 2LAR/n, hence 0.5 n = 2 LAR, hence, n = 4 LAR i.e. the quality threshold becomes 50% when then harvest interval is 4 phyllochrons.
In practice, CUPPA-Tea is set up so that shoots with only one leaf are not harvestable. In this case the value of QI becomes 0.5 at an earlier date. The interval to reach QI = 0.5 = 4LAR - LAR = 3LAR. Assuming LAR = 6 days, then the harvest interval becomes 18 days.

Predicted harvest interval and the effect of assumed minimum harvested shoot length in Field 1

The predicted quality index and shoot composition were examined for Field 1 after harvest on 11 December 2018, for different assumptions regarding the minimum shoot length.
The average temperature is about 19°C, so the phyllochrons was 19/24 * = 0.174, so the modelled leaf appearance rate in CUPPA-Tea was about 5.75 days.
Fig 76 to Fig 81 show some of the key features of the response.
Assuming a **minimum shoot length of 0 cm** (Fig 76), the quality index does not start to decline until the first phyllochron is complete at about Day 7. This is similar to the theoretical example above.
The first two leaves and a bud appears on Day 1, and the first three leaves and a bud appeared on Day 7, and the first four leaves and a bud on Day 13. This is similar to the theoretical example above.

With no minimum size of harvestable shoot but assuming that all shoots with two leaves are harvested (Fig 76), on the day of harvest 100% of the remaining shoots will have one unfurled leaf. On day 18, which is theoretically when the QI becomes less than 0.5, the proportion of shoots with one leaf (39.5%), a growing shoot with two leaves (20.5%), is greater than the proportion with a banjhi shoot (8%), three leaves (22%), and four leaves (10%). Hence the QI remains at 60%.

We wished to understand why the number of shoots with one leaf (39.5%), was greater than the number with two (28.5%) and three leaves (22%). The model assumes that once a shoot becomes banjhi it will not immediately unfurl more leaves. Although some banjhi shoots will eventually break dormancy, the majority of banjhi shoots remain dormant. Hence the deterioration in quality is slower than would be expected. The effect of banjhi shoots is to increase the predicted time period when QI < 0.5 from 18 days to about 24 days (+33%) (Table 32).

**Table 32** - **Effect of time from harvest (11 December 2018) on the predicted shoot composition assuming the minimum harvested shoot length is 0 mm and the minimum harvested shoot stage is 2 unfurled leaves. Proportions are shown in brackets.**

|  | Day 1 | | Day 6 | | Day 12 | | Day 18 | | Day 24 | |
|---|---|---|---|---|---|---|---|---|---|---|
| *1 grow* | 68 | *(50%)* | 70 | *(39%)* | 62 | *(28%)* | 58 | *(20.5%)* | 58 | *(17%)* |
| *1 banjhi* | 58 | *(42%)* | 55 | *(30%)* | 47 | *(21%)* | 55 | *(19%)* | 57 | *(17%)* |
| *2 grow* | 12 | *(8%)* | 52 | *(29%)* | 68 | *(30%)* | 57 | *(20.5%)* | 60 | *(18%)* |
| 2 banjhi | 0 | | 4 | (2%) | 8 | (4%) | 22 | (8%) | 34 | (10%) |
| 3 grow | 0 | | 0 | | 40 | (18%) | 55 | (19%) | 40 | (12%) |
| 3 banjhi | 0 | | 0 | | 3 | (1%) | 8 | (3%) | 22 | (6%) |
| 4 grow | 0 | | 0 | | 0 | | 27 | (10%) | 39 | (12%) |
| 4 banjhi | 0 | | 0 | | 0 | | 0 | | 9 | (3%) |
| 5 grow | 0 | | 0 | | 0 | | 1 | | 17 | (5%) |
| 5 banjhi | 0 | | 0 | | 0 | | 0 | | 3 | (1%) |
|  | 138 | | 181 | | 225 | | 283 | | 339 | |

**Should banjhi shoots with two unfurled leaves be acceptable?** The manager has little control over whether the bud is banjhi or growing when the second leaf unfurls. One could therefore argue, that a more consistent quality index would be ((1banj + 2banj + 1grow + 2grow)/all). Assuming a minimum harvestable shoot length of 0 cm, including banjhi shoots with two leaves increases the predicted harvest interval. However if the minimum harvestable shoot length is set at the default 5 cm, the results are very similar to the current value for the quality index (Table 33).

The current set up of CUPPA-Tea assumes a **minimum harvestable shoot length of 5 cm,** and that shoots should have more than one unfurled leaf. Assuming a minimum harvestable shoot length of 5 cm, means that most shoots with only one leaf are unharvestable (Fig 81). In this example, the lack of shoots with one or more unfurled leaves, means that the quality index declines quickly reaching 0.5 after about 12 days, i.e. about two phyllochrons (Table 33). This raises a question about why a quality metric of shoots with one unfurled lead is used, when the model assumes that such shoots are not harvested. An alternative metric could be (2grow+ 2banj)/(2grow + 2banj + 3grow + 3banj). This analysis predicts that a longer time period of 16 days rather than 12 days is needed before shoots with three leaves outnumber those with two (Table 33).

**Effect of time from prune:** the current predicted harvest interval in Kericho ranges from about 8-10 days in Year 1, to 14 days in Year 2, and 18 days in year 4 .

**Table 33** - **Effect of assumed minimum length of the harvestable shoot on the predicted time after harvest for the quality index to reach below 0.5 defined as (1grow + 1banj+ 2grow)/all), (1grow + 1banj+ 2grow +2banj) /all), and (2grow+ 2banj)/(2grow + 2banj + 3grow + 3banj) in Field 1**

| Quality metric | Minimum length of harvestable shoot | | | | | |
|---|---|---|---|---|---|---|
|  | 5 cm | 4 cm | 3 cm | 2 cm | 1 cm | 0 cm |
| (1grow+1banj+2grow)/all | **12** | 15 | 27 | 29 | 25 | **25** |

(continued)

| Quality metric | Minimum length of harvestable shoot | | | | | |
|---|---|---|---|---|---|---|
| | 5 cm | 4 cm | 3 cm | 2 cm | 1 cm | 0 cm |
| (1grow+1banj+2grow+2banj)/all | 13 | 15 | 30 | 33 | 32 | 32 . |
| (2grow+banj)/(2grow+banj + 3qrow+banj) | 16 | 17 | 34 | 36 | 39 | 39 |

Predicted harvest interval and the effect of assumed minimum harvested shoot length in

Field 14

The effect of different assumed minimum harvest lengths in Field 14 is shown in Fig 82 to Fig 87. The minimum shoot length is 0cm in Fig 82, 1cm in Fig 83, 2cm in Fig 84, 3cm in Fig 85, 4cm in Fig 86, and 5cm in Fig 87.

The predicted quality index and shoot composition for Field 14 after harvest on 24 November 2018. The average temperature is about 19°C, so the phyllochrons was 19/24 * = 0.174, so the leaf appearance rate was about 5.75 days. Hence a harvest interval equivalent to two phyllochrons should be about 12 days.

In contrast to the result in Field 1, the distribution of shoots becoming harvestable in Field 14 is more uneven. In fact, very few shoots are assumed to unfurl one leaf between 1 and 37 days after harvest. The primary reason for this is that there was no harvest between 29 September and 24 November. New shoots are only assumed to occur about 40 days after harvest, following the effect of the harvest of releasing axillary buds from apical dominance.

The predicted harvest interval assuming a minimum harvestable shoot length of 0 cm is 21 days, which is about 16% greater than the theoretical value of 18 days based on 3 phyllochrons. Assuming the default minimum harvestable shoot length of 5 cm, results in a predicted harvest interval of 12 days, which is equivalent to two phyllochrons (Table 34).

**Table 34** - **Effect of assumed minimum length of the harvestable shoot on the predicted time after harvest for the quality index to reach below 0.5 defined as (1grow + 1banj+ 2grow)/all), (1grow + 1banj+ 2grow +2banj) /all), and (2grow+ 2banj)/(2grow + 2banj + 3grow + 3banj) in Field 14**

| Quality metric | Minimum length of harvestable shoot | | | | | |
|---|---|---|---|---|---|---|
| | 5 cm | 4 cm | 3 cm | 2 cm | 1 cm | 0 cm |
| (1grow+1banj+2grow)/all | 12 | 14 | 15 | 20 | 21 | 21 |
| (1grow+1banj+2grow+2banj)/all | 12 | 16 | 17 | 27 | 67 | 67 |
| (2grow+banj)/(2qrow+banj + 3grow+banj) | 15 | 16 | 16 | 28 | 16 | 27 |

**Initial conclusions and next steps**

Minimum harvestable shoot length is an important parameter in the model

The analysis highlights the importance of the "minimum harvested shoot length" (termed: shear height) in the CUPPA-Tea model. The current default setting of a minimum shoot length of 5 cm (compared to shorter lengths) results in a more stable estimate of the harvest interval. The quality index falls below 0.5 in a faster time assuming a minimum harvestable shoot length of 5 cm compared to shorter lengths.

Should 2 banihi shoots be acceptable in the quality m----etric?

The manager has no control over whether the bud after the unfurling of the second leaf is banjhi or growing. Hence it could be more coherent to argue that a banjhi shoot with two unfurled leaves is an acceptable harvestable shoot. Where the minimum harvestable shoot length is less 5 cm, including 2banj shoots would increase the predicted harvest interval. However where the minimum harvestable shoot length is 5 cm, there seems to be minimal effect on including 2 banjhi in the quality metric as most of the 2banj shoots are below 5 cm (Table 33 and Table 34).

Appropriateness of the quality metric

At present CUPPA-Tea model is set up only to harvest shoots with more than one leaf, i.e. shoots with less than two leaves are excluded. This raises the question of whether a quality index (QI) that includes shoots with one leaf is appropriate.

$$QI = \frac{\sum 1banj + 1grow + 2grow}{\sum 1banj + 2\,banj + 3\,banj + 4\,banj + \geq 5banj + 1grow + 2grow + 3grow + 4grow + \geq 5\,grow}$$

If we include 2banj shoots as acceptable, and we make the assumption that the number of shoots with one unfurled leaf is the same as number of shoots with more than three unfurled leaves, then the metric becomes more coherent in terms of what is harvested.

If:

$$\sum 1banj + 1grow = \sum 4banj + 4grow + \geq 5grow + \geq 5banj$$

Then:

$$QI = \frac{\sum 2banj + 2grow}{\sum 2\,banj + 3\,banj + 2grow + 3grow}$$

This quality metric seems to predict longer harvest intervals and appears to be less robust that the current measure.

Using phyllochrons calculations to calculate the harvest interval

The current use of a quality index of 0.5 as an indicator of the optimum harvest interval is relatively unstable. It was questioned whether it would be more sensible to base the predicted harvest interval on a calculated number of phyllochrons (as directly determined from temperature and drought stress measurements), with the amount of phyllochrons varying according to the harvest method. The proposal was therefore to use phyllochrons calculations to drive the determination of harvest interval and to use CUPPA-Tea to calculate the composition of the shoots and the yield.

**Calculation of phyllochrons**

Effect of temperature

(Burgess & Carr, 1998) report that the mean phyllochron for six clones was related to the mean air temperature and the potential soil water deficit (Fig 88, Table 35). The inverse of the phyllochrons is the leaf appearance rate (LAR). Equation 2 below describes the mean response of six clones.

**Equation 1:** $$LAR = LAR_{max} - b \times R^{T_{mean}}$$

**Equation 2:** $$LAR = 0186 - 4.6 \times 0.765^{T_{mean}}$$

**Table 35 - Predicted leaf appearance rate (LAR) as a function of temperature**

| Temp (°C) | LAR | Temp (°C) | LAR | Temp (°C) | LAR | Temp (°C) | LAR |
|---|---|---|---|---|---|---|---|
| 10.5 | 0.000 | 15.5 | 0.114 | 20.5 | 0.167 | 25.5 | 0.181 |
| 11.0 | 0.000 | 16.0 | 0.123 | 21.0 | 0.169 | 26.0 | 0.182 |

(continued)

| Temp (°C) | LAR | Temp (°C) | LAR | Temp (°C) | LAR | Temp (°C) | LAR |
|---|---|---|---|---|---|---|---|
| 11.5 | 0.000 | 16.5 | 0.131 | 21.5 | 0.171 | 26.5 | 0.182 |
| 12.0 | 0.001 | 17.0 | 0.188 | 22.0 | 0.173 | 27.0 | 0.183 |
| 12.5 | 0.024 | 17.5 | 0.144 | 22.5 | 0.175 | 27.5 | 0.183 |
| 13.0 | 0.045 | 18.0 | 0.149 | 23.0 | 0.176 | 28.0 | 0.183 |
| 13.5 | 0.062 | 18.5 | 0.154 | 23.5 | 0.178 | 28.5 | 0.184 |
| 14.0 | 0.078 | 19.0 | 0.158 | 24.0 | 0.179 | 29.0 | 0.184 |
| 14.5 | 0.091 | 19.5 | 0.161 | 24.5 | 0.180 | 29.5 | 0.184 |
| 15.0 | 0.103 | 20.0 | 0.164 | 25.0 | 0.180 | 30.0 | 0.185 |

Effect of drought

Experimental measurements in Tanzania showed that the leaf appearance rate can slow when the soil water deficit exceeds about 50 mm. The equation established from four clones of three-to-four year old plants is shown in the equation below and Fig 89,

$$\textbf{Equation 3: } f = 1.218 - 0.161 \times 1.00584^{SWD}$$

Implementing the code for Kericho

We included Equation 2 and Equation 3 in CUPPA-Tea to describe the accumulation of phyllochrons.

```
// Leaf appearance rate
    double dailyLAR = 0;
    if (weatherData.Tmean < 12) { dailyLAR = 0; }
    else { dailyLAR = 0.186 - 4.6 * Math.Pow(0.765, weatherData.Tmean); }
    double f = 0;
    if (waterData.Swdef < 52.15) {f = 1; }
    else { f = 1.218 - 0.161 * Math.Pow(1.00584, waterData.Swdef); }
```

$$\_LAR \mathrel{+}= (dailyLAR * f);$$

Note that the leaf appearance rate described by (Burgess & Carr, 1998) differs from the observed development stage currently within CUPPA-Tea.

```
// Observed dev stage

    double S2DRwf = Utility.Limit(0.364 + 0.636 * _wSFadj, 0, 1);
    _DVS += _s2DevRatel * (DDIdev * DLfac * S2DRwf);
```

The algorithms show that for most of the year, the leaf appearance rate is relatively consistent (Fig 90). However, the output highlights the step change (due to change in the temperature method from 1 May 2017?) and some low readings due to erroneous temperature measurements in November 2017. To remove these effects, the rest of the analysis will focus on 2018 (Fig 91).

The effect of drought. The CUPPA-Tea model calculates a soil water deficit (Fig 92). Although the soil water deficit reduced the predicted leaf appearance rate in January 2018, the overall effect is relatively small (Fig 93).

Using the values in Fig 92 it is possible to accumulate the number of phyllochrons between harvests. As shown in Fig 94, in Field 1 in 2018 the number of phyllochrons was reaching between 2 and 4 prior to harvest. There is an argument that this value should be consistent.

Field 1 comprises Clone 225 which is mechanically harvested and the tea was pruned in 2017. Hence in 2018 it was in its second year of prune.

(Burgess & Carr, 1998) reported that the optimum harvest interval for hand harvested tea is about two phyllochrons, which ties in with the current practice in Kericho of harvesting at an interval of 14 days (assuming a phyllochrons of 7 days). Mechanically harvested tea can be harvested at a longer interval because smaller shoots are harvested (Burgess, et al., 2006). (Burgess, et al., 2006) recommended that shear-harvested tea should be harvested at an interval of 2.5 phyllochrons. Full mechanical harvesting removes even smaller leaves and hence an interval of 3 phyllochrons may be possible.

Standard harvest intervals being used at Kericho were as shown in Table 36.

**Table 36** - **Current scheduled harvest intervals used in Kericho, and the associated multiple of phyllochrons (personal communication: Jacquie De Silva 2020).**

| Year from prune | Hand harvested | | Mechanically harvested | |
|---|---|---|---|---|
| | Scheduled harvest interval (days) | Equivalent multiple of phyllochrons at Tmean = 18°C | Scheduled harvest interval (days) | Equivalent multiple of phyllochrons |
| 1 | 8-10 | 1.19-1.49 | 18-20 | 2.68-2.98 |
| **2** | **14** | **2.09** | **20-22** | **2.98-3.27** |
| 3 | 16 | 2.38 | 22-23 | 3.27-3.43 |
| 4 | 18 | 2.68 | 24 | 3.57 |

Should the harvest interval increase with year from prune?

Table 36 implies that standard practice at Kericho is to increase the harvest interval as the year from prune increases. The reason for this may be more to do with labour productivity as the physiological responses of tea bushes. Under experimental conditions in Tanzania, we successfully maintained a common harvest interval for all tea in its second, third, fourth, and fifth year from prune.

**Conclusion:** the use of phyllochrons provides a physiological and environmental basis for scheduling harvest intervals. Because of the consistent temperatures at Kericho the seasonal variation in phyllochrons is low. An interval of 2 phyllochrons is appropriate for hand-harvested tea, and shear harvested tea can be harvested at an interval of 2.5 phyllochrons. It is possible that mechanically harvested tea could be harvested at an interval of 3.0 phyllochrons. The rationale for extending the harvest interval in the third and fourth year of prune appears to be primarily a need to maintain labour productivity in the later stages of a prune cycle rather than the physiology of tea growth.

The next step was to determine the average harvest interval in practice in Kericho for the different field types.

**Follow-up experiments**

Under experimental conditions, clonal field trials in Kericho were hand harvested on a steady 10-11 day interval irrespective of the year of prune.

However, under commercial conditions, managers extended the harvest interval as the time from the last prune increases. It seems that this is primarily driven by smaller shoots, rather than shoots having more slowly unfurling leaves. Hence in order to maintain incomes for harvesters working on a piece rate basis with hand plucking, there is a tendency to increase the harvest interval. Under machine harvested conditions, the smaller shoots make it more likely for the machine to harvest a higher proportion of coarse mother leaves, and hence there is also a practice to increase the harvest interval.

When using harvesting with hand-held shears with a 25 mm step, Kericho used the same interval as used described for hand harvesting in Table 36.

There are different ways of presenting the recommended harvest interval, either in terms of a step change each year (Fig 96) or in terms of a continuous change (Fig 97 and Fig 98).

The phyllochron multiple can be expressed as a logarithmic or linear relationship. The goodness fit for the linear relationship for the machine harvested tea is higher than for the logarithm and hence a linear relationship is recommended. In terms of parsimony, there is an argument to have a linear relationship for hand.

$$\text{Phyllochron multiple (machine harvested)} = 0.0006694 \times \text{Day from Prune} + 2.73$$

$$\text{Phyllochron multiple (shear-harvested)} = 0.00118 \times \text{Day from Prune} + 1.26$$

$$\text{Phyllochron multiple (hand harvested)} = 0.00118 \times \text{Day from Prune} + 1.26$$

(Burgess & Carr, 1998) reported leaf unfurling from the second to the third leaf. There is some indication from (Jayasinghe, et al., 2014), that when the phyllochron from the second to the third leaf and from fish leaf to 1 leaf are both 7 days, the time from 1 to 2 may be lower at 5 days. Note: the relationship to drought stress in (Burgess & Carr, 1998) is based on the potential soil water deficit, whereas the model assumes that it is based on the actual soil water deficit.

**Validation of using phyllochrons to predict harvest intervals in 2018**

Method

We created an algorithm to predict the scheduled harvest interval for each field in Kericho in 2018 determined using phyllochrons and the following multiples:

$$\text{Phyllochron multiple (machine harvested)} = 0.0006694 \times \text{Day from Prune} + 2.73$$

$$\text{Phyllochron multiple (shear-harvested)} = 0.00118 \times \text{Day from Prune} + 1.26$$

$$\text{Phyllochron multiple (hand harvested)} = 0.00118 \times \text{Day from Prune} + 1.26$$

These results were compared with the actual interval. We also calculated the predicted interval based on the current quality index metric based on a minimum harvestable shoot height of 5 cm (QI_5 cm) calculated by CUPPA-Tea. We also included the data for a quality index metric based on a minimum harvestable shoot length of 3 cm (QI_3cm). Due to calculation constraints, QI-based intervals that were greater or equal to 32 days were reported as 32 days.

**The effect of prune on harvest interval:** after the tabulation of the results that follow, we also examined the possibility of including a routine where if a prune occurred then the next harvest interval would occur at an interval of 8 phyllochrons. The basis for this can be demonstrated taking values for the thermal time of a phyllochron and a shoot replacement cycle (SRC) from release of apical dominance to the unfurling of the third leaf, with the same base temperature.

Clone BBK35 has a thermal time for a phyllochron = 60°Cd (degree days) above a base temperature of 9°C

BBK35 had a shoot replacement cycle (SRC) defined by:

$$1/\text{SRC} = 0.0017\ T_{mean} - 0.015\ (\text{Burgess, 1992})$$

i.e. a shoot replacement cycle in Kenya of 427°Cd above a base temperature of 9°C

Hence the number of phyllochrons per shoot replacement cycle approximates to: 427/60 = 7.11 phyllochron. At a temperature of 18°C, a phyllochron is 7 days, so the above values should result in an interval of about 49 days to get to three leaves and a bud at the existing height. However this analysis ignores the height increment in harvesting. If we assume that the tea shoot also needs to have an additional leaf, then the time period should be further increased from 7 to 8 phyllochrons. A value of 8 is also attractive in that there is a recommendation that you should maintain four generations of shoots on the bush.

**Note on harvest method:** The harvesting method for each field was originally determined from a first set of records from 2018. However, an updated field meta-data set received in March 2020 shows different harvest methods in 2018. The predictions for hand and shear-harvested leaf should be similar, but mechanically harvested leaf assumed to be hand-harvested and vice versa would result in errors. Fields in subsequent tables with discrepancies were indicated in **bold.**

Hand harvested tea (in years before prune)

The assumption was that the phyllochron multiple (hand harvested) = 0.00118 × Day from Prune + 1.26. The hand harvested tea fields pruned in 2018 can be grouped according to the date of prune (Fig 99).

For hand-harvested tea **in the year before prune,** the predicted harvest interval of 19 days is broadly similar to the actual harvest interval of 17 days for the tea (Seed Field 35; Fig 100). It is interesting that there is minimal change in the actual harvest interval between the tea recently and non-recently pruned.

The results suggest that the actual harvest interval oscillated around the phyllochron-based predictions (Fig 100). The QI_5cm results provided some very low values; the QI_3cm results also showed some oscillations around the actual results.

**Table 37 - Comparison of the actual and predicted harvested intervals for tea indicated as hand harvested tea in 2018, for tea that was pruned in late 2018 or 2019 (HP = hand plucked; SP = shear harvested; MH = machine harvested)**

| Field | Date of last prune | 1st record | 2020 record | Mean actual (days) | Maximum actual (days) | Mean phyllochrons (days) | Mean QI$_5$ (days) | Mean QI$_3$ (days) |
|---|---|---|---|---|---|---|---|---|
| 35 | 26/04/2019 | HP | SP | 19 | 28 | 19 | 10 | 21 |
| 36 | 15/11/2018 | HP | SP | 17 | 32 | 20 | 9 | 20 |
| 37 | 12/04/2019 | HP | SP | 16 | 30 | 19 | 9 | 22 |
| 49 | 30/01/2019 | HP | SP | 19 | 25 | 20 | 10 | 21 |
| 51 | 02/07/2019 | HP | SP | 20 | 24 | 19 | 11 | 20 |
| 53 | 15/06/2019 | HP | SP | 20 | 30 | 19 | 10 | 21 |
| 57 | 24/07/2019 | HP | HP | 15 | 23 | 18 | 10 | 21 |
| 58 | 15/07/2019 | HP | HP | 15 | 23 | 18 | 10 | 22 |
| *59* | *18/03/2019* | *HP* | *MH* | *22* | *31* | *20* | *9* | *22* |
| 60 | 22/03/2019 | HP | HP | 15 | 28 | 19 | 10 | 21 |
| 76 | 04/03/2019 | HP | HP | 14 | 20 | 19 | 10 | 22 |
| 95A | 27/04/2019 | HP | HP | 17 | 30 | 19 | 9 | 21 |
| 95B | 27/04/2019 | HP | HP | 17 | 30 | 19 | 9 | 21 |
| 95C | 27/04/2019 | HP | SP | 17 | 30 | 19 | 9 | 21 |
| 98 | 01/10/2019 | HP | HP | 16 | 77 | 18 | 11 | 22 |
| 99 | 24/06/2019 | HP | HP | 18 | 56 | 19 | 10 | 22 |
| Mean | | | | 17 | 34 | 19 | 10 | 21 |

Hand harvested tea in year after prune

There were originally 12 fields indicated as hand plucked in 2018, which were pruned in 2017. However the second record indicates that all but two fields (24 and 25) may have been sheared plucked in 2018 (Table 38). In Fields 24 and 25 (which are seedling fields), the actual and the predicted harvest intervals were very similar. There was also no evident increase in the harvest interval in February 2018 (Fig 102). The results show the high oscillations in the quality-index harvest intervals.

**Table 38 - Comparison of the actual and predicted harvested intervals for hand harvested tea in 2018, for tea pruned in 2017**

| Field | Date of last prune | 1st record | 2nd record | Mean actual (days) | Maximum actual (days) | Mean phyllochrons (days) | Mean QI$_5$ (days) | Mean QI$_3$ (days) |
|---|---|---|---|---|---|---|---|---|
| 12 | 15/02/2017 | HP | SP | 19 | 55 | 14 | 9 | 22 |
| 15A | 15/02/2017 | HP | SP | 19 | 37 | 14 | 10 | 21 |
| 15B | 15/02/2017 | HP | SP | 19 | 37 | 14 | 10 | 21 |
| 16 | 15/02/2017 | HP | SP | 19 | 56 | 14 | 12 | 21 |
| 17 | 15/02/2017 | HP | SP | 20 | 70 | 14 | 9 | 22 |
| 18 | 15/02/2017 | HP | SP | 20 | 59 | 14 | 9 | 21 |
| 24 | 15/08/2017 | HP | HP | 12 | 18 | 12 | 10 | 20 |
| 25 | 15/08/2017 | HP | HP | 12 | 17 | 12 | 8 | 21 |
| 29 | 15/05/2017 | HP | SP | 15 | 31 | 13 | 10 | 23 |
| 30 | 15/05/2017 | HP | SP | 17 | 26 | 13 | 10 | 22 |

(continued)

| Field | Date of last prune | 1st record | 2nd record | Mean actual (days) | Maximum actual (days) | Mean phyllochrons (days) | MeanQI$_5$ (days) | MeanQI$_3$ (days) |
|---|---|---|---|---|---|---|---|---|
| 43 | 15/11/2017 | HP | SP | 15 | 51 | 11 | 10 | 22 |
| 81 | 15/08/2017 | HP | SP | 17 | 30 | 12 | 11 | 19 |
| Mean | | | | 17 | 41 | 13 | 10 | 21 |

In other, often clonal, fields there is possibility that the tea was shear harvested, then there is typically an extended harvest interval in February (Fig 102). However, once this peak is passed, the actual and the phyllochron harvest intervals become similar.

We examined if there was a relationship between location and the lengthening of the interval in February 2018. There is a spatial pattern to the variation, but it appears to be linked more to clone type than location per se.

Hand harvested tea in year of prune

The tea pruned in 2018 can be split into three groups (Table 39). The tea pruned in February 2018, primarily functioned as year 1 fields. The tea pruned in May 2018 seemed to have a particularly long time to come back into leaf after pruning, with a mean maximum interval of 119 days. If the prune date is correctly cited, then including an interval of eight phyllochrons at the prune event can work (see Field 19A) (Fig 103).

**Table 39 - Comparison of the actual and predicted harvested intervals for hand harvested (HH) tea (pruned during 2018) before a prune correction; some tea may have been mechanically harvested (MH) or shear harvested (SH)**

| Field | Indicative date of last prune | 1st record | 2nd Record | Mean actual (days) | Maximum actual (days) | Mean phyllochrons (days) | Mean QI$_5$ (days) | Mean QI$_3$ (days) |
|---|---|---|---|---|---|---|---|---|
| 9 | 15/02/2018 | HH | HH | 14 | 37 | 11 | 11 | 22 |
| 11 | 15/02/2018 | HH | HH | 14 | 50 | 12 | 11 | 22 |
| *20* | *15/02/2018* | *MH* | *MH* | *16* | *58* | *12* | *9* | *21* |
| *21* | *15/02/2018* | *HH* | *MH* | *16* | *53* | *11* | *9* | *22* |
| 97 | 15/02/2018 | HH | HH | 19 | 33 | 11 | 8 | 17 |
| Mean | | | | 16 | 46 | 11 | 10 | 21 |
| 10 | 15/05/2018 | HH | HH | 25 | 112 | 14 | 8 | 18 |
| 10B | 15/05/2018 | HH | HH | 25 | 112 | 14 | 10 | 18 |
| 61 | 15/05/2018 | HH | HH | 23 | 130 | 15 | 8 | 16 |
| 75 | 15/05/2018 | HH | HH | 22 | 121 | 14 | 7 | 18 |
| Mean | | | | 24 | 119 | 14 | 8 | 18 |
| 19A | 15/08/2018 | HH | HH | 19 | 46 | 17 *(20)[a]* | 9 | 21 |
| 19B | 15/08/2018 | HH | HH | 19 | 46 | 17 | 9 | 21 |
| *22* | *15/08/2018* | *HH* | *MH* | *23* | *69* | *17* | *10* | *20* |
| 23 | 15/08/2018 | HH | HH | 21 | 76 | 17 | 8 | 22 |
| 96A | 15/08/2018 | HH | SH | 15 | 27 | 16 | 11 | 21 |
| 96B | 15/08/2018 | HH | SH | 15 | 27 | 16 | 11 | 21 |
| 96C | 15/08/2018 | HH | HH | 15 | 27 | 16 | 11 | 21 |
| Mean | | | | 18 | 45 | 17 | 10 | 21 |

[a] including a longer interval for prune event

Shear harvested tea

The predicted intervals for shear-harvested leaf are lower than actual in the initial year after prune and similar in the year before prune (Table 40).

$$\text{Phyllochron multiple (shear-harvested)} = 0.00118 \times \text{Day from Prune} + 1.26$$

Our original conclusion was that the relationship was acceptable for the final years of prune, for example Field 48A, but that there was an underestimation for shear-harvested tea in the first yield after prune e.g. Field 1 (Table 40). However, the updated harvest method records suggest that the difference is a result of assuming the wrong harvest method.

**Table 40 - Shear-harvested: comparison of the actual and predicted harvested intervals based on the harvest method shown in the 1st record. However the actual harvest method may be as shown in the 2nd record (SP: Shear harvesting; MH: mechanically-harvested). Discrepancies are in bold.**

| Field | Date of last prune | 1st record | 2nd Record | Mean actual (days) | Maximum actual (days) | Mean phyllochrons (days) | Mean $QI_5$ (days) | Mean $QI_3$ (days) |
|---|---|---|---|---|---|---|---|---|
| **1** | **15/02/2017** | **SP** | **MH** | **21** | **29** | **14** | **10** | **22** |
| **2** | **15/02/2017** | **SP** | **MH** | **18** | **27** | **14** | **9** | **20** |
| **7** | **15/05/2017** | **SP** | **MH** | **24** | **49** | **13** | **10** | **22** |
| **8** | **15/05/2017** | **SP** | **MH** | **23** | **31** | **13** | **10** | **21** |
| **28** | **15/02/2017** | **SP** | **MH** | **18** | **30** | **13** | **10** | **21** |
| 31 | 15/02/2017 | SP | SP | 17 | 27 | 14 | 9 | 23 |
| **32** | **15/05/2017** | **SP** | **MH** | **17** | **35** | **13** | **10** | **22** |
| 33 | 15/05/2017 | SP | SP | 16 | 22 | 13 | 11 | 23 |
| Mean | | | | 19 | 31 | 13 | 10 | 22 |
| 34 | 15/11/2015 | SP | SP | 18 | 31 | 17 | 9 | 21 |
| 48A | 28/03/2019 | SP | SP | 20 | 29 | 19 | 9 | 22 |
| 48B | 28/03/2019 | SP | SP | 20 | 29 | 19 | 9 | 22 |
| 50 | 16/01/2019 | SP | SP | 17 | 40 | 20 | 10 | 21 |
| **86** | **03/08/2019** | **SP** | **MH** | **29** | **45** | **18** | **8** | **20** |
| Mean | | | | 20 | 33 | 15 | 9 | 21 |
| 74 | 15/02/2018 | SP | MH | 18 | 68 | 11 | 10 | 21 |

Unpruned mechanically harvested

In the original analysis we identified eight fields where the actual interval for many fields is under 18 days, whereas the discussion with UTK indicated that the minimum scheduled interval for mechanically harvested tea was 18 days (Table 41). However our subsequent analysis on 10 March suggest that these fields have been incorrectly assigned. Those fields indicated with low actual harvest intervals (with the exception of Field 91) are actually identified as hand-harvested fields. Those fields include for example Field 13. By contrast the predictions for Field 52 match the actual situation.

**Table 41 - Comparison of the actual and predicted harvested intervals for tea reported as mechanically-harvested and not pruned in the first 10 months of 2018**

| Field | Prune date | 1st record | 2nd record | Actual (days) | Max (day) | Phyllochron (days) | Mean $QI_5$ (days) | Mean $QI_3$ (days) |
|---|---|---|---|---|---|---|---|---|
| 3 | 15/02/2017 | MH | MH | 29 | 83 | 22 | 9 | 22 |
| 6 | 15/11/2016 | MH | MH | 32 | 109 | 23 | 9 | 21 |
| **13** | **15/11/2018** | **MH** | **HP** | **17** | **29** | **25** | **9** | **21** |

(continued)

| Field | Prune date | 1st record | 2nd record | Actual (days) | Max (day) | Phyllochron (days) | Mean QI$_5$ (days) | Mean QI$_3$ (days) |
|---|---|---|---|---|---|---|---|---|
| 14 | 15/11/2016 | MH | MH | 26 | 56 | 22 | 11 | 21 |
| 26 | 03/01/2019 | MH | SP | 18 | 32 | 26 | 11 | 20 |
| 27 | 02/07/2019 | MH | MH | 28 | 46 | 25 | 10 | 22 |
| 38 | 15/05/2017 | MH | MH | 19 | 30 | 22 | 10 | 22 |
| 39 | 15/02/2017 | MH | MH | 22 | 27 | 22 | 11 | 22 |
| 44 | 10/07/2019 | MH | MH | 28 | 46 | 25 | 11 | 20 |
| 52 | 17/05/2019 | MH | MH | 25 | 38 | 25 | 9 | 20 |
| 54 | 08/03/2019 | MH | MH | 24 | 32 | 25 | 10 | 22 |
| 55 | 05/07/2019 | MH | MH | 21 | 29 | 25 | 9 | 22 |
| 56 | 15/02/2017 | MH | MH | 22 | 27 | 22 | 10 | 22 |
| 63 | 24/05/2019 | MH | MH | 26 | 32 | 25 | 10 | 21 |
| 64 | 15/02/2015 | MH | MH | 25 | 29 | 26 | 10 | 22 |
| 65 | 15/08/2017 | MH | MH | 21 | 33 | 21 | 9 | 20 |
| **66** | **23/04/2019** | **MH** | **HP** | **14** | **21** | **25** | **10** | **21** |
| **66A** | **23/04/2019** | **MH** | **HP** | **14** | **21** | **25** | **10** | **21** |
| 67 | 06/05/2019 | MH | MH | 24 | 37 | 25 | 11 | 22 |
| 68 | 31/05/2019 | MH | MH | 27 | 37 | 25 | 10 | 21 |
| 69 | 17/04/2019 | MH | MH | 26 | 42 | 25 | 12 | 22 |
| 70 | 16/04/2019 | MH | MH | 26 | 34 | 25 | 11 | 18 |
| 71 | 28/05/2019 | MH | MH | 26 | 32 | 25 | 10 | 20 |
| **72** | **09/04/2019** | **MH** | **HP** | **15** | **19** | **25** | **11** | **22** |
| 87 | 14/02/2019 | MH | MH | 27 | 45 | 26 | 9 | 19 |
| 88 | 29/04/2019 | MH | MH | 24 | 36 | 25 | 11 | 21 |
| **89** | **20/02/2019** | **MH** | **MH/HP** | **17** | **26** | **25** | **9** | **21** |
| 90 | 15/08/2015 | MH | MH | 16 | 34 | 25 | 11 | 23 |
| 91 | 15/08/2015 | MH | MH | 22 | 35 | 25 | 11 | 20 |
| **94** | **30/07/2019** | **MH** | **MH/HP** | **17** | **34** | **25** | **11** | **22** |
| **94B** | **15/11/2018** | **MH** | **MH/HP** | **17** | **34** | **25** | **11** | **22** |
| | | | | 22.4 | 37.6 | 24.5 | 10 | 21 |

Pruned mechanically harvested

The mean interval predicted using phyllochron is generally similar to that predicted for mechanically harvested leaf in the year of prune (Table 42). including the interval correction of eight phyllochrons for the year of prune can work quite well (Fig 109).

**Table 42** - **Comparison of the actual and predicted harvested intervals for tea reported as mechanically-harvested and pruned in the first 10 months of 2018**

| Field | Prune date | 1st record | 2nd record | Actual (days) | Max (day) | Phyllochron (days) | Mean QI$_5$ (days) | Mean QI$_3$ (days) |
|---|---|---|---|---|---|---|---|---|
| 4 | 15/02/2018 | MH | HP | 20 | 72 | 21 | 7 | 18 |
| 5 | 15/02/2018 | MH | MH | 21 | 87 | 21 | 11 | 22 |
| 40 | 15/02/2018 | MH | MH | 21 | 68 | 21 | 7 | 20 |
| 73 | 15/02/2018 | MH | MH | 25 | 77 | 21 | 7 | 22 |
| Mean | | | | **22** | **76** | **21** | **8** | **20** |
| 41 | 15/05/2018 | MH | MH/SP | 22 | 114 | 24 (27) | 10 | 20 |
| 42 | 15/05/2018 | MH | MH | 26 | 113 | 23 | 7 | 18 |

(continued)

| Field | Prune date | 1st record | 2nd record | Actual (days) | Max (day) | Phyllochron (days) | Mean QI$_5$ (days) | Mean QI$_3$ (days) |
|---|---|---|---|---|---|---|---|---|
| 62 | 15/05/2018 | MH | MH | 23 | 90 | 22 (25) | 8 | 21 |
| 82 | 15/05/2018 | MH | HP | 24 | 106 | 21 | 8 | 18 |
| Mean | | | | **24** | **106** | **23** | **8** | **19** |
| **45** | **15/08/2018** | **MH** | **MH/SP** | **14** | **28** | **24** | **9** | **21** |
| **46** | **15/08/2018** | **MH** | **MH/SP** | **19** | **43** | **24** | **9** | **22** |
| 47 | 15/08/2018 | MH | MH | 33 | 48 | 25 | 13 | 25 |
| 77 | 15/08/2018 | MH | MH | 27 | 112 | 24 | 7 | 17 |
| Mean | | | | **23** | **58** | **24** | **10** | **21** |
| Mean | | | | **23** | **80** | **23** | **9** | **20** |

The predicted harvested interval, based on phyllochrons, is much more consistent than that achieved in practice (Fig 110). The correlation between the predicted and the actual harvest interval for mechanically-harvested tea, when forced through the origin, is close to a 1:1 line. Before the prune-correction, the initial phyllochron calculations did not address the long interval immediately after prune. The mean predicted harvest interval per field using the phyllochron method is broadly similar to that predicted using a quality index based on a minimum harvestable shoot length of 3 cm (Fig 111).

Conclusions

Sometimes the QI_3cm method in CUPPA-Tea provides similar intervals to the actual and phyllochron measures. This suggests that the harvested quality is relatively consistent.

The phyllochron method for scheduling harvest interval results in a robust interval scheduling programme that is based on the response of tea to temperature and drought stress.

The presented phyllochron method assumes different algorithms for hand-, shear-, and mechanical harvested tea, although hand- and shear- are assumed at present to be the same.

The use of multipliers with the phyllochron method accounts for the time from prune. A comparison of predicted harvest intervals using phyllochrons with the actual harvest intervals identified several outliers. However subsequent analysis indicate that this can be explained by incorrect specification of the harvest method. The use of updated data on harvest methods in 2018 reassuringly addresses the principal outliers.

We have used a routine of setting the first harvest after pruning to 8 phyllochrons which appears to work well as an initial approach for harvest interval scheduling.

There remains an observation that the phyllochron method is often not sufficiently sensitive enough to drought. There remains the possibility of recalibrating the experimental response related to a potential SWD to one based on actual SWD. However,the harvest intervals for some tea (especially seedling tea) continued at a similar length through drought periods, whereas perhaps some clones may be more sensitive. This could be one aspect of clonal variations to be examined in the future.

The changes to the CUPPA-Tea code are presented in Appendix D.

**Model modifications to simulate the effects of pruning**

**Modifications to address Yields after Pruning**

The height of the plucking surface rises during the process of tea production. Under experimental conditions in Tanzania, the annual height rise was 5-10 cm for hand-harvested tea and 1-14 cm for shear and mechanically harvested tea (Burgess, 1992). Under commercial conditions, the height rise is typically greater: (TRFK, 1986) reported an annual height rise of 20 cm for hand harvested tea, reaching a height of 120-150 cm after four years. These height rises means that it is desirable to prune back the tea canopy to a height between 45 and 75 cm, i.e. a mean of 60 cm. typically every four years.

(TRFK, 1986) recommend that tipping should occur at a height of 100 mm above the pruning level. Hence if pruning occurs at 600 mm, then plucking should occur at 700 mm. At present the CUPPA-Tea assumes a default and constant plucking height of 750 mm. If 700 mm is assumed as an initial value and an increase by 150 mm per year, 1300 mm would be reached after four years.

Discussed herein are modifications to CUPPA-Tea to improve how the model addresses pruning.

### Initial yields after pruning and base heights

The original CUPPA-Tea model was developed to describe the shoot growth of unpruned tea. One effect of this, is that pruning followed by a long interval to the first harvest results in an erroneous peak in yield (Fig 112).

### Updating the change in minimum harvestable shoot length

In an analysis of the harvest interval data (Burgess, et al., 2020), it was found that a "minimum harvestable shoot length" of 5 cm was resulting in shoots with more than four leaves being unharvested, and this was increasing the volatility of the quality calculations. Changing the minimum harvestable shoot length of 3 cm reduced the proportion of shoots with more than four leaves, and improved the quality index calculations. (Burgess, et al., 2020) also showed that a harvest interval, calculated using the "quality index QI_3cm method" in CUPPA-Tea also predicted similar intervals to the actual and phyllochron measures.

The effect of changing from a 5 cm to a 3 cm minimum harvestable shoot length is shown for Field 5 in Fig 112. The main effect is to increase the harvested yield, as more shoots are harvested. However, the yield peak in May 2018 after pruning in February 2018 is still apparent.

### Base heights and table heights

As observed in Fig 112, the default CUPPA-Tea model is predicting erroneously large yields in the first tipping event after pruning. In the default model, the table heights and base heights before and after pruning are about 75 cm. The "base height" of a tea shoot is the height from the soil surface to the base of the tea shoot. The "table height" defines the distance from the ground to the height of harvest.

At initiation, the base height of a new shoot is assumed to equal the table height (Fig 113). At some stage most shoots will become harvestable.

The algorithm for calculating the harvested shoots from hand harvested shoots is:

- If 'leaf count' > 0, AND

- If 'leaf count' > 'pluck to leaf' AND

- If 'observed length' > 'shear height' AND

- 'base height' + 'base position of top leaf' >= 'table height'

The original parameters in CUPPA-Tea were 'pluck to leaf' = 1, 'shear height' = 5 cm, and 'table height' = 75 cm. As described above, the "shear height" is the minimum harvestable shoot length, and this was reset to 3 cm in the modified CUPPA-Tea .

The base height of a shoot can increase after the first harvest, if the shoot is plucked back to the first leaf. The exact point of the pluck is determined (I: cm from base of the shoot plucked from just above the 'fish' or first leaf which is left on the bush). The new shoot comes from the axil of this leaf. The fresh wt calculated from the stage of the shoot (leaf no.) and dry wt from fresh wt using DM%. If the shoot has more than 3 leaves, then 3 leaves are plucked, and the remainder are 'broken-back' to the fish-leaf.

**Table 43 - Description of how observed length and base height are set and reset in CUPPA-Tea**

| Parameter | When Set/Reset |
|---|---|
| Observed Length | 1. = 0 when Shoot is reset<br>2. = observed length + (lengr(depending on growth stage) * factor (shootgr/ shootdemand)) - this is in the grow routine, within the dry matter routine |
| Base Height | When Shoot is reset:<br>1. For new shoots - base height = table height<br>2. On frost damage - base height = current base height<br>3. On plucking - Base height = base height + base position of remaining leaf or 0 |

(continued)

| Parameter | When Set/Reset |
|---|---|
| Shoot is reset | 1. When creating new shoots at start of modelling<br>2. On frost damage<br>3. On plucking |
| Table Height | Unchanged |
| Growth Stage | 1. = 0 when shoot is reset<br>2. Shoot develop<br>a. GS = 0, If not dormant set gs = 1<br>b. GS = 1, if ob_dvs > = nextdvs set gs = 2<br>c. GS = 2, if c_nlv >= lastleaf, set gs = 0<br>3. = 0 when dormant (randomly selected when in stage 0) |
| Leaf Count | 4. = 0 when shoot is reset |
| | 5. Add new leaf in shoot development, see below |

**Effect of changing shoot base height after pruning**

After an initial focus on changing shoot numbers, the proposed approach to address the high yield after pruning was to reset the base height. An initial analysis indicated that a change in base height of 15 cm, i.e. from 75 cm to 60 cm, appeared promising.

The change, shown in Fig 114, Fig 115, Fig 116, was:

1. On day of prune, change mean base height for all shoots to 600 mm, and change mean table height at pruning in config file to 750 mm.

2. The table height should remain at 750 mm for the first three harvests (tipping). The height of the surface at tipping should be constant at this time.

Resetting the base height removes the yield peak that otherwise occurs at the first harvest after pruning (Fig 114, Fig 115, Fig 116).

Fig 114 shows that the effect of including a new base height from prune in Field 5. This correction corrects the high yields and synchronisation of growth immediately after prune (assuming a constant 650 shoots/m$^2$).

Field 13 is a 13.7 ha field comprising hand-plucked seedling tea (planted in 1929). The tea was pruned on 21 November 2018. In Fig 115, it is shown that including a new base height from prune for Field 13 corrects the high yield on 22 February 2019 after pruning in November 2018 (assuming a constant 650 shoots/m$^2$).

Field 25 is a 7.6 ha of seedling tea planted in 1952. It was pruned on 28 August 2017, hand-plucked in 2018, and shear plucked in 2019. In Fig 116, it is shown that including a new base height from prune for Field 25 reduces the high yield immediately after prune on 23 December 2017 (assuming a constant 650 shoots/m$^2$).

**What is the effect of a different table height?**

A brief analysis was completed on Field 5 to determine if the yields at a table height of 70 cm declining to 55 cm are similar to the yields from a table height of 75 cm declining to 60 cm. Analysis of the data shown in Fig 117 suggests that the results are exactly the same. Fig 117 shows that the yields assuming a table height of 75 cm declining to 60 cm are the same as assuming a table height of 70 cm declining to 55 cm.

**Analysis of continued reduced yields after prune**

The creation of a new base height after pruning seems to remove the erroneous high yields in the first yield after harvest (Fig 114, Fig 115, Fig 116). However, it was noticed that CUPPA-Tea was predicting lower yields into the second year after pruning. For example for Field 5, the predicted yields (excluding the first yield) were 23% lower than before the modification (Fig 118).

Additional analysis demonstrated that the base height of about 12% of the shoots (60 shoots) remain at 60 cm.

There are two shoots with a high base height, but the majority of shoots remains about 73-85 cm (Fig 119, Fig 120). Fig 119 shows that after pruning to a base height of 60 cm after prune in Field 5, the base height of some shoots remains at 65 cm. Fig 121 shows that the distribution of the base height in Field 5 at the end of 2019.

Based on the above analysis, it was double-checked that the maintenance of 60 shoots at 60 cm was not due to the "breaking back" routine. Breaking back occurs, for example, when a harvester faced with a shoot with five unfurled leaves, will pluck a shoot with three unfurled leaves and then break back the remaining part of the shoot removing the two older leaves.

The default CUPPA-Tea model is parameterised so that shoots with more than 3 leaves are plucked as shoots with 3 leaves, and the remainder of the leaf is broken back. This is meant to be the case with hand-harvested leaf, but it is unlikely to occur with machine harvested leaf. The absence of breaking back is noted as one of the main differences between hand and shear harvesting.

In the default set-up of CUPPA-Tea, breaking back is disabled. Adding "breaking back" (e.g. breakback = true) means that the yields recorded were lower than before, as the proportion of leaf that is more than three leaves is not included (Fig 118). The effect of adding the breakback routine is that the base height remained at close to 60 cm (Fig 119). Hence at this stage it is appropriate that the breakback routine was disabled

With reference to Fig 121 and Fig 122(a) and (b), it can be seen that the effect of enabling "break-back" alongside pruning in Field 5 is to substantially lower yields. Also the effect of including "break-back" was to stop the increase in the base height of the shoots after pruning.

To determine why about 12% of the shoots were not progressing beyond a base height of 50 cm, the growth of one such shoot (number 5 in Field 5) is shown in Fig 123. The shoot has a very low development rate. The equation below, within the shoot growth routine, means that the growth stage is reset to 0 (i.e. as a bud), as soon as the shoot exits dormancy.

$$\text{If } (c\_nlv = \text{last leaf}) \ (gs = 0; \ c\_nlv = 0)$$

Fig 123 shows that the growth stage of some shoots is automatically reset back to banjhi as soon as they escape banjhi, if the assumed development and extension rates are very low.

One considered approach was to modify the coefficient of variation (default = 0.3) of the extension and development rate of the shoots. Choosing a lower co-efficient of variation (e.g. 0.2) seems to result in higher yields after pruning, and a higher co-efficient of variation (e.g. 0.4) seems to result in lower yields. Fig 124 shows this analysis of the effect of the co-efficient of variation of shoot extension and development on the predicted yields (Field 5; 3 cm minimum harvestable shoot length; 75 cm to 60 cm prune).

A further approach was to set the "last leaf" for at prune to i) 7 and ii) 10. As noted in the CUPPA Tea Technical Manual (Matthews & Stephens, 1996), there is a function called *"meanlastleaf"* which specifies the mean number of leaves unfurled before the shoot becomes dormant. Immediately after the bush is pruned, because of the low number of shoots, individual shoots tend to extend further than when the tea has been unpruned for some time. When the base height of shoots is reset after pruning, there is a need to allow a higher *"meanlastleaf"* so that the shoot can reach the new plucking height. Hence, during the first 10 months from pruning, the "last leaf" was raised to 7 or 10.

The model was first run with the last leaf set to 7 or 10, if the base height was less than the table height. The results were stored in a spreadsheet.

**Table 44 - Some of the default parameters when resetting the last leaf after prune**

| Parameter | Setting |
|---|---|
| Table height | 75 cm |
| Coefficient of variation | 0.3 |
| Break back | False |
| Shoot number | 650 |
| On first day (initialisation): Set base height of each shoot to: | Table height |
| On prune: Set base height of each shoot to: | 60 cm |
| On pluck: | Adjust base height of each shoot based on base position of previous remaining leaf (existing model code). |

The method allows removal of the first yield peak after pruning (Fig 125). There is a period when the yields are then higher than predicted before the prune, but then the yields follow a similar pattern to that observed before. The base height of the shoots grow back to the level of the table height within about nine months (Fig 126).

Fig 125 shows an analysis of the effect of setting the last leaf to 7 if the base height is less than the table height in Field 5. Fig 126 shows the updated algorithm for when base height is less than table height meant that all shoots moved up to table height within about 9 months.

A second approach is to set the last leaf to 7 or 10 only if it is a prune event. The data were stored in a spreadsheet.

Fig 127 shows an analysis of the effect of setting the last leaf to 7 or 10 in Field 5 for the prune event only. Fig 128 shows the updated algorithm for just the pruning event meant that all shoots moved up to the table height within about nine months. For setting lastleaf=7, all shoots moved from base height of 60 cm within 12 months of prune. For setting lastleaf=10, all shoots moved from base height of 60 cm within 10 months of prune.

A decision was taken that to just reset the last leaf at only the time of prune was physiologically more coherent.

**Testing the algorithm on other fields**

The proposed pruning algorithm (resetting the last leaf to 7 or 10 at pruning only) was examined on six other fields: initially Fields 13 and 25, and then Fields 8, 13, 25, 29, 55 and 58.

Field 13 is a hand plucked field. Resetting the base height at pruning removes the yield peak for the first harvest after prune, and the modified last leaf values increase the yields following pruning (Fig 129). Within a year, the shoots were only appearing from just below the table height.

Fig 129 shows an analysis of the effect of setting the last leaf to 7 if the base height is less than the table height for Field 13. Fig 130 and Fig 131 show an analysis of the effect of setting the last leaf to 7 or 10 (respectively) at pruning on the assumed base height for Field 13.

Field 25 is a shear-harvested field. The resetting of the base height at pruning removes the yield peak for the first harvest after pruning, and the modified last leaf values maintains the yields in the second year following pruning (Fig 132). In this case, choosing a last leaf value of 7 appears to give better results for the first yield after prune than assuming a last leaf value of 10.

Fig 132 shows an analysis of the effect of setting the last leaf to 7 or 10 at pruning for Field 25.

in the analysis for Field 25, the increase in baseline values seems more incremental assuming 7 last leaves rather than 10 (Fig 133 and Fig 134).

Fig 133 and Fig 134 show a graph showing the effect of setting the last leaf to 7 or 10 (respectively) at pruning, on the assumed base height for Field 25.

Field 8 is Clone 225, which is mechanically harvested and was pruned on 5 May 2017 (Fig 135). Assuming a last leaf of 7 appears reasonable.

Field 29 comprises a mixture of clones including 31/8 which is shear harvested and was pruned on 24 May 2017 (Fig 136). Assuming a last leaf of 7 appears reasonable.

Field 55 comprises clone MRT which is mechanically harvested and is reported as pruned on 5 July 2019 (Fig 137). However harvests are reported on 26 July, 9 August and 21 August. An analysis of the data would suggest that the prune took place on 12 April 2019. Assuming a last leaf of 7 appeared reasonable.

Field 58 comprises seedling tea which is hand harvested and is reported as pruned on 15 July 2019 (Fig 138). The yields assuming a last leaf of 7 appear better than 10.

**Time from prune to first harvest**

The seven examined fields can be used to determine the mean time from prune to first harvest (Table 45). The time between the last harvest before prune and the first harvest after prune is about 106 days. This is similar to a value of 90 days reported by UTK for the timing from pruning for the first tipping.

**Table 45** - **Calculated time from prune to first harvest for the seven selected fields.**

| Field | Clone | Specified prune date | Last harvest before prune | First harvest after prune | First harvest-assumed prune (days) | First harvest - last harvest (days) |
|---|---|---|---|---|---|---|
| 5 | 225 | 1 Feb 2018 | 9 Feb 2018 | 7 May 2018 | 95 | 87 |
| 8 | 225 | 8 May 2017 | 4 May 2017 | 29 Aug 2017 | 113 | 117 |

(continued)

| Field | Clone | Specified prune date | Last harvest before prune | First harvest after prune | First harvest - assumed prune (days) | First harvest - last harvest (days) |
|---|---|---|---|---|---|---|
| 13 | Seedling | 21 Nov 2018 | 20 Nov 2018 | 22 Feb 2019 | 93 | 94 |
| 25 | Seedling | 28 Aug 2017 | 28 Aug 2017 | 23 Dec 2017 | 117 | 117 |
| 29 | Mix 31/8 | 24 May 2017 | 23 May 2017 | 9 Sept 2017 | 108 | 109 |
| 55 | MRT | 5 July 2019 | 12 Apr 2019 | 26 July 2019 | 21 | 105 |
| 58 | Seedling | 15 July 2019 | 11 Jul 2019 | 5 Nov 2019 | 113 | 117 |
| Mean | | | | | 94 | 106 |

in an initial analysis it was assumed that the time from pruning to the first harvest was 8 phyllochrons (Burgess, et al., 2020). Assuming that a phyllochron at a temperature of 18°C takes 7 days. Hence 8 phyllochrons is about 56 days. However, the original analysis did not account for the time for the shoot to extend from a base height of 60 cm to 75 cm. Assuming that the maximum leaf internode length of 3 cm (Burgess, 1992) (page 54), then an additional five phyllochrons are needed before the shoot becomes harvestable. Hence 13 phyllochrons are needed between pruning and the first tipping. Hence at 18°C (and assuming no drought stress), $13 \times 7 = 91$ days are needed.

Hence there is a logical argument to increase the phyllochron from pruning to tipping to 13 phyllochrons (8 for development from bud to shoot, and 5 for height development).

**Conclusions**

1. The default CUPPA-Tea model predicts a high yield for the first harvest after pruning, as the model assumes a constant table height and base height for the shoots.

2. CUPPA-Tea was changed so that the length and development stage of shoots is reset at pruning and the base height is reduced by 15 cm below the table height seems to result in appropriate yields for the initial harvests after prune.

3. This approach for dealing with high initial yields seems physiologically more coherent than an original focus on modifying the shoot number (Appendix E). Because the harvest interval changes with time from pruning, it would be wise to determine the effect of changing the harvest interval alone on yields before adjusting shoot numbers.

4. An important parameter is the change in base height. The predicted yields when the base height declines from 75 cm to 60 cm are the same as those if the base height declines from 70 cm to 55 cm.

5. In the initial studies, a long-term yield decline occurs from resetting the base height as about 12% of the shoots, originating at 50 cm, do not extend beyond the table height of 75 cm. This is not a result of an assumption regarding breaking back. This was because the slowest growing shoots becoming banjhi, and an equation within the development routine setting such shoots back to banjhi even when they do escape dormancy. A method to prevent this is to assume that the last leaf for each shoot initiated at prune is fixed at a large number. The output of some initial analyses suggest that inputting a last leaf number of 7 resulted in lower yields than 10.

6. There is an argument that the phyllochron between pruning and first tipping should be increased from 8 to 13.

**Changes in Code**

Underlined text - changed code.
Black text = existing code
Summary of changes made:

1. Add base height to model parameters
2. If simulation date matches prune date then reset all shoots and shoot base height to base height from model parameters
3. Add True/False flag to reset shoots to indicate if prune or not
4. In reset shoot if prune reset lastleaf to 7 instead of calculation

**Data to pass to CUPPA**

Add Prune Base Height to Model Parameters under initial conditions and set to 60 cm

1. "PruneBaseHeight": 60,

**Code Changes**

**TeaModel.cs**

1. In *GetInputData* routine, add base height:

```
no3 = config["InitialConditions"]["NO3"];
teaGrowthobj. PruneBaseHeight = config["InitialConditions"]["PruneBaseHeight"];
```

**Teagrowth.cs**

1. Add prune base height as class variables

```
// AH 26/02/2020 add prune date
public DateTime _prunedate { get; set;}
public DateTime _startDate { get; set; }
public double PruneBaseHeight { get; set; }
```

2. In *Growth,* after Prunedate check, reset baseheight to prune base height parameter from model input parameters and also change phyllochron multiplier from 8 to 13:

```
// {if date of pruning then prune bush Data}
if (PruneDate(simDate))
{
_bushobj.Prune();
_phenoCode = "Pr";
_phenoString = "Pruning";
_Phyllomult = 13;
bushobj.Prune( PruneBaseHeight);
```

**Bush.cs**

1. In *FrostDamage,* pass false as new parameter to reset shoots:

```
_shoot[i].ResetShoot(_shoot[i].BaseHeight, a, b, c, d, _meanLastLeaf, _slDevRatel,
_s1DevRateMin, false); // {reset new shoot parameters}
23
```

2. In Prune, reset shoots and base height:

```
public void Prune(double resetpruneheight)
{
double a = 0;
double b = 0;
double c = 0;
double d = 0;
// reset every shoot back to base height
foreach (Shoot sht in shoot)
{
GetNewParameters(ref a, ref b, ref c, ref d);
sht.ResetShoot(resetpruneheight, a, b, c, d, meanLastLeaf, slDevRatel, slDevRateMin,
true); // {reset new shoot parameters}
}
}
```

3. In *Pluck*, pass false as new parameter to reset shoots:

sht.ResetShoot(sht.BaseHeight + new_bp, a, b, c, d, _meanLastLeaf, _slDevRatel, _s1DevRateMin, false); // {reset new shoot parameters}

**Shoot.cs**

1. In *Shoot*, pass false as new parameter to reset shoots: sht.ResetShoot(sht.BaseHeight + new_bp, a, b, c, d, _meanLastLeaf, _slDevRatel, _s1DevRateMin, false); // {reset new shoot parameters}
2. In *ResetShoot*, pass add new parameter flag to indicate if prune: public void ResetShoot(double ht, double sIDR, double s2DR, double slER, double s2ER, double meanLastLeaf, double slDevRatel, double slDevRateMin, Boolean prune)
3. In *ResetShoot*, if prune reset lastleaf to 7:

```
if (meanLastLeaf < 0) { _lastLeaf = 7; }
else
{
if (prune==false)
{
_lastLeaf = (int)Math.Round(Utility.Limit(meanLastLeaf * (sIDR - slDevRateMin) /
(slDevRatel - slDevRateMin), 1, 10));
}
else { lastLeaf = 7;}
```

**Resetting Leaf Appearance Rate (LAR) on Prune**

The leaf appearance rate (LAR) is an accumulation of the daily leaf appearance rate. This is reset to 0 on plucking but not on prune. The change tested was to reset LAR on prune as well so that the days to harvest would be from prune rather than from harvest. Field 58 was selected with a harvest date of 11 July 2019 and a prune date of 21 July 2019, ten days later.

Fig 139 and Table 46 and Table 47 show the two accumulated LAR from running the model prior to the change and after adding the reset of LAR in prune. Prior to the change the accumulated LAR reached 13 phyllochrons on 7 October 2019. After changing the model to reset on prune as well the accumulated LAR reached 13 phyllochrons on 17 October 2019, ten days later.

The change successfully moved the date when 13 phyllochrons was reached. The code changes required for this amendment is presented below and consists of just 1 line of code to set LAR = 0 when the prune date is reached.

**Changes to code**

Underlined text - changed code.
Normal text = existing code

1. In TeaGrowth.cs

    a. In Growth, after check if prune date is current date, add reset of LAR:

```
// {if date of pruning then prune bushData}

if (PruneDate(simDate))

{

    _phenoCode = "Pr";

    _phenoString = "Pruning";

    _Phyllomult = 13;

    1126/03/21 AH reset accumulated Leaf appearance rate on prune

    LAR = 0;
```

**Table 46 - Overview results of Field 58 with reset of LAR on harvest only**

| Field | Date | Predicted Harvest (kg/Ha) | Total Banji Shoots | 1+B | 2+B | 3+B | 4+B | 5+B | Accumulated LAR | Phyllo | Daily LAR |
|---|---|---|---|---|---|---|---|---|---|---|---|
| 58 | 11/07/2019 | 58 | 12 | 0 | 23 | 10 | 0 | 0 | 0 | 2.97 | 0.15 |
| 58 | 12/07/2019 | 0 | 0 | 0 | 5 | 0 | 0 | 0 | 0.11 | 2.97 | 0.11 |
| 58 | 13/07/2019 | 0 | 0 | 0 | 10 | 1 | 0 | 0 | 0.24 | 2.97 | 0.13 |
| 58 | 14/07/2019 | 0 | 0 | 0 | 16 | 4 | 0 | 0 | 0.37 | 2.97 | 0.13 |
| 58 | 15/07/2019 | 0 | 0 | 0 | 27 | 5 | 0 | 0 | 0.5 | 2.98 | 0.12 |
| 58 | 16/07/2019 | 0 | 1 | 0 | 29 | 6 | 0 | 0 | 0.62 | 2.98 | 0.12 |
| 58 | 17/07/2019 | 0 | 3 | 0 | 38 | 8 | 0 | 0 | 0.78 | 2.98 | 0.16 |
| 58 | 18/07/2019 | 0 | 3 | 0 | 48 | 12 | 0 | 0 | 0.93 | 2.98 | 0.15 |
| 58 | 19/07/2019 | 0 | 4 | 0 | 57 | 18 | 0 | 0 | 1.08 | 2.98 | 0.15 |
| 58 | 20/07/2019 | 0 | 5 | 0 | 68 | 23 | 0 | 0 | 1.23 | 2.98 | 0.15 |
| 58 | 21/07/2019 | 0 | 0 | 0 | 0 | 0 | 0 | 0 | 1.38 | 13 | 0.15 |
| 58 | 22/07/2019 | 0 | 0 | 0 | 0 | 0 | 0 | 0 | 1.53 | 13 | 0.14 |
| 58 | 23/07/2019 | 0 | 0 | 0 | 0 | 0 | 0 | 0 | 1.66 | 13 | 0.13 |
| 58 | 24/07/2019 | 0 | 0 | 0 | 0 | 0 | 0 | 0 | 1.82 | 13 | 0.16 |
| 58 | 05/10/2019 | 0 | 0 | 0 | 1 | 0 | 0 | 0 | 12.73 | 13 | 0.11 |
| 58 | 06/10/2019 | 0 | 1 | 0 | 1 | 0 | 0 | 0 | 12.87 | 13 | 0.14 |
| 58 | 07/10/2019 | 0 | 1 | 0 | 1 | 0 | 0 | 0 | 13.02 | 13 | 0.15 |
| 58 | 08/10/2019 | 0 | 1 | 0 | 3 | 0 | 0 | 0 | 13.16 | 13 | 0.14 |
| 58 | 09/10/2019 | 0 | 1 | 0 | 3 | 0 | 0 | 0 | 13.3 | 13 | 0.14 |
| 58 | 10/10/2019 | 0 | 3 | 0 | 3 | 0 | 0 | 0 | 13.44 | 13 | 0.14 |
| 58 | 11/10/2019 | 0 | 3 | 0 | 4 | 0 | 0 | 0 | 13.59 | 13 | 0.15 |
| 58 | 12/10/2019 | 0 | 3 | 0 | 5 | 0 | 0 | 0 | 13.74 | 13 | 0.15 |
| 58 | 13/10/2019 | 0 | 3 | 0 | 5 | 0 | 0 | 0 | 13.88 | 13 | 0.14 |
| 58 | 14/10/2019 | 0 | 5 | 0 | 5 | 0 | 0 | 0 | 1402 | 13 | 0.14 |

(continued)

| Field | Date | Predicted Harvest (kg/Ha) | Total Banji Shoots | 1+B | 2+B | 3+B | 4+B | 5+B | Accumulated LAR | Phyllo | Daily LAR |
|---|---|---|---|---|---|---|---|---|---|---|---|
| 58 | 15/10/2019 | 0 | 6 | 0 | 6 | 0 | 0 | 0 | 14.17 | 13 | 0.15 |
| 58 | 16/10/2019 | 0 | 6 | 0 | 6 | 1 | 0 | 0 | 14.33 | 13 | 0.16 |
| 58 | 17/10/2019 | 0 | 8 | 0 | 8 | 1 | 0 | 0 | 14.48 | 13 | 0.15 |
| 58 | 18/10/2019 | 0 | 9 | 0 | 8 | 1 | 0 | 0 | 14.62 | 13 | 0.14 |
| 58 | 19/10/2019 | 0 | 10 | 0 | 10 | 1 | 0 | 0 | 14.76 | 13 | 0.14 |
| 58 | 20/10/2019 | 0 | 14 | 0 | 13 | 1 | 0 | 0 | 14.9 | 13 | 0.14 |
| 58 | 21/10/2019 | 0 | 19 | 0 | 13 | 1 | 0 | 0 | 15.05 | 13 | 0.15 |
| 58 | 22/10/2019 | 0 | 23 | 0 | 13 | 1 | 0 | 0 | 152 | 13 | 0.15 |
| 58 | 23/10/2019 | 0 | 25 | 0 | 14 | 1 | 0 | 0 | 15.33 | 13 | 0.13 |
| 58 | 24/10/2019 | 0 | 26 | 0 | 14 | 3 | 0 | 0 | 15.49 | 13 | 0.16 |
| 58 | 25/10/2019 | 0 | 29 | 0 | 17 | 3 | 0 | 0 | 15.65 | 13 | 0.16 |
| 58 | 26/10/2019 | 0 | 38 | 0 | 18 | 3 | 0 | 0 | 15.8 | 13 | 0.15 |
| 58 | 27/10/2019 | 0 | 39 | 0 | 18 | 1 | 0 | 0 | 15.95 | 13 | 0.14 |
| 58 | 28/10/2019 | 0 | 40 | 0 | 19 | 1 | 0 | 0 | 1609 | 13 | 0.14 |
| 58 | 29/10/2019 | 0 | 43 | 0 | 22 | 1 | 0 | 0 | 16.24 | 13 | 0.15 |
| 58 | 30/10/2019 | 0 | 45 | 0 | 25 | 1 | 0 | 0 | 16.38 | 13 | 0.14 |
| 58 | 31/10/2019 | 0 | 47 | 0 | 27 | 3 | 0 | 0 | 16.54 | 13 | 0.15 |
| 58 | 01/11/2019 | 0 | 48 | 0 | 30 | 3 | 0 | 0 | 16.67 | 13 | 0.14 |
| 58 | 02/11/2019 | 0 | 52 | 0 | 27 | 4 | 0 | 0 | 16.82 | 13 | 0.14 |
| 58 | 03/11/2019 | 0 | 53 | 0 | 31 | 4 | 0 | 0 | 16.97 | 13 | 0.15 |
| 58 | 04/11/2019 | 0 | 57 | 0 | 30 | 5 | 0 | 0 | 17.13 | 13 | 0.16 |
| 58 | 05/11/2019 | 195 | 58 | 0 | 34 | 5 | 0 | 0 | 0 | 13 | 0.16 |

**Table 47 - Overview results of Field 58 with reset of LAR on harvest and prune**

| Field | Date | Predicted Harvest (kg/Ha) | Total Banji Shoots | 1+B | 2+B | 3+B | 4+B | 5+B | Accumulated LAR | Phyllo | Daily LAR |
|---|---|---|---|---|---|---|---|---|---|---|---|
| 58 | 11/07/2019 | 58 | 12 | 0 | 23 | 10 | 0 | 0 | 0 | 2.97 | 0.15 |
| 58 | 12/07/2019 | 0 | 0 | 0 | 5 | 0 | 0 | 0 | 0.11 | 2.97 | 0.11 |
| 58 | 13/07/2019 | 0 | 0 | 0 | 10 | 1 | 0 | 0 | 0.24 | 2.97 | 0.13 |
| 58 | 14/07/2019 | 0 | 0 | 0 | 16 | 4 | 0 | 0 | 0.37 | 2.97 | 0.13 |
| 58 | 15/07/2019 | 0 | 0 | 0 | 27 | 5 | 0 | 0 | 0.5 | 2.98 | 0.12 |
| 58 | 16/07/2019 | 0 | 1 | 0 | 29 | 6 | 0 | 0 | 0.62 | 2.98 | 0.12 |
| 58 | 17/07/2019 | 0 | 3 | 0 | 38 | 8 | 0 | 0 | 0.78 | 2.98 | 0.16 |
| 58 | 18/07/2019 | 0 | 3 | 0 | 48 | 12 | 0 | 0 | 0.93 | 2.98 | 0.15 |
| 58 | 19/07/2019 | 0 | 4 | 0 | 57 | 18 | 0 | 0 | 1.08 | 2.98 | 0.15 |
| 58 | 20/07/2019 | 0 | 5 | 0 | 68 | 23 | 0 | 0 | 1.23 | 2.98 | 0.15 |
| 58 | 21/07/2019 | 0 | 0 | 0 | 0 | 0 | 0 | 0 | 0 | 13 | 0.15 |
| 58 | 22/07/2019 | 0 | 0 | 0 | 0 | 0 | 0 | 0 | 0.14 | 13 | 0.14 |
| 58 | 23/07/2019 | 0 | 0 | 0 | 0 | 0 | 0 | 0 | 0.27 | 13 | 0.13 |
| 58 | 24/07/2019 | 0 | 0 | 0 | 0 | 0 | 0 | 0 | 0.43 | 13 | 0.16 |
| | | | | | | | | | | | |
| 58 | 05/10/2019 | 0 | 0 | 0 | 1 | 0 | 0 | 0 | 11.35 | 13 | 0.11 |
| 58 | 06/10/2019 | 0 | 1 | 0 | 1 | 0 | 0 | 0 | 11.49 | 13 | 0.14 |
| 58 | 07/10/2019 | 0 | 1 | 0 | 1 | 0 | 0 | 0 | 11.64 | 13 | 0.15 |
| 58 | 08/10/2019 | 0 | 1 | 0 | 3 | 0 | 0 | 0 | 11.77 | 13 | 0.14 |
| 58 | 09/10/2019 | 0 | 1 | 0 | 3 | 0 | 0 | 0 | 11.92 | 13 | 0.14 |
| 58 | 10/10/2019 | 0 | 3 | 0 | 3 | 0 | 0 | 0 | 12.05 | 13 | 0.14 |
| 58 | 11/10/2019 | 0 | 3 | 0 | 4 | 0 | 0 | 0 | 12.21 | 13 | 0.15 |
| 58 | 12/10/2019 | 0 | 3 | 0 | 5 | 0 | 0 | 0 | 12.36 | 13 | 0.15 |
| 58 | 13/10/2019 | 0 | 3 | 0 | 5 | 0 | 0 | 0 | 12.5 | 13 | 0.14 |
| 58 | 14/10/2019 | 0 | 5 | 0 | 5 | 0 | 0 | 0 | 12.64 | 13 | 0.14 |

| Field | Date | Predicted Harvest (kg/Ha) | Total Banji Shoots | 1+B | 2+B | 3+B | 4+B | 5+B | Accumulated LAR | Phyllo | Daily LAR |
|---|---|---|---|---|---|---|---|---|---|---|---|
| 58 | 15/10/2019 | 0 | 6 | 0 | 6 | 0 | 0 | 0 | 12.79 | 13 | 0.15 |
| 58 | 16/10/2019 | 0 | 6 | 0 | 6 | 1 | 0 | 0 | 12.95 | 13 | 0.16 |
| 58 | 17/10/2019 | 0 | 8 | 0 | 8 | 1 | 0 | 0 | 13.1 | 13 | 0.15 |
| 58 | 18/10/2019 | 0 | 9 | 0 | 8 | 1 | 0 | 0 | 13.23 | 13 | 0.14 |
| 58 | 19/10/2019 | 0 | 10 | 0 | 10 | 1 | 0 | 0 | 13.38 | 13 | 0.14 |
| 58 | 20/10/2019 | 0 | 14 | 0 | 13 | 1 | 0 | 0 | 13.51 | 13 | 0.14 |
| 58 | 21/10/2019 | 0 | 19 | 0 | 13 | 1 | 0 | 0 | 13.66 | 13 | 0.15 |
| 58 | 22/10/2019 | 0 | 23 | 0 | 13 | 1 | 0 | 0 | 13.81 | 13 | 0.15 |
| 58 | 23/10/2019 | 0 | 25 | 0 | 14 | 1 | 0 | 0 | 13.94 | 13 | 0.13 |
| 58 | 24/10/2019 | 0 | 26 | 0 | 14 | 3 | 0 | 0 | 14.11 | 13 | 0.16 |
| 58 | 25/10/2019 | 0 | 29 | 0 | 17 | 3 | 0 | 0 | 14.27 | 13 | 0.16 |
| 58 | 26/10/2019 | 0 | 38 | 0 | 18 | 3 | 0 | 0 | 14.42 | 13 | 0.15 |
| 58 | 27/10/2019 | 0 | 39 | 0 | 18 | 1 | 0 | 0 | 14.56 | 13 | 0.14 |
| 58 | 28/10/2019 | 0 | 40 | 0 | 19 | 1 | 0 | 0 | 14.71 | 13 | 0.14 |
| 58 | 29/10/2019 | 0 | 43 | 0 | 22 | 1 | 0 | 0 | 14.85 | 13 | 0.15 |
| 58 | 30/10/2019 | 0 | 45 | 0 | 25 | 1 | 0 | 0 | 15 | 13 | 0.14 |
| 58 | 31/10/2019 | 0 | 47 | 0 | 27 | 3 | 0 | 0 | 15.15 | 13 | 0.15 |
| 58 | 01/11/2019 | 0 | 48 | 0 | 30 | 3 | 0 | 0 | 15.29 | 13 | 0.14 |
| 58 | 02/11/2019 | 0 | 52 | 0 | 27 | 4 | 0 | 0 | 15.43 | 13 | 0.14 |
| 58 | 03/11/2019 | 0 | 53 | 0 | 31 | 4 | 0 | 0 | 15.58 | 13 | 0.15 |
| 58 | 04/11/2019 | 0 | 57 | 0 | 30 | 5 | 0 | 0 | 15.75 | 13 | 0.16 |
| 58 | 05/11/2019 | 195 | 58 | 0 | 34 | 5 | 0 | 0 | 0 | 13 | 0.16 |

EP 4 388 867 A1

**Modelling the effects of soil organic content and pH on the yield responses of tea to nitrogen fertilizer**

Sustained high yields of tea rely on the supply of nitrogen from soil reserves, typically maintained by nitrogen (N) fertilisation. Modifications discussed herein enhanced the CUPPA-Tea model that simulates the development and growth of tea shoots by including the effects of nitrogen deficiency. The updated model accurately explained 78% of the variation in annual yields within a nitrogen and irrigation experiment in Tanzania and 79% of the variation in annual yields in a fertilizer experiment in Kenya. The slope of the relationship was 0.84 and 0.73 respectively, the root mean square error was 681 kg ha$^{-1}$ and 507 kg ha$^{-1}$, and the modelling efficiency was 0.80 and 0.75 respectively.

The model predicted that high soil organic carbon contents (4.0%) at the Kenyan site led to smaller yield responses to nitrogen application, than those in Tanzania where soil organic carbon content was lower (1.6%). The model also predicted small losses of nitrogen by denitrification and leaching due to the acidic soil conditions (pH < 4.5). In Tanzania, irrigation was predicted to result in around 10% higher nitrogen uptake than under unirrigated conditions. CUPPA-Tea proved to be a useful model in supporting decision making and providing accurate tea yield estimates, as well as predictions of N fate within the soil-plant-atmosphere continuum.

There is currently no prior art process-based tea model that simulates the effect of nitrogen on tea yields. Hence, this disclosure describes the inclusion of nitrogen algorithms into the CUPPA-Tea model, and its calibration and validation using measured tea yields in Tanzania and Kenya.

Model development

In the original CUPPA-Tea model, there was included draft coding for nitrogen, but the algorithms were not calibrated or validated and did not work (in that they were unphysical and failed to predict the impact of nitrogen on tea growth).

Initial nitrogen stock

The updated model, disclosed herein, assumes an initial nitrogen stock comprising nitrogen held as plant tissue, soil inorganic nitrogen, and soil organic nitrogen. The initial level of soil inorganic nitrogen, as $NO_3^-$ and $NH_4^+$ (mg per kg of soil) are specified for depths of 15, 50, 200, 320, and 500 cm (Appendix G - Table 57). The initial level of organic carbon is also specified for similar depth increments. The model assumes an initial soil organic C: soil organic N ratio of 40: 1 and an initial crop residue on soil surface of 1000 g m$^{-2}$. It also assumes an initial above-ground biomass of the canopy in terms of stem wood (2325 g m$^{-2}$) and green stems (200 g m$^{-2}$). This is multiplied by an initial assumed canopy N fraction of 0.0325, to give an initial canopy nitrogen value of 114 g m$^{-2}$. The model assumes an initial thick root weight of 1245 g m$^{-2}$, a fine root weight of 190 g m$^{-2}$, and a root residue weight (dead root weight) of 200 g m$^{-2}$. Assuming a proportion of nitrogen in the root of 0.01, results in value of 16 g N m$^{-2}$. Hence the initial plant nitrogen content is about 130 g N m$^{-2}$, or about 1300 kg N ha$^{-1}$.

Addition of nitrogen to system

The only assumed source of additional nitrogen is as mineral or organic fertilizer that can be added to the surface of the uppermost layer of the soil. It is assumed that nitrogen held in the form of nitrate and urea can move through the soil with the movement of water from upper to lower soil layers; ammonium is assumed not to be transported (Godwin & Jones, 1991). The model includes the capacity to include nitrogen from atmospheric deposition, but for this study that input was assumed to be zero. The model calculates a dynamic C:N ratio (*cnr*) (Equation 4) of the carbon as litter and dead roots relative to the nitrogen in those residues and the available as inorganic N. This is calculated from the proportion of carbon in the new organic matter (*Cfrac$_{new}$*; 0.4), and the addition of new organic N (*OrgN$_{new}$*; kg N ha$^{-1}$) (Equation 4) and the existing total N in the soil (*Ntot*; kg N ha$^{-1}$; which is the sum of ammonium and nitrate). Carbon pools are updated daily in *OM$_{new}$* by accumulating the quantity of each pool (carbohydrate, cellulose and lignin) per soil layer (i).

$$\text{Equation 4:} \qquad cnr = \frac{OM_{new[i]} \times Cfrac_{new}}{OrgN_{new[i]} + Ntot}$$

wherein:

cnr is the carbon to nitrogen ratio;

$OM_{new[i]}$ is the amount of carbon per soil layer [i];
$Cfrac_{new}$ is the proportion of carbon in the new organic matter;
$OrgN_{new[i]}$ is the amount of organic nitrogen added to the soil per soil layer [i];
$Ntot$ is the amount of existing total nitrogen in the soil.

For fresh organic matter the assumed N fraction is 0.02 and for humus the C and N fractions are 0.4 and 0.024 respectively.

Uptake, use and loss of nitrogen by the crop

The model assumes that the crop can only take up nitrogen in the form of inorganic ammonium ($NH_4^+$) and nitrate ($NO_3^-$) ions. It is assumed that quantity of N taken up is either constrained by the crop N demand or the N supply. The demand for N has two components: the demand by the existing canopy and roots, and the demand for canopy or root growth. The demand from the existing canopy is calculated as the product of the canopy weight ($W_{canopy}$) and the difference between a critical N level for the canopy (*CCNP*; default value: 4%) (i.e. the level below which the growth will be reduced) and the actual proportion of N in the canopy (*CANC*; %) (Equation 5). A similar relationship exists for the roots based on critical N level in the roots (*RCNP*) and the actual proportion of N in the roots (*RANC*) (Equation 6). The demand for nitrogen for new canopy growth depends on the potential growth rate of the canopy and the value of *CCNP* (Equation 7), and a similar relationship was assumed for the roots (Equation 8).

**Equation 5:** $$CanopyDemand = W_{canopy} \times (CCNP - CANC)$$

wherein:

*CanopyDemand* is the demand for nitrogen by the canopy of the tea plants;
$W_{canopy}$ is the canopy weight;
*CCNP* is the critical nitrogen level for the canopy;
*CANC* is the proportion of nitrogen in the canopy;

**Equation 6:** $$RootDemand = W_{root} \times (RCNP - RANC)$$

wherein:

*RootDemand* is the demand for nitrogen by the roots of the tea plants;
$W_{root}$ is the weight of the roots;
*RCNP* is the critical nitrogen level for the roots;
*RANC* is the proportion of nitrogen in the roots;

**Equation 7:** $$NewCanopyDemand = PotCanopyGrowth \times CCNP$$

wherein:

*NewCanopyDemand* is the demand for nitrogen for new growth of the canopy of the tea plants;
*PotCanopyGrowth* is the potential growth rate of the canopy;

**Equation 8:** $$NewRootDemand = PotRootGrowth \times RCNP$$

wherein:

*NewRootDemand* is the demand for nitrogen for new growth of the roots of the tea plants;
*PotRootGrowth* is the potential growth rate of the roots.

The summation of all these demands results in the total crop N demand. The potential N uptake across the soil profile (Tot*PotNUpt*) is calculated by adding up the potential uptake of $NH_4^+$ and $NO_3^-$ (Equation 9 and Equation 10). At each soil layer (Layer[i]), this is affected by the rooting density (RLv[i]; cm root (cm3 soil)$^{-1}$), the $NH_4^+$ and $NO_3^-$ concertation and their ease of extraction as depended on the soil-water status. Where *fNH4* and fNO3 are zero to unity availability factors (Equation 11 and Equation 12) calculated from soil $NH_4^+$ and $NO_3^-$concertation (0.006 kg N ha$^{-1}$ corresponds to the maximum daily uptake of $NH_4^+$ and $NO_3^-$ per unit length of root).

$$\text{Equation 9:} \quad PotNH_4\,Upt = 0.006 * 100 * RLv_{[i]} * Layer_{[i]} * fNH_4 * smdfr^2$$

$$\text{Equation 10} \quad PotNO_3\,Upt = 0.006 * 100 * RLv_{[i]} * Layer_{[i]} * fNO_3 * smdfr^2$$

$$\text{Equation 11} \quad fNH_4 = 1.0 - \exp\left(-0.03 * NH_{4[i]}\right)$$

$$\text{Equation 12} \quad fNO_3 = 1.0 - \exp\left(-0.03 * NO_{3[i]}\right)$$

A zero to unity soil-water factor (*smdfr*) reduces the potential N uptake as calculated from the relative availability of soil water (Equation 13 and Equation 14).

$$\text{Equation 13} \quad smdfr = \frac{sat[i] - swc[i]}{sat[i] - Dul[i]} \quad\quad if\ swc[i] > Dul[i]$$

$$\text{Equation 14} \quad smdfr = \frac{sat[i] - LL[i]}{Dul[i] - LL[i]} \quad\quad if\ swc[i] < Dul[i]$$

wherein *sat, swc, Dul,* and *LL* correspond to water at saturation, soil water content, drained upper limit, and lower limit at soil layer *[i]* respectively.

$$\text{Equation 15} \quad NUF = \frac{TotCropNDem}{TotPotNUpt}$$

In a situation where PotNSup is greater than the TotCropNDem, an NUF factor is used (Equation 15) to reduce the N uptake from each layer to the level of demand.

The effect of nitrogen on plant growth is related to a nitrogen deficiency index *(Nfac),* which typically ranges between 0 and 1, and is dependent on *CANC, CCNP* below which growth will be reduced, and a minimum N content (*CMNC* default value: 1%) below which N content never falls (Equation 16).

$$\text{Equation 16:} \quad Nfac = 1.0 - \frac{CCNP - CANC}{CCNP - CMNC}$$

wherein:

Nfac is the nitrogen deficiency index;
CCNP is the critical nitrogen level for the canopy;
CANC is the actual proportion of nitrogen in the canopy;
CMNC is the minimum nitrogen content below which nitrogen content never falls.

It is assumed that nitrogen stress can reduce both dry matter production and the rate of leaf area expansion and leaf senescence. The rate of dry matter production by the crop (*DMP*; kg DM ha$^{-1}$ d$^{-1}$) is determined as a function of the potential crop growth rate (PCGR; kg DM ha$^{-1}$ d$^{-1}$; Equation 17), a temperature factor (Tfac), and the minimum of either a water stress multiplier (*swdf1*; calculated from the water stress factor) or the value of *Ndef1* (Equation 18), where the value of *Ndef1* is defined by Equation 19. in Equation 17, S refers to solar radiation (MJ m$^{-2}$), *RUE* to radiation use efficiency (g MJ$^{-1}$), *kext* to extinction coefficient and *LAI* to leaf area index (m$^2$ m$^{-2}$).

Equation 17:
$$PCGR = S * RUE \times (1 - \exp(-kext \times LAI))$$

wherein:

PCGR is the potential crop growth rate of the tea plants;
S is the amount of solar radiation;
RUE is the radiation use efficiency;
kext is the extinction coefficient;
LAI is the leaf area index;

Equation 18:
$$DMP = PCGR \times Tfac \times Min(swdf1, Ndef1)$$

wherein:

DMP is the dry matter production of the tea plants;
Tfac is a temperature factor;
swdf1 is the soil water deficit factor;
Ndef1 is a value for nitrogen deficiency calculated using the following formula:

Equation 19:
$$Ndef1 = 0.9952 \times Nfac^2 - 0.0354 \times Nfac + 0.252$$

wherein Nfac is the nitrogen deficiency index.

The equation for *Ndef1* is based on a response described by (Godwin & Jones, 1991). However, it includes a y-axis intercept of 0.252, to ensure that dry matter production could still be positive following prune events even if no nitrogen was applied.

The nitrogen deficiency index is also used to modify the potential growth of leaves i.e. the leaf area expansion and leaf senescence. The rate of leaf extension (*LeafLength;* cm d$^{-1}$) depends on the shoot extension rate (*SER*), co-efficients for the temperature in day degrees (*Ddllen,* values from 0 to 1), day length (*Dlfac*; values from 0 to 1) and the minimum of co-efficients related to the saturation deficit (*Sdfac*), a water stress reduction factor (*SERwf*) and the nitrogen deficiency index (*Nfac*) (Equation 20). A similar relationship is also assumed for leaf area growth rate (Equation 21), where PotLeafArea refers to the potential leaf area.

**Equation 20:**

$$LeafLength = S2ER \times DDIlen \times DLfac \times Min(SDfac, Min(SERwf, Nfac))$$

wherein:

Leaf Length is the rate of leaf extension;
S2ER is the shoot extension rate;
DDIlen is the coefficient for temperature in day degrees;
Dlfac is the day length;
Sdfac is the coefficient of saturation deficit;
SERwf is the water stress reduction factor;
Nfac is the nitrogen deficiency index;

**Equation 21:**

$$LeafAgr = PotLeafArea \times DDIlen \times DLfac \times Min(SDfac, Min(SERwf, Nfac))$$

wherein:

*LeafAgr* is the leaf area growth rate;
*PotLeafArea* is the potential leaf area;
*DOllen* is the coefficient for temperature in day degrees;
*Dlfac* is the day length;
*Sdfac* is the coefficient of saturation deficit;
*SERwf* is the water stress reduction factor;
*Nfac* is the nitrogen deficiency index;

Lastly, nitrogen can be lost from the tea plant in four main ways. Firstly, N can be lost from harvested leaf. Crop N can be lost from the abscission of mature leaves and through pruning. The canopy N fraction (average value of 4.2%) is calculated daily as the quotient of the canopy N content and the canopy weight. On dates when the tea is pruned, the weight of the pruned canopy, and the associated nitrogen, is assumed to be added to the topsoil, within the fresh organic matter pool, for decomposition. Lastly crop N can be lost through root exudation, but the organic N is added to the fresh organic matter pool where it can be mineralized and made available to the plant again.

Nitrogen flows within the soil

The nitrogen routine includes assessments of the flux of nitrogen in terms of mineralisation, nitrification, denitrification, volatilisation, and leaching (Fig 140).

*Mineralisation*

The conversion of soil organic N to inorganic N primarily occurs through mineralisation. In CUPPA-Tea, decomposition of two types of organic matter is simulated: fresh organic matter (FOM), and the more stable humus (HUM). FOM is further subdivided into three pools: carbohydrate, cellulose and lignin. Decay constants (*rdecr*, Equation 22) are assumed to be 0.2, 0.05 and 0.0095 respectively (Seligman & van Keulen, 1981). Mineralisation is modified by a soil water factor (moisture factor *mf*; Fig 142a), a C:N ratio factor (*cnrf*; Fig 141a) and a soil temperature factor (Tf; Fig 141b). For the humus, which is more resistant to decay, the potential decay rate constant is small ($8.3*10^{-5}d^{-1}$), This is adjusted by *Tf* and *mf* also, but *cnrf* is not used. Another index (*HumMinFactor*) is used to adjust the humus mineralisation rate for some atypical soils (e.g. some volcanic ash soils, mineralisation is low, and on some freshly cultivated virgin soils, mineralisation is high).
The mineralisation rate ($N_{mineralise}$) is computed as the product of the new organic N ($OrgN_{new}$; kg ha$^{-1}$) and the fraction of organic matter pools from the total organic matter, and the reduction factors (with I indicating the type of pool; Equation 22). The level of $OrgN_{new}$ is updated daily as the sum of immobilized $NH_4^+$ and $NO_3^-$, minus $N_{mineralise}$ and the new humus N (Equation 23), assuming that 20% of N released from the new org. matter is added to the humus.

$$\text{Equation 22: } N_{mineralise} = OrgN_{new} \left( \frac{OMPools[i]}{TotOM} \right) Tf \times mf \times cnrf \times rdecr[i]$$

Wherein:

Tf is a temperature factor,

Mf is a moisture factor,

cnrf is a C:N ratio factor,

and rdecr[i] is the decay constants for carbohydrates, cellulose, and lignin.

$$\text{Equation 23: } OrgN_{new} = N_{imm}NH_4^+ + N_{imm}- -N_{mineralise} - HumusN_{new}$$

It is assumed that 2% is the N requirement for microbial decay of a unit of new organic matter (Equation 24, Equation 27, Equation 28); where TotAvailN is the sum of $NH_4^+$ and $NO_3^-$ and grcom Equation 25 refers to cumulative organic matter mineralization estimated as the product of the organic matter pools and the reduction factors.
Each day, a quantity of immobilised N ($N_{imm}$; kg ha$^{-1}$) is derived first from the $NH_4^+$ ($N_{imm}NH_4$) above a minimum level of 0.5 mg $NH_4^+$ (kg soil)$^{-1}$, then taken from the $NO_3^-$ pool ($N_{imm}NO_3$) down to the minimum level (min $NO_3^-$

concentration: 0.25 mg kg$^{-1}$ soil).

$$\text{Equation 24: } N_{imm} = limit\left(Grcom \times \left(0.02 - \frac{OrgN_{new}}{TotOM}\right), 0, TotAvailN\right)$$

$$\text{Equation 25: } Grcom = Grcom + loss$$

$$\text{Equation 26: } loss = OMPools_{[i]} \times Tf \times mf \times cnrf \times rdecr_{[i]}$$

$$\text{Equation 27: } N_{imm}NH_4^+ = Max\left(0, Min(N_{imm}, NH_4 - NH_4min)\right)$$

$$\text{Equation 28: } N_{imm}NO_3^- = Max\left(0, Min(N_{imm}, NO_3 - NO_3min)\right)$$

*Nitrification*

Nitrification is the process of biological oxidation of $NH_4^+$ to $NO_3^-$ that can occur under aerobic conditions. Factors that impact nitrification are: substrate $NH_4^+$, oxygen, soil pH, and temperature. Firstly, the effect of $NH_4^+$ supply on nitrification is calculated (Sane; Equation 29). The temperature factor, as calculated for mineralization (Tf), and a soil water factor for nitrification (wdf, Fig 142a) are used together with *Sanc* to determine an environmental limit (Elnc; Equation 30) on nitrification. A potential nitrification rate (*PotNitrR*; kg N ha$^{-1}$ d$^{-1}$) is then computed with a Michaelis-Menten kinetic function dependent only on ammonium (Equation 31; (McLaren, 1970)).

$$\text{Equation 29: } \qquad Sanc = 1 - exp(-0.01363 \times sNH_4)$$

$$\text{Equation 30: } \qquad Elnc = Min(Tf, wfd, Sanc)$$

The assumption is that a maximum of 80% of the ammonium pool can be nitrified in one day, where $NH_4$ and $sNH_4$ is the ammonium concentration (mg kg$^{-1}$ soil) and ammonium pool (kg ha$^{-1}$) respectively. The daily nitrification rate ($N_{nitrify}$; kg N ha$^{-1}$ d$^{-1}$) is determined (Equation 32) as the minimum between the product of *PotNitrR,* and the value of *a*, and *b2* which is the $NH_4^+$ available above the minimum (0.5 mg kg$^{-1}$ soil).

The value of a is determined by the minimum of a series of zero to unity environmental indices related to pH, temperature (Fig 141b), and soil water content (Fig 142a) and *rp2*. The assumption in CUPPA-Tea is that there is no nitrification at pH lower or equal to 4.5 and greater or equal to 9.0 and at soil temperatures lower than 5°C. To account for lags if conditions in the immediate past (last 2 days) have been unfavorable for nitrification, *Elnc* and the previous day's relative microbial nitrification potential in the layer *(cni)* are used to calculate the interim variable *rp2*, which describes the relative nitrification potential for the day (Equation 33; initial *cni* = 0.1).

$$\text{Equation 31: } \qquad PotNitrR = Min\left(40 \times \frac{NH_4}{NH_4+90}, 0.8\right) \times sNH_4$$

$$\text{Equation 32: } \qquad N_{nitrify} = Min(PotNitrR \times a, b2)$$

$$\text{Equation 33: } \qquad rp2 = cni \times exp(2.302 \times Elnc)$$

$$\text{Equation 34: } \qquad a = Min(rp2, wfd, Tf, pHN)$$

Calculations are carried out for the following day too. *Sarnc* is a zero to unity factor for ammonium availability (Equation 35). The least limiting of the current day's and the previous day's water (*wfd* and *wfy* respectively) and temperature factors (*Tf* and *Tfy* respectively) are used in the calculation of the new value of *cni* (Equation 36 to Equation 38).

$$\textbf{Equation 35:} \qquad Sarnc = 1 - exp(-0.1363 \times sNH_4)$$

$$\textbf{Equation 36:} \qquad xw = Max(wfd, wfy)$$

$$\textbf{Equation 37:} \qquad xt = Max(Tf, Tfy)$$

$$\textbf{Equation 38:} \qquad cni = rp2 \times Min(xw, xt, Sarnc)$$

This does not allow a single day of low soil temperature or water from severely reducing *cni*. Since (exp(2.302 × *Elnc*)) varies from 1.0 to 10.0, *cni* increases prior to the calculation of the nitrification rate. After the nitrification calculations when the level of ammonium has declined, *cni* is reduced. The relative magnitudes of (exp(2.302 × *Elnc*)) and Min(xw, *xt, Sarnc*) determine whether relative nitrification potential increases or decreases over the short term.

*Denitrification*

Denitrification refers to the reduction of nitrate to gaseous products such as NO, $N_2O$ and $N_2$. This occurs when the soil is saturated, and the bacteria use nitrate as an oxygen source. Thus, calculations are only done when soil water content exceeds field capacity, soil temperature is greater than 5°C and nitrate concentration is greater than 1 mg kg$^{-1}$ soil. In the model, denitrification rate ($N_{denitrify}$; kg N ha$^{-1}$) is a function of a water factor (Fig 142a), a temperature factor (Fig 142b), the nitrate concentration within specific layers $NO_3^-$(L) (mg kg$^{-1}$ soil) and the total water extractable carbon (cw; mg kg$^{-1}$ soil) (Equation 39). The value of cw is calculated from soil carbon (SoilC) (assumed to be 58% of stable humic fraction), plus the C content of carbohydrate fraction of any new organic matter pool (where DLAYR(L) is the soil layer depth
Equation 40; (Rolston, et al., 1980)).

$$\textbf{Equation 39:} \ N_{denitrify} = 6 \times 10^{-6} \times fw \times Tf \times NO_3(L) \times DLAYR(L) \times cw$$

where DLAYR(L) is the soil layer depth

$$\textbf{Equation 40:} \ cw = 24.5 + (SoilC \times 0.0031 + Cfrac_{New} \times OMpools[1])$$

*Volatilisation*

The volatilization routine was based on an approach described by (Liu, et al., 2020) and is used in the DNDC model. Ammonia ($NH_3$) volatilization to the atmosphere is derived from the ammonia concentration in soil water $NH_3(l)$ which is dependent on the ammonium concentration [$NH_4^+$], the pH, and the temperature (Equation 41).

$$\textbf{Equation 41:} \qquad [NH_3(l)] = \frac{1.945 \, e^{0.0645 \, T} \times 10^{-15} \times [NH_4^+]}{(1.416 + 0.01357 \, T) \times 10^{-5} \times 10^{-pH}}$$

The daily emitted flux of the gas phase $NH_3$ (Equation 42; kg N ha$^{-1}$) is then calculated as:

$$\textbf{Equation 42:} \qquad \text{Flux}(NH_3) = NH_3(l) \times fwind \times ftemp \times fdepth$$

where *fwind* is a function of the wind speed (assumed to be constant at 2 ms$^{-1}$) (Equation 43), and *ftemp* is a function of soil temperature ($T_{soil}$; °C) (Equation 44). There is also a soil depth function (*fdepth*) where q is the number of soil layers and j is the layer of application which is assumed to be 1 as fertilizer is applied to the soil surface (Equation 45).

$$\text{Equation 43:} \qquad fwind = 0.1 + \frac{(1.5 \times \text{wind})}{(1+\text{wind})}$$

$$\text{Equation 44:} \qquad ftemp = 0.1 + \frac{(2 \times T_{soil})}{(45 + T_{soil})}$$

$$\text{Equation 45:} \qquad fdepth = \frac{(q-j)}{q}$$

**Calibration and validation of the updated CUPPA-Tea**

The model was first calibrated using annual tea yields collected between 1989 and 1995 from a replicated irrigation and fertilizer experiment from the Ngwazi Tea Research Unit in Tanzania (8°33'S, 35°10'E, altitude 1840 m) (Fig 143). The experiment comprised Clone 6/8 planted in the late 1960s on a sandy clay soil over clay (Stephens & Carr, 1991). The mean annual rainfall is 839-1121 mm with the majority falling between late November and May (Table 48; Fig 148). Field measurements showed that the tea rooted to a depth of 500 cm. The soil organic carbon content ranged from 1.61% at 15 cm to 0.70% at 70 cm (Burgess & Sanga, 1993), and it was assumed that the organic carbon content was 0% at 500 cm. It was assumed that the pH ranged from 4.6 at 15 cm to 4.2 at 70 cm (Burgess & Sanga, 1993), and to 6.0 at 500 cm.

**Table 48** - **Description of Ngwazi and Kericho trials, as used in CUPPA-Tea**

|  | Ngwazi Tea Estate (Tanzania) | Kericho Tea Estate (Kenya) |
|---|---|---|
| **Number of irrigation treatments** | I0, I1, I2, I3, I4, I5 | - |
| **Fertilizer treatments (kg N ha$^{-1}$)** | N0: 0, N1: 150, N2: 225, N3: 300, N4: 375, N5: 450 | N0: 0, N1: 90, N2: 180, N3: 270 |
| **Prune date** | 25 Nov 1990 | 1 Jun 2015 and 20 Feb 2019 |
| **N appl. date** | 1-Jan 1-Jul | 1-Jul |
| **Soil type** | Sandy clay over clay | Medium sandy clay loam |
| **Soil depth (cm)** | 500 | 300 |
| **Fertiliser type** | Urea ammonium nitrate | Urea |
| **Annual rainfall (mm; range across years)** | 839-1,121 | 1,341-3,576 |
| **Soil organic carbon (depth in cm, %)** | 15,1.61,70,0.7,500,0 | 10,4.0,40,3.5,80,2.8,120,1. 3,150,1.3,300,1.3 |
| **Soil pH (depth in cm, pH)** | 15,4.6,70,4.2,160,4.9,200,5 . 8,260,5.4,500,6.0 | 5,4.01,15,4.05,30,4.05,45, 4.05,60,4.05,90,4.05,120,4 . 05,150,4.05,300,4.05 |

The six nitrogen treatments comprised annual applications 0, 150, 225, 300, 375, or 450 kg N ha$^{-1}$ with N, $P_2O_5$, and $K_2O$ applied in a 2:1:1 ratio. There were also five irrigation treatments ranging from unirrigated tea (I0) to tea receiving 50 mm of irrigation whenever the soil water deficit reached 50 mm (14). In the treatments receiving irrigation the fertilizer application was split equally between applications on 1 January and 1 July, whereas all of the annual fertilizer application was applied on 1 January during the wet season in the treatment receiving no irrigation. The primary form of nitrogen fertilizer applied was urea ammonium nitrate. The tea was pruned on 25 November 1990.

The validation of the nitrogen algorithm was completed using annual tea yield data collected from an area of clone MRTM1 on the Kericho Tea Estate (0°36'S, 35°28'E, altitude 2002 m) between 2015 and 2020 (Fig 143). Mean annual precipitation ranged from 1,341 to 3,576 mm (Table 48; Fig 149). The soil was defined as medium sandy clay loam, with an assumed soil depth of 300 cm. The soil organic carbon content was assumed to be 4.0% at 10 cm, declining to 1.3% at 300 cm. The pH was assumed to be about 4 throughout the soil profile. The fertiliser was applied once a year, (every 1 July) as urea either at a rate of 0, 90, 180 or 270 kg N ha$^{-1}$. The tea was pruned on 1 June 2015 and 20 February 2019. Analytical model assumptions per site, on the crop management, initial conditions, clonal parameters and soil parameters are presented in Appendix G.

For both the calibration and the validation dataset, statistical analysis was carried out using R (R Core Team, 2022). Linear regression was described using the $R^2$, root mean square error (RMSE), and modelling efficiency (EF). EF provides a comparison of the efficiency of the chosen model to the efficiency of describing the data as the mean of the observations (Smith, et al., 1997). Values for EF can be positive or negative with a maximum value of 1. A positive value indicates that the simulated values describe the trend in the measured data better than the mean of the observations. Smaller and negative values indicate that the simulated values describe the data less well compared to the mean of the observations.

## Model calibration and validation

Including the nitrogen algorithm allowed the CUPPA-Tea model to predict annual yields across the six nitrogen treatments x five irrigation treatments x seven years (210 datum points) that explained 78% of the variation in the observed yields at Ngwazi in Tanzania (Fig 144). The measured yields ranged from 542 to 6,291 kg ha$^{-1}$. The slope of the best fit linear regression was 0.837, the RMSE error was 681 kg ha$^{-1}$, and the modelling efficiency (EF) was 0.76.

A similar $R^2$ value of 79% was obtained when the predicted yields for the four nitrogen treatments x six years (24 datum points) for the Kericho experiment were compared to measured values (Fig 144). The measured yields ranged from 1,440 to 5,412 kg ha$^{-1}$. The slope of the best fit linear regression was 0.724, the RMSE error 507 kg ha$^{-1}$, and the modelling efficiency (EF) was 0.75. At each site, the lowest yields occurred in the year post prune (1991 in Tanzania and in 2016 in Kenya).

## System N balance

The CUPPA-Tea model was used to derive an initial nitrogen stock and then annual flows of nitrogen between organic and inorganic forms in the soil and nitrogen held by the plant for both sites (Table 49 and Table 50). In the Kenyan experiment in 2015, most of the nitrogen in the tea agroecosystem was held in the form of soil organic N (46,672 kg N ha$^{-1}$), primarily as humus (46,157 kg N ha$^{-1}$) (Table 49).

The next major stock was N stored within the crop (1,565 kg N ha$^{-1}$), and the initial amount of mineral N was assumed to be minimal (1 kg N ha$^{-1}$), as the model assumes the rapid uptake of mineral N. Within the treatment receiving 270 kg N ha$^{-1}$ of fertilizer, the annual addition of nitrogen was assumed to be 270 kg ha$^{-1}$. The quantity of nitrogen removed as harvested leaf was assumed to range from 90 in 2015 (when the tea was pruned on 1 June) to 212 kg N ha$^{-1}$ in 2020 (following pruning in February 2019). The level of volatilization and denitrification losses were zero due to the assumed low pH of less than 4.1 (Table 1). Leaching losses were also effectively zero due to the assumption that any N released from urea hydrolysis was added to the soil ammonium pool, which was considered immobile in soil profile (Table 61).

Although the losses from the system were minimal, the model predicted changes between the nitrogen stored in the plant, and as soil organic and inorganic nitrogen. The N level stored in the plant was predicted to increase from 1,567 kg N ha$^{-1}$ in early January 2016 to 2,488 kg N ha$^{-1}$ in January 2019, prior to pruning in February 2019. The level of inorganic nitrogen was predicted to be low (typically 1 kg N ha$^{-1}$) except in January 2020 following pruning in the preceding year. The level of fresh organic nitrogen was higher in January 2016 than January 2015, following pruning in June 2015, and higher in January 2020 than January 2019 following pruning in February 2019. The level of soil organic nitrogen stored as humus was relatively stable.

**Table 49** - **The stock of N stored within the crop and the soil (as organic or inorganic N) and the annual flows of N between those stock between 2015 and 2020, for Kericho treatments receiving an annual fertilizer of 270 kg N ha$^{-1}$**

| Beginning of year (kg N/ha) | 2015 | 2016 | 2017 | 2018 | 2019 | 2020 |
|---|---|---|---|---|---|---|
| Plant N | 1,565 | 1,567 | 1,866 | 2,178 | 2,488 | 2,043 |
| Soil total av. inorg N | 1 | 1 | 3 | 1 | 1 | 363 |
| Soil org. N (Humus N) | 46,157 | 46,034 | 45,898 | 45,777 | 45,624 | 45,515 |

(continued)

| Beginning of year (kg N/ha) | 2015 | 2016 | 2017 | 2018 | 2019 | 2020 |
|---|---|---|---|---|---|---|
| Soil fresh org. N (Litter + dead roots) | 515 | 815 | 759 | 695 | 657 | 959 |
| Total N | 48,238 | 48,417 | 48,526 | 48,651 | 48,770 | 48,880 |
| **Additions to system (kg N ha$^{-1}$ yr1)** | | | | | | |
| Mineral N fertiliser | 270 | 270 | 270 | 270 | 270 | 270 |
| Atm. deposition of N | 0 | 0 | 0 | 0 | 0 | 0 |
| **Removals from system (kg N ha$^{-1}$ yr$^{-1}$** | | | | | | |
| Harvest of tea | 90 | 161 | 145 | 150 | 160 | 212 |
| Leaching loss | 0 | 0 | 0 | 0 | 0 | 0 |
| Volatilisation loss | 0.019 | 0.001 | 0 | 0.001 | 0.000 | 0.000 |
| Denitrification loss | 0 | 0 | 0 | 0 | 0 | 0 |
| *Total losses* | 90 | 161 | 145 | 150 | 160 | 212 |
| **Transfer within system (kg N ha$^{-1}$ yr$^{-1}$)** | | | | | | |
| Plant N to soil N | 436 | 66 | 0 | 0 | 298 | 459 |
| Soil org. to soil mineral N | 259 | 259 | 184 | 191 | 106 | 161 |
| Soil mineral N to plant N | 529 | 527 | 457 | 461 | 13 | 794 |
| **Change in stock (kg N ha$^{-1}$ yr$^{-1}$)** | | | | | | |
| Change in inorg. N | **0** | 2 | -2 | 0 | 362 | |
| Change in tea plant N | 2 | 299 | 312 | 310 | -445 | |
| Change in org. N | 177 | -192 | -185 | -191 | 193 | |

Completing a similar analysis for tea receiving 300 kg N ha$^{-1}$, under rainfed conditions in Tanzania, suggested lower levels of soil organic nitrogen (about 13,500 kg ha$^{-1}$) than in Kenya (46,000 kg ha$^{-1}$), directly related to the assumed lower level of soil organic carbon (0-1.6% compared to 1.3-4.0%). The level of plant nitrogen in Tanzania (1565-2488 kg N ha$^{-1}$) was broadly similar to that in Kenya (1831-2556 kg N ha$^{-1}$). However, the level of inorganic nitrogen on 1 January was substantially higher (180-222 kg N ha$^{-1}$), than in Kenya, because it was assumed that in the unirrigated treatment all of the nitrogen fertilizer was applied on 1 January. In Tanzania the tea was pruned in November 1990, and a significant leaching loss of 105 kg N ha$^{-1}$ was predicted in 1991. Because the pH in Tanzania was assumed to be 4.2-6.0, compared to about 4 through the whole profile in Kenya, the nitrification of ammonium to nitrate was possible (Table 50).

Table 50 - **The stock of N stored within the crop and the soil (as organic or inorganic N) and the annual flows of N between those stock between 1989 and 1995, for Ngwazi treatments receiving an annual fertilizer of 300 kg N ha$^{-1}$ under rainfed conditions**

| Beginning of year (kg N/ha) | 1989 | 1990 | 1991 | 1992 | 1993 | 1994 | 1995 |
|---|---|---|---|---|---|---|---|
| Plant N | 1831 | 1978 | 1992 | 1994 | 2119 | 2268 | 2556 |
| Soil total av. inorg N | 188 | 187 | 186 | 222 | 181 | 190 | 180 |
| Soil org. N (Humus N) | 13,646 | 13,594 | 13,537 | 13,485 | 13,437 | 13,391 | 13,349 |
| Soil fresh org. N (Litter + dead roots) | 193 | 173 | 372 | 487 | 672 | 645 | 623 |
| Total N | 15,858 | 15,932 | 16,087 | 16,188 | 16,409 | 16,494 | 16,708 |

(continued)

| Additions to system (kg N ha⁻¹ yr⁻¹) | | | | | | | |
|---|---|---|---|---|---|---|---|
| Mineral N fertiliser | 300 | 300 | 300 | 300 | 300 | 300 | 300 |
| Atm. deposition of N | 0 | 0 | 0 | 0 | 0 | 0 | 0 |
| **Removals from system (kg N ha⁻¹ yr⁻¹)** | | | | | | | |
| Harvest of tea | 132 | 125 | 95 | 146 | 138 | 116 | 107 |
| Leaching loss | 0 | 0 | 105 | 17 | 0 | 0 | 0 |
| Volatilisation loss | <0.001 | 0.001 | 0.017 | 0.005 | <0.001 | 0.006 | 0.004 |
| Denitrification loss | 0 | 0 | 0.02 | 0.02 | 0 | 0.01 | 0 |
| *Total losses* | 132 | 125 | 200 | 163 | 138 | 116 | 107 |
| **Transfer within system (kg N ha⁻¹ yr⁻¹)** | | | | | | | |
| Plant N to soil N | 0 | 210 | 69 | 211 | 0 | 0 | 0 |
| Soil org. to soil mineral N | 72 | 69 | 6 | 74 | 72 | 65 | 71.6 |
| Soil mineral N to plant N | 372 | 367 | 163 | 400 | 374 | 369 | 375 |
| **Change in stock (kg N ha⁻¹ yr⁻¹)** | | | | | | | |
| Change in inorg. N | -1 | -1 | 36 | -40 | 9 | -10 | |
| Change in tea plant N | 147 | 14 | 2 | 125 | 149 | 288 | |
| Change in org. N | -72 | 142 | 63 | 136 | -72 | -65 | |

N response curves and sensitivity to soil organic carbon

Within the modified CUPPA-Tea model, it was possible to predict the impact of soil organic carbon (SOC) content on N response. To investigate this, a sensitivity analysis for different initial SOC values per tea estate, was conducted. The analysis presents how the default N response would change when the initial SOC: i) is null, ii) 1.6%, iii) 4% and iv) 8%. Soil depth was 500 cm and 300 cm, whilst the default SOC content at the top 15 cm was 1.6% and 4.0% for Ngwazi and Kericho respectively (Table 59).

In general, the modelled yield at 1.6% SOC (the default value in Tanzania) matched the measured yield in Tanzania (Fig 145a and b), and the modelled yield at 4% SOC (the default value in Kenya) matched the yield measured in Kenya (Fig 145c). At both sites, CUPPA-Tea predicted that higher SOC contents resulted in higher mean tea yields, with the effect being greatest when no fertilizer was applied (Fig 145). Under rainfed conditions and no fertilizer application, the mean modelled yield at Kericho at a SOC of 4% (3,033 kg ha⁻¹) was marginally higher than at Ngwazi (2,345 kg ha⁻¹), possibly as a result of the higher rainfall levels in Kenya.

Under rainfed conditions with no fertilizer, the predicted effect of increasing the SOC from 0% (red line) to 8% (orange line) was 1,778 kg ha⁻¹ in Tanzania and 2,181 kg ha⁻¹ in Kenya. Under irrigated conditions with no fertilizer, increasing the SOC from 0% to 8% in Tanzania, resulted in a predicted yield benefit of 4,000 kg ha⁻¹. At high levels of nitrogen application, the effect of SOC was reduced, becoming insignificant for rainfed tea in Tanzania at an application rate of 450 kg N ha⁻¹ (Fig 145).

The results are discussed in terms of the importance of including N dynamics in crop models, the significance of developing N response tools, understanding N environmental losses, organic tea production and limitations and future research.

Including N in crop models

Nitrogen (N) especially inorganic N is typically the most limiting nutrient for tea growth and development (LeBauer & Treseder, 2008). Considering that crop modelling originated approximately five decades ago (Hoogenboom, et al., 2020), crops models that account for nitrogen dynamics are still relatively rare (e.g. (Jones, et al., 2003); (Wolf, 2012); (Holzworth, et al., 2014)). Such models that adequately describe daily interactions of the soil-plant-atmosphere interface, can help managers understand the functioning of how the farming system and assist them in decision making. Herein, it has been demonstrated that it is possible to successfully develop a working model of nitrogen responses in tea that have been calibrated for an experiment in Tanzania and validated for an experiment in Kenya. The calibrated and validated models were able to explain 78-79% of the variation in tea yields across different years, different fertilizer and drought treatments and different stages of prune. Across the two sites, the slope of the best fit regression line was 0.72-0.84, which suggests that there was a tendency to overestimate yields in years of prune, and to underestimate the highest yields. This moderating effect of not fully explaining the full range of observations seems to be a common feature of models (Giannitsopoulos, et al., 2021).

The integration of N responses in CUPPA-Tea allows investigation of interactions between fertilizer application rates, climate, drought, and soil type: The interaction between water availability and nitrogen is demonstrated in Table 52. The model predicted, for a constant SOC, that yield responses to nitrogen application were greater under non-limiting water conditions. A reason for this is that water is necessary to enable the uptake of soil N by the crop, and well-watered conditions can also enhance soil mineralization and high levels of microbial activity ( (Schimel, et al., 2007); (Plaza-Bonilla, et al., 2022)) (Table 52).

In Ngwazi for example, the high irrigation treatment, as expected, resulted in greater yields than the rainfed tea across all N applications. It worth noting that, at 0% SOC (Fig 145a and b; red line) and under high N application, fertiliser was better utilized under I4 than under rainfed (I0) conditions, with predicted yields being 5,483 kg ha$^{-1}$ and 3,881 kg ha$^{-1}$ respectively. On average, the amount of N taken up by the tea plant under fully irrigated conditions was about 10% higher than that under rainfed conditions (Table 52). The transport of mobile ions in the soil depends on the water status or soil moisture content, which is a critical factor for their movement by both transpiration-driven mass flow and simple diffusion (Plett, et al., 2020). This was also apparent at both sites under rainfed conditions where the potential soil water deficit e.g. was higher in Tanzania (average across years 818 mm) than in Kenya (average across years 425 mm), where in turn reduced the N uptake by the crop, which was lower compared to the N uptake in the Kenyan site (Table 52). However, it is worth noting that if soil water contents remain permanently high, oxygen deprivation can affect the functioning of aerobic microorganisms thereby decreasing the conversion of organic to inorganic nitrogen (Moyano, et al., 2012).

Developing financial N response tools

There are a range of methods for estimating the optimum level of fertiliser application. At a minimum, a decision may be taken to simply replace the nitrogen removed in the harvested leaf. In Kenya, at a nitrogen application rate of 270 kg N ha$^{-1}$, in unpruned years between 145 and 212 kg N ha$^{-1}$ were removed as harvested shoots, equivalent to 53% and 79% of application rate. Ensuring that such a level of nitrogen application is made, ensures that the total amount of nitrogen in the system does not decline.

An alternative method is to determine the response curve of yield to nitrogen fertiliser, account for any effect of nitrogen on tea quality, and include assumptions regarding the price of nitrogen fertiliser and the value of harvested tea. Using the modelled response curves for pruned and unpruned tea in Kenya, it is possible to establish marginal revenue and costs curves for unpruned and pruned tea. The assumptions included a value of fertiliser cost of 1.00 US$ per kg of urea, and 0.41 US$ per kg of green harvested leaf, with a dry matter content of 0.22 and a transport cost to the factory of 0.005 US$ per kg of green harvested leaf (assuming a distance to the factory of 10 km; Table 60). The results suggest that, on the basis of the above assumptions, tea profitability is maximized by applying 300 kg N ha$^{-1}$ to unpruned tea and about 70-150 kg N ha$^{-1}$ to pruned tea (Fig 146). The above assumptions reflect the recent fertilizer cost per ton, which compared to 2019 (0.20 US$ per kg of urea; (Index Mundi, 2022)) is significantly higher.

Across the world, nitrogen fertilizer is commonly applied to tea, and in Zhejiang Province in China, mean annual application rates have been as high as 520 kg N ha$^{-1}$, even though this is 2 to 2.5 times higher than the recommended rate (Ma, et al., 2013). In fact, there are cases such as in Japanese tea, where N application can reach 1,200 kg N ha$^{-1}$ yr$^{-1}$ (Nakasone, 2009). Generally, agronomists advocate for the implementation of "4R" practices to improve nitrogen use efficiency, which involves applying fertilizer at the right rate, right time, right source and right placement in the soil (Sposari & Flis, 2017).

Environmental consequences of N losses

In addition to financial consequences, losses of N can have negative environmental implications (Rebello, et al., 2022). Hence the optimal application of N may also depend on the societal cost of N lost to the environment. Ideally, nitrogen fertilizer should be applied in a way that it is available to the tea plant, without being lost to aqueous or atmospheric environments where it can be a major pollutant (Farzadfar, et al., 2021).

When and where N will be lost, depends, among others, on rainfall intensity, soil cover and the soil's physical condition (Vagstad, et al., 1997) (Patil, et al., 2010). N losses in soil systems can include nitrate and ammonium leaching, ammonia volatilisation and denitrification (emission of N$_2$O) (Musyoka, et al., 2019) (Zou, et al., 2021). Within the model, surface runoff losses of nitrogen were not considered as the experimental sites were on relatively level ground. In practice, as tea is often grown on steep slopes, the assumption of no runoff losses may be incorrect.

*Leaching:* within the CUPPA-Tea model, the predicted rates of nitrate leaching are typically small because of i) the relatively low levels of inorganic nitrogen, ii) the acidic soils which prevent nitrification, and iii) the relatively deep tea roots (3-5 m). At Kericho, under the default pH of 4.0, average N losses across all N applications and years were zero (Table 51). The algorithms used in the CUPPA-Tea model assumed that soil nitrification was zero at pHs less or equal to 4.5 and greater or equal to 9.0.

At a slightly higher pH of 4.51, the model predicted an annual leaching rate of 1 to 24 kg N ha$^{-1}$ in years when the tea was not pruned (Table 51). The reasons for the relatively low values, is that the algorithms assume that nitrogen applied as urea (as in Kenya) is rapidly hydrolysed and converted to ammonium that is assumed not to be transported into the soil profile. At low pHs, the nitrification rate is also low which in turn means lower $NO_3^-$ concentration and consequently lower N movement through leaching (Table 51). In Taihu China, (Zhou, et al., 2022) reported N leaching losses of 73, 200 and 240 kg N ha$^{-1}$ in a dry, normal and wet year respectively, when 209 and 174 kg N ha$^{-1}$ urea was applied in March and October respectively. In that study mean annual air temperature and precipitation over 60 years were 15.9°C and 1,157 mm respectively, tea was older than 15 years, soil texture was silt loam and mean pH was 6.15. This is of similar magnitude to CUPPA-Tea leaching predictions in pruned years (e.g. in 2019; Table 51). Additionally, in unpruned years, leaching for instance in 2017 (wet year; Fig 149) was likewise to Zhou et al., (2022), higher compared to dry years (2016 or 2018).

As the pH increases, the assumed leaching losses also increase. For example, at a soil pH of 5.0, the annual predicted loss of N through leaching in Kericho became significant with leaching losses of 2 to 21 kg N ha$^{-1}$ in years when the tea was not pruned (Table 51). The model predicted particularly high leaching losses in years when the tea was pruned (in 2019) due to the combined effect of the addition of nitrogen fertilizer, the organic nitrogen in the pruned canopy, and the reduced uptake of nitrogen by the crop (Table 51).

*Volatilisation:* Within this study, the predicted volatilisation losses in Kenya at a pH of about 4 were minimal (Table 51) and remained minimal (0.21 kg N ha$^{-1}$) at a pH of 5. The use of the model with an assumed pH of 7.0 would lead to a predicted mean annual volatilisation rate across years of 2.3 kg N ha$^{-1}$ (data not shown). Field studies on tea volatilization losses are relatively scarce. In a glasshouse experiment, (Liyanage, et al., 2015) showed that mean percentages of ammonia volatilized was 27% of applied N as urea, for pH values of 4.46-4.84, and soil bulk densities of 1.48-1.53 g cm$^{-3}$. Other studies have reported mean N losses to the environment through volatilization of $NH_3$ of around 19% of applied N (mean application rate: 130 kg N ha$^{-1}$) and 17% of applied N (mean application rate: 100 kg N ha$^{-1}$) from grassland and arable soil respectively (Bishop & Manning, 2010).

*Denitrification:* the denitrification rates were also low in this study, driven in part by the low soil pH values and the generally well-aerated soil conditions (Fig 147). Denitrification rates in (Zhou, et al., 2022) for a tea garden in China ranged from 1.76 to 2.30 kg N ha$^{-1}$. The global mean value of fertilizer N-induced direct emission factor of $N_2O$ from global tea plantations is 2.31%, which is two times higher than the IPCC default value of 1% (Hergoualc'h, et al., 2019); (Wang, et al., 2020).

**Table 51 - Effect of pH values of 4.04, 4.51, and 5.00 on the predicted annual level of leaching (N$_{leach}$), nitrification (N$_{nitrify}$), denitrification (N$_{denitrify}$) and volatilisation (N$_{volatilise}$) at the Kericho site from 2015 to 2020, assuming an application rate of 270 kg N ha$^{-1}$ across the soil profile**

| Flux | pH | Predicted N flux (kg N ha$^{-1}$ yr$^{-1}$) | | | | | | |
|---|---|---|---|---|---|---|---|---|
| | | 2015 | 2016 | 2017 | 2018 | 2019 | 2020 | Mean |
| N$_{leach}$ | 4.04 | 0.05 | 0 | 0 | 0 | 0 | 0 | 0 |
| N$_{nitrify}$ | 4.04 | 0 | 0 | 0 | 0 | 0 | 0 | 0 |
| N$_{denitify}$ | 4.04 | 0 | 0 | 0 | 0 | 0 | 0 | 0 |
| N$_{volatise}$ | 4.04 | 0.02 | 0 | 0 | 0 | 0 | 0 | 0 |
| N$_{leach}$ | 4.51 | 6 | 1 | 3 | 1 | 174 | 24 | 35 |
| N$_{nitrify}$ | 4.51 | 127 | 11 | 9 | 7 | 204 | 103 | 77 |
| N$_{denitify}$ | 4.51 | 0 | 0 | 0 | 0 | 0 | 0 | 0 |
| N$_{volatise}$ | 4.51 | 0.04 | 0 | 0 | 0 | 0.01 | 0.01 | 0.01 |
| N$_{leach}$ | 5.00 | 25 | 2 | 11 | 4 | 345 | 21 | 68 |
| N$_{nitrify}$ | 5.00 | 297 | 52 | 35 | 19 | 363 | 67 | 139 |
| N$_{denitify}$ | 5.00 | 0.05 | 0 | 0 | 0 | 0.2 | 0 | 0.04 |
| N$_{volatise}$ | 5.00 | 0.81 | 0.12 | 0 | 0 | 0.25 | 0.11 | 0.21 |

Organic tea

The updated CUPPA-Tea model could be useful in supporting decisions regarding the management of organic tea, i.e. tea not receiving mineral N applications. The nitrogen model algorithms can be used to predict the N derived from the breakdown of fresh and recalcitrant organic matter (humus), and the use of the model alongside experimental calibration and validation could provide useful insights into the effect of the addition of organic fertilizers. One potential effect of the addition of organic fertilizers is to raise the soil pH (Yan, et al., 2018), and reduce the level of soil acidification in tea plantations (Xie, et al., 2021). This increase in soil pH could increase leaching and volatilisation losses (Benbi & Nieder, 2003). The application of organic matter (e.g. residues) with a high C:N ratio can also temporarily lock N within soil microorganisms (immobilisation). Although this N source can again be available for uptake by the crop when microorganisms die. In a 41-year experiment in Germany, soil carbon stocks in various crops such as rye, wheat, maize and barley, appeared to be higher when organic inputs were combined with mineral fertiliser, compared to only organic inputs or only mineral fertiliser (Hijbeek, et al., 2017). In addition, (Bagchi, et al., 2020) reported that organically grown tea can also have higher polyphenol content than tea grown with mineral fertilisers.

The results in Fig 145, demonstrate that the yield losses due to removal of inorganic nitrogen application can be partly offset by ensuring that the soil organic carbon content is high. By contrast in a global meta-analysis focused on experimental results with maize, (Oldfield, et al., 2019) reported that steeper nitrogen response curves tended to be achieved with higher levels of SOC. One possible reason for this result, is that increased soil organic carbon contents may provide additional benefits than just the supply of nitrogen, which is the focus of this study. For example, high levels of organic matter content can also improve soil structure, increase water holding capacity, soil biodiversity, and reduce soil erosion risk (Johnston 1986; Lal 2009).

Sustained production of high tea yields depends on the steady supply of nitrogen from the soil to meet plant requirements. For parameterizing CUPPA-Tea, reliable soil profile data e.g. about soil organic carbon content, water release curves and pH in particular seem to play a crucial role in understanding the interrelations of the soil-crop-atmosphere continuum. The inclusion of N algorithms in the model gave accurate predictions of annual tea yields in two experiments, and CUPPA-Tea estimated low N losses to the environment. The model highlighted that at no N application, tea yields were lowest when soil organic carbon contents were small. Simulations showed that there was a tendency for soil profiles with lower soil organic carbon contents to require greater amount of nitrogen fertilizer than higher organic carbon soils in order to obtain similar yields. CUPPA-Tea also indicated the significance of water-limited conditions in reducing crop N uptake and in turn tea yields. Using such models as CUPPA-Tea can also aid in estimating the financial optimum N requirements and produce marginal revenue and cost curves after accounting for the analogous assumptions. Modelling different scenarios and testing various hypotheses, can help the user to make the right decisions with regards to sustainable tea production, aiming for profitable yields without compromising the environment.

**Table 52** - **Estimated maximum potential soil water deficit (PSWD), the N mineralization rate (N$_{mineralise}$) (kg N ha$^{-1}$) and N uptake (N$_{uptake}$), in Ngwazi (Tanzania; 300 kg N ha$^{-1}$ applied) under rainfed (I0) and high irrigation treatment (I4) and in Kericho (Kenya; 270 kg N ha$^{-1}$ applied) under rainfed conditions**

| Tanzania | | | | | | | | | | |
|---|---|---|---|---|---|---|---|---|---|---|
| Treatment | Parameter[a] | | 1989 | 1990 | 1991[b] | 1992 | 1993 | 1994 | 1995 | Mean |
| Rainfed | PSWD | (mm) | 739 | 723 | 854 | 758 | 893 | 914 | 842 | 818 |
|  | N$_{mineralise}$ | (kg N ha$^{-1}$ yr1) | 72 | 68 | 6.1 | 74 | 72 | 65 | 72 | 71 |
|  | N$_{uptake}$ | (kg N ha$^{-1}$ yr$^{-1}$) | 372 | 367 | 163 | 399 | 373 | 369 | 375 | 345 |
| irrigated | PSWD | (mm) | 89 | 89 | 110 | 79 | 95 | 74 | 233 | 110 |
|  | N$_{mineralise}$ | (kg N ha$^{-1}$ yr1) | 101 | 96 | 57 | 101 | 97 | 93 | 92 | 91 |
|  | N$_{uptake}$ | (kg N ha$^{-1}$ yr$^{-1}$) | 403 | 390 | 262 | 401 | 399 | 395 | 394 | 378 |

(continued)

**Kenya**

| Treatment | Parameter | 2015[b] | 2016 | 2017 | 2018 | 2019[b] | 2020 | |
|---|---|---|---|---|---|---|---|---|
| Rainfed | PSWD | 504 | 300 | 427 | 324 | 710 | 286 | 425 |
| Rainfed | $N_{uptake}$ | 529 | 527 | 457 | 461 | 13 | 794 | 554 |

a: Potential soil water deficit (PSWD) as the maximum value per year and site calculated as the sum of potential evapotranspiration minus amount of rainfall and irrigation (if any) b: The tea was pruned on 25 November 1990 in Tanzania and 1 June 2015 and 20 February 2019 in Kenya

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. The computer system may have a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-OMs; electrical storage media such as memory, including RAM, ROM and flash memory; and hybrids and combinations of the above such as magnetic/optical storage media.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

In particular, although the methods of the above embodiments have been described as being implemented on the systems of the embodiments described, the methods and systems of the present disclosure need not be implemented in conjunction with each other, but can be implemented on alternative systems or using alternative methods respectively.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the disclosure in diverse forms thereof.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

**CLAUSES PERTAINING TO THE DISCLOSURE**

1. A computer-implemented method for predicting the growth of a plurality of tea plants within a tea plantation, the method comprising:

retrieving initial condition data, indicative of an initial nitrogen stock in the tea plantation comprising nitrogen held as tea plant tissue, soil inorganic nitrogen, and soil organic nitrogen;
predicting a nitrogen deficiency level, indicative of the level to which lack of nitrogen availability limits the growth of the tea plants; and
predicting the growth of the tea plants, utilising the initial condition data and the nitrogen deficiency level.

2. The method according to clause 1, wherein the method further comprises one or more of:

a. retrieving nitrogen addition data, indicative of an amount of nitrogen added to the soil of the tea plantation;

b. predicting nitrogen conversion parameters which describe the conversion of nitrogen in the soil between different chemical forms due to one or more of mineralisation, nitrification, or denitrification;

c. predicting plant nitrogen loss, indicative of nitrogen lost by the tea plants due to one or more of harvesting of the tea plants, pruning of the tea plants, exudates, or abscission; or

d. predicting soil nitrogen loss, indicative of loss of nitrogen due to one or more of denitrification, ammonia volatilisation, or leaching.

3. The method according to any preceding clause, wherein the initial nitrogen stock is initialised with a specified level of soil inorganic nitrogen at a series of soil depths.

4. The method according to clause 2 or 3, wherein the nitrogen addition data comprise:

a. an amount of new carbon per soil layer,

b. a proportion of carbon in new organic matter, and

c. an amount of new organic nitrogen added to the soil per soil layer.

5. The method according to any one of clauses 2 to 4, wherein the method further comprises calculating a carbon to nitrogen ratio using the initial nitrogen stock or the nitrogen addition data.

6. The method according to any preceding clause, wherein predicting the growth of the tea plants further comprises calculating using one or more of: a potential growth rate of the tea plants, a temperature, or a soil water level.

7. The method according to clause 6, wherein the method further comprises predicting the potential growth rate of the tea plants, wherein the potential growth rate is calculated using one or more of: amount of solar radiation, radiation use efficiency, light extinction coefficient, or leaf area index.

8. The method according to any preceding clause, wherein predicting the nitrogen deficiency level comprises calculating using one or more of: critical nitrogen level for the canopy, proportion of nitrogen in the canopy, or minimum nitrogen content level of the canopy.

9. The method according to any preceding clause, wherein predicting the nitrogen deficiency level comprises predicting nitrogen demand for each tea plant, wherein predicting nitrogen demand comprises one or more of the following:

a. predicting canopy homeostatic nitrogen demand of the tea plants, comprising calculating using one or more of: canopy mass, the critical nitrogen level, and the proportion of nitrogen in the canopy of the tea plants;

b. predicting root homeostatic nitrogen demand of the tea plants, comprising calculating using one or more of root mass, the critical nitrogen level, or the proportion of nitrogen in the roots of the tea plants;

c. predicting canopy growth nitrogen demand of the tea plants, comprising calculating using canopy potential growth rate and/or the critical nitrogen level of the canopy; or

d. predicting root growth nitrogen demand of the tea plants, comprising calculating using root potential growth rate and/or the critical nitrogen level of the roots.

10. The method according to any preceding clause, wherein predicting the growth of the tea plants comprises predicting the growth of a plurality of leaves for each tea plant.

11. The method according to any one of clauses 2 to 10, wherein the nitrogen conversion parameters comprise a parameter to represent nitrogen mineralisation, wherein the method comprises calculating a nitrogen mineralisation parameter using one or more of: the amount of new organic nitrogen, the fraction of organic matter pools, the total organic matter, a temperature factor, a moisture factor, a carbon: nitrogen ratio factor, decay rates constants, the concentration of ammonium, the concentration of nitrate, or the amount of new humus nitrogen.

12. The method according to any one of clauses 2 to 11, wherein the nitrogen conversion parameters comprise a parameter to represent nitrification, wherein the method comprises calculating a nitrification parameter using one or more of: substrate ammonium levels, oxygen levels, soil pH, a temperature factor, or a soil water factor.

13. The method according to any one of clauses 2 to 12, wherein the nitrogen conversion parameters comprise a parameter to represent denitrification, wherein the method comprises calculating a denitrification parameter using one or more of: the ammonium concentration, the pH, the temperature, soil water content, or the amount of ammonium above the minimum value.

14. The method according to any one of clauses 2 to 13, wherein predicting nitrogen loss comprises predicting nitrogen volatilisation, wherein predicting nitrogen volatilisation comprises calculating using one or more of: the ammonia concentration in soil water, the wind speed, soil temperature, or the soil depth.

15. A computer program configured to execute the method according to any one of clauses 1 to 14.

16. A storage medium containing instructions to execute the method according to any one of clauses 1 to 14 on a computer processor.

## REFERENCES

Asseng, S. et al., 2014. Simulation Modeling: Applications in Cropping Systems.. Agriculture and Food Systems, pp. 102-112.

Bagchi, A., Swain, D. & Mitra, A., 2020. Neuroprotective effect of organic and inorganically grown tea on oxidative damage in rat model of Alzheimer's disease. Adv Tradit Med, Volume 20, pp. 439-450.

Banerjee, A., 2012. Tea bush biomass assessment through polarimetric decomposition and semi-empirical modelling. Enschede: Faculty of Geo-Information Science and Earth Observation of the University of Twente.

Benbi, D. K. & Nieder, R., 2003. Handbook of processes and modeling in the soil-plant system. s.l.:Food Products Press.

Beringer, T. et al., 2020. First process-based simulations of climate change impacts on global tea production indicate large effects in the World's major producer countries.. Environmental Research Letters, 15(3).

Bishop, P. & Manning, M., 2010. Urea Volatilisation: The Risk Management and Mitigation Strategies, Palmerston

North, New Zeland: Fertilizer and Lime Research Centre, Massey University.

Boehm, R. et al., 2016. Association between empirically estimated monsoon dynamics and other weather factors and historical tea yields in China: Results from a yield response model.. Climate 2016, 4(2), p. 20.

Burgess, P., 1992. Responses of Tea Clones to Drought in Southern Tanzania.. s.l.:Cranfield University.

Burgess, P. et al., 2006. Evaluation of simple hand-held mechanical systems for harvesting tea (Camellia sinesis). Experimental Agriculture, Volume 42, pp. 165-187.

Burgess, P., Holden, A. & Corstanje, R., 2020. CUPPA-Tea Decision Support System Enhancements. 1. Modifications to Calculation of the Harvest Interval., s.l.: Cranfield University.

Burgess, P. J. & Carr, M. K., 1998. The use of leaf appearance rates estimated from measurements of air temperature to determine harvest intervals for tea. Experimental Agriculture, Volume 34, pp. 207-218.

Burgess, P. & Sanga, B., 1993. Soil nutrient contents below a fertiliser experiment., s.l.: Ngwazi Tea Research Unit Report 12.

Caltagirone, F., 2009. Status, results and perspectives of the Italian Earth Observation SAR COSMO-Skymed. Rome, EuRAD, pp. 330-334.

Carr, M. & Stephens, W., 1992. Climate, weather and the yield of tea.. In: K. Willson & M. Clifford, eds. Tea: Cultivation to Consumption.. s.l.:Chapman and Hall, pp. 87-133.

Duguay, Y., Bernier, M., Lévesque, E. & Tremblay, B., 2015. Potential of C and X Band SAR for Shrub Growth Monitoring in Sub-Arctic Environments.. Remote Sensing, 7(7), pp. 9410-9430.

Dutta, R., 2011. Remote sensing: a tool to measure and monitor tea plantations in Northeast India. Marrakech, FIG Proceedings, pp. 1-14.

Eitzinger, J. & Anandacoomaraswamy, A., 1997. Modelling the growth and yield of tea (Camellia sinensis L.) in Sri Lanka.. IFAC Proceedings, 30(5), pp. 51-56.

FAO, 2022. FAOSTAT Crops and Livestock. [Online] Available at: https://www.fao.org/faostat/en/#data/QCL [Accessed 15 07 2022].

Farzadfar, S., Knight, J. & Congreves, K., 2021. Soil organic nitrogen: an overlooked but potentially significant contribution to crop nutrition. Plant and Soil, Volume 462, pp. 7-23.

Fordham, R. & Palmer-Jones, R., 1977. Simulation of intraseasonal yield fluctuations of tea in Malawi.. Experimental Agriculture, Volume 13, pp. 33-42.

Giannitsopoulos, M. et al., 2021. Modelling the interactions of soils, climate, and management for grass production in England and Wales.. Agronomy, 11(4), p. 667.

Godwin, D. & Jones, C., 1991. Nitrogen dynamics in soil-plant systems.. Modeling Plant and Soil Systems, Agronomy Monograph, Volume 31, pp. 289-321.

Haidar, D., Patnaik, C., Mohan, S. & Chakraborty, M., 2012. Jute and tea discrimination through fusion of SAR and optical data. Progress in Electromagnetics Research B, Volume 39, pp. 337-354.

Hengl, T. et al., 2015. Mapping Soil Properties of Africa at 250 m Resolution: Random Forests Significantly improve Current Predictions.. PLoS ONE, 10(6).

Hergoualc'h, K. et al., 2019. N2O emissions from managed soils, and CO2 emissions from lime and urea application.. IPCC guidelines for national greenhouse gas inventories, pp. 1-48.

Hijbeek, R. et al., 2017. Do organic inputs matter - a meta-analysis of additional yield effects for arable crops in Europe. Plant and Soil, 411(1/2), pp. 293-303.

Holzworth, D. P. et al., 2014. APSIM - Evolution towards a New Generation of Agricultural Systems Simulation.. Environmental Modelling & Software, Volume 62, pp. 327-350.

Hoogenboom, G. et al., 2020. ICROPM: Crop Modeling for the Future.. Journal of Agricultural Science, Volume 158, pp. 791-793.

Index Mundi, 2022. Urea - Monthly Price - Commodity Prices - Price Charts, Data, and News. [Online]

Available at: https://www.indexmundi.com/commodities/?commodity=urea&months=240 [Accessed 15 05 2022).

Jayasinghe, H., Suriyagoda, L., Karunaratne, A. & Wijeratne, M., 2014. Leaf. Tropical Agricultural Research, Volume 25, pp. 450-459.

Jones, J. et al., 2003. The DSSAT Cropping System Model.. European Journal of Agronomy, 18(3-4), pp. 235-265.

Keeler, B. et al., 2016. The social costs of nitrogen. Science Advances, 2(10).

Kim, Y. et al., 2012. Radar vegetation index for estimating the vegetation water content of rice and soybean.. IEEE Geoscience and Remote Sensing Letters, 9(4), pp. 564-568.

Kim, Y., Oh, J. & Kim, Y., 2014. Comparative Analysis of the Multispectral Vegetation indices and the Radar Vegetation Index.. Journal of the Korean Society of Surveying, Geodesy, Photogrammetry and Cartography, 32(6), pp. 607-615.

Kim, Y. & van Zyl, J., 2009. A time-series approach to estimate soil moisture using polarimetric radar data.. IEEE Transactions on Geoscience and Remote Sensing, 47(8), pp. 2519-2527.

LeBauer, D. & Treseder, K., 2008. Nitrogen limitation of net primary productivity in terrestrial ecosystems is globally distributed.. Ecology, Volume 89, pp. 371-379.

Liu, L. et al., 2020. Ammonia volatilization as the major nitrogen loss pathway in dryland agroecosystems.. Environmental Pollution, Volume 265.

Liyanage, L., Jayakody, A. & Gunaratne, G., 2015. Ammonia volatilization from frequently applied fertilizers for the low-country tea growing soils of Sri Lanka. Tropical Agricultural Research, 26(1), p. 48.

Ma, L. et al., 2013. Status and suggestions of tea garden fertilization on main green tea-producing counties in Zhejiang province. J. Tea Sci, Volume 1, pp. 74-84.

Matthews, R. & Stephens, W., 1996. CUPPA-Tea 1.0b Tea Crop Growth Model Technical manual.. Bedfordshire: Cranfield University.

Matthews, R. & Stephens, W., 1997. GUMTEA: a simulation model describing potential production and seasonal yield variation of tea (Camellia sinensis L.), Bedfordshire: Cranfield University.

Matthews, R. & Stephens, W., 1997. Simulating biomass production and the uptake and use of water by tea (Camellia sinensis L.) plantations, Bedfordshire: Cranfield University.

Matthews, R. & Stephens, W., 1998. A simulation model describing seasonal yield variation and potential production of tea.. Experimental Agriculture, Volume 34, pp. 345-389.

Matthews, R. & Stephens, W., 1998. CUPPA-Tea 1.0b Tea Crop Growth Model Users' Guide.. Bedfordshire: Cranfield University.

McLaren, A., 1970. TEMPORAL AND VECTORIAL REACTIONS OF NITROGEN IN SOIL: A REVIEW.. Canadian Journal of Soil Science., 50(2), pp. 97-109.

Moyano, F. et al., 2012. The moisture response of soil heterotrophic respiration: interaction with soil properties. Biogeosciences, 9(3), pp. 1173-1182.

Musyoka, M. et al., 2019. Nitrogen leaching losses and balances in conventional and organic farming systems in Kenya. Nutrient Cycling in Agroecosystems, Volume 114, pp. 237-260.

Nakasone, H., 2009. Effect on water quality in irrigation reservoir due to application reduction of nitrogen fertilizer. Paddy Water Environ, Volume 7, pp. 65-70.

NASA LP DAAC, 2015. Land Processes Distributed Active Archive Center (LP DAAC) Data Pool. Sioux Falls: NASA.

Oldfield, E., Bradford, M. & Wood, S., 2019. Global meta-analysis of the relationship between soil organic matter and crop yields. SOIL, Volume 5, pp. 15-32.

Omollo, E., 2010. Response of clonal tea to different tea growing locations, nitrogenous fertiliser rates and plucking intervals in the Kenya highlands.. s.l.:Maseno University, Kenya..

Owuor, P., Othieno, C., Robinson, J. & Baker, D., 1991. Response of tea quality parameters to time of year and nitrogen fertiliser.. Journal of the Science of Food and Agriculture, Volume 55, pp. 1-11.

Panda, R., Stephens, W. & Matthews, R., 2003. Modelling the influence of irrigation on the potential yield of tea (Camellia sinensis) in north-east India.. Experimental Agriculture, 39(2), pp. 181-198.

Patil, R., Laegdsmand, M., Olesen, J. & Porter, J., 2010. Effect of soil warming and rainfall patterns on soil N cycling in Northern Europe. Agriculture, Ecosystems & Environment, Volume 139, pp. 195-205.

Plaza-Bonilla, D., Mary, B., Valé, M. & Justes, E., 2022. The sensitivity of C and N mineralization to soil water potential varies with soil characteristics: Experimental evidences to fine-tune models.. Geoderma, 409(115644).

Plett, D. et al., 2020. The intersection of nitrogen nutrition and water use in plants: new paths toward improved crop productivity. Journal of Experimental Botany, Volume 71, pp. 4452-4468.

Preiss, M. & Stacy, N., 2006. Coherent change detection: theoretical description and experimental results (No. DSTO-TR-1851), s.l.: DEFENCE SCIENCE AND TECHNOLOGY ORGANISATION EDINBURGH (AUSTRALIA).

R Core Team, 2022. R: A language and environment for statistical computing.. [Online] Available at: https://www.R-project.org [Accessed 15 03 2022].

Rajapakse, R., Tripathi, N. & Honda, K., 2010. Spectral characterization and LAI modelling for the tea (Camellia sinesis (L.) O. Kuntze) canopy. International Journal of Remote Sensing, 23(18), pp. 3569-3577.

Rao, N., Kapoor, M., Sharma, N. & Venkateswarlu, K., 2007. Yield prediction and waterlogging assessment for tea plantation land using satellite image-based techniques.. International Journal of Remote Sensing, 28(7), pp. 1561-1576.

Rebello, R., Burgess, P. & Girkin, N., 2022. Identifying sustainable nitrogen management practices for tea plantations. Nitrogen, 3(1), pp. 43-57.

Ritchie, J., 1985. A user-oriented model of the soil water balance of wheat.. Wheat growth and modelling. NATO ASI Series A: Life Sciences. Plenum Press, pp. 293-305.

Rolston, D. et al., 1980. Denitrification as affected by irrigation frequency of a field soil., Ada, OK: U.S. Environmental Protection Agency.

Schimel, J., Balser, E. & Wallenstein, M., 2007. Microbial stress-response physiology and its implications for ecosystem function. Ecology, Volume 88, pp. 1386-1394.

Seligman, N. G. & van Keulen, 1981. Papran a simulation model os annual pasture production limited by rainfall and nitrogen. Simulation of Nitrogen Behaviour of Soil-Plant Systems.

Sitienei, B., Juma, S. & Opere, E., 2017. On the use of regression models to predict tea crop yield responses to climate change: A case of Nandi East, Sub-County of Nandi County, Kenya.. Climate, 5(3).

Small, D., 2011. Flattening Gamma: Radiometric Terrain Correction for SAR Imagery. IEEE Transactions on Geoscience and Remote Sensing, 49(8), pp. 3081-3093.

Smith, P. et al., 1997. A comparison of the performance of nine soil organic matter models using datasets from seven long-term experiments.. Geoderma, Volume 81, pp. 153-225.

Sposari, M. & Flis, S., 2017. 4R framework implementation: precision ag adoption by farmers and dealers. Crop Soils, Volume 50, pp. 24-26.

Stephens, W. & Carr, M., 1991. Responses of tea (Camellia sinensis) to irrigation and fertilizer. 1. Yield.. Experimental Agriculture, Volume 26, pp. 83-98.

Stephen, W. & Carr, M., 1993. Responses of tea (Camellia Sinensis) to irrigation and fertilizer. IV. Shoot population density, size and mass.. Experimental Agriculture, Volume 30, pp. 189-205.

Suzuki, S. et al., 2009. Overview of Japan's Advanced Land Observing Satellite-2 mission. Berlin, Proceedings of SPIE, pp. 7474-26.

TRFK, 1986. Tea Growers Handbook. 4th ed. s.l.:Tea Research Foundation of Kenya.

Ulaby, F., Moore, R. & Fung, A., 1981. Microwave Remote Sensing: Radar Remote Sensing and Surface Scattering and Emission Theory. s.l.:Addison-Wesley Publishing Company, Advanced Book Program/World Science Division.

Vagstad, N., Eggestad, H. & Høyås, T., 1997. Mineral Nitrogen in Agricultural Soils and Nitrogen Losses: Relation to Soil Properties, Weather Conditions, and Farm Practices. Ambio, 26(5), pp. 266-272.

Vallgren, A. & Petrykowska, L., 2015. ISKA White Paper, s.l.: Ignitia Tropical Weather Forecasting.

Wang, Y. et al., 2020. Tea- planted soils as global hotspots for N2O emissions from croplands. Environmental Research Letters, Volume 15.

Wiegand, C., Richardson, A., Escobar, D. & Gerbermann, A., 1991. Vegetation indices in crop assessments.. Remote Sensing of Environment, 35(2), pp. 105-119.

Wolf, J., 2012. Users Guide for LINGRA-N: Simple Generic Model for Simulation of Crop Growth under Potential, Water Limited and Nitrogen Limited Conditions.. [Online] Available at: https://models.pps.wur.nl/lingra-n-grassland-model-potential-water-limited-and-n-limited-conditions-fortran

[Accessed 25 05 2022].

Xie, S. et al., 2021. Organic fertilizer reduced carbon and nitrogen in runoff and buffered soil acidification in tea plantations: Evidence in nutrient contents and isotope fractionations. Science of the Total Environment, Volume 762.

Yan, P. et al., 2018. Tea planting affects soil acidification and nitrogen and phosphorus distribution in soil. Agriculture, Ecosystems & Environment, Volume 254, pp. 20-25.

Yu, Y. & Saatchi, S., 2016. Sensitivity of L-Band SAR Backscatter to Aboveground Biomass of Global Forests.. Remote Sensing, 8(6), p. 522.

Zahumensky, I., 2004. Guidelines on quality control procedures for Data from automatic weather stations. [Online] Available at: https://www.wmo.int/pages/prog/www/OSY/Meetings/ET-AWS3/Doc4(1).pdf Zhang, Y. et al., 2021. Tea plantation affects soil nitrogen transformations in subtropical China.. Journal of Soils and Sediments, Volume 21, pp. 441-451.

Zhou, Z. et al., 2022. Determining the hot spots and hot moments of soil N2O emissions and mineral N leaching in a mixed landscape under subtropical monsoon climatic conditions. Geoderma, 420(115896).

Zou, Z. et al., 2021. Status quo of nitrogen fertilizer application and loss in tea garden of China. Journal of Plant Nutrition and Fertilizers, Volume 27, pp. 153-160.

## APPENDICES

### Appendix A - Water Stress Factor Calculations

With reference to Fig 22.

The calculations of the water stress factor were documented below as they seemed to change too quickly from drought on small amounts of rainfall.

1. On 14/11/1989 6mm of rainfall meant water stress factor increased from 0 to

0.255. There was no rain for 11 days before or 5 days after this.

Water stress Factor (Wsf) = actual water uptake / potential transpiration

on 07/11/1989 Wsf = 0 as in drought:

$$Wsf = 0 / 4.7375$$

on 14/11/1989 wsf = 0.255 due to 6mm of rain:

$$wsf = 0.7348 / 2.878$$

The difference between the two dates is the actual water uptake was no longer 0 on the later date.

2. Calculation of actual water uptake:

```
Maxlnflow = 0.03;
swcon1 = 0.00264;
swcon2 = 62;
swcon3 = 6.68;
pwu = 0
SoilData
for each soilzone (20 zones)
    if soilwater > LowerLimit
            inflow = SWcon1 * Exp(lower of (Soilwater-LowerLimit or 10)) / SWcon3 - Log(r-
            otdensity)
    else
            inflow = 0
    inflow must be no greater than Maxlnflow
    rwu = inflow * rootdensity * Zone depth * 10 * (0.18+0.00272 * sqr(rootdensity -18)
    rwu = lower of rwu or (soilwater-LowerLimit)*zone depth * 10
    pwu = pwu + rwu
    if pwu > 0 and potential transpiration > 0
    ep = lower of pwu and potential transpiration
    wuf = Ep/pwu = 1
    for each soilzone (20 zones)
    rwu = rwu * wuf
    soilwater = soilwater - rwu/(-epth * 10)
```

The actual water uptake is set to 0 when the SoilWater <= LowerLimit.

On 7/11/1989 the soilwater was < = lowerlimit but on the 14/11/1989 the soilwater was > lowerlimit

3. The soil water and lower limit are read in from the input file and then interpolated between 20 zones:

|  | soilwater | lowerlimit |
|---|---|---|
| 1 | 0.266 | 0.161 |
| 2 | 0.293667 | 0.206333 |
| 3 | 0.28375 | 0.20175 |
| 4 | 0.2725 | 0.1965 |
| 5 | 0.2755 | 0.1995 |
| 6 | 0.286 | 0.215 |
| 7 | 0.29525 | 0.2405 |
| 8 | 0.3195 | 0.259 |
| 9 | 0.33175 | 0.26925 |
| 10 | 0.34 | 0.285 |
| 11 | 0.343 | 0.28675 |
| 12 | 0.3345 | 0.2905 |
| 13 | 0.32525 | 0.295 |
| 14 | 0.318 | 0.277 |
| 15 | 0.3135 | 0.2695 |
| 16 | 0.31 | 0.271 |
| 17 | 0.30575 | 0.26575 |
| 18 | 0.302 | 0.261 |
| 19 | 0.2975 | 0.258 |
| 20 | 0.295 | 0.263 |

4. Only the soilwater is adjusted by the model, in 3 places:

    a. Soil Water Distribution
    b. Soil Water Evaporation
    c. Actual Water uptake (as above highlighted in 2)

5. Calculation of Soil Water Distribution:
Procedure to calculate the soil water distribution in the profile after water has been added by irrigation, rain or snow. Drainage (if any) is also calculated. All water downflux values in mm. SWCON is soil water drainage constant (fraction drained per day) from Soil data file.

```
for each soilzone (20 zones)
    fac = Zone * 10
    Qsat = SatWC * fac
    Qupper = Upper limit * fac
    Qactual = soilwater * fac
    Downflux = (Qactual - Quppe-) * SWCON (if Qactual > Qupper)
    Downflux = Downflux + (qactual + Waterin) - Qsat - (if Qactual + Waterin > Qsat)
    if downflux > 0 draining = true
    Qactual = qactual + waterin - downf-ux
    waterin = downflux
    soilwater = Qactual/fac
    Waterin = 6mm of rain
```

6. Soil Evaporation:
Procedure to calculate soil evaporation (Es) in mm.

Inputs are LAI (leaf area index), Es1max (upper limit of stage 1 evaporation), WaterIn (rain+irrigation+snow), sumEs1 (cumulative 1st stage soil evaporation), sumEs2 (cumulative 2nd stage soil evaporation), Eo (potential evaporation), t (time counter for 2nd stage soil evaporation), swc (soil water content array).

Based on the model of Ritchie (1972, Water Resources Res. 8:1204) but modified to further reduce Es when SWC in upper layer reaches a fixed low threshold value (swef). This was needed when simulating layered soils to prevent the soil surface from drying too much when roots are also removing water from near the surface.

Swef is set to: 0.9 - 0.00038 * (Depth Soil top layer - 30) * (Depth Soil top layer - 30) = 0.89050000000000007

The problem appears to be in either the initial setting of the lower limits or the recalculation of the soil water.

Tea Growth model using adjusted water stress factor, which includes up to 5 days delay after re-watering.

## Appendix B - Field data on the number of harvested shoots

**Table 53: Ground Truth data from remote sensing survey 30th July 2016 to 8th September 2016**

| Date | Field ID | Harvest Method | From Leaf | To Leaf |
|---|---|---|---|---|
| 31/08/2016 | 2 | HP | 2 | 3 |
| 30/07/2016 | 3 | HP | 3 | 4 |
| 31/08/2016 | 3 | HP | 2 | 3 |
| 01/09/2016 | 3 | HP | 2 | 3 |
| 03/09/2016 | 3 | HP | 2 | 3 |
| 15/08/2016 | 4 | HP | 2 | 3 |
| 30/07/2016 | 5 | HP | 3 | 4 |
| 03/09/2016 | 5 | HP | 2 | 3 |
| 30/07/2016 | 8 | HP | 5 | 6 |
| 15/08/2016 | 8 | HP | 2 | 3 |
| 01/09/2016 | 8 | HP | 2 | 3 |
| 03/09/2016 | 9 | HP | 2 | 2 |
| 30/07/2016 | 11 | HP | 3 | 4 |
| 03/08/2016 | 11 | HP | 3 | 4 |
| 15/08/2016 | 11 | HP | 2 | 3 |
| 31/08/2016 | 11 | HP | 3 | 4 |
| 01/09/2016 | 11 | HP | 2 | 3 |
| 03/08/2016 | 12 | MH | 2 | 3 |
| 06/08/2016 | 13 | HP | 4 | 5 |
| 23/08/2016 | 13 | HP | 2 | 3 |
| 31/08/2016 | 15 | HP | 2 | 3 |
| 01/09/2016 | 16 | MH | 2 | 3 |
| 06/08/2016 | 17 | MH | 4 | 5 |
| 06/08/2016 | 18 | MH | 4 | 5 |
| 30/07/2016 | 20 | MH | 3 | 4 |
| 31/08/2016 | 23 | MH | 3 | 4 |
| 23/08/2016 | 27 | MH | 3 | 4 |
| 23/08/2016 | 28 | MH | 3 | 4 |
| 15/08/2016 | 29 | MH | 2 | 3 |
| 15/08/2016 | 30 | MH | 2 | 3 |
| 03/08/2016 | 32 | MH | 2 | 3 |

(continued)

| Date | Field ID | Harvest Method | From Leaf | To Leaf |
|---|---|---|---|---|
| 23/08/2016 | 33 | MH | 4 | 4 |
| 23/08/2016 | 34 | MH | 3 | 4 |
| 03/08/2016 | 35 | MH | 4 | 4 |
| 30/07/2016 | 39 | MH | 4 | 5 |
| 03/09/2016 | 39 | MH | 2 | 3 |
| 08/09/2016 | 42 | HP | 2 | 3 |
| 23/08/2016 | 43 | HP | 2 | 3 |
| 03/09/2016 | 43 | HP | 2 | 3 |
| 30/07/2016 | 46 | HP | 3 | 4 |
| 23/08/2016 | 46 | HP | 2 | 3 |
| 08/09/2016 | 46 | HP | 2 | 3 |
| 31/08/2016 | 52 | HP | 2 | 3 |
| 01/09/2016 | 52 | HP | 2 | 3 |
| 23/08/2016 | 54 | HP | 2 | 3 |
| 08/09/2016 | 54 | HP | 2 | 3 |
| 30/07/2016 | 55 | HP | 3 | 4 |
| 03/09/2016 | 55 | HP | 2 | 3 |
| 23/08/2016 | 56 | MH | 3 | 4 |
| 03/09/2016 | 58 | MH | 2 | 3 |
| 01/09/2016 | 59 | MH | 2 | 3 |
| 23/08/2016 | 78 | MH | 2 | 3 |
| 01/09/2016 | 81 | MH | 2 | 3 |
| 15/08/2016 | 82 | HP | 2 | 3 |
| 08/09/2016 | 82 | HP | 2 | 3 |
| 15/08/2016 | 84 | HP | 2 | 3 |
| 30/07/2016 | 85 | MH | 3 | 4 |
| 03/09/2016 | 85 | MH | 2 | 4 |
| 08/09/2016 | 85 | MH | 2 | 3 |
| 30/07/2016 | 88 | HP | 3 | 4 |
| 15/08/2016 | 88 | HP | 2 | 3 |
| 31/08/2016 | 88 | HP | 2 | 3 |
| 01/09/2016 | 88 | HP | 2 | 3 |
| 03/09/2016 | 88 | HP | 2 | 3 |
| 03/09/2016 | 89 | HP | 2 | 3 |
| 06/08/2016 | 91 | HP | 5 | 5 |

## Appendix C - Mechanical Harvest Calculations

Mechanical harvesting is simulated when **Mode**=0. The only other relevant parameter in this case is the variable **CutHt,** which is the heigh above ground-level (in cm) that harvesting takes place. This value is obtained by adding the shear height (cm) to the table height (cm). As they are not relevant, all other parameters are set to zero or default values for mechanical harvesting. The 'cut-point' at which the shoot is cut relative to its base height is determined by subtracting the shoot's base-height from **CutHt** to give the length of the residual shoot. The number of leaves per shoot that are harvested are determined according to whether their base positions are higher than this cut-point. At present, it is assumed that the leaves themselves are not cut by the harvesting process.

- Description of mechanical harvesting from manual

This gives:

> CutHT (height above ground level for harvesting) =Table Height (80cm) + Shear Height (2cm)
> cut-point (shoot cut relative to base height) = CUTHT - shoot-s base'height = length of residual shoot
> Num leaves harvested if leave base position > cut point

1. On 15/06/2015, for field 17:

    a. mechanical harvest routine predicted a yield of 12.46 kg/ha per week
    b. hand plucked harvest routine predicted a yield of 159 kg/ha per week
    c. actual harvest was 355 kg/ha per week

2. Comparing hand plucked vs mechanically harvested for 15/06/2015

    a. 359 out of 500 shoots were plucked in the mechanical routine
    b. 187 out of 500 shoots were plucked in the hand plucked routine

3. But there are far fewer leaves to harvest on mechanical - 100 leaves vs 1698 leaves for hand plucked.
4. Mechanically harvested - 38 out of 500 shoots at growth stage 2
5. Hand plucked - 258 out of 500 shoots at growth stage 2

Whenever a shoot is plucked it is reset - leaves to 0 and growth stage to 0
Growth stages and leaves increase based on:

1.

$$ob\_S1DR * (DDIdev * DLfac * s1DRwf)$$

2.

$$ob\_S2DR * (DDIdev * DLfac * s2DRwf)$$

where, on 15/06/2015:

    ddidev = 0.637260232, daily increments in development days for phenology
    dlfac = 0.992648663, daily..... (1-ShootDLsensitivity*(ShootDLcrit-Photoperiod))
    sldrwf = 1, water stress reduction factors
    s2drwf = 1, water stress reduction factors
    s1dr = between 0.025 to 0.06, stage 1 development rate
    s2dr = between 0.1 to 0.35, stage 2 development rate

**Appendix D Proposed changes in the CUPPA-Tea Code**

The changes include a modified method to determine harvest interval based on a phyllochron, the modification of the minimum harvestable shoot height, and an additional quality indicator output.

    Red text - changed code.
    Black text = existing code

Summary of changes made:

1. Add last date of prune to model parameters
2. Add harvest method to model parameters
3. Change ShearHeight from 5 to 3 and include an additional quality index
4. Calculate initial days from prune in teagrowth initialisation
5. Calculate daily Leaf appearance rate based on temperature and soil water deficit
6. Calculate phyllochron multiplier based on days from prune and harvest method
7. Accumulate Leaf appearance rate, setting to 0 on harvest
8. Compare accumulated leaf appearance rate with phyllochron multiplier

**Data to pass to CUPPA-Tea**

Add last prune date and harvest method to Model Parameters

1. Last prune date in DateTime format, for instance: "12/04/2019"
2. Harvest Method set to 1, 2 or 3, where:

      a. 1 = Mechanical Harvesting
      b. 2 = Shears
      c. 3 = Hand

3. Change *config* file from:

```
"CropManagementParameters": {
"ShearHeight": 5,
To
"CropManagementParameters": {
"ShearHeight": 3,
```

**Changes to DSS**

1. Harvest interval is when 'SumLAR' is > = 'Phyllo'
2. To predict forward the following quality parameter output QI2toall = (number of 2 banj + number of 2 grow) / (number of 2 banj + number of 2 grow + number of 3 banj + number of 3 grow + number of 4 or greater banj + number of 4 or greater grow)

**Code Changes**

TeaModel.cs

1. In *TeaModel* routine, add start date to tea growth

    _teaGrowthobj._endDate = endDate;
    _teaGrowthobj._startDate = startDate;

2. In *GetInputData* routine, add prune date and harvest method:

    _waterobj.IrrigLevel = config["CropManagementParameters"]["IrrigationThreshold"];
    _teaGrowthobj._prunedate = config["CropManagementParameters"]["PruneDate"];
    _teaGrowthobj._harvestMethod = config["CropManagementParameters"]["HarvestMethod"];

OutputData.CS

1. In *UpdateOverview* add new accumulated leaf appearance rate, phyllochron multiplier and daily leaf appearance rate:

```
record.Add("5+b", Math.Round(teaData.PluckDist[5], 0));
record.Add("SumLAR", Math.Round(teaData._LAR, 2));
record.Add("Phyllo", Math.Round(teaData._Phyllomult, 2));
record.Add("DailyLAR", Math.Round(teaData._dailyLAR, 2));
```

Teagrowth.cs

1. Add Leaf appearance rate, phyllo multiplier, harvest method, daily LAR, prune date and start date as class variables

```
        public DateTime _endDate { get; set;}
        public double _LAR { get; set; }
        public double _Phyllomult { get; set;}
        public Int16 _harvestMethod { get; set;}
        public double _dailyLAR { get; set;}
        // AH 26/02/2020 add prune date
        public DateTime _prunedate { get; set;}
        public DateTime _startDate { get; set; }
```

2. Add private variables to class for prune cycle:

```
private double _aSenescedWt = 0;
      // 26/02/2020 Calculate days from prune
      private int _daysfromprune = 0;
      const int _prunecycle = 4; // number of years in a prune cycle
```

3. In Init Calculate initial days from prune:

```
        double TRW;
        double THtSD;
        int NS;
            // Calculate days from prune, start from day before sim start date as day added
        in growth routine
            // and allow for prune dates before simulation start date
            if (_prunedate > _startDate) { _daysfromprune = (_prunecycle * 365) +
        (_startDate - _prunedate).Days - 1; }
            else {_daysfromprune = (_startDate - _prunedate).Days - 1; }
```

4. At Start of *Growth* routine:

```
public void Growth(DateTime simDate, int das, int cYear, Weather weatherData, Water
    waterData)
    {
        // AH 26/02/20 Days from prune
        _daysfromprune += 1;
        if (simDate == _prunedate) { _daysfromprune = 0; }
```

5. In *Growth,* after ShootDevelopment and before Prunedate check, calculate leaf appearance rate and phyllochron multiplier, set multiplier to 8 if simulation date is the prune date:

```
        _bushobj.ShootDevelopment(DDIdev, DDllen, DLfac, DeltaDL, _sDfac, _wSFadj,
        _ndef2, das);
        _bushobj.AllocateDM(_dryMatterOn);
        // {dry matter balance}
        //{with bushData^ do
        // begin
```

```
// writeIn(das:6,pwt:6:1,ShootWeight:6:1,ShootGR:6:1, PluckWt:6:1, BreakWt:6:1,
// MaintenanceLeafWt-mlw:6:1,
//'',ShootWeight-pwt-ShootGR+PluckWt+BreakWt+(MaintenanceLeafWt-mlw): 12:8);
// pwt=ShootWeight; mlw=MaintenanceLeafWt;
// end;}
// Leaf appearance rate
double dailyLAR = 0;
if (weatherData.Tmean < 12) {dailyLAR = 0; }
else {dailyLAR = 0.186 - 4.6 * Math.Pow(0.765, weatherData.Tmean); }
double f = 0;
if (waterData.Swdef < 52.15) { f = 1; }
else { f = 1.218 - 0.161 * Math.Pow(1.00584, waterData.Swdef); }
_LAR += (dailyLAR * f);
_dailyLAR = (dailyLAR * f);
// default multiplier to 8 if in prune cycle and before first harvest
if (_phenoCode == "Pr")
{
        _Phyllomult = 8;
} else
      {
      if (_harvestMethod == 1) {_Phyllomult = 2.73 + _daysfromprune * 0.0006694; }
      else if (_harvestMethod == 2) {_Phyllomult = 1.26 + _daysfromprune * 0.00118;
      }
      else { _Phyllomult = 1.26 + _daysfromprune * 0.00118; }
      }
// {if date of pruning then prune bushData}
if (PruneDate(simDate))
      {
      _bushobj.Prune();
      _phenoCode = "Pr";
      _phenoString = "Pruning";
      _Phyllomult = 8;
      }
```

6. In *Growth,* reset leaf appearance rate to 0 on harvest date:

```
// {if date of plucking then pluck bushData}
if (PluckDate(simDate) && (das != 0))
      {
      //with bushData do
      _bushobj.Pluck(_maxPluckLeaves, _pluckDist, _pluckBanji, das);
      _phenoCode = "Pl";
      _phenoString = "Plucking";
      _LAR = 0;
      }
```

7. In *PruneDate* routine check if simulation date is prune date:

```
private bool PruneDate(DateTime SimDate)
{
      // return false;
      return _prunedate == SimDate;
}
```

### Appendix E - Description of initial focus on shoot numbers

**[0528]** An initial approach that was tried to address the effect of changing yields with prune was to change the shoot number multiplier within CUPPA-Tea. However this approach was not developed when the base height approach appeared more promising and it is good practice to change only one parameter at a time. The addition of differential harvest intervals with time from prune (Burgess, et al., 2020) could theoretically address some prune effects. The analyses undertaken are briefly reported here for record.

**Test B1** - **recalculate shoot number based on prune age**

The CUPPA-Tea model was created for a tea in the second or third year from prune. Analysis of actual yield data from Kericho Estate from 2015, 2016 and 2017 showed that the green leaf yield increased with the year from prune (Fig 150).

$$\text{Equation 46: } \textit{Green leaf yield = 8464 kg/ha + 1657 * year from prune}$$

This relationship indicates that on the day of prune (year = 0), the yield is 0.7186 (i.e. 8464/(8464+3314)) of the yield at two years after prune.

Method

The first test was simply to modify the shoot number based on the time from pruning.

Field 5 was used to test the changes: assumed prune date of 15 Feb 2018, Clone 225, mechanically harvested and a default shoot number of 650 shoots per bush.

At start of model run:

1. Calculate days from prune:

   a. If prune date is before model start date then days from prune = (5 years * 365) + difference in days between start date and prune date - 1,

   b. If prune date is after model start date then days from prune = difference in days between start date and prune date - 1

2. Store original shoot number

3. Calculate shoot number based on original shoot number and days from prune using formula: Shoot Number = original shoot number/1.392 + 0.000386* original shoot number * days from prune.

$$\text{This is equivalent to: } 0.718\ SN_{original} + (1 - 0.718)/(2*365) * SN_{original} * \text{Days from prune}$$

4. The above equation was derived from the yield equation derived from 2015 to 2017 actual harvest data from Kericho, based on assumption that shoot number currently used is shoot number 24 months after prune:
y = 1657.6x + 8464.3, where y = yield and x = prune year

Result

The above procedure should result in a steady increase in yield with the time from prune. Compared to a default shoot number of 650, immediately after prune the shoot number multiplier is 467 (right hand scale) (Fig 151). The result of this analysis is that from pruning on 15 Feb 2018, all the modelled shoots are synchronised and there is a very large erroneous yield peak at the first harvest.

**Test B2 - Adjusting the modelled shoots**

A second test focused on reducing the **modelled** number of shoots back to zero after pruning, and then to add one new modelled shoot per day until the shoot number reaches 500. In Test 3 we still multiplied the result by the predicted shoot number.

Method

In this test, the number of shoot **modelled** is reduced to zero on the day of prune.

1) The base height remains at 75 cm.

2) One additional shoot is modelled (starting at zero) for each day after pruning until 500 shoots are reached (Fig 152).

3) The predicted yield is determined by multiplying the modelled shoots by the number of shoots.

Results

Adding an additional shoot per day removes the synchronisation of shoots and the modelled and predicted yields seem similar to the actual yield (Fig 153).

**Test B3** - **Test 2 but assume a 4 year cycle and add two shoots per day**

Test 3 was to investigate the effect of assuming a four, rather than a five year pruning cycle and adding back two modelled shoots per day.

Method

In this test, the number of shoot **modelled** is reduced to zero on the day of prune. The base height remains at 75 cm. However the procedures varies from Test 2 in that:

1) two additional shoots are modelled (starting at zero) for each day after pruning.

2) It is assumed that the pruning follows a four rather than a five year pruning cycle.
Assuming a four year pruning cycle reduces the assumed shoot number immediately prior to prune from 924 to 833 shoots/bush (Fig 154)

3) The actual shoot number is the modelled shoot number until it reaches 500 shoots/bush

Results

Moving to the assumption of pruning at four years rather than five years is to reduce marginally the predicted yield prior to pruning (Fig 155). Test B3 results in results in lower predicted yields initially after prune as the shoot number multiplication factor is much lower.

**Appendix F - Description of Crop Management Parameters**

| Table 54 - Crop management parameters taken from user input | | | |
|---|---|---|---|
| **Parameter** | **Description** | **Units** | **Current Default Values** |
| Population Density | Population density of tea bushes | Bushes m-2 | 0.9259 |
| RowSpacing | Spacing between rows of bushes | m | 1.2 |
| Pluckinterval | Interval between successive pluckings | Days | User input |
| PluckUpperLim | Maximum number of leaves on a shoot to be plucked | # leaves | User input |
| PluckLowerLim | Minimum number of leaves on a shoot to be plucked | # leaves | User input |
| ShearHeight | Height of harvesting above table for mechanical harvesting | cm | User input |
| BreakBack | Break back remaining stub of a plucked shoot (Y/N) | | User input |
| PluckToLeaf | Pluck down to specified leaf number on a shoot | | User input |
| MinPluckLength | Minimum size allowed of a plucked shoot | cm | User input - default = 0 |

(continued)

| Table 54 - Crop management parameters taken from user input | | | |
|---|---|---|---|
| Parameter | Description | Units | Current Default Values |
| MaxPluckLength | Maximum size allowed of a plucked shoot | cm | User input - default = 100 |
| Irrigations | Date and amounts applied at which the model will carry out irrigations | (date, mm) | User input |
| Pluckings | Dates at which the model will carry out pluckings | Date | User input |
| IrrigationThreshold | Soil water deficit at which automatic irrigation occurs | mm | User input - default = 50 |

**Appendix G - Parameter Tables**

**Table 55 - Crop management parameters assumptions in CUPPA-Tea**

| Crop Management | Value | | Units |
|---|---|---|---|
| | Tanzania | Kericho | |
| Population density | 0.9259 | 0.9259 | Bushes m$^{-2}$ |
| Row spacing | 1.2 | 1.2 | m |
| Pluck upper limit | 4 | 3 | m |
| Pluck lower limit | 2 | 2 | m |
| Shear height | 2 | 3 | m |
| Pluck to leaf | 1 | 1 | - |
| Min pluck length | 0 | 0 | cm |
| Max pluck length | 100 | 100 | cm |
| Irrigation threshold | 190 | - | mm |

**Table 56 - Initial conditions assumptions in CUPPA-Tea**

| Initial conditions | Value | | Units |
|---|---|---|---|
| | Tanzania | Kericho | |
| Fine root weight | 190 | 190 | g m$^{-2}$ |
| Tops Residue | 1000 | 1000 | g m$^{-2}$ |
| Leaf area index | 6.5 | 6.5 | m$^2$ m$^{-2}$ |
| Root depth | 550 | 300 | cm |
| Tops residue fraction | 0.01 | 0.01 | - |
| Shoot No | 1400 | 960 | m-2 |
| Stem wood weight | 2325.4 | 2325.4 | g m$^{-2}$ |
| Reserves weiqht | 0 | 0 | g m$^{-2}$ |
| Green stem weiqht | 200 | 200 | g m$^{-2}$ |
| Thick root weiqht | 1245 | 1245 | g m$^{-2}$ |

(continued)

| Initial conditions | Value | | Units |
| --- | --- | --- | --- |
| | Tanzania | Kericho | |
| Table height | 80 | 75 | cm |
| TopsNFraction | 0.0325 | 0.0325 | - |
| Leaf weiqht | 525.4 | 525.4 | $g\ m^{-2}$ |
| Root residue (dead roots) | 200 | 200 | $g\ m^{-2}$ |
| Root N fraction | 0.01 | 0.01 | - |
| Prune base height | 65 | 60 | cm |

### Table 57 - Initial root density, soil water, $NH_4^+$ and $NO_3^-$ in CUPPA-Tea

| Initial conditions | Tanzania | Kericho | Units |
| --- | --- | --- | --- |
| Root density (cm depth, value) | 25,3.4073,40,2.8067,55,2.312, 70,1.9045,90,1.4706,110,1.1355,130, 0.8768,150,0.6771,170, 0.5228,190, 0.4 037,210,0.3117,230,0.2407,250,0.185 9,270,0.1435,290,0.1108,310,0.0856,3 30,0.0661,350,0.051,370,0.0394,390,0 . 0304,410,0.0235,430,0.0181,450,0.01 4,470,0.0108, 490,0.0084,510,0.0064 | Likewise | v/v water |
| Soil water (cm depth, value) | 25,0.266,40,0.287,55,0.297,70,0.288,9 0,0.271,110,0.274,130,0.276,150,0.28 6,170,0.291,190,0.308,210,0.331,230, 0.332,250,0.340,270,0.347,290,0.331, 310,0.338,330,0.321,350,0.318,370,0. 314,390,0.312,410,0.308,430,0.305,45 0,0.302,470,0.298,490,0.296 | 0.32 | $mm^3$ $mm^{-3}$ |
| $NH_4^+$ (cm depth, concentration) | 15,25,50,26,200,0.6,320,0,500,0 | 10,85,40,56,80,64 , 120,0,150,0,300, 0 | mg $kg^{-1}$ |
| $NO_3^-$ (cm depth, concentration) | 15,56,50,74,200,1.5,320,0,500,0 | 10,5,40,4,80,4,12 0,0,150,0,300,0 | mg $kg^{-1}$ |

### Table 58 - Clonal parameters assumptions in CUPPA-Tea

| Clonal parameters | Tanzania | Kericho | Units |
| --- | --- | --- | --- |
| Genotype name | 6/8 | MRTM1 | - |
| Dry matter temperature response (temp, temp factor) | 0,0,10,0,20,1,35,1,42,0 | 0,0,10,0,20,1,35,1,42,0 | |
| Critical lower day length | 11.25 | 11.25 | h |
| Development optimum temperature | 24 | 24 | °C |
| Development maximum temperature | 40 | 40 | °C |
| Development base temperature | 8 | 8 | °C |
| Critical saturation deficit | 2.3 | 2.3 | kPa |

(continued)

| Clonal parameters | Tanzania | Kericho | Units |
|---|---|---|---|
| Saturation deficit sensitivity | 0.43 | 0.43 | kPa$^{-1}$ |
| Critical delta daylength | -0.001 | -0.001 | |
| Critical shoot day length | 12 | 12 | h |
| Extension base temperature | 10 | 10 | °C |
| Critical upper daylenqth | 12.15 | 12.15 | h |
| Stage2 development rate | 0.212 | 0.212 | (Dd)$^{-1}$ |
| Stage2 extension rate | 0.537 | 0.537 | mm Eu$^{-1}$ |
| Staqe1 development rate | 0.0381 | 0.0381 | (Dd)$^{-1}$ |
| Stage1 extension rate | 0.0129 | 0.0129 | mm Eu$^{-1}$ |
| Root depth growth rate | 0.2 | 0.055 | cm d$^{-1}$ |
| Mean last leaf | 5.3 | 5.3 | #leaves |
| Extinction coefficient | 0.7 | 0.7 | - |
| Shoot day length sensitivity | 0.4 | 0.4 | h$^{-1}$ |
| Shoot coefficient of variation | 0.3 | 0.3 | - |
| Weight stage slope | 0.055 | 0.055 | g leaf$^{-1}$ |
| Specific root length | 5000 | 5000 | cm g$^{-1}$ |
| Radiation use efficiency | 0.7 | 0.7 | g MJ$^{-1}$ |
| Max leaf age | 300 | 300 | d |

### Table 59 - Soil parameters assumptions in CUPPA-Tea

| Soil parameters | Tanzania | Kericho | Units |
|---|---|---|---|
| Organic carbon (cm depth, value) | 15,1 . 61,70,0.7,500,0 | 10,4.0,40,3.5,80,2.8,120,1.3,150,1.3,300,1.3 | % |
| Lower limit (PWP) (cm depth, value) | 15,0.161,70,0.203,160,0.215,200,0.251,260,0.285,500,0.261 | 5,0.19,15,0.19,30,0.19,45,0 . 19,60,0.19,90,0.19,120,0.19,150,0.19,300,0.19 | v/v water |
| Upper limit (FC) | 15,0.266,70,0.288,160,0.286,200,0.308,260,0.340,500,0.296 | 5,0.29,15,0.29,30,0.29,45,0 . 29,60,0.29,90,0.29,120,0.29,150,0.29,300,0.29 | v/v water |
| Soil description | NTRU: Sandy clay over clay | Medium sandy clay loam | - |
| Bulk density (cm depth, value) | 15,1.24,70,1.24,160,121,200,1.01,260,1.01 ,500,1.17 | 5,1.35,15,1.35,30,1.36,45,1 . 36,60,1.36,90,1.37,120,1.38,150,1.38,300,1.38 | g cm$^{-3}$ |
| Humus mineralization factor | 1 | 1 | - |
| Soil albedo | 0.13 | 0.13 | - |
| Drainage constant | 0.3 | 0.4 | - |
| Runoff parameter | 0 | 75 | - |

(continued)

| Soil parameters | Tanzania | Kericho | Units |
|---|---|---|---|
| Root factor | 15,1.000,70,1.000,16 0,1.000,200,1.000,26 0,1.000,500,1.000 | 5,1,15,1,30,0.819,45,0.607, 60,0.607,90,0.368,120,0.20 2,150,0.111,300,0.111 | - |
| Soil depth | 500 | 300 | cm |
| pH (cm depth, value) | 15,4.6,70,4.2,160,4.9, 200,5.8,260,5.4,500,6 .0 | 5,4.01,15,4.05,30,4.05,45,4 . 05,60,4.05,90,4.05,120,4.0 5,150,4.05,300,4.05 | - |
| Soil evapstage1 max | 7.5 | 6 | mm |
| Saturated water content (cm depth, value) | 15,0.303,70,0.334,16 0,0.383,200,0.373,26 0,0.343,500,0.343 | 5,0.38,15,0.38,30,0.38,45,0 . 38,60,0.38,90,0.38,120,0.3 8,150,0.38,300,0.38 | v/v water |

**Table 60 - Assumptions used for the financial N response curves (KSh = Kenyan Shilling)\***

| | Value | Unit |
|---|---|---|
| N content in urea | 0.46 | - |
| Green leaf value | 45 | KSh/kg green leaf |
| Labour rate | 688 | KSh/day |
| Transport cost | 0.6 | KSh/kg green leaf (0.005 US$ assumed 10 km distance) |
| Fertiliser application rate | 280 | kg/day |
| Exchange rate | 108 | KSh/USD |
| Assumed plucking rate | 45 | kg green leaf/day |
| Dry matter content | 0.22 | - |
| Fertiliser cost | 1.01 | USD/kg urea |

\* Profits were calculated when the total fertilizer cost was taken out from the value of revenue after harvesting costs. Revenue after harvesting costs was calculated as the subtraction of the harvesting cost from the value of made tea (all in USD ha-1)

**Table 61 - Summary assumptions per N response included in CUPPA-Tea**

| N responses | Assumptions |
|---|---|
| N application and urea hydrolysis | - Fertilizer is uniformly incorporated into the topsoil layer<br>- N released by the hydrolysis of urea is added to the soil ammonium pool<br>- Any urea remaining after 21 days is assumed to be hydrolysed |
| N movement | - No upward loss from the top layer occurs by this process<br>- Only movement of nitrate and urea are considered - ammonium is assumed not to be transported<br>- Movement of NOs and urea is dependent on water movement from one layer to the next. A simple cascading approach is used in which N lost from one layer is added to the one below<br>- When the conc. of NOs falls to 1 mg kg$^{-1}$ no further leaching from that layer occurs. |
| Plant N concentration | - Critical N content (TCNP) below which growth will be reduced<br>- Minimum N content (TNMC) below which N content never falls |

(continued)

| N responses | Assumptions |
|---|---|
| | - An index of deficiency relating the actual concentration (TANC) of above ground biomass to TMNC and TCNP used to determine the effect of N on plant growth |
| N uptake | - In case the soil profile's potential N supply, is greater than the crop N demand, then an N uptake factor is calculated and used to reduce the N uptake from each layer to the level of demand |
| N exudation | - Under conditions of luxury N uptake (TANC>TCNP), exudation of organic compounds can occur<br>- This exuded N is added back to the fresh organic N pool and can be further mineralized and made available to the plant again |
| N mineralization | - The model starts with a C/N ratio of 40<br>- Initial FOM(L) contains: 20% carbohydrates, 70% cellulose and 10% lignin<br>- Decay rates: 0.2 for carbohydrates, 0.05 for cellulose and 0.095 for lignin<br>- 0.02 is the N requirement for microbial decay of a unit of FOM(L)<br>- Potential humus mineralization rate: $8.3*10^{-5}$ |
| N nitrification | - A 'capacity index' introduces a lag effect if conditions in the previous 2 days have been unfavorable for nitrification<br>- The potential nitrification rate is independent of soil type<br>-Nitrification is null at 4.5>=pH>=9.0 |
| N denitrification | - Calculations are only done when soil water content exceeds field capacity, soil temperature is greater than 5°C and nitrate concentration is greater than 1 mg kg$^{-1}$ soil |

**Claims**

1. A computer-implemented system for managing tea harvesting, the system comprising:

   a. a data store, the data store containing data defining of one or more growing regions of a tea plantation;
   b. a growth and yield prediction module which is configured, for each of the growing regions of the tea plantation defined in the data store, to model a plurality of tea plants within the respective growing region, and thereby predicting: a growth of each tea plant within the respective growing region over a period of time and so a yield of each growing region of the tea plantation when harvested;
   c. wherein the growth and yield prediction module is further configured to predict a recommended time for harvest to provide a desired quality of tea and desired yield of tea; and
   d. a user interface module, configured to provide, to a user, the predicted yield of each growing region of the tea plantation when harvested.

2. The system according to claim 1, wherein the user interface module displays geographic data of the respective growing region, preferably as a map.

3. The system according to any preceding claim, wherein the data defines a tea plantation comprising a plurality of growing regions, and wherein the user interface module is configured to allow a user to select a growing region from the plurality of growing regions, resulting in the system displaying predictions made for the growing region selected.

4. The system according to any preceding claim, wherein the growth and yield prediction module is further configured to predict, for each tea plant within a respective growing region, a recommended harvest interval, a shoot count, and a height of pluckable shoots.

5. The system according to any preceding claim, wherein the growth and prediction module predicts a quality index for the harvested tea plants, preferably wherein the quality index is calculated as a proportion of the shoots in a preferred state for harvesting with respect to the total number of shoots.

**6.** The system according to any preceding claim, wherein the growth and yield prediction module predicts a number of harvested shoots based on the number of shoots which have more leaves than a predetermined threshold, and/or the height of each shoot.

**7.** The system according to any preceding claim, wherein the growth and yield prediction module predicts a leaf appearance rate or a phyllochron time.

**8.** The system according to any preceding claim, wherein the growth and yield prediction is configured to incorporate the effects of harvest method on the growth of the tea plants, preferably wherein the harvest method is mechanical harvesting, shear harvesting, or hand plucking.

**9.** The system according to any preceding claim, wherein the system comprises a data input module configured to receive data related to the respective growing region, and wherein the data input module provides data to the growth and prediction module.

**10.** The system according to claim 10, wherein the data input module comprises an environmental data module configured to receive environmental data for the respective growing region, preferably wherein the environmental data comprises observed weather data or forecasted weather data.

**11.** The system according to claim 11 or 12 as dependent on claim 8, wherein the leaf appearance rate or phyllochron time is calculated based on the environmental data, preferably based on an air temperature or a soil water deficit level.

**12.** The system according to any one of claims 10 to 13, wherein the data input module comprises a remote sensing data module configured to receive remote sensing data comprising one or more observations of the respective growing region;

preferably wherein the remote sensing module detects a harvest state for the respective growing region;
more preferably wherein the remote sensing module detects a first region of the respective growing region as harvested and detects a second region of the respective growing region as being unharvested.

**13.** The system according to any one of claims 14 to 16, wherein the remote sensing module detects a type of harvesting used in the respective growing region or detects a level of growth in the respective growing region.

**14.** The system according to any preceding claim, wherein the growth and yield prediction module predicts the effects of pruning on the growth and the yield of the tea plants; preferably wherein the growth and yield prediction module is configured to model each tea plant as having at least one shoot, and wherein the growth and yield prediction module models the effects of pruning by one or more of the following steps:

a. modelling a length for the shoot, and reducing the length of the shoot,
b. modelling a development stage of the shoot, and setting the developmental stage to an earlier stage, and/or
c. modelling a base height between the bottom of the shoot and the soil surface, and reducing the base height of the shoot.

**15.** A computer-implemented method for managing tea harvesting, comprising steps of:

obtaining, from a data store, data defining one or more growing regions of a tea plantation;
modelling, by a growth and yield prediction module and for each of the growing regions of the tea plantation defined in the data store, a plurality of tea plants within the respective growing region, and thereby predicting:
a growth of each tea plant within the respective growing region over a period of time and so a yield of each growing region of the tea plantation when harvested;
predicting, by a growth and yield prediction module, a recommended time for harvest to provide a desired quality of tea and desired yield of tea; and
providing to a user, via a user interface module, the predicted yield of each growing region of the tea plantation when harvested.

**Fig 1**

**Fig 2**

## Fig 3

## Fig 4

**Fig 5**

Altitude of each Field in Kapkorech Estate, Kenya

**Fig 6**

Temp (°C)                                                                    Rain (mm)

RAIN ▬▬TMAX ▬▬TMIN

**Fig 7**

Temp (°C)                                                                    Rain (mm)

RAIN ▬▬TMAX ▬▬TMIN

Fig 8

Cumulative Growth (m -2)

Fig 9

Harvested Yield (kg MT ha-1)

**Fig 10**

Harvested Yield

**Fig 11**

**Fig 12**

**Fig 13**

**Fig 14**

**Fig 15**

**Fig 16**

**Fig 17**

**Fig 18**

**Fig 19**

**Fig 20**

**Fig 21**

EP 4 388 867 A1

**Fig 22**

**Fig 23**

**Fig 24**

**Fig 25**

**Fig 26**

**Fig 27**

**Fig 28**

**Fig 29**

**Fig 30**

**Fig 31**

**Fig 32**

**Fig 33**

**Fig 34**

**Fig 35**

**Fig 36**

**Fig 37**

**Fig 38**

**Fig 39**

**Fig 40**

SAR·image·with·MH·fields·(row·pattern)·and·HP·fields·(no·rows)¶

Sampling·window·moving·across·SAR·image¶

Component·with·24·m·period¶

Fourier amplitude

2D·Fourier·transform¶

Image·after·automatic·detection·of·harvest·method·at·multiple·sampling·locations¶

MH¶ MH¶ MH¶ HP¶ HP¶ HP¶
HP¶ MH¶ HP¶ HP¶ MH¶ HP¶
HP¶ HP¶ MH¶ MH¶ MH¶ HP¶
HP¶ MH¶ HP¶ HP¶ MH¶ MH¶

Majority·filter·to·eliminate·erroneous·detections¶

Image·with·final·decision·for·each·tea·field¶

MH¶

HP¶

HP¶

MH¶

**Fig 41**

Image 1

Image 2

Similar canopies

High coherence

**Fig 42**

Image 1          Image 2

Random
rearrangement
Low coherence

**Fig 43**

Image 1          Image 2

Coherence
between image
chips

Coherence $\gamma$

Averaging filter

Averaged coherence

Threshold filter

Harvested (grey) and non-
harvested (green) areas

**Fig 44**

Different levels of moisture

Backscatter of 3
different pixels for
a given field

Img 1    Img 2    Img 3    Img 4    Time

Corrected for
moisture

Difference in local
incidence angle

Time

Corrected for
local incidence

The remaining variations
are ideally related to shoot
growth only

Time

**Fig 45**

Image 1

Image 2

Field 12

Coherence
between
2 images

Image 2

Harvested → "Backscatter
of harvested area" from
image 2

Not Harvested → "Backscatter
of non-harvested area" from
image 2

**Fig 46**

Image 1          Image 2

time

Possible harvest green
area – not detected by
coherence analysis

**Fig 47**

**Fig 48**

**Fig 49**

**Fig 50**

**Fig 51**

Coherence between 30th July and 3rd August

Field sheet from the field sheet on 3rd August

High coherence
(~0.3):
**Not harvested**

Low coherence
(~0.15):
**Harvested**

**Fig 52**

**Fig 53**

**Fig 54**

**Fig 55**

**Fig 56**

Incident VV wave

Random volume scattering

**Fig 57**

Incident HH wave

Random volume scattering + Direct scattering from young shoots

**Fig 58**

Harvested right before image acquisition

Harvested right after image acquisition

Both sides have grown back

**Fig 59**

**Fig 60**

**Fig 61**

**Fig 62**

**Fig 63**

**Fig 64**

Image 1       Image 2       Image 3

## Fig 65

Fig 66

Fig 67

**Fig 68**

Ban1+  1+b  Ban2+  2+B  Ban3+  3+B  Ban4+  4+B  Ban5+  5+B  —Quality

**Fig 69**

Field 1; shear height = 5 cm

Growing1+  Banjhi+1  Growing2+  Banjhi2+  Growing3+  Banjhi3+
Growing4+  Banjhi4+  Growing5+  Banjhi5+  ▲ Yield  —Quality score

**Fig 70**

Field 1; shear height = 4 cm

**Fig 71**

Field 1; shear height = 3 cm

**Fig 72**

Field 1; shear height = 2 cm

Legend: Growing1+ | Banjhi+1 | Growing2+ | Banjhi2+ | Growing3+ | Banjhi3+
Growing4+ | Banjhi4+ | Growing5+ | Banjhi5+ | Yield | Quality score

**Fig 73**

Field 1; shear height = 1 cm

Legend: Growing1+ | Banjhi+1 | Growing2+ | Banjhi2+ | Growing3+ | Banjhi3+
Growing4+ | Banjhi4+ | Growing5+ | Banjhi5+ | Yield | Quality score

**Fig 74**

**Fig 75**

**Fig 76**

**Fig 77**

**Fig 78**

**Fig 79**

**Fig 80**

**Fig 81**

**Fig 82**

**Fig 83**

**Fig 84**

**Fig 85**

**Fig 86**

**Fig 87**

**Fig 88**

**Fig 89**

**Fig 90**

**Fig 91**

**Fig 92**

**Fig 93**

**Fig 94**

Accumulation of phyllochrons between harvests

——Manual accumulation　　········· Accumulated phyllochron in CUPPA-Tea

**Fig 95**

Accumulation of days between harvests

======Manual accumulation

**Fig 96**

**Fig 97**

**Fig 98**

**Fig 99**

Fig 100

Fig 101

**Fig 102**

**Fig 103**

**Fig 104**

**Fig 105**

**Fig 106**

**Fig 107**

**Fig 108**

**Fig 109**

**Fig 110**

**Fig 111**

**Fig 112**

**Fig 113**

First shoot

Base height = table height

First leaf

Fish leaf

Mother leaf

Table height

Second shoot, after first shoot plucked back to fish leaf

Base height = table height

Base height

Second shoot, after first shoot plucked back to first leaf

Base height = table height + base position of remaining leaf

Base position of previous remaining leaf

Base height

**Fig 114**

—●—Without prune   ··△··With prune to 60 cm   ——Actual yield

**Fig 115**

**Fig 116**

**Fig 117**

—●—Prune from 70 cm to 55 cm (constant 650 shoots/m2)

—△—Prune from 75 cm to 60 cm (constant 650 shoots/m2)

——Actual yield

**Fig 118**

$$y = 0.7749x$$
$$R^2 = 0.6858$$

**Fig 119**

**Fig 120**

**Fig 121**

**Fig 122(a)**

**Fig 122(b)**

## Fig 123

| | A | B | C | D Leaf Count | E obs length | F obs dvs | G S1dvr | H S2dr | I shoot BaseHeight | J top leaf base pos | K GS | L c_nlv | M lastleaf | N |
|---|---|---|---|---|---|---|---|---|---|---|---|---|---|---|
| 1 | ShtCnt | Das | Pbanjhi | | | | | | | | | | | |
| 911 | 5 | 909 | True | 1 | 1.30706 | 1.97986 | 0.02563 | 0.25786 | 60 | 0.50814 | 1 | 0 | 1 | |
| 912 | 5 | 910 | True | 1 | 1.31447 | 1.99494 | 0.02563 | 0.25786 | 60 | 0.50814 | 1 | 0 | 1 | |
| 913 | 5 | 911 | False | 2 | 1.32237 | 2.01081 | 0.02563 | 0.25786 | 60 | 1.32237 | 2 | 1 | 1 | |
| 914 | 5 | 912 | True | 2 | 1.655 | 2.14655 | 0.02563 | 0.25786 | 60 | 1.32237 | 0 | 0 | 1 | |
| 915 | 5 | 913 | True | 2 | 1.655 | 2.14655 | 0.02563 | 0.25786 | 60 | 1.32237 | 1 | 0 | 1 | |
| 916 | 5 | 914 | True | 2 | 1.66152 | 2.16005 | 0.02563 | 0.25786 | 60 | 1.32237 | 1 | 0 | 1 | |
| 917 | 5 | 915 | True | 2 | 1.66794 | 2.17354 | 0.02563 | 0.25786 | 60 | 1.32237 | 1 | 0 | 1 | |
| 918 | 5 | 916 | True | 2 | 1.67496 | 2.18783 | 0.02563 | 0.25786 | 60 | 1.32237 | 1 | 0 | 1 | |
| 919 | 5 | 917 | True | 2 | 1.68089 | 2.20053 | 0.02563 | 0.25786 | 60 | 1.32237 | 1 | 0 | 1 | |
| 920 | 5 | 918 | True | 2 | 1.68742 | 2.21403 | 0.02563 | 0.25786 | 60 | 1.32237 | 1 | 0 | 1 | |
| 921 | 5 | 919 | True | 2 | 1.69384 | 2.22753 | 0.02563 | 0.25786 | 60 | 1.33237 | 1 | 0 | 1 | |

## Fig 124

**Fig 125**

**Fig 126**

**Fig 127**

**Fig 128**

Fig 129

Fig 130

**Fig 131**

**Fig 132**

**Fig 133**

● Base Height Leaf 7   ● Table Height

**Fig 134**

● Base Height Leaf 10   ● Table Height

**Fig 135**

**Fig 136**

**Fig 137**

**Fig 138**

**Fig 139**

Accumulated Leaf Appearance Rate

**Fig 140**

**Fig 141**

**Fig 142**

**Fig 143**

**Fig 144**

$y = 799 + 0.837\,x,\ R^2 = 0.78,\ P < 0.001$
RMSE = 681
EF = 0.80

$y = 1.06 \times 10^{+3} + 0.724\,x,\ R^2 = 0.79,\ P < 0.001$
RMSE = 507
EF = 0.75

**Fig 145**

**Fig 146**

Fig 147

## Fig 148

## Fig 149

**Fig 150**

**Fig 151**

**Fig 152**

**Fig 153**

**Fig 154**

**Fig 155**

Europäisches
Patentamt
European
Patent Office
Office européen
des brevets

# EUROPEAN SEARCH REPORT

Application Number

EP 22 38 6097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 143587 A (KAGOSHIMA HORIGUCHI SEICHA KK; NAT AGRICULTURE & FOOD RES ORG ET AL.) 3 October 2022 (2022-10-03) | 1-3,5,7, 9,15 | INV. A01G17/00 A01G22/00 |
| A | * abstract * <br> * paragraph [0008] – paragraph [0086] * <br> ----- | 4,6,8, 10-14 | |
| A | NISAR AHMED ET AL: "Development of Crop Yield Estimation Model using Soil and Environmental Parameters", ARXIV.ORG, CORNELL UNIVERSITY LIBRARY, 201 OLIN LIBRARY CORNELL UNIVERSITY ITHACA, NY 14853, 10 February 2021 (2021-02-10), XP081881084, * the whole document * <br> ----- | 1-15 | |

TECHNICAL FIELDS
SEARCHED (IPC)

A01G

The present search report has been drawn up for all claims

| Place of search | Date of completion of the search | Examiner |
|---|---|---|
| The Hague | 20 June 2023 | Balzar, Maarten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 388 867 A1

## ANNEX TO THE EUROPEAN SEARCH REPORT
## ON EUROPEAN PATENT APPLICATION NO.

EP 22 38 6097

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2023

| Patent document cited in search report | Publication date | Patent family member(s) | Publication date |
|---|---|---|---|
| JP 2022143587 A | 03-10-2022 | NONE | |

EPO FORM P0459

For more details about this annex : see Official Journal of the European Patent Office, No. 12/82

192

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ASSENG, S. et al.** Simulation Modeling: Applications in Cropping Systems. *Agriculture and Food Systems,* 2014, 102-112
- **BAGCHI, A. ; SWAIN, D. ; MITRA, A.** Neuroprotective effect of organic and inorganically grown tea on oxidative damage in rat model of Alzheimer's disease. *Adv Tradit Med,* 2020, vol. 20, 439-450
- **BANERJEE, A.** Tea bush biomass assessment through polarimetric decomposition and semi-empirical modelling. Faculty of Geo-Information Science and Earth Observation of the University of Twente, 2012
- **BENBI, D. K. ; NIEDER, R.** Handbook of processes and modeling in the soil-plant system. Food Products Press, 2003
- **BERINGER, T. et al.** First process-based simulations of climate change impacts on global tea production indicate large effects in the World's major producer countries. *Environmental Research Letters,* 2020, vol. 15 (3
- **BISHOP, P ; MANNING, M.** Urea Volatilisation: The Risk Management and Mitigation Strategies. Fertilizer and Lime Research Centre, Massey University, 2010
- **BOEHM, R. et al.** Association between empirically estimated monsoon dynamics and other weather factors and historical tea yields in China: Results from a yield response model. *Climate,* 2016, vol. 4 (2), 20
- **BURGESS, P.** Responses of Tea Clones to Drought in Southern Tanzania. Cranfield University, 1992
- **BURGESS, P. et al.** Evaluation of simple hand-held mechanical systems for harvesting tea (Camellia sinesis. *Experimental Agriculture,* 2006, vol. 42, 165-187
- **BURGESS, P. ; HOLDEN, A. ; CORSTANJE, R.** CUPPA-Tea Decision Support System Enhancements. 1. Modifications to Calculation of the Harvest Interval. Cranfield University, 2020
- **BURGESS, P. J. ; CARR, M. K.** The use of leaf appearance rates estimated from measurements of air temperature to determine harvest intervals for tea. *Experimental Agriculture,* 1998, vol. 34, 207-218
- **BURGESS, P. ; SANGA, B.** Soil nutrient contents below a fertiliser experiment. *Ngwazi Tea Research Unit Report,* 1993, vol. 12

- **CALTAGIRONE, F.** Status, results and perspectives of the Italian Earth Observation SAR COSMO-Skymed. *Rome, EuRAD,* 2009, 330-334
- Tea: Cultivation to Consumption. **CARR, M. ; STEPHENS, W.** Climate, weather and the yield of tea. Chapman and Hall, 1992, 87-133
- **DUGUAY, Y. ; BERNIER, M. ; LÉVESQUE, E. ; TREMBLAY, B.** Potential of C and X Band SAR for Shrub Growth Monitoring in Sub-Arctic Environments. *Remote Sensing,* 2015, vol. 7 (7), 9410-9430
- **DUTTA, R.** Remote sensing: a tool to measure and monitor tea plantations in Northeast India. *Marrakech, FIG Proceedings,* 2011, 1-14
- **EITZINGER, J. ; ANANDACOOMARASWAMY, A.** Modelling the growth and yield of tea (Camellia sinensis L.). *Sri Lanka.. IFAC Proceedings,* 1997, vol. 30 (5), 51-56
- *FAOSTAT Crops and Livestock,* 15 July 2022, https://www.fao.org/faostat/en/#data/QCL
- **FARZADFAR, S. ; KNIGHT, J. ; CONGREVES, K.** Soil organic nitrogen: an overlooked but potentially significant contribution to crop nutrition. *Plant and Soil,* 2021, vol. 462, 7-23
- **FORDHAM, R. ; PALMER-JONES, R.** Simulation of intraseasonal yield fluctuations of tea in Malawi. *Experimental Agriculture,* 1977, vol. 13, 33-42
- **GIANNITSOPOULOS, M. et al.** Modelling the interactions of soils, climate, and management for grass production in England and Wales. *Agronomy,* 2021, vol. 11 (4), 667
- **GODWIN, D. ; JONES, C.** Nitrogen dynamics in soil-plant systems. *Modeling Plant and Soil Systems, Agronomy Monograph,* 1991, vol. 31, 289-321
- **HAIDAR, D. ; PATNAIK, C. ; MOHAN, S. ; CHAKRABORTY, M.** Jute and tea discrimination through fusion of SAR and optical data. *Progress in Electromagnetics Research B,* 2012, vol. 39, 337-354
- **HENGL, T. et al.** Mapping Soil Properties of Africa at 250 m Resolution: Random Forests Significantly improve Current Predictions. *PLoS ONE,* 2015, vol. 10 (6
- **HERGOUALC'H, K. et al.** N2O emissions from managed soils, and CO2 emissions from lime and urea application. *IPCC guidelines for national greenhouse gas inventories,* 2019, 1-48

- **HIJBEEK, R. et al.** Do organic inputs matter - a meta-analysis of additional yield effects for arable crops in Europe. *Plant and Soil,* 2017, vol. 411 (1/2), 293-303
- **HOLZWORTH, D. P. et al.** APSIM - Evolution towards a New Generation of Agricultural Systems Simulation. *Environmental Modelling & Software,* 2014, vol. 62, 327-350
- **HOOGENBOOM, G. et al.** ICROPM: Crop Modeling for the Future. *Journal of Agricultural Science,* 2020, vol. 158, 791-793
- **INDEX MUNDI.** *Urea - Monthly Price - Commodity Prices - Price Charts, Data, and News,* 2022
- **JAYASINGHE, H. ; SURIYAGODA, L. ; KARUNARATNE, A. ; WIJERATNE, M.** Leaf. *Tropical Agricultural Research,* 2014, vol. 25, 450-459
- **JONES, J. et al.** The DSSAT Cropping System Model. *European Journal of Agronomy,* 2003, vol. 18 (3-4), 235-265
- **KEELER, B. et al.** The social costs of nitrogen. *Science Advances,* 2016, vol. 2 (10
- **KIM, Y. et al.** Radar vegetation index for estimating the vegetation water content of rice and soybean. *IEEE Geoscience and Remote Sensing Letters,* 2012, vol. 9 (4), 564-568
- **KIM, Y. ; OH, J. ; KIM, Y.** Comparative Analysis of the Multispectral Vegetation indices and the Radar Vegetation Index. *Journal of the Korean Society of Surveying, Geodesy, Photogrammetry and Cartography,* 2014, vol. 32 (6), 607-615
- **KIM, Y. ; VAN ZYL, J.** A time-series approach to estimate soil moisture using polarimetric radar data. *IEEE Transactions on Geoscience and Remote Sensing,* 2009, vol. 47 (8), 2519-2527
- **LEBAUER, D. ; TRESEDER, K.** Nitrogen limitation of net primary productivity in terrestrial ecosystems is globally distributed. *Ecology,* 2008, vol. 89, 371-379
- **LIU, L. et al.** Ammonia volatilization as the major nitrogen loss pathway in dryland agroecosystems. *Environmental Pollution,* 2020, vol. 265
- **LIYANAGE, L. ; JAYAKODY, A. ; GUNARATNE, G.** Ammonia volatilization from frequently applied fertilizers for the low-country tea growing soils of Sri Lanka. *Tropical Agricultural Research,* 2015, vol. 26 (1), 48
- **MA, L. et al.** Status and suggestions of tea garden fertilization on main green tea-producing counties in Zhejiang province. *J. Tea Sci,* 2013, vol. 1, 74-84
- **MATTHEWS, R. ; STEPHENS, W.** CUPPA-Tea 1.0b Tea Crop Growth Model Technical manual. Cranfield University, 1996
- **MATTHEWS, R. ; STEPHENS, W.** GUMTEA: a simulation model describing potential production and seasonal yield variation of tea (Camellia sinensis L.). Cranfield University, 1997
- **MATTHEWS, R. ; STEPHENS, W.** Simulating biomass production and the uptake and use of water by tea (Camellia sinensis L.) plantations. Cranfield University, 1997
- **MATTHEWS, R. ; STEPHENS, W.** A simulation model describing seasonal yield variation and potential production of tea. *Experimental Agriculture,* 1998, vol. 34, 345-389
- **MATTHEWS, R. ; STEPHENS, W.** CUPPA-Tea 1.0b Tea Crop Growth Model Users' Guide. Cranfield University, 1998
- **MCLAREN, A.** TEMPORAL AND VECTORIAL REACTIONS OF NITROGEN IN SOIL: A REVIEW. *Canadian Journal of Soil Science,* 1970, vol. 50 (2), 97-109
- **MOYANO, F. et al.** The moisture response of soil heterotrophic respiration: interaction with soil properties. *Biogeosciences,* 2012, vol. 9 (3), 1173-1182
- **MUSYOKA, M. et al.** Nitrogen leaching losses and balances in conventional and organic farming systems in Kenya. *Nutrient Cycling in Agroecosystems,* 2019, vol. 114, 237-260
- **NAKASONE, H.** Effect on water quality in irrigation reservoir due to application reduction of nitrogen fertilizer. *Paddy Water Environ,* 2009, vol. 7, 65-70
- *Land Processes Distributed Active Archive Center (LP DAAC) Data Pool,* 2015
- **OLDFIELD, E. ; BRADFORD, M. ; WOOD, S.** Global meta-analysis of the relationship between soil organic matter and crop yields. *SOIL,* 2019, vol. 5, 15-32
- **OMOLLO, E.** Response of clonal tea to different tea growing locations, nitrogenous fertiliser rates and plucking intervals in the Kenya highlands. Maseno University, 2010
- **OWUOR, P. ; OTHIENO, C. ; ROBINSON, J. ; BAKER, D.** Response of tea quality parameters to time of year and nitrogen fertiliser. *Journal of the Science of Food and Agriculture,* 1991, vol. 55, 1-11
- **PANDA, R. ; STEPHENS, W. ; MATTHEWS, R.** Modelling the influence of irrigation on the potential yield of tea (Camellia sinensis) in north-east India. *Experimental Agriculture,* 2003, vol. 39 (2), 181-198
- **PATIL, R. ; LAEGDSMAND, M. ; OLESEN, J. ; PORTER, J.** Effect of soil warming and rainfall patterns on soil N cycling in Northern Europe. *Agriculture, Ecosystems & Environment,* 2010, vol. 139, 195-205
- **PLAZA-BONILLA, D. ; MARY, B. ; VALÉ, M. ; JUSTES, E.** The sensitivity of C and N mineralization to soil water potential varies with soil characteristics: Experimental evidences to fine-tune models. *Geoderma,* 2022, vol. 409 (115644

- **PLETT, D. et al.** The intersection of nitrogen nutrition and water use in plants: new paths toward improved crop productivity. *Journal of Experimental Botany,* 2020, vol. 71, 4452-4468
- **PREISS, M. ; STACY, N.** Coherent change detection: theoretical description and experimental results (No. DSTO-TR-1851. *DEFENCE SCIENCE AND TECHNOLOGY ORGANISATION EDINBURGH (AUSTRALIA,* 2006
- *R: A language and environment for statistical computing,* 15 March 2022, https://www.R-project.org
- **RAJAPAKSE, R. ; TRIPATHI, N. ; HONDA, K.** Spectral characterization and LAI modelling for the tea (Camellia sinesis (L.) O. Kuntze) canopy. *International Journal of Remote Sensing,* 2010, vol. 23 (18), 3569-3577
- **RAO, N. ; KAPOOR, M. ; SHARMA, N. ; VENKATESWARLU, K.** Yield prediction and waterlogging assessment for tea plantation land using satellite image-based techniques. *International Journal of Remote Sensing,* 2007, vol. 28 (7), 1561-1576
- **REBELLO, R. ; BURGESS, P. ; GIRKIN, N.** Identifying sustainable nitrogen management practices for tea plantations. *Nitrogen,* 2022, vol. 3 (1), 43-57
- A user-oriented model of the soil water balance of wheat. **RITCHIE, J.** Wheat growth and modelling. NATO ASI Series A: Life Sciences. Plenum Press, 1985, 293-305
- **ROLSTON, D. et al.** Denitrification as affected by irrigation frequency of a field soil. U.S. Environmental Protection Agency, 1980
- **SCHIMEL, J. ; BALSER, E. ; WALLENSTEIN, M.** Microbial stress-response physiology and its implications for ecosystem function. *Ecology,* 2007, vol. 88, 1386-1394
- **SELIGMAN, N. G. ; VAN KEULEN.** Papran a simulation model os annual pasture production limited by rainfall and nitrogen. *Simulation of Nitrogen Behaviour of Soil-Plant Systems,* 1981
- **SITIENEI, B. ; JUMA, S. ; OPERE, E.** On the use of regression models to predict tea crop yield responses to climate change: A case of Nandi East, Sub-County of Nandi County, Kenya. *Climate,* 2017, vol. 5 (3
- **SMALL, D.** Flattening Gamma: Radiometric Terrain Correction for SAR Imagery. *IEEE Transactions on Geoscience and Remote Sensing,* 2011, vol. 49 (8), 3081-3093
- **SMITH, P. et al.** A comparison of the performance of nine soil organic matter models using datasets from seven long-term experiments. *Geoderma,* 1997, vol. 81, 153-225
- **SPOSARI, M ; FLIS, S.** 4R framework implementation: precision ag adoption by farmers and dealers. *Crop Soils,* 2017, vol. 50, 24-26
- **STEPHENS, W. ; CARR, M.** Responses of tea (Camellia sinensis) to irrigation and fertilizer. 1. Yield. *Experimental Agriculture,* 1991, vol. 26, 83-98
- **STEPHEN, W. ; CARR, M.** Responses of tea (Camellia Sinensis) to irrigation and fertilizer. IV. Shoot population density, size and mass. *Experimental Agriculture,* 1993, vol. 30, 189-205
- **SUZUKI, S. et al.** Overview of Japan's Advanced Land Observing Satellite-2 mission. *Berlin, Proceedings of SPIE,* 2009, 7474-26
- Tea Growers Handbook. Tea Research Foundation of Kenya, 1986
- **ULABY, F. ; MOORE, R ; FUNG, A.** Microwave Remote Sensing: Radar Remote Sensing and Surface Scattering and Emission Theory. Addison-Wesley Publishing Company, Advanced Book Program/World Science Division, 1981
- **VAGSTAD, N. ; EGGESTAD, H. ; HØYÅS, T.** Mineral Nitrogen in Agricultural Soils and Nitrogen Losses: Relation to Soil Properties, Weather Conditions, and Farm Practices. *Ambio,* 1997, vol. 26 (5), 266-272
- **VALLGREN, A. ; PETRYKOWSKA, L.** ISKA White Paper. Ignitia Tropical Weather Forecasting, 2015
- **WANG, Y. et al.** Tea- planted soils as global hotspots for N2O emissions from croplands. *Environmental Research Letters,* 2020, vol. 15
- **WIEGAND, C. ; RICHARDSON, A. ; ESCOBAR, D. ; GERBERMANN, A.** Vegetation indices in crop assessments. *Remote Sensing of Environment,* 1991, vol. 35 (2), 105-119
- **WOLF, J.** *Users Guide for LINGRA-N: Simple Generic Model for Simulation of Crop Growth under Potential, Water Limited and Nitrogen Limited Conditions,* 2012, https://models.pps.wur.nl/lingra-n-grassland-model-potential-water-limited-and-n-limited-conditions-fortran
- **XIE, S. et al.** Organic fertilizer reduced carbon and nitrogen in runoff and buffered soil acidification in tea plantations: Evidence in nutrient contents and isotope fractionations. *Science of the Total Environment,* 2021, vol. 762
- **YAN, P. et al.** Tea planting affects soil acidification and nitrogen and phosphorus distribution in soil. *Agriculture, Ecosystems & Environment,* 2018, vol. 254, 20-25
- **YU, Y ; SAATCHI, S.** Sensitivity of L-Band SAR Backscatter to Aboveground Biomass of Global Forests. *Remote Sensing,* 2016, vol. 8 (6), 522
- **ZAHUMENSKY, I.** *Guidelines on quality control procedures for Data from automatic weather stations,* 2004, https://www.wmo.int/pages/prog/www/OSY/Meetings/ET-AWS3/Doc4(1).pdf
- **ZHANG, Y. et al.** Tea plantation affects soil nitrogen transformations in subtropical China. *Journal of Soils and Sediments,* 2021, vol. 21, 441-451

- **ZHOU, Z. et al.** Determining the hot spots and hot moments of soil N2O emissions and mineral N leaching in a mixed landscape under subtropical monsoon climatic conditions. *Geoderma,* 2022, vol. 420 (115896

- **ZOU, Z. et al.** Status quo of nitrogen fertilizer application and loss in tea garden of China. *Journal of Plant Nutrition and Fertilizers,* 2021, vol. 27, 153-160
- **RITCHIE.** *Water Resources Res.,* 1972, vol. 8, 1204